(19) Europäisches Patentamt
European Patent Office
Office européen des brevets

(11) EP 4 239 721 A1

(12) **EUROPEAN PATENT APPLICATION**
published in accordance with Art. 153(4) EPC

(43) Date of publication:
**06.09.2023 Bulletin 2023/36**

(21) Application number: **21886419.7**

(22) Date of filing: **29.10.2021**

(51) International Patent Classification (IPC):
***H01M 4/38*** (2006.01) ***H01M 4/505*** (2010.01)
***H01M 4/525*** (2010.01) ***H01M 10/052*** (2010.01)
***H01M 10/0569*** (2010.01) ***H01M 50/417*** (2021.01)
***H01M 50/449*** (2021.01) ***H01M 50/451*** (2021.01)
***H01M 50/463*** (2021.01)

(52) Cooperative Patent Classification (CPC):
**H01M 4/38; H01M 4/505; H01M 4/525; H01M 10/052; H01M 10/0569; H01M 50/417; H01M 50/449; H01M 50/451; H01M 50/463;** Y02E 60/10

(86) International application number:
**PCT/JP2021/040166**

(87) International publication number:
**WO 2022/092302 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.10.2020 JP 2020183250**
**17.09.2021 JP 2021152406**

(71) Applicant: **Asahi Kasei Kabushiki Kaisha**
**Tokyo 1000006 (JP)**

(72) Inventors:
- **ZHANG, Xun**
**Tokyo 100-0006 (JP)**
- **IKEDA, Makoto**
**Tokyo 100-0006 (JP)**
- **AKITA, Yusuke**
**Tokyo 100-0006 (JP)**
- **MATSUYAMA, Hayato**
**Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **SILOXANE DISPERSED CROSSLINKED SEPARATOR**

(57) The present invention provides a separator for nonaqueous secondary batteries, said separator comprising a silicon-containing (Si-containing) molecule. With respect to an Si-containing image of this separator for nonaqueous secondary batteries as detected by time-of-flight secondary ion mass spectrometry (TOF-SIMS), the Voronoi area (mu) of the most frequent ones among Voronoi polygons that are obtained by Voronoi tessellation of the Si-containing image is within the range of from 1.0 $\mu m^2$ to 17.5 $\mu m^2$ or within the range of from 6.0 $\mu m^2$ to 12.0 $\mu m^2$, and the spread ($\sigma$) of the Voronoi area frequency distribution of the Si-containing image as detected by TOF-SIMS is within the range of from 0.5 $\mu m^2$ to 8.5 $\mu m^2$.

FIG. 6

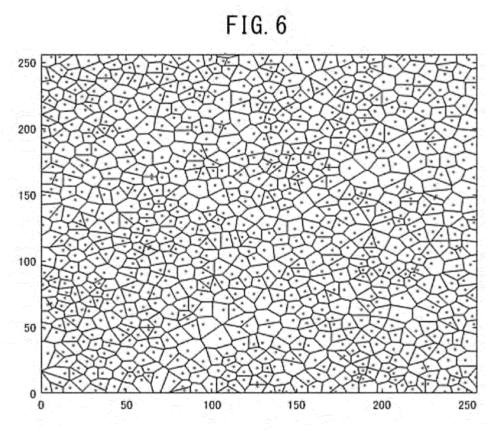




Processed by Luminess, 75001 PARIS (FR)

**Description**

TECHNICAL FIELD

The present invention relates to a separator for a nonaqueous secondary battery, and a method for producing the same or a nonaqueous secondary battery including the same.

BACKGROUND ART

Microporous membranes have widely been used as membranes for separation or selective permeation and separation of various substances, and isolating materials, and examples of their uses include microfiltration membranes, separators for a fuel cell and a capacitor, or matrices for functional membranes or separators for a battery, which exhibit new functions by packing functional materials into their pores. In particular, polyolefin microporous membranes are suitably used as separators for a lithium ion battery, which have widely been used in electric vehicles, laptops, mobile phones, digital cameras and the like.

To ensure the safety of batteries, separators for a battery are required to achieve both activation of a shutdown function and improvement in membrane rupture temperature.

To ensure the safety and cycle characteristics of the battery, separators for a battery are required to achieve an improvement in mechanical strength, activation of a shutdown function, an improvement in membrane rupture temperature and the like. From the viewpoint of imparting the functionality to separators for a battery, there has been made a study of mixing of a modified polyolefin with a microporous membrane, a crystal structure of a resin constituting the microporous membrane, coating of the microporous membrane with a resin or an inorganic material-containing slurry.

For example, there has been proposed to mix a polyolefin microporous membrane which can be used as a separator for a lithium ion battery with inorganic particles and a polyolefin resin (PTL 1).

From the viewpoint of introducing a higher order structure such as a silane crosslinked structure into the polyolefin microporous membrane to improve the safety, there has been proposed a separator for a battery in which a silane crosslinking reaction is initiated in the battery (PTL 2), or a polyolefin microporous membrane having a sea-island structure obtained by mixing a medium molecular weight polyethylene with a silane-modified polyethylene (PTL 3).

PTL 2 mentions that an inorganic porous layer containing inorganic particles and a resin binder is disposed on at least one side of a polyolefin microporous membrane by mixing the polyolefin microporous membrane with a silane-modified polyolefin or the like.

For example, in the production process of a silane-crosslinkable polyolefin separator mentioned in PTL 4, a study has been made of the number of branched chains of repeating units derived from ethylene of a silane-modified polyolefin.

For example, a study has been made of the polyethylene crystallinity degree and polyethylene crystallite size, and cross-sectional crystal orientation degree of a polyolefin microporous membrane mixed with a silane-modified polyolefin or the like, measured by X-ray diffraction (XRD) (PTL 5). There has also been a study of a crystal long period measured by a small-angle X-ray scattering (SAXS) technique for a polyolefin microporous membrane (PTL 6) and a stretched polypropylene film (PTL 7).

In PTL 8, a study has been made of an area ratio R = I(110)/(I(110) + I(200)) indicated by a thickness of a stretched polyethylene film, and an area I(110) of a diffraction peak of the (110) plane and area I(200) of a diffraction peak of the (200) plane when X-rays are irradiated from a thickness direction I (110), and coating of a stretched polyethylene film with an aramid resin or the like is mentioned.

In NPL1, for example, a study has been made of the synthesis scheme of a tetracoordinate allylsilane to a pentacoordinate allylsilicate. NPL1 mentions that a low molecular weight organic Si compound forms a high order coordination complex in the presence of an alkali metal fluoride, and not only Si exhibits Lewis acidic properties, but also it is possible to take a structure in which unshared electron pair of an oxygen compound is coordinated due to high affinity with oxygen, thereby promoting an electron addition reaction from the β-position of the high order coordination complex due to thermodynamic stabilization by an influence of stereoregularity.

NPL2 mentions that, in a battery using a Si-containing negative electrode active material, lithium ions are charged and discharged to Si-containing particles, and the volume of the Si-containing negative electrode active material expands or contracts significantly.

[CITATION LIST]

[PATENT LITERATURE]

[PTL 1] WO 2008/035674 A
[PTL 2] WO 2020/075866 A
[PTL 3] WO 2020/040389 A
[PTL 4] Korean Patent Publication No. 10-2020-0078407 A
[PTL 5] WO 2020/067161 A
[PTL 6] WO 2014/175252 A
[PTL 7] WO 2015/012324 A
[PTL 8] JP 6012839 B2

[NON-PATENT LITERATURE]

[NPL1] "Silicone Polymer Special Feature, Organic Silicon Chemistry", Journal of The Society of Rubber SCIENCE AND TECHNOLOGY, JAPAN, Vol. 62, No. 12(1989)
[NPL2] "Volume Expansion during Lithiation of Amorphous Silicon Thin Film Electrodes Studied by In-Operando Neutron Reflectometry", J. Phys. Chem., C2014, 118, 9395-9399
[NPL3] "Near-Shore Aggregation Mechanism of Electrolyte Decomposition Products to Explain Solid Electrolyte Interphase Formation", J. Electrochem. Soc., C2015, 162, 2670-2678
[NPL4] "Coupled LiPF6 Decomposition and Carbonate Dehydrogenation Enhanced by Highly Covalent Metal Oxides in High-Energy Li-Ion Batteries", J. Phys. Chem., C2018, 122, 48, 27368-27382

SUMMARY

[TECHNICAL PROBLEM]

With the increasing high output and high energy density of lithium ion secondary batteries for mobile devices and vehicles in recent years, there is ongoing demand for smaller battery cell sizes and for stable cycle performance or improved productivity during long periods of use. Further, since the required level of the battery safety is more stringent than that of conventional products, the separators for a battery mentioned in PTLs 1 to 4 have room for further improvement in achieving longer battery life while ensuring the safety of the battery safety. The separators for a battery mentioned in PTLs 2 and 5 to 8 have room for improvement in ensuring the productivity, improvement in safety of the battery, prolonging the life of the battery, and/or balancing them.

Generally, it has been known that SEI film components (SFC) generated on the surface of a positive electrode material aggregate and deposit on the surface of a negative electrode material to form a solid electrolyte interface (SEI) layer so as to cover the surface of the negative electrode material (NPL3). The SEI layer prevents decomposition of an electrolytic solution on the surface of the electrode to suppress deterioration of the battery, and suppress movement of lithium ions ($Li^+$) to increase the internal resistance. The generation of SFC depends on the temperature, and a thicker SEI layer is formed as the temperature becomes higher. For example, when the size of a battery increases to improve the energy density or increase the output of the battery, the temperature in the center tends to become higher than that of the outside of the battery due to the difference in heat dissipation capacity between the center and the outside of the battery, leading to remarkable formation of SFC near the center of the battery. When SFC has insufficient dispersibility, a non-uniform SEI layer is formed and thus Li ions are restricted in the SEI layer, leading to a decrease in cycle test capacity retention rate. As a method for increasing the size of the battery, for example, there is a method for increasing the diameter and length of the battery, and it is considered that a 4680 type cylindrical battery is used in place of the 18650 type cylindrical battery which is widely used in practice today. In a battery in which a positive electrode material containing nickel oxide is used, the energy density can be improved by increasing the content of nickel (Ni), however, as mentioned in NPL4, the oxidation potential is lowered and the formation of SFC is promoted and, when SFC has insufficient diffusibility, a non-uniform SEI layer tends to be easily formed.

In lithium ion secondary batteries, the volume of an electrode changes and the temperature inside the battery rises due to charging/discharging. The volume change of the electrode causes non-uniform stress distribution inside the battery. When the temperature inside the battery rises in a state where non-uniform stress distribution occurs, a separator is non-uniformly deformed by a phenomenon in which the resin is gradually deformed under stress applied at high temperature stress (thermal creep), and thus a microporous structure of the separator non-uniformly collapses. As a result, the flow of lithium ions is partially suppressed during charging/discharging, leading to deterioration of the cycle characteristics. Further, lithium ions non-uniformly enter and exit on a negative electrode and lithium dendrites grow, leading to deterioration of the cycle characteristics and a collapse test passing rate. Particularly in cylindrical batteries and rectangular batteries, non-uniform stress distribution inside the battery easily occurs due to tight winding that occurs

during a winding step and change over time, leading to deterioration of the cycle characteristics and a collapse test passing rate.

As mentioned above, the SEI layer suppresses decomposition of the electrolytic solution and suppresses deterioration of the battery and, when the SEI layer is excessively formed, the internal resistance of the battery is increased and Li ions in the electrolytic solution is accumulated, leading to deterioration of the cycle characteristics. Therefore, it is preferable that the SEI layer having an appropriate membrane thickness is uniformly formed. When non-uniform deformation of the separator occurs and the microporous structure of the separator non-uniformly collapses, and thus the flow of decomposition products of the electrolytic solution is partially suppressed. As a result, the SEI layer is non-uniformly formed, leading to deterioration of the cycle characteristics. In particular, when the size of the battery is increased, it is possible to increase the output and improve the energy density, however, the stress difference generated in the battery increases and non-uniform deformation of the separator easily occurs. Further, as the size of the battery increases, the temperature difference between the center side and the outer edge side of the battery increases due to the difference in heat dissipation capability. As a result, thermal deformation of the electrodes, thermal shrinkage of the separator, thermal creep and the like easily occur, and thus the stress difference generated in the battery increases, leading to deterioration of the cycle characteristics and the safety in a collapse test due to the above mechanism. Examples of large-sized battery include a 4680 type cylindrical batteries and large-sized rectangular battery.

In batteries in which a silicon-containing negative electrode material is used, the energy density can be improved. However, a negative electrode material exhibits large expansion rate during charging/discharging, and thus non-uniform deformation of a separator easily occurs and the microporous structure of the separator easily collapses, non-uniformly. As a result, deterioration of the cycle characteristics and deterioration of the safety in a collapse test occur due to the above mechanism. Further, in batteries in which a positive electrode material containing nickel oxide is used, the energy density can be improved, however, decomposition of an electrolytic solution easily proceeds on the electrode surface and SFC is easily formed, non-uniformly. When SFC reaches the negative electrode surface without being sufficiently diffused, a non-uniform SEI layer is easily formed and the cycle characteristics easily deteriorate. Examples of the positive electrode material containing nickel oxide include NMC111, NMC611, NMC811 and the like.

In view of the above problems, it is an object of the present invention to provide a separator for a nonaqueous secondary battery, capable of achieving both safety and longer life of the nonaqueous secondary battery, and a method for producing the same or a nonaqueous secondary battery including the same.

[SOLUTION TO PROBLEM]

The present inventors have carried out extensive studies with a view to solving the above problems. As a result, they have found that the above problems can be solved by using a separator for a nonaqueous secondary battery having the following configuration, and a method for producing the same or a nonaqueous secondary battery including the same, and thus the present invention has been completed. Examples of embodiments of the present invention are as follows.

(1) A separator for a nonaqueous secondary battery, including silicon (Si)-containing molecules, wherein

in a Si-containing image detected by a time-of-flight secondary ion mass spectrometry (TOF-SIMS) measurement of the separator for a nonaqueous secondary battery, a Voronoi area (mu) at maximum frequency of Voronoi polygons obtained by carrying out Voronoi tessellation is within a range of 1.0 $\mu m^2$ to 17.5 $\mu m^2$ , and a spread ($\sigma$) of a Voronoi area frequency distribution of the Si-containing image detected by the TOF-SIMS measurement is within a range of 0.5 $\mu m^2$ to 8.5 $\mu m^2$ .

(2) The separator for a nonaqueous secondary battery according to item 1, wherein a ratio ($\sigma$/mu) of the spread ($\sigma$) of the Voronoi area frequency distribution to the Voronoi area (mu) at maximum frequency is 0.06 to 0.70.

(3) A separator for a nonaqueous secondary battery, including silicon (Si)-containing molecules, wherein in a Si-containing image detected by a time-of-flight secondary ion mass spectrometry (TOF-SIMS) measurement of the separator for a nonaqueous secondary battery, a Voronoi area (mu) at maximum frequency of Voronoi polygons obtained by carrying out Voronoi tessellation is within a range of 6.0 $\mu m^2$ to 12.0 $\mu m^2$ .

(4) The separator for a nonaqueous secondary battery according to item 3, wherein a spread ($\sigma$) of a Voronoi area frequency distribution of the Si-containing image detected by the TOF-SIMS measurement is within a range of 2.0 $\mu m^2$ to 4.0 $\mu m^2$ .

(5) The separator for a nonaqueous secondary battery according to item 3 or 4, wherein a ratio ($\sigma$/mu) of the spread ($\sigma$) of the Voronoi area frequency distribution to the Voronoi area (mu) at maximum frequency is 0.20 to 0.40.

(6) The separator for a nonaqueous secondary battery according to any one of items 1 to 5, wherein the Si-containing molecules are dispersed in a state of not being a sea-island structure in the separator for a nonaqueous secondary

battery.
(7) The separator for a nonaqueous secondary battery according to any one of items 1 to 6, wherein the separator for a nonaqueous secondary battery is a polyethylene microporous membrane, and
an air permeability change ratio when compressed by 30% in thickness (air permeability Sh after compression/air permeability Sj before compression) is 1.1 to 7.0 times.
(8) A separator for a nonaqueous secondary battery, including a polyethylene microporous membrane, wherein
an air permeability change ratio when compressed by 30% in thickness (air permeability Sh after compression/air permeability Sj before compression) is 1.1 to 7.0 times.
(9) The separator for a nonaqueous secondary battery according to item 8, including a silane-modified polyethylene, and a polyolefin other than the silane-modified polyethylene.
(10) A separator for a nonaqueous secondary battery, containing a silane-modified polyolefin, wherein a crystal long period of a polyethylene detected by a small-angle X-ray scattering measurement is 20 to 50 nm, a crystallinity degree detected by a wide-angle X-ray scattering measurement is 60% to 80%, and a crystallite size (110) of a polyethylene detected by a wide-angle X-ray scattering measurement is 10 to 50 nm.
(11) The separator for a nonaqueous secondary battery according to item 10, wherein an amorphous portion thickness calculated from the crystal long period of a polyethylene detected by a small-angle X-ray scattering measurement and the crystallinity degree detected by a wide-angle X-ray scattering measurement by the following formula:

Formula: amorphous portion thickness [nm] = (crystal long period [nm]) × (1 - crystallinity degree [%]/100) is 3 to 23 nm.

(12) The separator for a nonaqueous secondary battery according to item 10 or 11, wherein a cross-sectional crystal orientation degree of polyethylene measured from the MD direction by a wide-angle X-ray scattering measurement is 0.70 to 0.99, and a cross-sectional crystal orientation degree of polyethylene measured from the TD direction is 0.70 to 0.99.
(13) The separator for a nonaqueous secondary battery according to any one of items 10 to 12, wherein a ratio MD/TD of the cross-sectional crystal orientation degree of polyethylene measured from the MD direction and the cross-sectional crystal orientation degree of polyethylene measured from the TD direction is 0.5 to 1.2.
(14) The separator for a nonaqueous secondary battery according to any one of items 10 to 13, wherein a ratio (110)/(200) of the crystallite size (110) of polyethylene and the crystallite size (200) of a polyethylene detected by a wide-angle X-ray scattering measurement is 0.9 to 2.0.
(15) The separator for a nonaqueous secondary battery according to any one of items 10 to 14, wherein the silane-modified polyolefin is a silane-modified polyethylene.
(16) The separator for a nonaqueous secondary battery according to any one of items 10 to 15, wherein, in a silicon (Si)-containing functional group of the silane-modified polyolefin, the number of methylenes ($CH_2$) constituting the linking portion of the organic moiety to the main chain is 2 to 10.
(17) The separator for a nonaqueous secondary battery according to any one of items 10 to 16, including a polyolefin microporous membrane as a substrate, and an inorganic porous layer containing inorganic particles and a resin binder stacked on at least one side of the polyolefin microporous membrane.
(18) The separator for a nonaqueous secondary battery according to item 17, wherein a content of the inorganic particles in the inorganic porous layer is 5% by weight to 99% by weight based on the total weight of the inorganic porous layer.
(19) The separator for a nonaqueous secondary battery according to item 17 or 18, wherein the inorganic particle is at least one selected from the group consisting of alumina, silica, titania, zirconia, magnesia, ceria, yttria, zinc oxide, iron oxide, silicon nitride, titanium nitride, boron nitride, silicon carbide, aluminum hydroxide oxide, talc, kaolinite, dickite, nacrite, halloysite, pyrophyllite, montmorillonite, sericite, mica, amesite, bentonite, asbestos, zeolite, diatomaceous earth, quartz sand and glass fibers.
(20) The separator for a nonaqueous secondary battery according to any one of items 10 to 16, comprising a polyolefin microporous membrane as a substrate and a thermoplastic polymer-containing layer formed on at least one side of the polyolefin microporous membrane, wherein a thermoplastic polymer contained in the thermoplastic polymer-containing layer includes at least one of a polymerization unit of (meth)acrylic acid ester and/or (meth)acrylic acid, polyvinylidene fluoride (PVDF), polyvinylidene fluoride-hexafluoropropylene (PVDF-HFP) and polyvinylidene fluoride-chlorotrifluoroethylene (PVDF-CTFE).
(21) The separator for a nonaqueous secondary battery according to any one of items 10 to 16, including a polyolefin microporous membrane as a substrate and an active layer disposed on at least one side of the polyolefin microporous membrane, wherein the active layer contains at least one fluorine atom-containing polyvinyl compound selected from the group consisting of polyvinylidene fluoride-hexafluoropropylene (PVDF-HFP) and polyvinylidene fluoride-chlorotrifluoroethylene (PVDF-CTFE), and inorganic particles.

(22) The separator for a nonaqueous secondary battery according to any one of items 10 to 16, including a polyolefin microporous membrane as a substrate, and a heat-resistant resin layer containing a heat-resistant resin stacked on at least one side of the polyolefin microporous membrane, wherein the heat-resistant resin contains at least one selected from the group consisting of wholly aromatic polyamide, polyimide, polyamideimide, polysulfone, polyketone, polyether, polyether ketone, polyetherimide and cellulose.

(23) The separator for a nonaqueous secondary battery according to item 22, wherein the heat-resistant resin layer contains 30% by weight to 90% by weight of an inorganic filler having a mean particle size of 0.2 $\mu$m to 0.9 $\mu$m.

(24) The separator for a nonaqueous secondary battery according to any one of items 10 to 23, further including a polyolefin other than the silane-modified polyolefin.

(25) The separator for a nonaqueous secondary battery according to any one of items 10 to 24, wherein, in a Si-containing image detected by a time-of-flight secondary ion mass spectrometry (TOF-SIMS) measurement of the separator for a nonaqueous secondary battery, a Voronoi area (mu) at maximum frequency of Voronoi polygons obtained by carrying out Voronoi tessellation is within a range of 6.00 $\mu m^2$ to 12.00 $\mu m^2$.

(26) The separator for a nonaqueous secondary battery according to item 25, wherein a spread ($\sigma$) of a Voronoi area frequency distribution of the Si-containing image detected by the TOF-SIMS measurement is within a range of 2.00 $\mu m^2$ to 4.00 $\mu m^2$.

(27) The separator for a nonaqueous secondary battery according to item 25 or 26, wherein a ratio ($\sigma$/mu) of the spread ($\sigma$) of the Voronoi area frequency distribution to the Voronoi area (mu) at maximum frequency is 0.20 to 0.40.

(28) A nonaqueous secondary battery including a positive electrode, a negative electrode, the separator for a nonaqueous secondary battery according to any one of items 1 to 27, and a nonaqueous electrolytic solution.

(29) The nonaqueous secondary battery according to item 28, wherein the positive electrode contains a lithium (Li)-nickel (Ni)-manganese (Mn)-cobalt (Co) composite oxide represented by the formula: Li-$Ni_x$ -$Mn_y$ -$Co_z$, where x represents a Ni ratio, y represents a Mn ratio, z represents a Co ratio and x+y+z = 1, and the Ni ratio x in the above formula is 5 to 9.

(30) The nonaqueous secondary battery according to item 28 or 29, wherein the negative electrode contains a negative electrode active material, and a Si ratio in the negative electrode active material is 5% by weight to 90% by weight.

(31) The nonaqueous secondary battery according to any one of items 28 to 30, wherein the nonaqueous electrolytic solution contains a lithium salt in a concentration within a range of 1.2 mol/L to 10 mol/L.

(32) The nonaqueous secondary battery according to any one of items 28 to 31, wherein the nonaqueous electrolytic solution contains ethyl methyl carbonate (EMC) and/or acetonitrile (AcN), and the total content of EMC and AcN in the nonaqueous electrolytic solution is within a range of 50% by weight to 90% by weight.

(33) A method for producing the separator for a nonaqueous secondary battery according to any one of items 17 to 19, the method including the following steps:

(1) a sheet-forming step of extruding the silane-modified polyolefin, the polyethylene and a plasticizer into a sheet using an extruder, cooling to solidify the sheet, and molding the sheet into a sheet-shaped molded body;
(2) a stretching step of biaxially stretching the sheet-shaped molded body at an area increase of 20-fold or more and 250-fold or less to obtain a stretched sheet;
(3) a porous body-forming step of extracting the plasticizer from the stretched sheet to form a porous body;
(4) a heat treatment step of subjecting the porous body to a heat treatment to undergo stretching and relaxation in a transverse direction, thus obtaining a heat-treated porous body;
(SA) a coating step of applying a coating solution containing the inorganic particles and the resin binder and a surfactant, and having a pH of 6.7 or lower or 7.5 or higher on at least one surface of the heat-treated porous body, to form the inorganic porous layer onto at least one surface of the heat-treated porous body;
(6) a drying step of drying to remove a solvent in the inorganic porous layer; and
(7) an assembly step of housing a laminated body or a wound body of electrodes and the separator for an aqueous secondary battery, and a nonaqueous electrolytic solution in an exterior body; wherein the silane-modified polyolefin forms a crosslinked structure in at least one step of (5A), (6) and (7).

(34) A method for producing the separator for a nonaqueous secondary battery according to item 20, the method including the following steps:

(1) a sheet-forming step of extruding the silane-modified polyolefin, the polyethylene and a plasticizer into a sheet using an extruder, cooling to solidify the sheet, and molding the sheet into a sheet-shaped molded body;
(2) a stretching step of biaxially stretching the sheet-shaped molded body at an area increase of 20-fold or more and 250-fold or less to obtain a stretched sheet;

(3) a porous body-forming step of extracting the plasticizer from the stretched sheet to form a porous body;
(4) a heat treatment step of subjecting the porous body to a heat treatment to undergo stretching and relaxation in a transverse direction, thus obtaining a heat-treated porous body;
(5B) a coating step of applying a coating solution containing the thermoplastic polymer and a surfactant, and having a pH of 6.7 or lower or 7.5 or higher onto at least one surface of the heat-treated porous body, to form the thermoplastic polymer-containing layer on at least one surface of the heat-treated porous body;
(6) a drying step of drying to remove a solvent in the thermoplastic polymer-containing layer; and
(7) an assembly step of housing a laminated body or a wound body of electrodes and the separator for an aqueous secondary battery, and a nonaqueous electrolytic solution in an exterior body; wherein the silane-modified polyolefin forms a crosslinked structure in at least one step of (5B), (6) and (7).

(35) A method for producing the separator for a nonaqueous secondary battery according to item 21, the method including the following steps:

(1) a sheet-forming step of extruding the silane-modified polyolefin, the polyethylene and a plasticizer into a sheet using an extruder, cooling to solidify the sheet, and molding the sheet into a sheet-shaped molded body;
(2) a stretching step of biaxially stretching the sheet-shaped molded body at an area increase of 20-fold or more and 250-fold or less to obtain a stretched sheet;
(3) a porous body-forming step of extracting the plasticizer from the stretched sheet to form a porous body;
(4) a heat treatment step of subjecting the porous body to a heat treatment to undergo stretching and relaxation in a transverse direction, thus obtaining a heat-treated porous body;
(5C) a coating step of applying a coating solution containing the fluorine atom-containing polyvinyl compound, the inorganic particles and an organic solvent onto at least one surface of the heat-treated porous body, to form the active layer on at least one surface of the heat-treated porous body;
(6) a drying step of drying to remove a solvent in the active layer; and
(7) an assembly step of housing a laminated body or a wound body of electrodes and the separator for an aqueous secondary battery, and a nonaqueous electrolytic solution in an exterior body; wherein the silane-modified polyolefin forms a crosslinked structure in at least one step of (5C), (6) and (7).

(36) The method for producing a separator for a nonaqueous secondary battery according to item 35, the method including, between the coating step (5C) and the drying step (6), the following step:
(5.5C) a water washing step of substituting the organic solvent in the active layer with an aqueous solvent; wherein the silane-modified polyolefin forms the crosslinked structure in the step (5.5C).
(37) The method for producing the separator for a nonaqueous secondary battery according to item 22 or 23, the method including the following steps:

(1) a sheet-forming step of extruding the silane-modified polyolefin, the polyethylene and a plasticizer into a sheet using an extruder, cooling to solidify the sheet, and molding the sheet into a sheet-shaped molded body;
(2) a stretching step of biaxially stretching the sheet-shaped molded body at an area increase of 20-fold or more and 250-fold or less to obtain a stretched sheet;
(3) a porous body-forming step of extracting the plasticizer from the stretched sheet to form a porous body;
(4) a heat treatment step of subjecting the porous body to a heat treatment to undergo stretching and relaxation in a transverse direction, thus obtaining a heat-treated porous body;
(5D) a coating step of applying a coating solution containing the heat-resistant resin and an organic solvent onto at least one surface of the heat-treated porous body, to form the heat-resistant resin layer on at least one surface of the heat-treated porous body;
(6) a drying step of drying to remove a solvent in the heat-resistant resin; and
(7) an assembly step of housing a laminated body or a wound body of electrodes and the separator for a nonaqueous secondary battery, and a nonaqueous electrolytic solution in an exterior body; wherein the silane-modified polyolefin forms a crosslinked structure in at least one step of (5D), (6) and (7).

(38) The method for producing the separator for a nonaqueous secondary battery according to item 37, the method including, between the coating step (5D) and the drying step (6), the following step:
(5.5D) a water washing step of substituting the organic solvent in the heat-resistant resin layer with an aqueous solvent; wherein the silane-modified polyolefin forms the crosslinked structure in the step (5.5D).

[ADVANTAGEOUS EFFECTS OF INVENTION]

According to the present invention, it is possible to achieve both safety and longer life of a nonaqueous secondary battery including a separator for a nonaqueous secondary battery, and more specifically, it is possible to improve, for example, safety in a nail penetration test and a hot box test, cycle characteristics including low-temperature cycle characteristics and high-temperature cycle characteristics, and productivity.

BRIEF DESCRIPTION OF DRAWINGS

FIG. 1 is an image showing TOF-SIMS analysis results of a separator according to Example 1.
FIG. 2 is an example of a filtered three-dimensional image in image processing of TOF-SIMS spectra of Example 1.
FIG. 3 is an example of a filtered two-dimensional image in image processing of TOF-SIMS spectra of Example 1.
FIG. 4 is an example of a state where TOF-SIMS spectra of Example 1 is subjected to image processing (1) to (2).
FIG. 5 is an example of a state where TOF-SIMS spectra of Example 1 is subjected to image processing (1) to (6).
FIG. 6 illustrates an example of a Voronoi region obtained by carrying out Voronoi tessellation of TOF-SIMS spectra of Example 1.
FIG. 7 illustrates an example of a Voronoi area determined to be effective from the results of Example 1.
FIG. 8 is a histogram of the Voronoi area of Example 1.
FIG. 9 is a histogram after converting the Voronoi area of Example 1 into an actual area.
FIG. 10 is an example illustrating a fitting result of the Voronoi area of Example 1.
FIG. 11 is an image showing TOF-SIMS analysis results of a separator according to Comparative Example 1.
FIG. 12 is an example of a state where TOF-SIMS spectra of Comparative Example 1 is subjected to image processing (1) to (2).
FIG. 13 is an example of a state where TOF-SIMS spectra of Comparative Example 1 is subjected to image processing (1) to (6).
FIG. 14 illustrates an example of a Voronoi region obtained by carrying out Voronoi tessellation of TOF-SIMS spectra of Comparative Example 1.
FIG. 15 illustrates an example of a Voronoi area determined to be effective from the results of Comparative Example 1.
FIG. 16 is a histogram of the Voronoi area of Comparative Example 1.
FIG. 17 is a histogram after converting the Voronoi area of Comparative Example 1 into an actual area.
FIG. 18 is an example illustrating a fitting result of the Voronoi area of Comparative Example 1.
FIG. 19 is a schematic diagram and a partially enlarged diagram for explaining a cycle period structure of crystalline portions and amorphous portions in a separator using a crystalline resin such as polyethylene.

DESCRIPTION OF EMBODIMENTS

Hereinafter, the mode for carrying out the present invention (hereinafter simply referred to as "embodiment") will be described in detail. The present invention is not limited to the following embodiments, and various modifications are possible without departing from the scope of the invention. Herein, the numerical range mentioned using "to" includes the numerical values mentioned before and after it. The abbreviation "MD" refers to a longitudinal direction of a wound body during continuous film formation of the separator, and is an abbreviation for Machine Direction, The abbreviation "TD" refers to a direction transverse to MD at an angle of 90° (hereinafter also referred to as width direction), and is an abbreviation for Transverse Direction. Various measurement methods and various evaluation methods mentioned below are carried out according to the methods mentioned in Examples unless otherwise specified.

<Separator for Nonaqueous Secondary Battery>

The separator for a nonaqueous secondary battery (hereinafter simply referred to as "separator") is commonly formed of an insulating material having a porous structure, such as a paper, a polyolefin nonwoven fabric or a resin microporous membrane since insulation properties and lithium ion permeability are required. In particular, a polyolefin microporous membrane having redox resistance, capable of constructing a compact and homogeneous porous structure is excellent as a separator substrate used in a nonaqueous secondary battery comprising a positive electrode and a negative electrode capable of occluding and releasing lithium, and a nonaqueous electrolytic solution prepared by dissolving an electrolyte in a nonaqueous solvent. Therefore, the separator for a nonaqueous secondary battery separator can include a polyolefin microporous membrane. As necessary, the separator for a nonaqueous secondary battery may include, in addition to the polyolefin microporous membrane, a layer formed on one or both sides thereof, such as a

thermoplastic polymer-containing layer, an active layer, an inorganic porous layer, a heat-resistant resin layer and the like.

<First Embodiment: Silicon-Containing Structure and Voronoi Tessellation (1) of Separator>

The separator according to the first embodiment includes silicon (Si)-containing molecules, and in a Si-containing image detected by a time-of-flight secondary ion mass spectrometry (TOF-SIMS) measurement of the separator for a nonaqueous secondary battery, a Voronoi area (mu) at maximum frequency of Voronoi polygons obtained by carrying out Voronoi tessellation is within a range of 1.0 $\mu m^2$ to 17.5 $\mu m^2$, and a spread ($\sigma$) of a Voronoi area frequency distribution of the Si-containing image detected by the TOF-SIMS measurement is within a range of 0.5 $\mu m^2$ to 8.5 $\mu m^2$ .

In the separator according to the first embodiment, when the TOF-SIMS measurement is carried out on a square area of 100 $\mu m$, at least one or more silicon-containing structures are detected, and preferably, it is detected that the Si-containing molecules are dispersed in a state of not being a sea-island structure in the separator. The sea-island structure is a structure composed of two types of solid substances, one of which appears relatively continuous (likened to a sea) discontinuously coexists with the other one (likened to an island).

In the first embodiment, various numerical values obtained by carrying out Voronoi tessellation are measured when the separator is a polyolefin microporous membrane, and can serve as an indicator which indicates the level of variation of Si-containing molecules on the separator surface. As mentioned in Examples, TOF-SIMS measurement of the separator can be carried out with reference to FIG. 1 to FIG. 6 and FIG. 11 to FIG. 14, and Voronoi tessellation of TOF-SIMS image can be carried out with reference to FIG. 7 to FIG. 10 and FIG. 15 to FIG. 18, respectively.

When the Voronoi area (mu) at maximum frequency of Voronoi polygons obtained by carrying out Voronoi tessellation is within a range of 1.0 $\mu m^2$ to 17.5 $\mu m^2$ , the Si-containing molecules tend to be dispersed in a state of not being a sea-island structure in the separator. For example, when the nonaqueous secondary battery is a lithium ion secondary battery, if the separator containing Si elements dispersed uniformly therein coexist with a lithium (Li) complex solvated with an electrolytic solution having unshared electron pair such as oxygen atoms, it is considered that the product life in a battery cycle characteristic test is prolonged by the following phenomena (i) and (ii).

(i) The Li complex exhibits high affinity with Si atoms and therefore exists in the vicinity of Si atoms with high probability. For such a phenomenon, a reaction in which non-fed electron pairs in the molecular structure of the electrolytic solution are coordinated to Si atoms is important. As mentioned in NPL1, since the Si atom has a large atomic radius, it is possible to have tetra or higher-coordination, and to have special properties in which a structure using 4-electron-3-center bonds and d-orbitals can exist. That is, it is possible to form a path in which Li ions can easily flow uniformly over the entire surface of the separator. Therefore, for example, a secondary battery including a positive electrode such as an NMC positive electrode containing lithium (Li)-nickel (Ni)-manganese (Mn)-cobalt (Co) composite oxide is uniformly charged and discharged, thereby suppressing crystal breakage.

(ii) For example, when the negative electrode is a Si-containing negative electrode, charging/discharging of the Si elements in the negative electrode can be uniformly carried out, and uniform expansion convergence of the Si-containing negative electrode enables suppression of deformation inside the secondary battery.

While not wishing to be bound by any theory, it is considered that the above phenomena (i) and (ii) occur when a complex is homogeneously formed and thus $Li^+$ ions of the separator uniformly flow in a nonaqueous secondary battery, as shown in the following scheme 1:

[Chemical Formula 1]

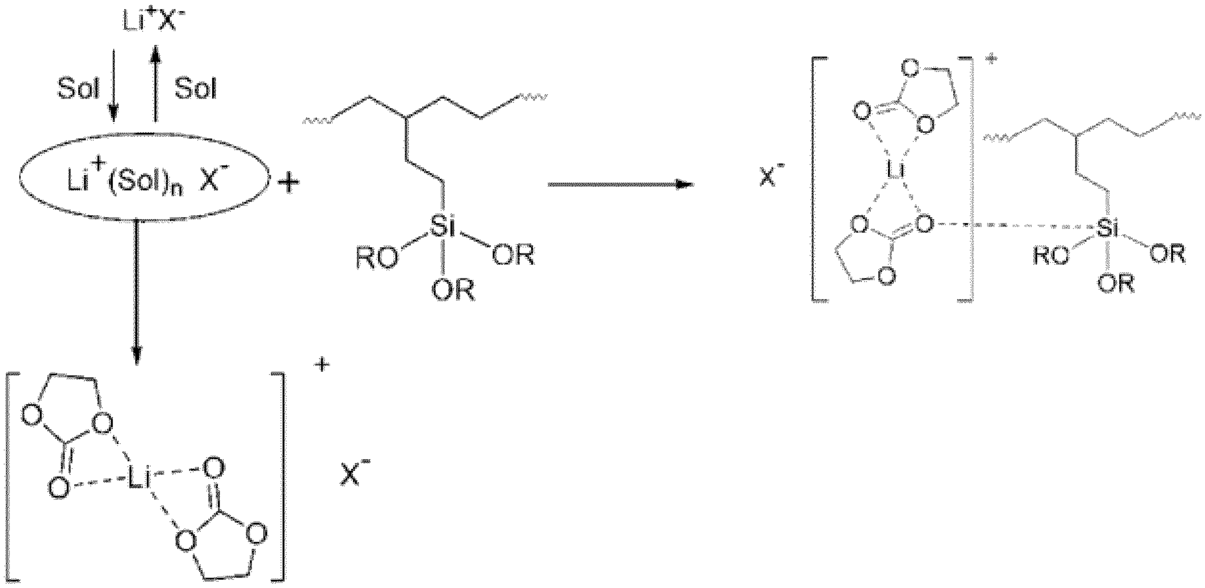

Scheme 1

wherein Sol represents a nonaqueous solvent in an electrolytic solution, $X^-$ represents a counter anion of a lithium salt as an electrolyte, and includes ethylene carbonate (EC) as an example of a nonaqueous solvent and includes a silane-modified polyethylene as an example of a constituent resin of a separator according to the first embodiment, and R represents, for example, methyl, ethyl, n-propyl, isopropyl, n-butyl, sec-butyl, isobutyl, tert-butyl, etc., or a siloxane bond crosslinked with neighboring silanol.

In a nonaqueous secondary battery system containing lithium hexafluorophosphate ($LiPF_6$) as the electrolyte, lithium hexafluorophosphate exists as a constant concentration of dissociated F anions or lithium fluoride (LiF) in the system due to the Jahn-Teller effect possessed by phosphorus atoms. Therefore, in a state of being added to Si, LiF exhibits a stronger Lewis acid effect than that in a state before addition, which makes the above phenomena (i) and (ii) more remarkable, and thus satisfactory low-temperature cycle characteristics can also be exhibited. This phenomenon has been found by the present invention, and it is considered that this phenomenon occurs when the physically solvated $Li^+$ is stably coordinated to the Si atom of the Si-containing molecules in the constituent polymer of the separator, and thus the resulting coordination complex exists with high probability, as shown in the following scheme 2:

[Chemical Formula 2]

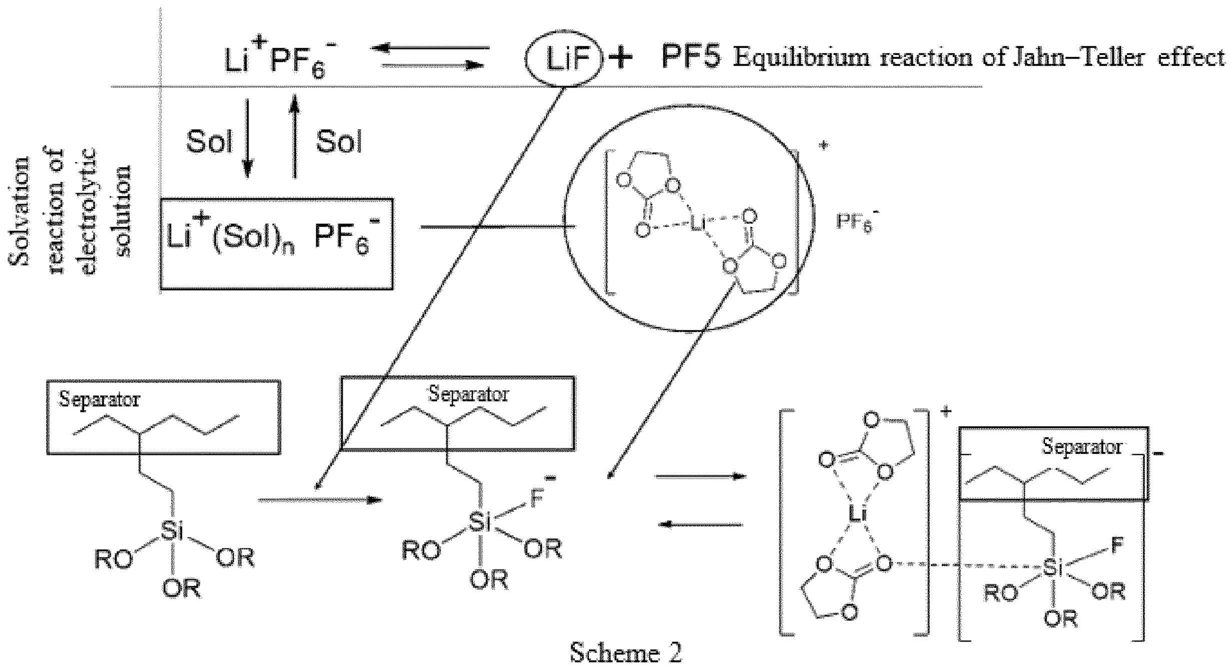


Scheme 2

wherein Sol represents a nonaqueous solvent in an electrolytic solution, and includes ethylene carbonate (EC) as an example of a nonaqueous solvent, includes $LiPF_6$ as an example of an electrolyte and includes a silane-modified polyethylene as an example of a constituent resin of a separator according to the first embodiment, and R represents, for example, H, Me, Et, Bu, etc., or a siloxane bond crosslinked with neighboring silanol. Such a concept is peculiar to the below-mentioned amorphous structure obtained by film formation of a polymer composition in which a resin A and a resin B or a resin C are used, and this approach differs from Lewis acidic properties of Si in the coordination complex of a low molecular weight allylsilane compound.

Further, the Si-containing molecules often have crosslinkability, for example, when they have silane crosslinkability, it is considered possible to ensure the silane crosslinkability of the Si-containing molecules dispersed even in a nonaqueous secondary battery and to ensure the stability of siloxane bonds, thereby making it possible to maintain the crosslinked structure of the separator for a long period of time, so that safety can be ensured in a safety test such as a nail penetration test. It has been known that when uneven flow of lithium ions moves at a lower rate than that of the intercalation reaction to electrodes during charging/discharging of a lithium ion battery, lithium ions accumulate in the electrical stagnation to form dendrites. In particular, when the battery operates at low temperature, increased viscosity of the electrolytic solution makes it difficult for ions to move within the system, which tends to form dendrites, leading to significant deterioration of the safety of the battery after low-temperature cycle. This phenomenon is a large problem in use of mobile device power supplies and battery-powered vehicles in seasons and regions with extreme temperature differences. In the first embodiment, the uniformity of lithium ion flow can be improved by designing a separator in which Si-containing atoms are dispersed in a state of not being a sea-island structure (not a matrix structure), and thus the problem has been solved, as described in NPL 1.

From the viewpoint of further improving the safety of a separator and a nonaqueous secondary battery including the same, the separator preferably contains, for example, a silane-modified polyethylene as Si-containing molecules, and it is more preferable that a silane crosslinking reaction proceeds when the separator comes in contact with an electrolytic solution.

From the viewpoint of achieving both longer life of the cycle characteristics and the safety of the nonaqueous secondary battery and/or balancing them, the Voronoi area (mu) at maximum frequency of Voronoi polygons obtained by carrying out Voronoi tessellation is preferably within a range of 1.5 $\mu m^2$ to 17.0 $\mu m^2$ , more preferably 4.0 $\mu m^2$ to 16.0 $\mu m^2$ , and still more preferably 6.0 $\mu m^2$ to 13.0 $\mu m^2$ . From the same point of view, the spread ($\sigma$) of the Voronoi area frequency distribution of the Si-containing image detected by the TOF-SIMS measurement is preferably within a range of 0.5 $\mu m^2$ to 8.5 $\mu m^2$, more preferably 1.7 $\mu m^2$ to 6.3$\mu m^2$ , and still more preferably 1.8 $\mu m^2$ to 4.2 $\mu m^2$.

The Voronoi tessellation is to carry out regional division by determining, with respect to a plurality of points (generatrices) arranged at arbitrary positions on a certain metric space, to which generatrix another point on the same space is the closest. The diagram including the thus obtained regions is called a Voronoi diagram. Generally, in the Voronoi diagram, the boundary line of a plurality of regions defines part of a bisector between respective generatrices and each region forms a polygon (Voronoi polygon).

Note that the region that is not closed when carrying out Voronoi tessellation in the observation visual field is excluded from the calculation of the equation above. The region that is not closed includes, for example, a region obtained by applying Voronoi tessellation to a particle which is present in the boundary of the observation visual field and hidden from observation of a complete particle. Accordingly, in an image obtained by photographing at least a partial region of the separator surface, regarding a particle located at the edge of the image, it is preferable to confirm whether or not the particle is entirely observed.

Regarding a Si-containing image detected by the TOF-SIMS measurement, the ratio (σ/mu) of the spread (σ) of the Voronoi area frequency distribution to the Voronoi area (mu) at maximum frequency preferably satisfies the following relationship.

$$0.06 \leq \sigma/\text{mu} \leq 0.70$$

In the first embodiment, the ratio (σ/mu) in Voronoi tessellation can be regarded as an indicator that indicates whether or not the Si-containing molecules are uniformly dispersed on the separator surface. When the ratio (σ/mu) is within a range of 0.06 to 0.70, the Si-containing molecules are uniformly dispersed on the separator surface and sufficiently contribute to the coexistence of the Li complex derived from the electrolytic solution and the separator and the silane crosslinking reaction of the separator in the nonaqueous secondary battery, and thus the cycle product life of the battery can be prolonged. While not wishing to be bound by any theory, it was experimentally discovered in PTL 1 that the concentration at which an intermediate in which the Li complex is coordinated in the plane of the separator is present, or the life of the intermediate in an equilibrium state is important, and the ratio (σ/mu) in Voronoi tessellation can uniformly contribute to the intercalation reaction to electrodes. From the viewpoint of further prolonging the cycle product life of the battery, the ratio (σ/mu) is preferably within a range of 0.07 to 0.57, and more preferably 0.19 to 0.38.

The numerical values obtained by Voronoi tessellation of the separator according to the first embodiment can be adjusted within the range described above by controlling, for example, the structure of the Si-containing molecules, the molecular weight or molecular weight distribution of the separator-constituting starting materials, the mixing range of the separator-constituting starting materials and the like.

<Second Embodiment: Silicon-Containing Structure and Voronoi Tessellation (2) of Separator>

The separator according to the second embodiment contains silicon (Si)-containing molecules, and in a Si-containing image detected by the TOF-SIMS measurement of the separator, a Voronoi area (mu) at maximum frequency of Voronoi polygons obtained by carrying out Voronoi tessellation is within a range of 6.0 $\mu m^2$ to 12.0 $\mu m^2$.

In the separator according to the second embodiment, when TOF-SIMS measurement is carried out on a square area of 100 μm, at least one or more silicon-containing structures are detected, and preferably, it is detected that the Si-containing molecules are dispersed in a state of not being a sea-island structure in the separator.

In the second embodiment, various numerical values obtained by Voronoi tessellation are measured when the separator is a polyolefin microporous membrane, and can serve as an indicator that indicates the level of dispersion of Si-containing molecules on the separator surface.

When the Voronoi area (mu) at maximum frequency of Voronoi polygons is within a range of 6.0 $\mu m^2$ to 12.0 $\mu m^2$, there is a strong tendency for the Si-containing molecules to be dispersed in a state of not being a sea-island structure in the separator, similar to the first embodiment, it is possible to achieve both safety and longer life of the nonaqueous secondary battery including a separators, thus ensuring low-temperature cycle characteristics and safety of a nail penetration test due to the uniformity of $Li^+$ ion flow, Lewis acid effect or crosslinkability of Si-containing molecules. In the second embodiment, the separator in which the Si elements are uniformly dispersed coexists with the oligomer (SFC: SEI film components) generated by the chemical reaction of the electrolytic solution on the surface of the positive electrode material, unshared electron pair of oxygen in the molecular structure of SFC can be coordinated to Si atoms and SFC exhibits the affinity with Si atoms, leading to an improvement in diffusibility of SFC, as shown in the following scheme 3:

[Chemical Formula 3]

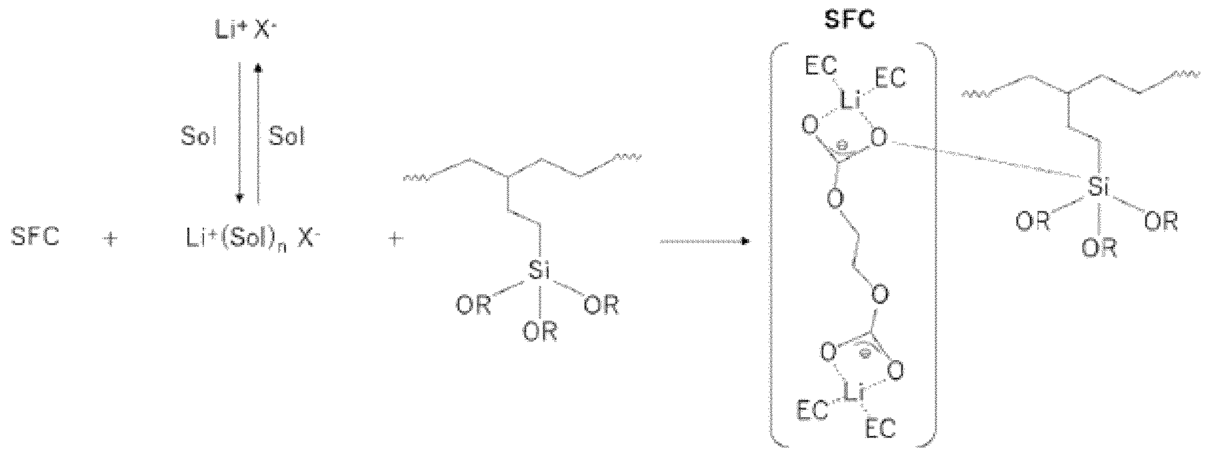

Scheme 3

wherein Sol represents a nonaqueous solvent in an electrolytic solution, and $X^-$ represents a counter anion of a lithium salt as an electrolyte As an example, the right side shows the case where the nonaqueous solvent is ethylene carbonate (EC), SFC is an oligomer produced by reduction polymerization of two EC molecules, and silane-modified polyethylene is included in the constituent resin of the separator. R represents, for example, methyl, ethyl, n-propyl, isopropyl, n-butyl, sec-butyl, isobutyl, tert-butyl, etc., or a siloxane bond crosslinked with neighboring silanol.

In the second embodiment, when the Voronoi area (mu) of the separator is within a range of 6.0 $\mu m^2$ to 12.0 $\mu m^2$, the Si-containing molecules are finely and uniformly dispersed in the separator, as shown in scheme 3, SFC is uniformly dispersed over the entire separator, and an SEI layer having a uniform thickness that suppresses the decomposition of the electrolytic solution is uniformly formed on the negative electrode, leading to an improvement in cycle test capacity retention rate. When the Voronoi area of the separator is too large (that is, the distance between Si-containing molecules is too large), the diffusibility of SFC is insufficient and a non-uniform SEI layer is easily formed, leading to deterioration of the cycle test capacity retention rate. Meanwhile, even if the Voronoi area is too small (that is, the distance between Si atoms is too small), SFCs coordinated to Si atoms are densely packed in a narrow range, and thus the movement of the SFCs is suppressed by steric hindrance and the diffusion of the SFCs is insufficient, leading to deterioration of the cycle test capacity retention rate.

From the viewpoint of further improving the safety of the separator and the nonaqueous secondary battery including the same, it is preferable that the separator according to the second embodiment contains, for example, silane-modified polyethylene as Si-containing molecules, and it is more preferable that when the separator comes in contact with the electrolytic solution, the silane crosslinking reaction of the silane-modified polyethylene proceeds.

From the viewpoint of uniformly dispersing SFC throughout the separator, achieving both cycle characteristics and safety of the nonaqueous secondary battery, and/or balanced them, regarding the separator according to the second embodiment, a Voronoi area (mu) at maximum frequency of Voronoi polygons obtained by carrying out Voronoi tessellation is preferably within a range of 6.5 $\mu m^2$ to 11.5 $\mu m^2$ , more preferably 7.0 $\mu m^2$ to 11.0 $\mu m^2$ , still more preferably 7.5 $\mu m^2$ to 10.5 $\mu m^2$ . From the same point of view, the spread ($\sigma$) of the Voronoi area frequency distribution of the Si-containing image detected by the TOF-SIMS measurement is preferably within a range of 2.0 $\mu m^2$ to 4.0 $\mu m^2$ , more preferably, 2.2 $\mu m^2$ to 3.8 $\mu m^2$, and still more preferably 2.5 $\mu m^2$ to 3.5 $\mu m^2$.

Regarding a Si-containing image detected by the TOF-SIMS measurement, a ratio ($\sigma$/mu) of the spread ($\sigma$) of the Voronoi area frequency distribution to the Voronoi area (mu) at maximum frequency preferably satisfies the following relationship.

$$0.20 \leq \sigma/\text{mu} \leq 0.40$$

In the secon embodiment, the ratio ($\sigma$/mu) in Voronoi tessellation can be regarded as an indicator that indicates whether or not the Si-containing molecules are uniformly dispersed on the separator surface. When the ratio ($\sigma$/mu) according to the second embodiment is within a range of 0.20 to 0.40, similar to the first embodiment, the Si-containing molecules are uniformly dispersed on the separator surface, which can be sufficiently contributed to the coexistence of the Li complex derived from the electrolytic solution and the separator, and the silane crosslinking reaction of the separator

in the nonaqueous secondary battery, thus prolonging the cycle characteristics of the battery. In the second embodiment, the dispersibility of SFC is enhanced and uniform formation of the SEI layer is promoted, thus enabling an improvement in cycle characteristics of the battery. From the viewpoint of further prolonging the cycle product life of the battery, the ratio (σ/mu) according to the second embodiment is more preferably within a range of 0.22 to 0.38, and still more preferably 0.25 to 0.35.

The numerical values obtained by Voronoi tessellation of the separator according to the second embodiment can be adjusted within the range described above by controlling, for example, the structure of the Si-containing molecules, the molecular weight or molecular weight distribution of the separator-constituting starting materials, the mixing range of the separator-constituting starting materials and the like.

<Third Embodiment: Change in Air Permeability before and after Compression of Separator>

The separator according to the third embodiment includes a polyethylene microporous membrane, and an air permeability change ratio when compressed by 30% in thickness (air permeability Sh after compression/air permeability Sj before compression) is within a range of 1.1 times to 7.0 times.

In the third embodiment, when the air permeability change ratio (air permeability Sh/air permeability Sj) is within a range of 1.1 times to 7.0 times, even if the nonaqueous secondary battery including the separator is compressed in the thickness direction of the separator, the ion permeability can be maintained, and there is a tendency to ensure the safety and low-temperature cycle characteristics in a nail penetration test of the battery. This tendency is remarkable when the negative electrode of the battery is an easily expandable negative electrode such as an Si-containing negative electrode. From such point of view, the air permeability change ratio (air permeability Sh/air permeability Sj) is preferably 1.3 times to 6.9 times.

The air permeability change ratio (air permeability Sh/air permeability Sj) is measured when the separator is a polyolefin microporous membrane, and the measurement can be carried out by the method mentioned in the Examples.

<Fourth Embodiment: Inclusion and Crystal Structure of Silane-Modified Polyolefin>

The separator according to the fourth embodiment contains a silane-modified polyolefin, a crystal long period of a polyethylene detected by a small-angle X-ray scattering (SAXS) measurement is 20 to 50 nm, a crystallinity degree detected by a wide-angle X-ray scattering (WAXS) measurement is 60% to 80%, and a polyethylene crystallite size (110) detected by a wide-angle X-ray scattering (WAXS) measurement is 10 to 50 nm.

Generally, in a separator in which a crystalline resin such as polyethylene is used, a repeating periodical structure of crystalline portions and amorphous portions is present in the separator (FIG. 19). The crystal long period ($f_c$) means an average of the length of one period of a repeating period of the crystal portions and the amorphous portions, the crystal portion thickness ($t_c$) means an average of the thicknesses of the crystal portions of the repeating period of the crystal portions and the amorphous portions, the amorphous portion thickness ($t_a$) means an average of the thicknesses of the amorphous portions of the repeating period of the crystal portions and the amorphous portions, the crystallite size means an average of the size of individual crystallites, the crystallinity degree means a percentage of the crystalline portions in the total, and the crystal orientation degree ($a_c$) means the degree of orientation of the crystal portions in a certain direction. For example, the crystallite size (110) means an average of the size of individual polyethylene crystallites in the (110) direction, the crystallite size (200) means an average of the size of individual polyethylene crystallites in the (200) direction, the MD cross-sectional crystal orientation degree means the degree to which the (110) planes of the polyethylene crystals are aligned parallel to the MD-TD plane in the cross-section of the separator cut in a plane perpendicular to MD (MD cross-section), and the TD cross-sectional crystal orientation means the degree to which the (110) planes of polyethylene crystals are aligned parallel to the MD-TD plane in the cross-section of the separator cut in a plane perpendicular to TD (TD cross-section). The crystal structure of the separator can be measured using an X-ray structure evaluation device.

In the fourth embodiment, SAXS and WAXS measurements of the separator as the substrate are carried out, and therefore, when the separator is in the form of a multilayer membrane or a laminated membrane, SAXS and WAXS measurements shall be carried out after removing layers other than the polyolefin microporous membrane.

In the fourth embodiment, in combination of specific X-ray structural analysis of SAXS and WAXS, when the crystal long period is within a range of 20 nm to 50 nm, the crystallinity degree is within a range of 60% to 80%, and the crystallite size (110) of polyethylene is within a range of 10 to 50 nm, the distance between the silane-modified units is optimized while improving the thermal creep resistance of the separator, and the crosslinking reaction is promoted when the separator comes into contact with the coating solution in the coating step, thus enabling an improvement in collapse test passing rate, cycle test capacity retention rate and high-temperature cycle life without adding a step for crosslinking.

After coating the separator and passing through an assembly step, a finishing step (charging/discharging, degassing) and an inspection step, a nonaqueous secondary battery is produced within 1 to 5 days after coating at the

earliest. From the viewpoint of allowing the crosslinking reaction to proceed sufficiently by then, the ease of progress of crosslinking (reaction speed) is important.

It has been known that the reaction rate of crosslinking depends on environmental factors such as solvent properties and temperature, but there has not been sufficiently studied on an influence of structural factors such as distance between functional groups and steric hindrance have not been sufficiently studied. The present inventors have found conditions for the crosslinking reaction of the separator to proceed easily in combination of specific X-ray structure analysis such as SAXS and WAXS and, as necessary, specific functional group dispersion state analysis such as TOF-SIMS, and they have also found the optimum conditions for the separator for a nonaqueous secondary battery in consideration of the thermal creep resistance. While not wishing to be bound by any theory, it is considered that, according to the present invention, by designing so as to define the crystal structure, even if the number of tie molecules in the amorphous layer increases to improve the thermal creep resistance, leading to generation of non-uniform stress, non-uniform deformation of the separator is inhibited and partial suppression of the flow of Li ions and electrolytic solution decomposition products is inhibited, thereby improving the high-temperature cycle life.

In the present invention, it is considered that by designing to determine the numerical values related to the crystal structure and designing to determine the dispersion state of the silicon (Si)-containing functional group, the diffusibility of the Li ion complex is improved by an interaction with the Si elements in the silicon (Si)-containing functional group, leading to an improvement in cycle characteristics by suppression of the local growth of Li dendrite. It is also considered that by designing so as to determine the numerical values related to the crystal structure and designing so as to determine the dispersion state of the silicon (Si)-containing functional groups, the silicon (Si)-containing functional groups approach each other and the crosslinking reaction easily proceeds easily, leading to the progress of the crosslinking reaction in the coating step during the production process of the separator. It is also considered that by designing to determine the numerical values related to the crystal structure and designing to determine the dispersion state of the silicon (Si)-containing functional group, the number of crosslinks increases and the fluidity of the resin at high temperatures decreases, leading to an improvement in safety in the collapse test. In the coating step, by using a coating solution having high ability to impregnate polyolefin, the thermal vibration of the silicon (Si)-containing functional groups is promoted by the solvent penetrated between the molecular chains of the polyolefin, and thus the crosslinking reaction can be further promoted. By using a coating solution containing polar molecules, the polar molecules and/or hydrogen ions and/or hydroxide ions in the coating solution act as a catalyst, thus making it possible to further promote the crosslinking reaction between (Si)-containing functional groups. As a result, the fluidity of the separator at high temperature can be decreased, leading to an improvement in high-temperature cycle life and collapse safety of the nonaqueous secondary battery.

From the viewpoint of improving the ease of the progress of crosslinking of the separator, the collapse test passing rate, the cycle test capacity retention rate and the high-temperature cycle life of the battery, and/or balancing them, in SAXS and WAXS measurements of the separator: analysis of the crystal structure of polyolefin is preferable, and analysis of the crystal structure of polyethylene is more preferable. The silane-modified polyolefin according to the fourth embodiment may be contained in optional position of the separator and, for example, in the case of a single-layer separator composed only of a polyolefin microporous membrane, the silane-modified polyolefin may exist in the microporous membrane or on the surface of the microporous membrane. In the case of a multilayer separator including a layer formed on one or both sides of the microporous membrane, the silane-modified polyolefin may exist in the microporous membrane or on the surface of the microporous membrane, or in or on the formed layer. From the same viewpoint as above, it is preferable to exist in or on the surface of the polyolefin microporous membrane as the substrate. The WAXS measurement may be carried out by the transmission or reflection method (XRD). From the viewpoint of analyzing not only the separator surface but also the internal crystal structure, the WAXS measurement of the separator is preferably carried out by the transmission method.

From the same viewpoint, the crystal long period detected by SAXS is preferably more than 20 nm and 49 nm or less, and more preferably 22 nm or more and 47 nm or less. From the same viewpoint, the WAXS-detected crystallinity degree is preferably more than 60% and less than 80%, and more preferably 62% or more and 78% or less. From the viewpoint of improving the collapse test passing rate, the cycle test capacity retention rate and the high-temperature cycle life of the battery, and/or balancing them, the crystallite size the (110) plane of polyethylene detected in the WAXS measurement of a separator containing a silane-modified polyolefin is preferably within a range of 10 nm to 50 nm, and more preferably 12 nm to 47 nm.

When the crystal long period is too large, the melting temperature of the crystal rises and the shutdown temperature rises by the Gibbs-Thomson effect. When the crystal long period is too large, the number of tie molecules decreases and the thermal creep resistance deteriorates. As a result, deterioration of the collapse test passing rate and deterioration of high-temperature cycle life occur. To increase the crystal long period, it is necessary to increase the amount of deformation in the stretching process, leading to deterioration of the heat shrinkability of the separator.

Meanwhile, when the crystal long period is too small, the distance between the silane-modified units in the amorphous portions becomes too small, so that deterioration of impregnating ability of the solvent and/or steric hindrance

between the silane-modified groups occur(s) and thus the crosslinkability deteriorates, leading to a decrease in viscoelasticity during melting and a decrease in meltdown temperature. As a result, the collapse test passing rate and the high-temperature cycle life decrease. To reduce the crystal long period, it is necessary to decrease the amount of stretching in the stretching step, and thus the pore size and the number of pores in the separator decrease, leading to deterioration of the permeability. As a result, a decrease in collapse test passing rate, a decrease in cycle test capacity retention rate and deterioration of the high-temperature cycle life occur.

Similarly, when the crystallinity degree is too high, the melting temperature of the crystal rises and the shutdown temperature of the separator rises by the Gibbs-Thomson effect, leading to deterioration of the thermal creep resistance. The distance between the silane-modified units between the facing crystal planes decreases, the impregnating ability of the solvent deteriorates and the crosslinkability deteriorates due to steric interference of the branched chains, leading to a decrease in viscoelasticity and meltdown temperature during melting. As a result, the collapse test passing rate and the high-temperature cycle life deteriorate.

Meanwhile, when the crystallinity degree is too small, the heat shrinkability deteriorates due to the limitation of film-forming properties of the separator, and the number of tie molecules decreases, leading to deterioration of the thermal creep resistance. The distance between the silane-modified units between the facing crystal planes increases and the crosslinkability deteriorates, and thus the viscoelasticity and meltdown temperature decrease during melting. As a result, the collapse test passing rate and the high-temperature cycle life deteriorate.

When the crystallite size is too large, the melting temperature of the crystal rises and the shutdown temperature rises by the Gibbs-Thomson effect. The number of tie molecules decreases and the thermal creep resistance deteriorates. As a result, the collapse test passing rate and the high-temperature cycle life deteriorate.

Meanwhile, when trying to reduce the crystallite size, it is necessary to perform stretching and a heat treatment at low temperature under high tension after sheet forming, and thus residual stress tends to remain in the separator, leading to deterioration of the heat shrinkability of the separator. As a result, the collapse test passing rate and the high temperature cycle life deteriorate.

From the viewpoint of improving the ease of progress of crosslinking of the separator, and the collapse test passing rate, the cycle test capacity retention rate and the high-temperature cycle life of the battery, and/or balancing them, the crystallite size (110) of polyethylene determined by an XRD measurement in the separator is preferably 14.2 to 40.0 nm and/or the crystallinity degree determined by an XRD measurement is preferably 80 to 99%.

The ratio (110)/(200) of the crystallite size in the direction perpendicular to the (110) plane and the crystallite size in the direction perpendicular to the (200) plane detected in the WAXS measurement of the separator containing a silane-modified polyolefin is preferably within a range of 0.9 to 2.0, and more preferably 1.0 to 1.7, from the viewpoint of improving the collapse test passing rate, the cycle test capacity retention rate, the high-temperature cycle life, etc., and/or balancing them.

From the same viewpoint as above, the amorphous portion thickness (amorphous portion length) of the separator containing a silane-modified polyolefin is calculated from the crystal long period of a polyethylene detected by a small-angle X-ray scattering measurement and the crystallinity degree detected by a wide-angle X-ray scattering measurement by the following formula: amorphous portion thickness [nm] = (crystal long period [nm]) $\times$ (1-crystallinity degree [%]/100), and is preferably within a range of 3 nm to 23 nm, more preferably 5 nm to 15 nm, and still more preferably 8 nm to 13 nm. When the amorphous portion thickness (amorphous portion length) is too large, the entanglement of molecular chains in the amorphous portions increases, so that restraint between crystals becomes stronger and the shutdown temperature rises. The distance between the silane-modified units between the facing crystal planes also increases and the crosslinkability deteriorates, and thus the viscoelasticity and meltdown temperature during melting decrease. As a result, the collapse test passing rate and the high-temperature cycle life deteriorate. Meanwhile, when the amorphous portion length is too small, the entanglement of the molecular chains decreases and the thermal creep resistance deteriorate. The distance between the silane-modified units between the facing crystal planes also decreases, and the crosslinkability deteriorates by deterioration of the impregnating ability of the solvent and the steric hindrance of the branched chains, leading to a decrease in viscoelasticity and meltdown temperature during melting. As a result, the collapse test passing rate and the high-temperature cycle life deteriorate.

From the same viewpoint as above, the crystal portion thickness of the separator containing a silane-modified polyolefin is preferably within a range of 15 nm to 36 nm, and more preferably 17 nm to 34 nm. When the crystal portion thickness (crystal length) is too large, the melting temperature of the crystal rises and also the shutdown temperature rises by the Gibbs-Thomson effect. Since the number of tie molecules decreases, the thermal creep resistance deteriorate. As a result, the collapse test passing rate and the high-temperature cycle life deteriorate. Meanwhile, when trying to decrease the crystal length, it is necessary to perform stretching and a heat treatment at low temperature under high tension after sheet forming, and thus residual stress tends to remain in the separator, leading to deterioration of the heat shrinkability. As a result, the collapse test passing rate and the high temperature cycle life deteriorate.

From the same viewpoint as above, in the WAXS measurement of the separator containing a silane-modified polyolefin, the cross-sectional crystal orientation degree of polyethylene measured from the MD direction of the separator

is preferably within a range of 0.70 to 0.99, and the cross-sectional crystal orientation degree of polyethylene measured from the TD direction is preferably within a range of 0.70 to 0.99. When the cross-sectional crystal orientation degree measured from MD and TD is 0.70 or more, it is easy to ensure the separator strength, while when it is 0.99 or less, it is easy to form a separator membrane. From the viewpoint of the separator strength and the film formability, the cross-sectional crystal orientation degree of polyethylene measured from the MD direction of the separator is more preferably within a range of 0.76 to 0.98 and/or the cross-sectional crystal orientation degree measured from the TD direction of the separator of polyethylene measured from the direction is more preferably within a range of 0.74 to 0.93.

When the cross-sectional crystal orientation degree is too large, the amount of deformation in the orientation direction during melting increases, and thus the heat shrinkability deteriorate. As a result, the collapse test passing rate and high-temperature cycle life deteriorate. Meanwhile, when the cross-sectional crystal orientation degree is too small, the collapse test passing rate and high-temperature cycle life deteriorate. Generally, it has been known that when stress is applied to a resin material, as the number of tie molecules oriented in the stress direction becomes smaller, the more the thermal creep resistance deteriorates. When the cross-sectional crystal orientation degree is too small, the separator deforms non-uniformly when non-uniform stress occurs in the battery, leading to formation of non-uniform SFC flow, and a non-uniform SEI layer, and as a result, the collapse test passing rate and the high-temperature cycle life deteriorate.

From the viewpoint of improving the mechanical strength of the separator, and the collapse test passing rate, the cycle test capacity retention rate and the high-temperature cycle life of the battery, and/or balancing them, the cross-sectional crystal orientation degree of polyethylene in the MD direction of the separator measured by XRD is preferably 0.85 to 0.99 and/or the cross-sectional crystal orientation degree of polyethylene in the TD direction is preferably 0.85 to 0.99.

From the same viewpoint as above, the ratio MD/TD of the cross-sectional crystal orientation degree of polyethylene measured from the MD direction of the separator and the cross-sectional crystal orientation degree of polyethylene measured from the TD direction is within a range of 0.45 to 1.35 or 0.5 to 1.2, more preferably 0.50 to 1.20 or 0.60 to 1.25, and still more preferably 0.80 to 1.15. When the ratio MD/TD of the cross-sectional crystal orientation degree of polyethylene measured from the MD direction of the separator and the cross-sectional crystal orientation degree of polyethylene measured from the TD direction falls within the above range, the mechanical strength of the separator increases and creep deformation is less likely to occur against complex stresses that occur non-uniformly in the battery, leading to an improvement in collapse test passing rate, cycle test capacity retention rate and high-temperature cycle life of the battery.

The numerical values detected by SAXS and/or WAXS measurement(s) of the separator can be adjusted within the range described above by, for example, quantifying or selecting by the Si modification rate of the silane-modified polyolefin for the arrangement of the uniform Si-containing molecular structure, $C_3/C_4$ molecular structure, number average molecular weight (Mn), weight-average molecular weight (Mw), dispersion degree (Mn/Mw), etc., and/or quantifying or selecting a polyolefin resin other than the silane-modified polyolefin by Mn, Mw, Mn/Mw, etc. and/or by quantifying a mixing ratio of a silane-modified polyolefin and a polyolefin resin other than the silane-modified polyolefin, in the production process of the separator.

Regarding the Si-containing image detected by the TOF-SIMS measurement of the separator containing a silane-modified polyolefin, the Voronoi area (mu) at maximum frequency of Voronoi polygons obtained by carrying out Voronoi tessellation is preferably within a range of 6.00 $\mu m^2$ to 12.00 $\mu m^2$ . When the Voronoi area (mu) at maximum frequency is 6.00 $\mu m^2$ to 12.00 $\mu m^2$, it tends to be easier to improve the collapse test passing rate, cycle test capacity retention rate and high-temperature cycle life of the battery, and/or to balance them. More specifically, when the Voronoi area (mu) at maximum frequency of Voronoi polygons obtained by carrying out Voronoi tessellation is within a range of 6.00 $\mu m^2$ to 12.00 $\mu m^2$, there is a strong tendency for the Si-containing molecules to be dispersed in a state of not being a sea-island structure in the separator. For example, when the nonaqueous secondary battery is a lithium ion secondary battery, Si elements dispersed uniformly in the separator coexist with a lithium (Li) complex solvated with an electrolytic solution having unshared electron pair such as oxygen atoms, it is considered that the product life in a battery cycle characteristic test is prolonged by the above phenomena (i) and (ii) described for the first embodiment.

Further, the Si-containing molecules often have crosslinkability, for example, when they have silane crosslinkability, the silane crosslinkability of dispersed Si-containing molecules can also be ensured even in a nonaqueous secondary battery, and it is also considered that the safety of siloxane bonds can be ensured and the crosslinked structure of the separator can be maintained for a long period of time, thereby ensuring the safety in safety tests such as a collapse test.

In the separator according to the fourth embodiment, when the TOF-SIMS measurement is carried out on a square area of 100 $\mu$m, at least one or more silicon-containing structures are detected, and preferably, it is detected that the Si-containing molecules are dispersed in a state of not being a sea-island structure in the separator.

From the viewpoint of further improving the safety of a separator and a nonaqueous secondary battery including the same, the separator according to the fourth embodiment preferably include, for example, a silane-modified polyethylene as Si-containing molecules, and more preferably, the silane crosslinking reaction of the silane-modified polyethylene

proceeds when the separator comes into contact with the electrolytic solution or a coating solution.

From the viewpoint of improving the collapse test passing rate, the cycle test capacity retention rate and the high-temperature cycle life, and/or balancing them, the Voronoi area (mu) at maximum frequency of Voronoi polygons obtained by carrying out Voronoi tessellation is more preferably within a range of 6.20 $\mu m^2$ to 11.80 $\mu m^2$.

The spread ($\sigma$) of the Voronoi area frequency distribution of the Si-containing image detected by the TOF-SIMS measurement is preferably within a range of 2.00 $\mu m^2$ to 4.00 $\mu m^2$ . When $\sigma$ of the separator is 2.00 $\mu m^2$ or more, it is easy to form a separator membrane, and meanwhile, when it is 4.00 $\mu m^2$ or less, it is possible to improve the collapse test passing rate, the cycle test capacity retention rate and the high-temperature cycle life of the battery. From such point of view, $\sigma$ of the separator is more preferably within a range of 2.30 $\mu m^2$ to 3.60 $\mu m^2$.

Regarding a Si-containing image detected by the TOF-SIMS measurement, a ratio ($\sigma$/mu) of the spread ($\sigma$) of the Voronoi area frequency distribution to the Voronoi area (mu) at maximum frequency preferably satisfies the following relationship:

$$0.20 \leq \sigma/\mathrm{mu} \leq 0.40$$

The ratio ($\sigma$/mu) in Voronoi tessellation can be regarded as an indicator that indicates whether or not the Si-containing molecules are uniformly dispersed on the separator surface. When the ratio ($\sigma$/mu) is within a range of 0.20 to 0.40, the Si-containing molecules are uniformly dispersed on the separator surface and sufficiently contribute to the coexistence of the Li complex derived from the electrolytic solution and the silane crosslinking reaction of the separator in the nonaqueous secondary battery, thus enabling achievement of both the film formability of the separator containing a silane-modified polyolefin and the cycle characteristics of the nonaqueous secondary battery. While not wishing to be bound by any theory, it was experimentally discovered that the concentration at which an intermediate in which the Li complex is coordinated in the plane of the separator is present, or the life of the intermediate in an equilibrium state is important, and the ratio ($\sigma$/mu) within the above numerical range can uniformly contribute to the intercalation reaction to the electrode in the fourth embodiment. From the viewpoint of further prolonging the cycle product life of the battery while ensuring the film-forming properties of the separator, the ratio ($\sigma$/mu) is more preferably within a range of 0.22 or more and 0.38 or less.

The numerical values obtained by Voronoi tessellation of the separator according to the fourth embodiment can be adjusted within the range described above by controlling, for example, the structure of the Si-containing molecules, the molecular weight or molecular weight distribution of the separator-constituting starting materials, the mixing range of the separator-constituting starting materials and the like.

As necessary, the separator according to the fourth embodiment may have a multilayer structure and can be provided as a nonaqueous secondary battery including the separator.

<Fifth Embodiment: Silane-Modified Polyolefin-Containing Structure of Separator, and Voronoi Tessellation, Change in Air Permeability before and after Compression, and Crystal Structure>

In the fifth embodiment, there is provided a separator for a nonaqueous secondary battery in which the configurations according to the first to fourth embodiments are combined.

A separator for a nonaqueous secondary battery according to the fifth embodiment is a polyolefin microporous membrane containing a silane-modified polyolefin, and regarding a Si-containing image detected by a time-of-flight secondary ion mass spectrometry (TOF-SIMS) measurement of the separator for a nonaqueous secondary battery, the Voronoi area (mu) at maximum frequency of Voronoi polygons obtained by carrying out Voronoi tessellation is within a range of 1.0 $\mu m^2$ to 17.5 $\mu m^2$ or 6.0 $\mu m^2$ to 12.0 $\mu m^2$ , the spread ($\sigma$) of the Voronoi area frequency distribution of the Si-containing image detected by the TOF-SIMS measurement is within a range of 0.5 $\mu m^2$ to 8.5 $\mu m^2$, the air permeability change ratio when compressed by 30% in thickness (air permeability Sh after compression/air permeability Sj before compression) is within a range of 1.1 to 7.0 times, the crystal long period of a polyethylene detected by SAXS measurement is 20 to 50 nm, the crystallinity degree detected by WAXS measurement degree is 60% to 80%, and/or the crystallite size (110) of a polyethylene detected by WAXS measurement is 10 to 50 nm.

Constituent elements of the separators according to the first to fifth embodiments will be described below.

<Polyolefin>

Examples of the polyolefin include, but are not limited to, homopolymers of ethylene or propylene, or copolymers formed from at least two monomers selected from the group consisting of ethylene, propylene, 1-butene, 4-methyl-1-pentene, 1-hexene, 1-octene and norbornene. Of these, high-density polyethylene, low-density polyethylene, ultra-high molecular weight polyethylene (UHMWPE) or modified polyolefin is preferable, and high-density polyethylene, UHMWPE

or modified polyolefin is more preferable, from the viewpoint of performing heat setting (sometimes abbreviated as "HS") at higher temperature while avoiding obstruction of the pores. In general, it is known that the weight-average molecular weight of UHMWPE is 1,000,000 or more. A polyolefin may be used alone, or two or more thereof may be used in combination.

From the viewpoint of imparting properties obtained by Voronoi tessellation described above, properties obtained by SAXS and/or WAXS and the like to the separator, a modified polyolefin is preferably used as the polyolefin, and a silane-modified polyethylene (hereinafter referred to as resin A) is more preferably used.

Not only from the viewpoint of achieving both the longer life of the cycle characteristics and the safety of the nonaqueous secondary battery, and balancing them, but also from the viewpoint of optimizing various values described above for uniform Si-containing molecular structure arrangement, SAXS and/or WAXS measurement(s) and Voronoi tessellation and improving the ease of progress of separator crosslinking, collapse test passing rate, cycle test capacity retention rate and high-temperature cycle life of the battery, and/or balancing them, at least one polyolefin other than the silane-modified polyethylene is preferably used, in addition to the resin A, UHMWPE having a viscosity-average molecular weight (Mv) of 1,800,000 or more (hereinafter referred to as resin B) is more preferably used as the polyolefin other than the silane-modified polyethylene, and not only the resin B but also a polyethylene having an Mv of less than 1,800,000 (hereinafter referred to as resin C) is still more preferably used.

(Silicon-Containing Structure and Voronoi Tessellation of Separator)

In the silicon (Si)-containing functional group of the silane-modified polyolefin in the separator, the number of methylenes ($CH_2$) constituting the linking portion to the main chain is preferably 2 to 10. The number of methylenes ($CH_2$) constituting the linking portion to the main chain refers to the number of ($CH_2$)s linking the main chain of the silane-modified polyolefin and Si atoms, for example, the value of n in the following formula (I):

[Chemical Formula 4]

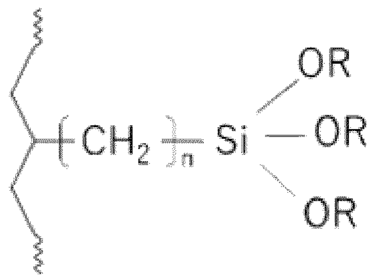

(I)

wherein R includes methyl, ethyl, n-propyl, isopropyl, n-butyl, sec-butyl, isobutyl, tert-butyl, etc., and n is the number of ($CH_2$)s constituting the linking portion to the main chain described above. For example, regarding the Si-containing functional group of the silane-modified polyolefin, when the number of $CH_2$ constituting the linking portion is within a range of 2 to 10 based on the polyolefin main chain containing a polyethylene, etc. as the main component, it becomes easy to construct a higher order structure which easily causes a silane crosslinking reaction. From the viewpoint of ensuring ease of crosslinking of the separator and improving the collapse test passing rate, cycle test capacity retention rate and high-temperature cycle life of the battery, and/or balancing them, the number of $CH_2$ is more preferably within a range of 2 to 6.

<Resin A: Silane-Modified Polyethylene>

A separator containing silane-modified polyethylene (resin A) is preferable because the silane crosslinking reaction of the silane-modified polyethylene proceeds when it comes into contact with the coating solution or the electrolytic solution. Examples of the silane-modified polyethylene include a silane graft-modified polyethylene. Since the functional group included in the polyolefin constituting the separator substrate is not incorporated into the crystal portions of the polyolefin and is considered to be crosslinked in the amorphous portions, when the separators according to the first to fifth embodiments come into contact with the electrolytic solution, a crosslinked structure is formed by using a surrounding environment or a chemical substance in the electrolytic solution, thereby suppressing an increase in internal stress or deformation of the fabricated electricity storage device, thereby enabling an improvement in safety of a nail penetration test.

The separators according to the first to fifth embodiments can react with $H^+$ ion or -OH groups in the coating solution to promote a crosslinking reaction, thereby suppressing an increase in internal stress or deformation of the fabricated battery, thereby enabling an improvement in safety of a collapse test. While not wishing to be bound by any theory, it is considered that when the aqueous coating solution is acidic, activation energy of the reaction system is lowered and the crosslinking reaction of the separator is facilitated. It is considered that when the aqueous coating solution is basic, the presence of $OH^-$ may promote the silane crosslinking reaction of the separator. In the case of the nonaqueous coating solution, it is considered that the organic solvent of the coating solution penetrates into the polyethylene amorphous portions of the separator to promote molecular motion, thereby promoting the silane crosslinking reaction.

By constructing a silane crosslinked structure (gelled structure) with a silane-modified polyethylene in the separator, high-temperature membrane rupture resistance is exhibited, thereby enabling an improvement in safety of a collapse test. It is presumed that this is because the polyethylenes dispersed in the mixed resin and/or the polyethylene and the polyolefin other than the polyethylene are preferably linked by the silane crosslinked structure. That is, by changing the morphology of the separator as a whole including the polyolefin microporous membrane, the tensile elongation is also improved, and thus it is expected that the possibility of the separator breaking can be reduced when the battery is deformed by an external force.

The silane-modified polyolefin has a structure in which the main chain is a polyolefin and an alkoxysilyl group is grafted to the main chain. The silane-modified polyolefin can be obtained, for example, by grafting an alkoxysilyl group to the main chain of the polyolefin. Examples of the silane-unmodified polyolefin include polyethylene, polypropylene, and copolymers of ethylene and propylene. Examples of the silane-modified polyethylene include a graft copolymer obtained by grafting a polyethylene such as high-density polyethylene, low-density polyethylene or straight-chain low-density polyethylene with an unsaturated silane compound such as vinyltrimethoxysilane, vinyltriethoxysilane or vinyltriacetoxysilane, or an ethylene-ethylenically unsaturated silane compound copolymer.

It is presumed that the alkoxysilyl group of the silane-modified polyethylene is converted into a silanol group through a hydrolysis reaction with water, thereby causing a condensation reaction to form a siloxane bond (see hydrolysis reaction, condensation reaction and dehydrating condensation reaction; the ratio of changing from T0 structure to T1 structure, T2 structure or T3 structure is arbitrary, and in the following formula, mention is made of the case where the number n of methylene ($CH_2$)s constituting the linking portion to the main chain described in the above formula (I) is 2, n may also be 3 to 10). Examples of the alkoxide substituted with the alkoxysilyl group include, but are not particularly limited to, methoxide, ethoxide, butoxide and the like. For example, in the following formula, R includes methyl, ethyl, n-propyl, isopropyl, n-butyl, sec-butyl, isobutyl, tert-butyl and the like.

[Chemical Formula 5]

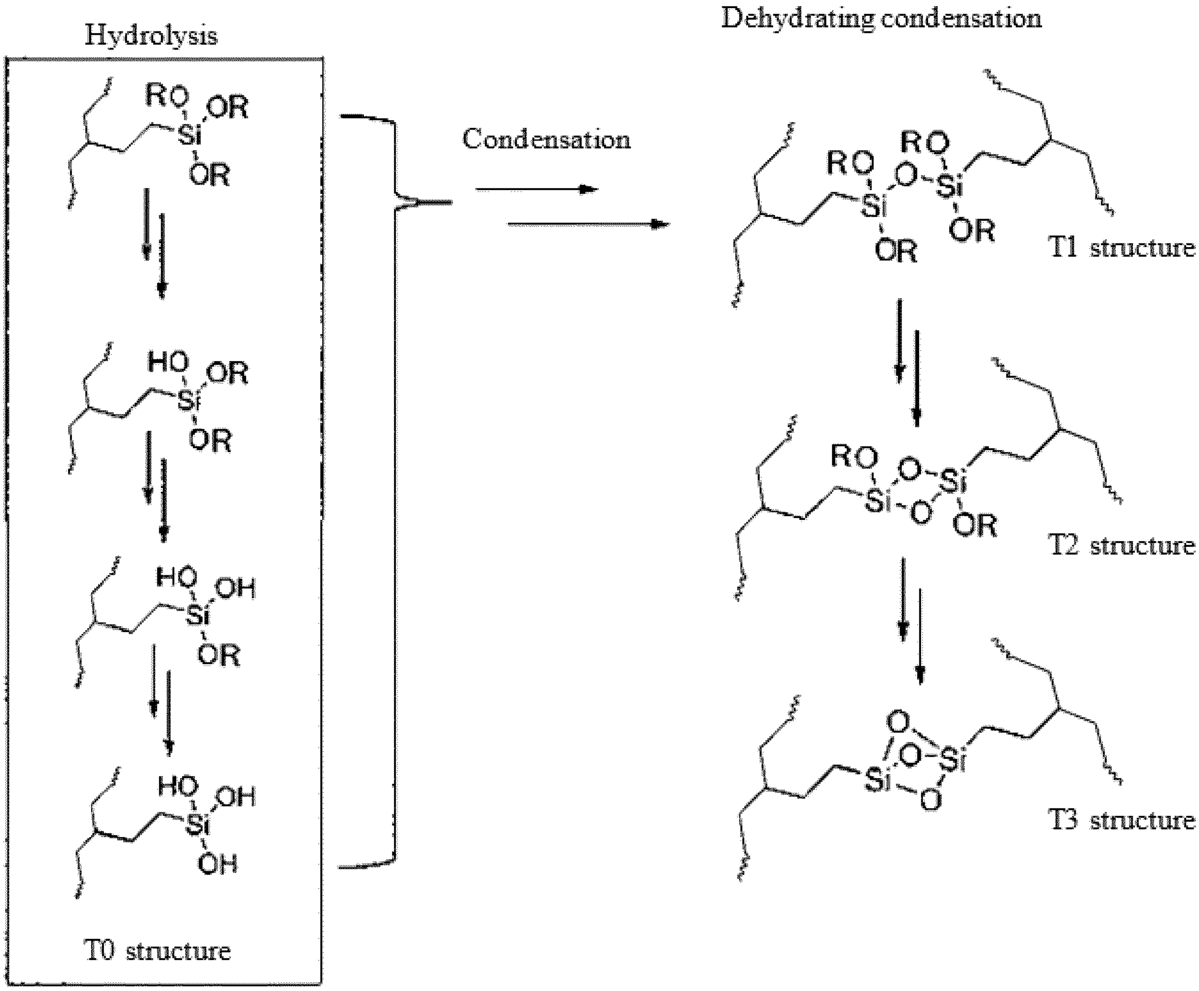


In the silane-modified polyolefin, the main chain and the graft are connected by a covalent bond. Examples of the structure for forming a covalent bond include, but are not particularly limited to, alkyl, ether, glycol, ester and the like.

Not only from the viewpoint of the arrangement of the uniform Si-containing molecular structure and the life of the equilibrium state of the Li ion coordination intermediate, but also from the viewpoint of optimizing various values described above for SAXS and/or WAXS measurement(s) and Voronoi tessellation and improving the ease of progress of separator crosslinking, collapse test passing rate, cycle test capacity retention rate and high-temperature cycle life of the battery, and/or balancing them, in the stage before the crosslinking reaction of the resin A is carried out, the resin A is preferably contained in an amount of 0.03 to 1.0 mol% (namely, the silanol unit modification is preferably 0.03 to 1.0 mol%). The silanol unit modification is preferably 0.05 to 0.35 mol%, more preferably 0.07 to 0.32 mol%, particularly preferably 0.08 to 0.30 mol%, and most preferably 0.12 to 0.28 mol%. In the first to fifth embodiments, the silane-modified unit is mainly present in the amorphous portions of the separator, and more preferably only the amorphous portions, and by focusing on the distance between the silane-modified units, and thermal vibrational motion at -10°C to 80°C, we designed a molecular structure which facilitates the construction of the crosslinking reaction. In the above formula, all of T0, T1, T2 and T3 structures can form a coordination intermediate with Li ions, but it is considered that Li ions are coordinated between Si atoms in the amorphous portions, and the coordination desorption and the rearrangement are considered to proceed at random, so that the amount of the silanol unit modification of the resin A within the above range is adjusted to maximize the effect.

From the same viewpoint as above, the resin A is preferably modified by 0.01 to 2.0 mol% of a propylene ($C_3$) unit or 0.01 to 2.0 mol% of a butene ($C_4$) unit, or 0.01 to 2.0 mol% in total of a C3 unit and a C4 unit.

From the same viewpoint as above, the C3 unit modification rate of the resin A is more preferably 0.01 to 1.2 mol%, still more preferably 0.01 to 0.75 mol%, particularly preferably 0.02 to 0.60 mol%, and most preferably 0.05 to 0.30 mol%.

From the viewpoint of the FUSE function of the separator, in addition to the cycle characteristics and the safety of the nonaqueous secondary battery, in the stage where the crosslinking reaction of the resin A is carried out, the $C_4$ unit modification rate of the resin A is preferably 0.01 to 1.0 mol%, more preferably 0.30 to 0.70 mol%, and particularly

preferably 0.48 to 0.65 mol%. Meanwhile, in the heat setting (HS) step at the time of formation of the separator membrane, the $C_4$ unit modification rate of the resin A is preferably 0.43 mol% or less, more preferably 0.40 mol% or less, and still more preferably 0.1 mol% or less.

Not only from the viewpoint of the cycle characteristics and the safety of the nonaqueous secondary battery, but also from the viewpoint of optimizing various values described above for SAXS and/or WAXS measurement(s) and Voronoi tessellation of the separator and improving the collapse test passing rate, the cycle test capacity retention rate and the high-temperature cycle life of the nonaqueous secondary battery, and/or balancing them, the total modification rate of the $C_3$ unit and the $C_4$ unit of the resin A is more preferably 1.5 mol% or less, still more preferably,1.0 mol% or less, particularly preferably 0.6 mol% or less, and most preferably 0.3 mol% or less.

From the viewpoint of the cycle characteristics and the safety of the nonaqueous secondary battery, the number average molecular weight (Mn) of the resin A is preferably 10,000 to 20,000, more preferably 16,000 or less, and still more preferably 15,000 or less.

From the same viewpoint as above, the weight-average molecular weight (Mw) of the resin A is preferably 45,000 to 200,000, more preferably 140,000 or less, still more preferably 129,000 or less, particularly preferably 100,000 or less, and most preferably 72,000 or less.

From the same viewpoint as above, Mw/Mn of the resin A is preferably 3.0 to 12, more preferably 4.0 to 9.0, and still more preferably 4.1 to 8.0.

From the same viewpoint as above, the crystallinity degree of the resin A is preferably 40 to 70%, more preferably 50 to 68%, and still more preferably 60 to 65%.

From the same viewpoint as above, the crystallite size (110) of the resin A is preferably 15 to 30 nm, more preferably 17 to 28 nm, and still more preferably 20 to 25 nm.

From the same viewpoint as above, the crystal long period of the resin A is preferably 15 to 30 nm, more preferably 17 to 27 nm, and still more preferably 20 to 25 nm.

Although there is no limitation, the viscosity-average molecular weight of (Mv) of the resin A may be, for example, 20,000 to 150,000, the density thereof may be, for example, 0.90 to 0.97 g/cm$^3$ , and the melt mass flow rate (MFR) at 190°C thereof may be, for example, 0.1 to 15 g/min.

The polyethylene constituting the silane-modified polyethylene may be composed of ethylene alone, or two or more ethylenes. Two or more silane-modified polyethylenes composed of different ethylenes may be used in combination.

<Resin B: UHMWPE having Mv of 1,800,000 or more>

The resin B is UHMWPE having Mv of 1,800,000 or more, and is preferably used in combination with the resin A, and can be used in combination with the resin C as necessary.

Not only from the viewpoint of the cycle characteristics and the safety of the nonaqueous secondary battery, but also from the viewpoint of optimizing various values described above for SAXS and/or WAXS measurement(s) and Voronoi tessellation and improving the ease of progress of separator crosslinking, collapse test passing rate, cycle test capacity retention rate and high-temperature cycle life of the nonaqueous secondary battery, and/or balancing them, Mn of the resin B is preferably 200,000 to 1,400,000, more preferably 210,000 to 1,200,000, and still more preferably 250,000 to 1,000,000.

From the same viewpoint as above, Mw of the resin B is preferably 1,500,000 to 8,800,000, more preferably 1,600,000 to 7,100,000, and still more preferably,1,700,000 to 6,200,000.

From the same viewpoint as above, the ratio (Mw/Mn) of Mw to Mn of the resin B is preferably 3.0 to 12, more preferably 4.0 to 9.0, and still more preferably 6.0 to 8.8.

From the same viewpoint as above, Mv of resin B is preferably more than 1,800,000 and 10,000,000 or less, more preferably 1,850,000 to 8,500,000, still more preferably 1,950,000 to 7,800,000, and particularly preferably 2,000,000 to 6,500,000.

<Resin C: Polyethylene having Mv of less than 1,800,000>

The resin C is a polyethylene having Mv of less than 1,800,000, and is preferably used in combination with the resin A, and can be used in combination with the resin B as necessary.

Not only from the viewpoint of the cycle characteristics and the safety of the nonaqueous secondary battery, but also from the viewpoint of optimizing various values described above for SAXS and/or WAXS measurement(s) and Voronoi tessellation and improving the ease of progress of separator crosslinking, the collapse test passing rate, the cycle test capacity retention rate and the high-temperature cycle life of the nonaqueous secondary battery, and/or balancing them, Mn of the resin C is preferably 20,000 to 250,000, more preferably 30,000 to 200,000, still more preferably 32,000 to 150,000, and particularly preferably 40,000 to 110,000.

From the same viewpoint as above, Mw of the resin C is preferably 230,000 to 1,500,000, more preferably

280,000 to 1,300,000, still more preferably 320,000 to 1,200,000, and particularly preferably 400,000 to 1,000,000.

From the same viewpoint as above, the ratio (Mw/Mn) of Mw to Mn of the resin C is preferably 3.0 to 12, more preferably 4.0 to 9.0, and still more preferably 6.0 to 8.8.

From the same viewpoint as above, Mv of the resin C is preferably 250,000 or more and less than 1,800,000, more preferably 300,000 or more and 1,600,000 or less, still more preferably 320,000 or more and 1,100,000 or less, and particularly preferably 450,000 to 800,000.

<Optional Component>

Examples of the optional component which can be contained in the separator include components different from any of the resins A to C, for example, at least one of a polymer different from any of the resins A to C or an additive mentioned later. The optional component is not limited to a single type. The separator may contain a plurality of types of polymers different from any of the resins A to C, and may contain a plurality of types of additives, and may contain both the polymer and the additive. Examples of the optional component of polymers include homopolymers and copolymers including at least one of polypropylene (PP), polystyrene (PS), polyacrylate, polymethacrylate, polyvinyl chloride (PVC), polyvinylidene chloride (PVDC), polyester, polycarbonate (PC), polysulfone (PSU), polyethersulfone (PES), polyphenylene oxide (PPO), polyarylene ether-based polymer, polyphenylene sulfide (PPS), polyphenylene sulfide sulfone, polyparaphenylene (PPP), polyarylene-based polymer, polyarylene ketone, polyether ketone (PEK), polyarylene phosphine oxide, polyether phosphine oxide, polybenzoxazole (PBO), polybenzthiazole (PBT), polybenzimidazole (PBI), polyamide (PA), polyimide (PI), polyetherimide (PEI) and polyimide sulfone (PIS), and examples of the additive include antioxidants such as phenol-based compounds, phosphorus-based compounds and sulfur-based compounds; metal soaps such as calcium stearate and zinc stearate; ultraviolet absorbers; light stabilizers; antistatic agents; anti-fogging agents; dyes and the like. When the separator contains plural types of optional components, the total content of the plural types of optional components may be 20% by weight or less.

The separator may contain not only the additives exemplified above, but also known additives such as a plasticizers, but preferably does not contain an organic metal-containing catalyst (dehydrating condensation catalyst).

(Dehydrating Condensation Catalyst)

The alkoxysilyl group undergoes a hydrolysis reaction with water to form a siloxane bond. However, due to its slow reaction rate, organometallic-containing catalysts can be used to facilitate the condensation reaction. The metal of the organometallic-containing catalyst can be, for example, at least one selected from the group consisting of scandium, vanadium, copper, zinc, zirconium, palladium, gallium, tin, titanium, iron, nickel and lead. The organometallic-containing catalyst is specifically mentioned as dibutyltin laurate, dibutyltin acetate, dibutyltin octoate, etc., and it is known that the reaction rate can be overwhelmingly accelerated by the reaction mechanism proposed by Wei j et al. (F. W. van. de r. Wei): Macromol. Chem., 181, 2541, 1980.). To avoid the environmental and human health hazards of organotin, it has recently been known that the Lewis function of copper or titanium chelate complexes is used in combination with an organic base to promote the reaction to form a siloxane bond between alkoxysilyl groups in the same manner as in an organotin complex.

It has been known that the organometallic-containing catalyst (dehydrating condensation catalyst) also functions as a catalyst for a siloxane bond-forming reaction of an alkoxysilyl group-containing resin. Herein, those in which an organometallic-containing catalyst (or dehydrating condensation catalyst) is added in advance to a resin containing a silane-modified polyethylene before a sheet-forming step (for example, the stage of a kneading step which is carried out as necessary) are called a masterbatch resin.

It is preferable that the separator does not contain an organometallic-containing catalyst (dehydrating condensation catalyst) or a masterbatch resin containing the catalyst.

<Properties of Separator>

The properties of the following separator are in the case of a polyolefin microporous flat membrane or a single-layer membrane. When the microporous membrane is in the form of a laminated membrane, the following properties can be measured after removing a layer other than the polyolefin microporous membrane from the laminated membrane.

The porosity of the separator is preferably 20% or more, more preferably 30% or more, and still more preferably 32% or more or 35% or more. When the porosity of the microporous membrane is 20% or more, the puncture strength of the separator and the followability to rapid movement of lithium ions tends to be further improved. Meanwhile, the porosity of the microporous membrane is preferably 90% or less, more preferably 80% or less, and still more preferably 50% or less. When the porosity of the microporous membrane is 90% or less, the membrane strength is further improved and self-discharge tends to be further suppressed, and/or the air permeability is optimized. The porosity of the microporous

membrane can be measured by the method mentioned in Examples.

In a state of not being subjected to a compression test or a state before a compression test, the air permeability of the separator is preferably 1 second or more, more preferably 30 seconds or more, still more preferably 50 seconds or more, yet more preferably 55 seconds or more, particularly preferably 70 seconds or more, and most preferably 75 seconds or more. When the air permeability of the separator is 1 second or more, the balance between the membrane thickness and the porosity tends to be further improved. The air permeability of the separator is preferably 400 seconds or less, more preferably 300 seconds or less, and still more preferably 270 seconds or less. When the air permeability of the separator is 400 seconds or less, the ion permeability tends to be further improved. The air permeability of the separator can be measured by the method mentioned in Examples.

The tensile strength of the separator is preferably 1,000 $kgf/cm^2$ or more, more preferably 1,050 $kgf/cm^2$ or more, and still more preferably 1,100 $kgf/cm^2$ or more, in both directions of MD and TD. When the tensile strength is 1,000 $kgf/cm^2$ or more, the breakage at the time of winding of the slit or electricity storage device tends to be further suppressed, or the short circuit due to foreign material in the battery tends to be further suppressed. Meanwhile, the tensile strength of the separator is preferably 5,000 $kgf/cm^2$ or less, more preferably 4,500 $kgf/cm^2$ or less, and still more preferably 4,000 $kgf/cm^2$ or less. When the separator has a tensile strength of 5,000 $kgf/cm^2$ or less, the separator tends to be relaxed at an early stage during a heating test, so that the contractive force is reduced, and as a result, the safety tends to increase.

The tensile elastic modulus of the of the separator is preferably 120 N/cm or less, more preferably 100 N/cm or less, and still more preferably 90 N/cm or less, in both the MD and TD directions. The tensile modulus of 120 N/cm or less indicates that the separator for an aqueous secondary battery is not extremely oriented, and in a heating test, when an obstructive agent such as polyethylene melts and contracts, the polyethylene causes stress relaxation at an early stage, thereby suppressing contraction of the separator in the battery, and thus there is a tendency that short circuit between the electrodes tends to be prevented (Namely, the safety of the separator during heating can be further improved). Such a separator having low tensile elastic modulus can be easily achieved by containing a polyethylene having a weight-average molecular weight of 500,000 or less in the polyolefin which forms a polyolefin microporous membrane as the separator substrate. Meanwhile, the lower limit value of the tensile elastic modulus of the separator is not particularly limited, and is preferably 10 N/cm or more, more preferably 30 N/cm or more, and still more preferably 50 N/cm or more. The tensile elastic modulus of the microporous membrane can be appropriately adjusted by adjusting the degree of stretching, or relaxing after stretching as needed.

The membrane thickness of the separator is preferably 1.0 μm or more, more preferably 2.0 μm or more, and still more preferably 3.0 μm or more or 4.0 μm or more. When the membrane thickness of the separator is 1.0 μm or more, the membrane strength tends to be further improved. The membrane thickness of the separator is preferably 24 μm or less, more preferably 22 μm or less, and still more preferably 20 μm or less or 18 μm or less. When the membrane thickness of the separator is 24 μm or less, the ion permeability tends to be further improved. The membrane thickness of the separator can be measured by the method mentioned in Examples.

In the polyethylene crystal structure in the separator, the polyethylene crystallinity degree measured by X-ray diffraction (XRD) is preferably 60 to 99%, and the (110) crystallite size of the polyethylene is preferably 14.2 to 50.0 nm, the cross-sectional orientation degree is preferably 0.65 to 0.99, the lamellar thickness is preferably 15 to 40 nm, and the crystal long period is preferably 25 to 55 nm. The separator has an excellent crystal structure determined by such X-ray structural analysis because of its mechanical properties such as high compression elastic recovery rate and resistance to creep deformation due to an external force.

From the viewpoints of ensuring the handleability, the safety in the hot box test and stabilization of the heat shrinkage factor, the puncture strength of the separator is preferably within a range of 200 gf to 600 gf, and more preferably 210 gf to 390 gf. From the same point of view, the puncture strength divided by weight per unit area (puncture strength (gf) of separator weight per unit area ($g/m^2$ ) of separator) is preferably within a range of 50 $gf{\cdot}m^2/g$ to 100 $gf{\cdot}m^2/g$, and more preferably 60 $gf{\cdot}m^2/g$ to 90 $gf{\cdot}m^2/g$.

<Layer Configuration>

The separator may have either a single-layer structure or a multilayer structure, and from the viewpoint of having redox resistance and a compact and homogeneous porous structure, the separator preferably includes at least one polyolefin microporous membrane. The polyolefin microporous membrane can be a single-layer membrane composed of a single polyolefin-containing microporous layer, a multilayer membrane composed of a plurality of polyolefin-containing microporous layers, or a polyolefin-based resin layer and a layer containing other resins as main components, for example, a multilayer membrane composed of a thermoplastic polymer-containing layer, an active layer, a heat-resistant resin layer or an inorganic porous layer.

In the case of a two-layer membrane formed from two polyolefin-containing microporous layers, the polyolefin compositions of both layers can be different. In the case of a multilayer membrane formed from three or more polyolefin-containing microporous layers, the outermost and innermost polyolefin compositions can be different from each other, and may be, for example, a three-layer membrane.

(Preferable Multilayer Structure 1)

The separator having a preferable multilayer structure 1 preferably includes a polyolefin microporous membrane as a substrate and an inorganic porous layer containing inorganic particles and a resin binder stacked on at least one side of the polyolefin microporous membrane. From the viewpoint of suppressing heat shrinkage and improving the collapse test passing rate, cycle test capacity retention rate, high-temperature cycle life of the nonaqueous secondary battery, and/or balancing them, the content of the inorganic particles in the inorganic porous layer is preferably 5% by weight to 99% by weight, more preferably 10% by weight or more and less than 99% by weight, based on the total weight of the inorganic porous layer.

(Other Preferable Multilayer Structures 2 to 4)

Separators having multilayer structures 2 to 4 exemplified below are also preferable. Optional combinations of multilayer structures 1 to 4 are also preferable.

The separator having a multilayer structure 2 includes a polyolefin microporous membrane as a substrate and a thermoplastic polymer-containing layer formed on at least one side of the polyolefin microporous membrane. The thermoplastic polymer contained in the thermoplastic polymer-containing layer includes polymerization units of (meth)acrylic acid ester and/or (meth)acrylic acid, or contains at least one fluorine atom-containing polyvinyl compound selected from the group consisting of polyvinylidene fluoride (PVDF), polyvinylidene fluoride-hexafluoropropylene (PVDF-HFP) and polyvinylidene fluoride-chlorotrifluoroethylene (PVDF-CTFE). Since the adhesive strength between the electrode and the separator is improved by including the thermoplastic polymer-containing layer, handling during battery production is improved.

The separator having a multilayer structure 3 includes a microporous polyolefin membrane as a substrate and an active layer disposed on at least one side of the microporous polyolefin membrane. The active layer is preferably composed of at least one selected from the group consisting of polyvinylidene fluoride-hexafluoropropylene (polymer PVDF-HFP), polyvinylidene fluoride-chlorotrifluoroethylene (polymer PVDF-CTFE), a PVDF homopolymer, a mixture of PVDF and a tetrafluoroethylene-ethylene copolymer (ETFE), or a vinylidene fluoride-tetrafluoroethylene-ethylene terpolymer, and more preferably at least one selected from the group consisting of polymer PVDF-HFP and polymer PVDF-CTFE. Since the crystallinity of the fluorine-based resin can be controlled within an appropriate range by copolymerizing HFP or CTFE with vinylidene fluoride, flow of the active layer can be suppressed during the adhesion treatment with the electrode. Further, in the case of the adhesion treatment with the electrode, since the adhesive force is improved, the interface deviation does not occur when used as the separator for a secondary battery, leading to an improvement in collapse test passing rate.

Specific examples of PVDF include Kynar Flex (registered trademark) series of Arkema Inc., for example, LBG, LBG 8200 and the like; and Solef (registered trademark) series of SOLVAY Co., for example, Grade 1015, 6020.

Specific example of the polymer PVDF-HFP include Solef (registered trademark) series of SOLVAY Co., for example, Grade 21216 and 21510 (both of which are dissolved in acetone). Specific example of the polymer PVDF-CTFE include Solef (registered trademark) series of SOLVAY Co., for example, Grade 31508 (which is dissolved in acetone).

The separator having a multilayer structure 4 includes a polyolefin microporous membrane as a substrate and a heat-resistant resin layer containing a heat-resistant resin stacked on at least one side of the polyolefin microporous membrane. The heat-resistant resin preferably include at least one selected from the group consisting of wholly aromatic polyamide (also referred to as aramid), polyimide, polyamideimide, polysulfone, polyketone, polyether, polyether ketone, polyetherimide and cellulose. Of these, wholly aromatic polyamide is preferable from the viewpoint of the durability, and para-aromatic polyamide and/or meta-aromatic polyamide is/are more preferably. From the viewpoint of the formability of the porous layer and redox resistance, meta-aromatic polyamide is preferable. Examples of meta-polyamide include polymetaphenylene isophthalamide and the like. Examples of the para-polyamide include copolyparaphenylene/3.4'oxydiphenylene/terephthalamide and the like. The heat-resistant resin layer preferably contains 30% to 90% by weight of an inorganic material having an average particle size of 0.2 μm to 0.9 μm. By including the heat-resistant resin layer, thermal deformation of the separator is suppressed even if local short circuit occurs inside the battery, leading to an improvement in collapse test passing rate.

The inorganic particles according to the multilayer structure 1 and/or the multilayer structure 3, and the inorganic filler according to the multilayer structure 4 may be an inorganic material mentioned later in the method for producing a separator for a nonaqueous secondary battery, and of which, preferred is at least one selected from the group consisting of alumina, silica, titania, zirconia, magnesia, ceria, yttria, zinc oxide, iron oxide, silicon nitride, titanium nitride, boron

nitride, silicon carbide, aluminum hydroxide oxide, talc, kaolinite, dickite, nacrite, halloysite, pyrophyllite, montmorillonite, sericite, mica, amesite, bentonite, asbestos, zeolite, diatomaceous earth, quartz sand and glass fibers.

<Method for Producing Separator for Nonaqueous Secondary Battery>

(Method for Producing Polyolefin Microporous Membrane)

As a method for producing a separator for a nonaqueous secondary battery, the case where the polyolefin microporous membrane is a single-layer membrane (flat membrane) will be described below, but it is not intended to exclude forms other than the flat membrane. The method for producing a microporous membrane according to the first to fifth embodiments includes the following steps:

(1) a sheet-forming step;
(2) a stretching step;
(3) a porous body-forming step; and
(4) a heat treatment step. The method for producing a microporous membrane according to the first to fifth embodiments may optionally include a resin-modifying step or a kneading step before the sheet-forming step (1) and/or a winding and slitting step after the heat treatment step (3), but preferably it does not include a crosslinked structure-forming step or a step in contact with a crosslinking promoting catalyst from the viewpoint of maintaining the crosslinkability of the microporous membrane until housing in the battery.

The crosslinked structure-forming step includes (1) a secondary step in which a plurality of functional groups included in the microporous membrane are subjected to a condensation reaction, (2) a secondary step in which the functional groups included in the microporous membrane are reacted with a chemical substance in the electricity storage device, or (3) a secondary step in which the functional groups included in the microporous membrane are reacted with other functional groups. The crosslinking promoting catalyst is an optional catalyst capable of promoting a crosslinking reaction, for example, (I) a condensation reaction of a plurality of the same functional groups described above, (II) a reaction between a plurality of different functional groups, (III) a chain condensation reaction between the functional groups and an electrolytic solution, and (IV) a chain condensation reaction between the functional groups and an additive. The crosslinking promoting catalyst may be, for example, an organometallic-containing catalyst or the like.

(Method for Producing Multilayer Membrane)

As a method for producing a separator for a nonaqueous secondary battery, the case of a multilayer membrane will be described, but it is not intended to exclude forms other than the flat membrane. The method for producing a multilayer membrane includes the following steps:

(1) a sheet-forming step;
(2) a stretching step;
(3) a porous body-forming step;
(4) a heat treatment step;
(5) a coating step;
(6) a drying step; and
(7) an assembly step; the method including, between the step (5) and the step (6), a step (5.5) a water washing step.

In the method for producing a multilayer membrane, steps (1) to (4) are carried out in the same manner as in the method for producing a single-layer membrane to form a polyolefin microporous membrane, followed by carrying out (5) a coating step of applying a coating solution on at least one surface of the polyolefin microporous membrane thus obtained or the heat-treated porous body obtained by the heat treatment step (4), (6) a drying step of drying to remove a solvent, and (7) an assembly step of housing a laminated body or a wound body of electrodes and the separator, and a nonaqueous electrolytic solution in an exterior body. A water washing step of substituting an organic solvent in the coating solution with another solvent component (5.5) may be included between the step (5) and the step (6). The method for producing a multilayer membrane is characterized by forming a crosslinked structure of a silane-modified polyolefin contained in the multilayer membrane in at least one step of the coating step (5), the water washing step (5.5), the drying step (6) and the assembly step (7), and preferably, the crosslinked structure of the silane-modified polyolefin is formed in the coating step (5) and the assembly step (7).

Each step included in the method for producing a single-layer membrane and a multilayer membrane will be described below.

In the kneading step, a kneading machine can be used for kneading of a polyolefin, and optionally a plasticizer or inorganic material and other resins. From the viewpoint of suppressing the generation of resin aggregates during the production process and maintaining crosslinkability of the microporous membrane until housing in the battery, a master batch resin containing a crosslinking promoting catalyst is preferably not added to the kneaded mixture.

The polyolefin used in the kneading step or the sheet-forming step (1) is not limited to an olefin homopolymer, and may be a polyolefin obtained by copolymerizing a monomer having a functional group, or a functional group-modified polyolefin. The functional group is a functional group that can be involved in the formation of a crosslinked structure, and may be, for example, the above-described alkoxysilyl group. The resin-modifying step can be eliminated by preparing a silane-modified polyethylene (resin A) as a starting material.

Meanwhile, when the polyolefin starting material has no functional group capable of being involved in the formation of the crosslinked structure or the molar fraction of such a functional group is less than a predetermined ratio, the polyolefin starting material is subjected to the resin-modifying step, and the functional group is incorporated in the resin backbone or the molar fraction of the functional group is increased to obtain the functional group-modified polyolefin. The resin-modifying step may be carried out by a known method. For example, the polyolefin starting material can be brought into contact with the reaction reagent by liquid spraying, gas spraying, dry mixing, immersion, coating or the like, so that the crosslinkable functional group can be introduced into the polyolefin backbone.

Not only from the viewpoint of imparting the characteristics obtained by Voronoi tessellation or air permeability change ratio before and after compression described above to the separator, but also from the viewpoint of optimizing the crystal structure of Si-containing molecules and various values described above for SAXS and/or WAXS measurement(s) and Voronoi tessellation as mentioned above, it is preferable to prepare a silane-modified polyethylene (resin A) as a polyolefin starting material, and it is more preferable to prepare not only the resin A but also the resin B and/or the resin C.

From the viewpoint of the arrangement of the uniform Si-containing molecular structure and the life of the equilibrium state of the Li coordination intermediate; the viewpoint of uniform extrusion/kneading; and the viewpoint of the crystal structures of Si-containing molecules and the viewpoint of optimizing various values described above for SAXS and/or WAXS measurement(s) and Voronoi tessellation, as mentioned above, specific molecular design or mixing of the resins A, B and C can be carried out. As mentioned above, Si-containing molecules are present only in the amorphous portions of the polyolefin resin, and by incorporating the siloxane unit, C3 and C4 units of the resin A into the design as a whole, the life of the equilibrium state of the Li coordination intermediate can be controlled. Meanwhile, by mixing the resin A with the resins B and C, an appropriate amorphous entanglement structure can be constructed, and reaction selectivity is developed by designing the angle of the molecular orbitals as mentioned in NPL1, and from the viewpoint of controlling the thermal vibration, that is, from the thermodynamic viewpoint, the equilibrium life of the Li complex coordination intermediate can be controlled.

Not only from the viewpoint of imparting the characteristics obtained by Voronoi tessellation described above to the separator, but also from the viewpoint of optimizing the crystal structure of Si-containing molecules and various values described above for SAXS and/or WAXS measurement(s) and Voronoi tessellation as mentioned above, the content of the resin A in the polyolefin starting material subjected to the sheet-forming step (1) is preferably 3 to 70% by weight, more preferably 5 to 60% by weight, and still more preferably 10 to 50% by weight, based on the total weight of the solid content of the polyolefin starting material.

From the same viewpoint as above, the content of the resin B in the polyolefin starting material is preferably 3 to 70% by weight, more preferably 5 to 60% by weight, and still more preferably 5 to 40% by weight, based on the total weight of the solid content of the polyolefin starting material.

From the same viewpoint as above, the content of the resin C in the polyolefin starting material is preferably 1 to 90% by weight, more preferably 5 to 60% by weight, and still more preferably 5 to 50% by weight, based on the total weight of the solid content of the polyolefin starting material.

From the same viewpoint as above, the weight ratio (A/B) of the resin A to the resin B to be subjected to the sheet-forming step (1) is preferably 0.07 to 12.00, more preferably 0.10 to 11.00, and still more preferably 0.50 to 10.00.

From the same viewpoint as above, the weight ratio (A/C) of the resin A to the resin C to be subjected to the sheet-forming step (1) is preferably 0.07 to 12.00, more preferably 0.10 to 11.00, and still more preferably 0.20 to 10.00.

From the same viewpoint as above, the weight ratio (B/C) of the resin B to the resin C to be subjected to the sheet-forming step (1) is preferably 0.06 to 7.00, more preferably 0.10 to 7.00, and still more preferably 0.12 to 6.90.

From the same viewpoint as above, the molecular weight Mn, Mw and Mv, or Mw/Mn of the resins A to C to be subjected to the sheet-forming step (1) are preferably the same as those described above for the separator constituent elements.

By appropriately controlling the molecular weight, the molecular weight distribution, the mixing ratio and the like of the starting material to be subjected to the sheet-forming step (1), as mentioned above, the characteristics related to Voronoi tessellation of the separators according to the first to fifth embodiment are easily achieved.

From the viewpoint of improving the safety by suppressing thermal runaway at the time of destruction of a

battery while having low temperature cycle characteristics and membrane rupture resistance at high temperature, in the sheet-forming step, it is preferable that the resin A is preferably not a master batch resin containing a catalyst that promotes the crosslinking reaction of the alkoxysilyl group from before the sheet-forming step.

Examples of the plasticizer used in the sheet-forming step (1) include, but are not particularly limited to, organic compounds that can form homogeneous solutions with polyolefins at a temperature below the boiling point thereof. More specifically, these include decalin, xylene, dioctyl phthalate, dibutyl phthalate, stearyl alcohol, oleyl alcohol, decyl alcohol, nonyl alcohol, diphenyl ether, n-decane, n-dodecane, paraffin oil and the like. Of these, paraffin oil and dioctyl phthalate are preferable. The plasticizer may be used alone, or two or more thereof may be used in combination. The proportion of the plasticizer is not particularly limited, and from the viewpoint of the porosity of the obtained microporous membrane, each proportion of the polyolefin and the silane-modified polyolefin is preferably 20% by weight or more, and from the viewpoint of the viscosity during melt kneading, each proportion is preferably 90% by weight or less.

The sheet-forming step (1) is a step in which the obtained kneaded mixture or a mixture of the polyolefin and the plasticizer is extruded, cooled to solidify, and cast into a sheet form to obtain a sheet. The sheet forming method is not particularly limited, and may be a method of compressed-cooling or deformation-cooling solidification of a molten mixture obtained by melt kneading and extrusion. The cooling method may be a method of direct contact with a cooling medium such as cold air or cooling water; or a method of contact with a refrigerant-cooled roll or a pressing machine, with a method of contact with a refrigerant-cooled roll or a pressing machine being preferable for superior membrane thickness control.

The stretching step (2) is a step in which the plasticizer or inorganic filler is extracted from the obtained sheet as necessary, and the sheet is further stretched in at least one direction. Examples of the method of stretching the sheet include MD uniaxial stretching with a roll stretcher, TD uniaxial stretching with a tenter, sequential biaxial stretching with a combination of a roll stretcher and tenter, or a tenter and tenter, simultaneous biaxial stretching with a biaxial tenter or inflation molding and the like. Simultaneous biaxial stretching is preferable from the viewpoint of obtaining a more homogeneous membrane. The total area increase is preferably 8-fold or more, more preferably 15-fold or more, and still more preferably 20-fold or more or 30-fold or more, from the viewpoint of membrane thickness homogeneity, and balance between tensile elongation, porosity and mean pore size. If the total area increase is 8-fold or more, it will tend to be easier to obtain high strength and a satisfactory thickness distribution. The area increase is also 250-fold or less from the viewpoint of preventing rupture.

The porous body-forming step (3) is a step in which the plasticizer and/or the inorganic filler is/are extracted from the stretched sheet after the stretching step to form pores, thus obtaining a microporous membrane. Examples of the method of extracting the plasticizer include, but are not particularly limited to, a method of immersing the stretched sheet in an extraction solvent or a method of showering the stretched sheet with an extraction solvent, for example. The extraction solvent used is not particularly limited, but it is preferably a solvent which is a poor solvent for the polyolefin and a satisfactory solvent for the plasticizer and/or inorganic filler, and a solvent having a boiling point which is lower than the melting point of the polyolefin. Examples of such extraction solvents include hydrocarbons such as n-hexane and cyclohexane; halogenated hydrocarbons such as methylene chloride, 1,1,1-trichloroethane and fluorocarbon-based compounds; alcohols such as ethanol and isopropanol; ketones such as acetone and 2-butanone; and alkali water. The extraction solvent may be used alone, or two or more thereof may be used in combination.

The heat treatment step (4) is a step in which, after the stretching step, the plasticizer is further extracted from the sheet as necessary before the heat treatment. Examples of the method of heat treatment include, but are not particularly limited, to a heat setting method in which a tenter and/or roll stretcher is utilized for stretching and relaxation procedures. A relaxation procedure is a procedure of shrinking carried out at a prescribed temperature and relaxation factor, in the machine direction (MD) and/or transverse direction (TD) of the membrane. The relaxation factor is the value of the MD dimension of the membrane after the relaxation procedure divided by the MD dimension of the membrane before the procedure, or the value of the TD dimension after the relaxation procedure divided by the TD dimension of the membrane before the procedure, or the product of the relaxation factor in the MD and the relaxation factor in the TD, when both the MD and TD have been relaxed. The stretching and relaxation procedures in the heat treatment step (4) is preferably carried out at least in the TD direction.

In the coating step (5), a coating solution is applied on at least one surface of the polyolefin microporous membrane obtained as mentioned above, or at least one surface of the heat-treated porous body obtained in the heat treatment step (4). As the coating step (5), a known coating method can be employed, and examples thereof include a method of applying a coating solution on a substrate, a microporous membrane or a heat-treated porous body, a method of stacking and extruding a starting material of a microporous membrane and a starting material of another layer by a co-extrusion method, a method of separately fabricating both layers and bonding them and the like.

More specifically, the coating step (5) may be any one or optional combination of the following steps (SA) to (5D):

(SA) a coating step of applying a coating solution containing the inorganic particles and the resin binder and a surfactant, and having a pH of 6.7 or lower or 7.5 or higher onto at least one surface of the polyolefin microporous

single-layer membrane or the heat-treated porous body, to form the inorganic porous layer on at least one surface of the polyolefin microporous single-layer membrane or the heat-treated porous body;
(5B) a coating step of applying a coating solution containing the thermoplastic polymer and a surfactant, and having a pH of 6.7 or lower or 7.5 or higher onto at least one surface of the polyolefin microporous single-layer membrane or the heat-treated porous body, to form a thermoplastic polymer-containing layer on at least one surface of the polyolefin microporous single-layer membrane or the heat-treated porous body;
(5C) a coating step of applying a coating solution containing the fluorine atom-containing polyvinyl compound, the inorganic particles and an organic solvent onto at least one surface of the polyolefin microporous single-layer membrane or the heat-treated porous body, to form an active layer on at least one surface of the polyolefin microporous single-layer membrane or the heat-treated porous body; and
(5D) a coating step of applying a coating solution containing the heat-resistant resin and an organic solvent onto at least one surface of the polyolefin microporous single-layer membrane or the heat-treated porous body, to form a heat-resistant resin layer on at least one surface of the polyolefin microporous single-layer membrane or the heat-treated porous body;

By the coating step (5A), it is possible to form a multilayer membrane including a polyolefin microporous membrane and an inorganic porous layer according to the preferred multilayer structure 1 described above.
By the coating step (5B), it is possible to form a multilayer membrane including a polyolefin microporous membrane and a thermoplastic polymer-containing layer according to the preferred multilayer structure 2 described above.
By the coating step (5C), it is possible to form a multilayer membrane including a polyolefin microporous membrane and an active layer according to the preferred multilayer structure 3 described above.
By the coating step (5D), it is possible to form a multilayer membrane including a polyolefin microporous membrane and a heat-resistant resin layer according to the preferred multilayer structure 4 described above.
In the coating steps (SA) and (5B), when the pH of the aqueous or nonaqueous coating solution is 6.7 or lower, activation energy of the reaction system of the silane-modified polyolefin in contact with the coating solution decreases to facilitate the silane crosslinking reaction. Meanwhile, when the aqueous or nonaqueous coating solution has a pH of 7.5 or higher, the presence of $OH^-$ can promote the silane crosslinking reaction of the silane-modified polyolefin.
In the coating steps (5C) and (5D), the organic solvent contained in the nonaqueous coating solution enters into the amorphous portions of the polyolefin microporous single-layer membrane or the heat-treated porous body, thereby enabling promotion of the silane crosslinking reaction of the silane-modified polyolefin.
It is preferable that the coating solution for forming a thermoplastic polymer-containing layer is allowed to contain a thermoplastic polymer, and the thermoplastic polymer contains at least one selected from the group consisting of polymerization units of (meth) acrylic acid ester and/or (meth) acrylic acid, polyvinylidene fluoride (PVDF), polyvinylidene fluoride-hexafluoropropylene (PVDF-HFP) and polyvinylidene fluoride-chlorotrifluoroethylene (PVDF-CTFE).
It is preferable that the coating solution for forming an active layer is allowed to contain a fluorine atom-containing polyvinyl compound, and the fluorine atom-containing polyvinyl compound is at least one elected from the group consisting of polyvinylidene fluoride-hexafluoropropylene (PVDF-HFP) and polyvinylidene fluoride-chlorotrifluoroethylene (PVDF-CTFE).
The coating solution may optionally contain resin binders, inorganic particles or inorganic fillers, dispersants, surfactants, solvents and the like. The coating solution for forming an inorganic porous layer is lowed to contain inorganic particles and a resin binder.
Examples of resin binders include the followings:

polyolefin resins such as polyethylene, polypropylene and $\alpha$-polyolefin;
fluorine-based polymers such as polyvinylidene fluoride and polytetrafluoroethylene, or copolymers containing them;
diene-based polymers including, as monomer units, conjugated dienes such as butadiene and isoprene, or copolymers containing them, or hydrides thereof;
acrylic polymers including (meth)acrylate, (meth)acrylic acid, etc. as monomer units and including no polyalkylene glycol unit, acrylic polymers containing (meth)acrylate, (meth)acrylic acid, etc. as monomer units and having one or two polyalkylene glycol units, or copolymers containing them, or hydrides thereof;
rubbers such as ethylene propylene rubber, polyvinyl alcohol and polyvinyl acetate;
polyalkylene glycols having no polymerizable functional group, such as polyethylene glycol and polypropylene glycol;
resins such as polyphenylene ether, polyphenylene sulfide and polyester;
copolymers having, as a copolymer unit, an ethylenically unsaturated monomer in which the number of repetitions of alkylene glycol unit is 3 or more; and
combinations thereof, or the above-mentioned thermoplastic polymer can be employed.

Of these, the resin binder preferably contains polymerization units of (meth)acrylic acid ester and/or (meth)acrylic acid, from the viewpoint of improving the safety in a puncture test of the battery including the separator.
The resin binder described above can be produced by a known polymerization method using a corresponding monomer or comonomer. It is possible to employ, as the polymerization method, for example, appropriate method such as solution polymerization, emulsion polymerization or bulk polymerization.
Regarding the resin binder, is preferable that a particulate binder polymer is formed by emulsion polymerization, and the obtained polymer emulsion is used as an aqueous latex.
The coating solution for forming an inorganic porous layer, an active layer or a heat-resistant resin layer is allowed to contain inorganic particles or an inorganic filler. Examples of inorganic particles or inorganic fillers include, but are not limited to, oxide-based ceramics such as alumina, silica, titania, zirconia, magnesia, ceria, yttria, zinc oxide and iron oxide; nitride-based ceramics such as silicon nitride, titanium nitride and boron nitride; ceramics such as silicon carbide, calcium carbonate, magnesium sulfate, aluminum sulfate, aluminum hydroxide, aluminum hydroxide oxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and quartz sand; and glass fibers. These may be used alone, or a plurality thereof may be used in combination.
Of these, from the viewpoint of improving the electrochemical stability and the heat resistance of the separator, preferred is at least one selected from the group consisting of alumina, silica, titania, zirconia, magnesia, ceria, yttria, zinc oxide, iron oxide, silicon nitride, titanium nitride, boron nitride, silicon carbide, aluminum hydroxide oxide, talc, kaolinite, dickite, nacrite, halloysite, pyrophyllite, montmorillonite, sericite, mica, amesite, bentonite, asbestos, zeolite, diatomaceous earth, quartz sand and glass fibers, and aluminum oxide compounds such as alumina and aluminum hydroxide; and aluminum silicate compounds having no ion exchange capacity, such as kaolinite, dickite, nacrite, halloysite and pyrophyllite are more preferable.
There are many crystalline forms of alumina, such as $\alpha$-alumina, $\beta$-alumina, $\gamma$-alumina and $\theta$-alumina, and all of them can be preferably used. Of these, $\alpha$-alumina is preferable, since it is thermally and chemically stable.
The aluminum oxide compound is particularly preferably aluminum hydroxide (AlO(OH)). The aluminum hydroxide is more preferably boehmite from the viewpoint of preventing internal short circuit caused by the generation of lithium dendrite. By employing particles mainly composed of boehmite as the inorganic filler constituting the active layer, it is possible to realize a very light-weight porous layer while maintaining high permeability, and to suppress heat shrinkage at high temperature of the porous membrane even in a thinner porous layer, and to exhibit excellent heat resistance. Synthetic boehmite, which can reduce ionic impurities that adversely affect the properties of the electrochemical device, is still more preferable.
The content of the inorganic particles contained in the coating solution for forming the inorganic porous layer is preferably 5% by weight to 99% by weight, and more preferably 10% by weight or more and less than 99% by weight, based on the weight of the total solid content of the coating solution.
The inorganic filler contained in the coating solution for forming a heat-resistant resin layer preferably has an average particle size of 0.2 $\mu$m to 0.9 $\mu$m, and/or the content of the inorganic filler in the coating solution is preferably 30% by weight to 90% by weight, based on the weight of the total solid content of the coating solution.
Examples of the dispersant contained in the coating solution include an aqueous ammonium polycarboxylate solution. Examples of the surfactant contained in the coating solution include emulsifiers, soaps and the like.
Examples of the solvent contained in the coating solution include water (for example, ion-exchanged water, pure water, etc.), aqueous solvents (for example, a mixture of water and alcohol, etc.), organic solvents, and the like. Examples of the organic solvent include alcohol, N-methylpyrrolidone (NMP), N,N-dimethylformamide (DMF), N,N-dimethylacetamide (DMA), ethanol, toluene, hot xylene, methylene chloride, hexane and the like.
Examples of the method for preparing a coating solution containing inorganic particles or inorganic filler include a mechanical stirring method using a ball mill, a bead mill, a planetary ball mill, a vibrating ball mill, a sand mill, a colloid mill, an attritor, a roll mill, a high-speed impeller dispersion, a disperser, a homogenizers, a high-speed impact mill, an ultrasonic dispersion, a stirring blade and the like.
Examples of the method for applying a coating solution containing inorganic particles or inorganic filler include a gravure coater method, a small diameter gravure coater method, a reverse roll coater method, a transfer roll coater method, a kiss coater method, a dip coater method, a knife coater method, an air doctor coater method, a blade coater method, a rod coater method, a squeeze coater method, a cast coater method, a die coater method, a screen printing method, a spray coating method and the like.
In the coating step (5D), after the formation of a coating film, a step of introducing the coating film into an atmosphere with a humidity of 50% or higher or blowing steam over the coating surface may be included. Precipitation of an aramid resin can be promoted by maintaining humidity of the coated surface.
In the drying step (6), the solvent is removed from the coating film formed in the coating step (5). Examples of the method for removing the solvent include a method of drying at a temperature below the melting point of a material constituting a microporous membrane, a method of drying under reduced pressure at low temperature, a method of

drying after substituting the solvent contained in the coating solution with another solvent and the like. A part of the solvent may remain as long as it does not significantly affect the characteristics of the nonaqueous secondary battery. Examples of the method of substituting the solvent contained in the coating solution with another solvent include a method of immersing the membrane in another solvent described above, a method of spraying another solvent described above over the membrane and the like.

In the water washing step (5.5), the solvent in the coating film formed in the coating step (5) may be substituted with another solvent. Examples of the solvent before substitution include solvents such as DMF, DMA, NMP and DMSO, and examples of the solvent after substitution include solvents such as water and alcohol.

The method for producing a separator may include a winding/slitting step as necessary. The winding/slitting step is a step in which the obtained microporous membrane is slit as necessary and wound on a prescribed core.

In the assembly step (7), electrodes and a laminated body or wound body of the separator are housed in the exterior body. The step (7) can be carried out in the same manner as in the production of a nonaqueous secondary battery mentioned later, and the electrodes, nonaqueous electrolytic solution and exterior body used in step (7) may be those described for the nonaqueous secondary battery.

In the coating step (5) and/or the water washing step (5.5) and/or the drying step (6) and/or the assembly step (7), preferably the coating step (5) and the water washing step (5.5) and the drying step (6) and the assembly step (7), the silane-modified polyolefin contained in the separator forms a crosslinked structure.

The separator obtained by the method including various steps described above can be used for a nonaqueous secondary battery including positive and negative electrodes capable of occluding and releasing lithium, and a nonaqueous electrolytic solution prepared by dissolving an electrolyte in a nonaqueous solvent, and is preferably used for a lithium secondary battery or a lithium ion secondary battery.

<Nonaqueous Secondary Battery>

The nonaqueous secondary battery is configured by housing a positive electrode, a negative electrode, a separator and a nonaqueous electrolytic solution in an optional battery exterior body.

The positive electrode is connected to a positive electrode lead body in the nonaqueous secondary battery and the negative electrode is connected to a negative electrode lead body in the nonaqueous secondary battery, and one end side is drawn out to the outside of the battery exterior body so that the positive electrode lead body and the negative electrode lead body are respectively connected to an external device, and the ionomer portions thereof are heat-fused together with one side of the battery exterior body.

The positive electrode is composed of a positive electrode current collector and a positive electrode active material layer. The negative electrode is composed of a negative electrode current collector and a negative electrode active material layer. The positive electrode active material layer contains a positive electrode active material, and the negative electrode active material layer contains a negative electrode active material. The positive electrode and the negative electrode are disposed such that a positive electrode active material layer and a negative electrode active material layer face each other with a separator interposed therebetween.

As the positive electrode, a known positive electrode for a battery can be used, and from the viewpoint of operational advantage of the present invention, a positive electrode which easily cause thermal decomposition or $O_2$ can also be used. A composite positive electrode active material of lithium and other metals can also be used, and it is possible to use a composite positive electrode of at least one metal selected from the group consisting of nickel, manganese and cobalt, and lithium, for example, an LNO positive electrode, an NCA positive electrode, an LCO positive electrode, a positive electrode containing a lithium (Li)-nickel (Ni)-manganese (Mn)-cobalt (Co) composite oxide as a positive electrode active material (NMC positive electrode) and the like.

Of these, from the viewpoint of operational advantage of the present invention, the NMC positive electrode is preferable, and of the NMC positive electrodes, those having a relatively high nickel content are more preferably used. The molar ratio of the amount of nickel (Ni) relative to the total amount of nickel, manganese and cobalt of the positive electrode is more preferably 3 to 9, 5 to 9, 6 to 9, 5 to 8 or 6 to 8, and particularly preferably 5 to 9. Specifically, regarding the positive electrode containing a lithium (Li)-nickel (Ni)-manganese (Mn)-cobalt (Co) composite oxide represented by the formula: $Li\text{-}Ni_x\text{-}Mn_y\text{-}Co_z$, where x represents a Ni ratio, y represents a Mn ratio, z represents a Co ratio and $x+y+z = 1$, and the Ni ratio x in the formula is preferably 5 to 9.

The positive electrode current collector can be composed of, for example, metal foils such as aluminum foil, nickel foil and stainless steel foil.

Examples of negative electrode active material constituting the negative electrode include, in addition to carbon materials typified by hard carbon, graphite, pyrolytic carbon, coke, vitreous carbon, calcined body of organic polymer compound, microbead, carbon fiber, activated carbon, carbon colloid and carbon black, metal lithium, metal oxide, metal nitride, lithium alloy, tin alloy, silicon (Si)-containing material, intermetallic compound, organic compound, inorganic compound, metal complex, organic polymer compound and the like. The negative electrode active material is used

alone, or in combination of two or more thereof.

Of these, from the viewpoint of operational advantage of the present invention, the Si-containing material is preferable as the negative electrode active material, and examples thereof include silicon, Si alloys, and Si oxides. From the same point of view, the proportion of Si in the negative electrode active material is preferably 5 to 90 mol%.

It has been known that regarding the Si-containing negative electrode active material, the storage capacity of lithium ions is significantly improved compared to the carbon material negative electrode and, at the same time, lithium ions are charged and discharged to the Si-containing particles and, as disclosed in NPL2, the Si-containing negative electrode active material undergoes significant volume expansion and contraction. In that case, the volume inside the battery is constant and the separator is significantly compressed or deformed in the thickness direction by the Si-containing negative electrode active material. According to the present invention, it has been found that by adjusting the type and formulation of resin starting materials and optimizing various values described above for SAXS and/or WAXS measurement(s)s of the separator and Voronoi tessellation, the separator can maintain permeability even if compressed or deformed in the thickness direction in the nonaqueous secondary battery, and is excellent in balance between strength and ion diffusivity, and is capable of improving the collapse test passing rate, cycle test capacity retention rate and high-temperature cycle life of the nonaqueous secondary battery, and/or balancing them.

Further, regarding the separator having a structure in which Si atoms are dispersed in a state of not being a sea-island structure which has been found according to the present invention, uniform progress of the intercalation reaction to the Si-containing negative electrode active material as mentioned above, leading to uniform expansion and contraction of the Si-containing negative electrode active material inside the battery, thus enabling suppression of deviation of the winding structure inside the battery and improvement in battery cycle characteristics and safety of the battery.

The negative electrode current collector can be composed of, for example, metal foils such as copper foil, nickel foil and stainless steel foil.

<Nonaqueous Electrolytic Solution>

Herein, the nonaqueous electrolytic solution refers to an electrolytic solution containing an electrolyte in a nonaqueous solvent in which the amount of water is 1% by weight or less based on the total weight. The nonaqueous electrolyte preferably does not contain water as much as possible, but may contain a very small amount of moisture. The content of such moisture is preferably 300 ppm by weight or less, and more preferably 200 ppm by weight or less, based on the total amount of the nonaqueous electrolytic solution.

The electrolytic solution in the battery may contain moisture, and the moisture contained in the system after the fabrication of the battery may be moisture contained in the electrolytic solution or brought-in moisture contained in a member such as an electrode or a separator. The electrolytic solution may contain a nonaqueous solvent. Examples of the solvent contained in the nonaqueous solvent include alcohols such as methanol and ethanol; and aprotic solvents. Of these, an aprotic solvent is preferable as the nonaqueous solvent.

Examples of the aprotic solvent include cyclic carbonate, fluoroethylene carbonate, lactone, organic compound having a sulfur atom, chain fluorinated carbonate, cyclic ether, mononitrile, alkoxy group-substituted nitrile, dinitrile, cyclic nitrile, short-chain fatty acid ester, chain ether, fluorinated ether, ketone, and compounds in which a part or all of H atoms in the aprotic solvent is substituted with a halogen atom.

Examples of the cyclic carbonate include ethylene carbonate, propylene carbonate, 1,2-butylene carbonate, trans-2,3-butylene carbonate, cis-2,3-butylene carbonate, 1,2-pentylene carbonate, trans-2,3-pentylene carbonate, cis-2,3-pentylene carbonate, vinylene carbonate, 4,5-dimethylvinylene carbonate and vinyl ethylene carbonate.

Examples of the fluoroethylene carbonate include 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolan-2-one, 4,4,5,5-tetrafluoro-1,3-dioxolan-2-one and 4,4,5-trifluoro-5-methyl-1,3-dioxolan-2-one.

Examples of the lactone include γ-butyrolactone, α-methyl-γ-butyrolactone, γ-valerolactone, γ-caprolactone, δ-valerolactone, δ-caprolactone and ε-caprolactone.

Examples of the organic compound having a sulfur atom include ethylene sulfite, propylene sulfite, butylene sulfite, pentene sulfite, sulfolane, 3-sulfylene, 3-methylsulfolane, 1,3-propanesultone, 1,4-butanesultone, 1-propene 1,3-sultone, dimethyl sulfoxide, tetramethylene sulfoxide and ethylene glycol sulfite.

Examples of the chain carbonate include ethyl methyl carbonate, dimethyl carbonate, diethyl carbonate, methyl propyl carbonate, methyl isopropyl carbonate, dipropyl carbonate, methyl butyl carbonate, dibutyl carbonate, ethyl propyl carbonate and the like.

Examples of the cyclic ether include tetrahydrofuran, 2-methyltetrahydrofuran, 1,4-dioxane and 1,3-dioxane.

Examples of the mononitrile include acetonitrile, propionitrile, butyronitrile, valeronitrile, benzonitrile and acrylonitrile.

Examples of the alkoxy group-substituted nitrile include methoxyacetonitrile and 3-methoxypropionitrile.

Examples of the dinitrile include malononitrile, succinonitrile, methylsuccinonitrile, glutaronitrile, 2-methylglutaronitrile, adiponitrile, 1,4-dicyanoheptane, 1,5-dicyanopentane, 1,6-dicyanohexane, 1,7-dicyanoheptane, 2,6-dicyanoheptane, 1,8-dicyanooctane, 2,7-dicyanooctane, 1,9-dicyanononane, 2,8-dicyanononane, 1,10-dicyanodecane, 1,6-dicyanodecane, 2,4-dimethylglutaronitrile, ethylene glycol bis(propionitrile)ether and the like.

Examples of the cyclic nitrile include benzonitrile and the like.

Examples of the short-chain fatty acid ester include methyl acetate, methyl propionate, methyl isobutyrate, methyl butyrate, methyl isovalerate, methyl valerate, methyl pivalate, methyl hydroangelate, methyl caproate, ethyl acetate, ethyl propionate, ethyl isobutyrate, ethyl butyrate, ethyl isovalerate, ethyl valerate, ethyl pivalate, ethyl hydroangelate, ethyl caproate, propyl acetate, propyl propionate, propyl isobutyrate, propyl butyrate, propyl isovalerate, propyl valerate, propyl pivalate, propyl hydroangelate, propyl caproate, isopropyl acetate, isopropyl propionate, isopropyl butyrate, isopropyl isobutyrate, isopropyl valerate, isopropyl valerate, isopropyl pivalate, isopropyl hydroangelate, isopropyl caproate, butyl acetate, butyl propionate, butyl isobutyrate, butyl butyrate, butyl isovalerate, butyl valerate, butyl pivalate, butyl hydroangelate, butyl caproate, isobutyl acetate, isobutyl propionate, isobutyl isobutyrate, isobutyl butyrate, isobutyl isovalerate, isobutyl valerate, isobutyl pivalate, isobutyl hydroangelate, isobutyl caproate, tert-butyl acetate, tert-butyl propionate, tert-butyl isobutyrate, tert-butyl butyrate, tert-butyl isovalerate, tert-butyl valerate, tert-butyl pivalate, tert-butyl hydroangelate and tert-butyl caproate.

Examples of the chain ether include dimethoxyethane, diethyl ether, 1,3-dioxolane, diglyme, triglyme and tetraglyme.

Examples of the fluorinated ether include compounds represented by the general formula $Rf_{aa}$ -$OR_{b\ b}$ (wherein $Rf_{a\ a}$ is an alkyl group having a fluorine atom and $R_{b\ b}$ is an organic group which optionally has a fluorine atom).

Examples of the ketone include acetone, methyl ethyl ketone and methyl isobutyl ketone.

Examples of the compound in which a part or all of the H atoms in the aprotic solvent are substituted with a halogen atom include a compound in which a halogen atom is fluorine.

Examples of the fluoride of the chain carbonate include methyl trifluoroethyl carbonate, trifluorodimethyl carbonate, trifluorodiethyl carbonate, trifluoroethyl methyl carbonate, methyl 2,2-difluoroethyl carbonate, methyl 2,2,2-trifluoroethyl carbonate and methyl 2,2,2,3-tetrafluoropropyl carbonate. The fluorinated chain carbonate can be represented by the following general formula:

$$R_{c\ c}\text{ -O-C(O)O-}R_{d\ d}$$

wherein $R_{cc}$ and $R_{d\ d}$ are at least one selected from the group consisting of $CH_3$, $CH_2$ $CH_3$, $CH_2$ $CH_2$ $CH_3$, $CH(CH_3\ )_2$, and formula $CH_2Rf_{ee}$ (wherein $Rf_{ee}$ is an alkyl group having 1 to 3 carbon atoms in which hydrogen atoms are substituted with at least one fluorine atom), and $R_{cc}$ and/or $R_{d\ d}$ has/have at least one fluorine atom.

Examples of the fluoride of the short-chain fatty acid ester include fluorinated short-chain fatty acid esters typified by, for example, 2,2-difluoroethyl acetate, 2,2,2-trifluoroethyl acetate and 2,2,3,3-tetrafluoropropyl acetate. The fluorinated short chain fatty acid ester is represented by the following general formula:

$$R_{ff}\text{-O-C(O)O-}R_{g\ g}$$

wherein $R_{ff}$ is at least one selected from the group consisting of $CH_3$ , $CH_2$ $CH_3$ , $CH_2$ $CH_2$ $CH_3$ , $CH(CH_3\ )_2$, $CF_3$ $CF_2$ H, $CFH_2$, $CF_2$ H, $CF_2$ $Rf_{h\ h}$, $CFHRf_{h\ h}$ and $CH_2$ $Rf_{i\ i}$, $R_{g\ g}$ is at least one selected from the group consisting of $CH_3$ , $CH_2$ $CH_3$ , $CH_2$ $CH_2$ $CH_3$ , $CH(CH_3\ )_2$ and $CH_2$ $Rf_{i\ i}$, $Rf_{h\ h}$ is an alkyl group having 1 to 3 carbon atoms in which a hydrogen atom is substituted with at least one fluorine atom, $Rf_{i\ i}$ is an alkyl group having 1 to 3 carbon atoms in which a hydrogen atom is substituted with at least one fluorine atom, and $R_{ff}$ and/or $R_{g\ g}$ has/have at least one fluorine atom, and when $R_{ff}$ is $CF_2$ H, $R_{g\ g}$ is not $CH_3$ .

From the viewpoint of operational advantage of the present invention, the nonaqueous electrolytic solution preferably contains ethyl methyl carbonate (EMC) and/or acetonitrile (AcN) as a nonaqueous solvent, and/or the total content of EMC and AcN in the nonaqueous electrolytic solution is preferably within a range of 50% by weight to 90% by weight.

The electrolyte is preferably a lithium salt, and more preferably a fluorine-containing lithium salt that generates hydrogen fluoride (HF) from the viewpoint of promoting the silane crosslinking reaction. Examples of the fluorine-containing lithium salt include lithium hexafluorophosphate ($LiPF_6$), lithium fluorosulfonate ($LiFSO_3$ ), lithium bis(trifluoromethanesulfonyl)imide ($LiN(SO_2\ CF_3\ )_2$), lithium bis(fluorosulfonyl)imide ($LiN(SO_2\ F)_2$), lithium borofluoride ($LiBF_4$) and lithium bis(oxalate)borate ($LiBC_4\ O_8$ ). While not wishing to be bound by any theory, when the electrolyte contains $LiPF_6$, for example, the $LiPF_6$ reacts with a slight amount of moisture (moisture contained in a member such as an electrode, a separator, an electrolytic solution or the like) to produce HF, or a fluorine-containing organic substance derived from HF. It is considered that HF or the fluorine-containing organic substance derived from HF is dissolved in the electrolytic solution, and swollen and diffused to the amorphous portions in the polyolefin having a crosslinkable silane group, thus catalyzing the silane crosslinking reaction.

From the viewpoint of operational advantage of the present invention, the concentration of a lithium salt in the nonaqueous electrolytic solution is preferably relatively higher, more preferably within a range of 1.2 mol/L to 10 mol/L, still more preferably 1.5 mol/L or more, and particularly preferably 3.0 mol/L or more. Especially in a nonaqueous secondary battery system containing lithium hexafluorophosphate ($LiPF_6$) as an electrolyte, lithium hexafluorophosphate exists as a constant concentration of dissociated F anions or lithium fluoride (LiF) in the system due to the Jahn-Teller effect possessed by phosphorus atoms. Although battery life reduction phenomenon such as electrode corrosion due to dissociated F anions are generally known, in a state of being added to Si, LiF exhibits a stronger Lewis acid effect than that in a state before addition, which makes the above phenomena (i) and (ii) more remarkable, and thus satisfactory low-temperature cycle characteristics can also be exhibited. It is preferable to select combination of the electrolyte and the electrolytic solution so that the concentration of the lithium salt does not exceed the saturated solubility.

The nonaqueous electrolytic solution may include, as the substance that exerts a catalytic action on the silane crosslinking reaction, in addition to the above, for example, substances that react with a nonaqueous electrolytic solution and/or moisture contained in a trace amount in the nonaqueous electrolytic solution to generate hydrogen ions, such as inorganic acids or organic acids (acid sources), substances that react with a nonaqueous electrolytic solution and/or moisture contained in a trace amount in the nonaqueous electrolytic solution to generate hydroxide ions (alkaline sources). Examples of the alkali source include alkali metal hydroxides, alkaline earth metal hydroxides, alkali metal carbonates, alkali metal phosphates, ammonia, amine compounds, and the like. Of these, from the viewpoint of the safety and silane crosslinkability of the electricity storage device, alkali metal hydroxides or alkaline earth metal hydroxides are preferable, alkali metal hydroxides are more preferable, and sodium hydroxide is still more preferable.

It is possible to employ, as the configuration of the battery exterior body of the nonaqueous secondary battery, a known configuration. For example, a battery can or a laminated film exterior body may be used as the battery exterior body.

The shape of the nonaqueous secondary battery can be applied to, for example, a square-type, a square cylinder-type, a cylindrical-type, an elliptical-type, a button-type, a coin type, a flat-type, a laminated-type and the like.

The nonaqueous secondary battery can be fabricated in the same manner as in a known production method, except for using the above-mentioned nonaqueous electrolytic solution, positive electrode, negative electrode, separator and battery exterior body.

[EXAMPLES]

Hereinafter, the present invention will be described in more detail by way of Examples. However, the present invention is not limited to these Examples. Physical properties in the Examples were measured by the following methods. Regarding the substrate weight per unit area, the substrate thickness, the substrate porosity, the substrate air permeability, the substrate puncture strength, SAXS, WAXS, NMR and TOF-SIMS, if there was a coating layer on the substrate, the measurement was carried out after the coating layer was scraped off. Regarding the collapse test passing rate, the cycle test capacity retention rate and the cycle life test, the measurement was carried out without scraping off the coating layer even if there is a coating layer on the substrate. All of the battery evaluation tests (collapse test, cycle capacity retention rate, high-temperature cycle life) were carried out 4 days after coating the separator with the coating solution.

(Method for Detecting Silane-Modified Polyolefin contained in Separator)

When the silane-modified polyolefin contained in the separator is in a crosslinked state, it is insoluble or has insufficient solubility in an organic solvent, and it is therefore difficult to directly measure the content of the silane-modified polyolefin from the separator. In that case, as a pretreatment for the sample, the siloxane bonds are decomposed into methoxysilanol using methyl orthoformate which does not undergo a secondary reaction, and then solution NMR measurement is carried out, thus enabling detection of the silane-modified polyolefin contained in the separator and preforming GPC measurement thereof. The pretreatment test can be carried out with reference to JP 3529854 B2 and JP 3529858 B2. After the opening polymerization reaction, thermal analysis such as TMA and DMA can be performed.

Specifically, $^{1}H$ or $^{13}C$ NMR identification of the silane-modified polyolefin as a starting material to be used for the production of a separator may be utilized in the method for detecting a silane-modified polyolefin contained in the separator. The following is an example of $^{1}H$ and $^{13}C$ NMR measurement methods.

($^{1}H$-NMR Measurement)

The sample is dissolved in o-dichlorobenzene-d4 at 140°C to obtain a $^{1}H$-NMR spectrum at a proton resonance frequency of 600 MHz. The $^{1}H$ NMR measuring conditions are as follows.

Apparatus: AVANCE NEO 600, manufactured by Bruker Corporation

Sample tube diameter: 5 mmφ
Solvent: o-dichlorobenzene-d4
Measuring temperature: 130°C
Pulse angle: 30°
Pulse delay time: 1 sec
Number of scans: 1,000 times or more
Sample concentration: 1 wt/vol%

($^{13}C$ NMR Measurement)

The sample is dissolved in o-dichlorobenzene-d4 at 140°C and a $^{13}C$-NMR spectrum is obtained. The $^{13}C$-NMR measuring conditions are as follows.

Apparatus: AVANCE NEO 600, manufactured by Bruker Corporation
Sample tube diameter: 5 mmφ
Solvent: o-dichlorobenzene-d4
Measuring temperature: 130°C
Pulse angle: 30°
Pulse delay time: 5 sec
Number of scans: 10,000 times or more
Sample concentration: 10 wt/vol%

The $^1H$ and/or $^{13}C$-NMR measurement(s) allow(s) the amount of silane unit modification and the amount of polyolefin alkyl group modification, the C4 unit modification rate (mol%) and the number of methylene ($CH_2$)s of silane graft linking portions in the silane-modified polyolefin to be confirmed for a polyolefin starting material, and allow(s) the silane-modified polyolefin contained in the separator to be determined.

The amount of the silanol unit modification in the resin A can be quantified by NMR chemical shift of methylene next to the Si atom and the integrated value ($-CH_2-Si$: $^1H$, 0.69 ppm, t; $^{13}C$, 6.11 ppm, s). Propylene modification (C3) can be quantified by NMR chemical shift and the integrated value of a terminal methyl group ($-CH_3$ : $^{13}C$, 19.42 ppm, s). Butene modification (C4) can be quantified by NMR chemical shift and the integrated value of a terminal methyl group ($-CH_3$ : $^{13}C$, 10.63 ppm, s).

<Weight-Average Molecular Weight and Number-Average Molecular Weight>

Standard polystyrene was measured using Model ALC/GPC 150C (trademark) by Waters Co. under the following conditions, and a calibration curve was drawn. The chromatogram for each polymer was also measured under the same conditions, and the weight-average molecular weight of each polymer was calculated by the following method, based on the calibration curve.

Column: $GMH_6$-HT (trademark) (2 columns) + $GMH_6$-HTL (trademark) (2 columns) manufactured by Tosoh Corporation
Mobile phase: o-dichlorobenzene
Detector: differential refractometer
Flow rate: 1.0 ml/min
Column temperature: 140°C
Sample concentration: 0.1% by weight

(Weight-Average Molecular Weight and Number-Average Molecular Weight of Polyethylene, Polypropylene and Silane-Modified Polyolefin)

Each molecular weight component in the obtained calibration curve was multiplied by 0.43 (polyethylene Q factor/polystyrene Q factor = 17.7/41.3) or 0.64 (polyethylene Q factor/polystyrene Q factor = 26.4/41.3) to obtain a polyethylene-equivalent or polypropylene-equivalent molecular-weight distribution curve, and the weight-average molecular weight was calculated. The same Q factor as for polyethylene was used for silane-modified polyethylene, and the same Q factor as for polypropylene was used for silane-modified polypropylene.

(Weight-Average Molecular Weight of Resin Composition)

The weight-average molecular weight was calculated in the same manner as for polyethylene, except that the Q factor value for the polyolefin with the largest mass fraction was used.

<Viscosity-Average Molecular Weight (Mv)>

The limiting viscosity [η] at 135°C in a decalin solvent was determined based on ASTM-D4020. Mv of polyethylene and silane-modified polyethylene was calculated by the following formula.

$$[\eta] = 6.77 \times 10^{-4} Mv^{0.67}$$

Mv of polypropylene was calculated by the following formula.

$$[\eta] = 1.10 \times 10^{-4} Mv^{0.80}$$

<Melt Mass Flow Rate (MFR) (g/10 min)>

Using a melt mass-flow rate measuring device, manufactured by Toyo Seiki Seisaku-sho, Ltd. (Melt Indexer F-F01), the weight of the resin extruded for 10 minutes under conditions of 190°C and 2.16 kg pressure for polyethylene and silane-modified polyethylene was determined as the MFR value. For polypropylene and silane-modified polypropylene, MFR measurement was carried out at 230°C.

<Thickness (μm) >

The thickness of the microporous membrane was measured at room temperature of 23±2°C and relative humidity of 60% using a micro thickness meter KBM (trademark) manufactured by Toyo Seiki Seisaku-Sho, Ltd. Specifically, the membrane thickness was measured at five points at approximately equal intervals over the full width in the TD direction to obtain an average value thereof.

The coating film thickness is calculated by cross-sectional or lateral observation at an arbitrary magnification using SEM.

<Porosity (%) and Substrate Porosity (%)>

A 10 cm × 10 cm square sample was cut out from a microporous membrane, and the volume ($cm^3$) and mass (g) of the sample were determined and used together with the density ($g/cm^3$) by the following formula to obtain a porosity. The density value used for the mixed composition was the value determined by calculation from the densities of the starting materials used and their mixing ratio.

$$\text{Porosity (\%)} = \text{(volume - mass)/density of mixed composition)/volume} \times 100$$

<Air Permeability (sec/100 $cm^3$) and Substrate Air Permeability (sec/100 cm $^3$)>

According to JIS P-8117(2009), the air permeability of the sample was measured by an Oken-type air-permeability&smoothness tester EGO1-55-1MR (trademark) manufactured by Asahi Seiko Co., Ltd.

<Puncture Strength (gf) and Substrate Puncture Strength (gf)>

Using a handy deformation tester "KES-G5 (trademark)" manufactured by KATO TECH CO., LTD., the puncture strength of a microporous membrane was determined by carrying out a puncture test under the conditions of a radius of curvature of the tip of the needle of 0.5 mm and a punching speed of 2 mm/sec.

<SAXS (Transmission Method) Measurement and Crystal Long Period (nm)>

The small-angle X-ray scattering (SAXS) of the polyolefin microporous membrane as the separator substrate

by the transmission method was measured under the following conditions.

(Measurement)

Using Nano-Viewer manufactured by Rigaku Corporation, small-angle X-ray scattering (SAXS) measurement was carried out by the transmission method. The separator substrate as the sample was irradiated with CuKα rays (in which the X-ray incident direction is parallel to the membrane thickness direction of the sample) and scattering was detected by PILATUS 100K manufactured by DECTRIS Ltd. The measurement was carried out under the conditions of a distance between the sample and the detector of 841.5 mm, an output of 60 kV and 45 mA. The measurement was carried out using a point focus as an optical system under the conditions of the following slit diameters: 1st slit: $\psi$ = 0.4 mm, 2nd slit: $\psi$ = 0.2 mm, guard slit: =0.8 mm. As a pretreatment for the measurement, a slurry was prepared by mixing the sample and propylene glycol at a weight ratio of 1:1 in order to reduce scattering derived from the particle size, and then the measurement was carried out.

(Analysis: Crystal Long Period (nm))

For the obtained peak, the crystal long period was analyzed by the following method.

Empty cell scattering correction was carried out on the X-ray scattering pattern obtained from the imaging plate, and one-dimensional SAXS profile I(q) was obtained by circular averaging. Note that q is the absolute value of the scattering vector. To calculate the crystal long period d, the SAXS profile was multiplied by the square of the absolute value of the scattering vector to emphasize the scattering derived from the crystal long period. Subsequently, the SAXS profile multiplied by the square of the absolute value of the scattering vector and the logarithm of each absolute value of the scattering vector with base 10 were plotted on the vertical and horizontal axes. The horizontal axis represents $\log_{10}$ q, and the vertical axis represents $\log_{10}$ (I(q) × q2).

The plotted data was subjected to the following operation: a tangent line was drawn on the plotted data so as to contact the peak position derived from the lamella at one point each on the small-angle side and the wide-angle side, and the tangent line was subtracted from the data. Subsequently, the horizontal axis position Xm at which the maximum value is obtained between the two points of contact was obtained. Finally, the crystal long period d was determined by the following formula.

$$qm = 10^{Xm} \qquad d = 2\pi/qm$$

<WAXS (Reflection Method) and MD, TD Cross-Sectional Crystal Orientation Degrees (%)>

The wide-angle X-ray scattering (WAXS) of the polyolefin microporous membrane as the separator substrate by the reflection method was measured under the following conditions.

(Measurement)

Using an X-ray structure evaluation device NANO-Viewer manufactured by Rigaku Corporation, a wide-angle X-ray scattering measurement was carried out by the reflection method. The sample was irradiated with CuKα rays and scattering was detected by an imaging plate. The wide-angle X-ray scattering measurement was carried out under the conditions of a sample-detector distance of 95.2 mm and an output of 60 kV and 45 mA. The measurement was carried out using a point focus as an optical system under the conditions of the following slit diameters: 1st slit: $\psi$ = 0.4 mm, 2nd slit: $\psi$ = 0.2 mm. The sample was set so that the cross-section of the sample and the incident direction of X-rays formed an angle of 10.5°. If the microporous membrane has a small thickness, the measurement cannot be carried out accurately, so that the membrane is stacked as necessary to obtain a sufficient strength.

(Analysis: MD, TD Cross-Sectional Crystal Orientation Degrees (%))

Of the sample surface normal directions, the direction that faces the upstream side is projected onto the detector surface is the azimuth angle $\varphi$ = 0°, and defines clockwise azimuth angles from $\varphi$ = -180° to $\varphi$ = 180°. Subsequently, detector background correction and empty cell scattering correction were carried out on the X-ray scattering pattern obtained from the imaging plate. Thereafter, the integrated intensity I ($\varphi$) for each azimuthal angle $\varphi$ within a range of 19.5° < 2θ < 21.3°, where the (110) plane diffraction peak of polyethylene exists is plotted against the azimuthal angle $\varphi$ within a range of -45° < $\varphi$ < 45°. I($\varphi$) has a single peak centered at $\varphi$=0° when the molecular chains are oriented in the direction parallel to the film surface in the cross section. This curve was fitted by adding a constant and a Gaussian

function as shown in Formula 2, and the degree of cross-sectional orientation degree f was calculated according to Formula 3 from the full width at half maximum of the Gaussian function of the fitting results.

$$I(\varphi) = A + B \times \exp(-((\varphi-\varphi_0)/w)\ 2) \qquad \text{Formula 2}$$

Description of symbols in Formula 2

I(φ): Integrated intensity within a range of 19.5° < 2θ < 21.3° at a certain azimuth angle φ after background correction and empty cell scattering correction
φ: azimuth angle (rad)

$$f' = 1 - FWHM/180 \qquad \text{Formula 3}$$

Description of symbols in Formula 3

f: cross-sectional orientation degree
FWHM: full width at half maximum (°) of the resulting Gaussian function obtained from fitting results

<WAXS (Transmission Method) Measurement, Crystallinity Degree (%), Crystallite Size (110) (nm), Crystallite Size (200) (nm) and Membrane Thickness Direction Crystal Orientation Degree (%)>

Wide-angle X-ray scattering (WAXS) of the polyolefin microporous membrane as the separator substrate by the transmission method was measured under the following conditions.

(Measurement)

Using an X-ray structure evaluation device NANO-Viewer manufactured by Rigaku Corporation, wide-angle X-ray scattering measurement was carried out by a transmission method. The sample was irradiated with CuKα rays and scattering was detected by an imaging plate. Wide-angle X-ray scattering measurement was carried out under the conditions of a sample-detector distance of 95.2 mm and an output of 60 kV and 45 mA. The measurement was carried out using a point focus as an optical system under the conditions of the following slit diameters: 1st slit: Ψ = 0.4 mm, 2nd slit: φ=0.2 mm. The sample was set so that the cross-section of the sample and the incident direction of X-rays formed an angle of 10.5°. If the microporous membrane has a small thickness, the measurement cannot be carried out accurately, so that the membrane is stacked as necessary to obtain sufficient strength.

(Analysis: Crystallite Size (110) (nm) and Crystallite Size (200) (nm) and Crystallinity Degree %)

The range from 2θ = 9.7° to 2θ = 29.0° of the X-ray scattering pattern obtained from the imaging plate was separated into three peaks: orthorhombic (110) plane diffraction peaks, orthorhombic (200) plane diffraction peaks and amorphous peaks, and the crystallite size was calculated from the full width at half maximum of the (110) plane diffraction peaks according to according to Scherrer's formula (Formula 1). The (110) and (200) plane diffraction peaks were approximated by the Voigt function and the amorphous peaks were approximated by the Gauss function. The peak position of the amorphous peaks was fixed at 2θ = 19.6° and the full width at half maximum was fixed at 6.3°, while peaks were separated without particularly fixing the peak position and full width at half maximum of the crystalline peaks. The crystallite size was calculated from the full width at half maximum of the (110) plane diffraction peaks calculated by peak separation according to Scherrer's formula (Formula 1).

$$D\ (110 \text{ or } 200) = K\lambda/(\beta\cos\theta) \qquad \text{Formula 1}$$

Description of symbols in Formula 1

D (110 or 200): crystallite size (nm)
K: 0.9 (constant)
$\lambda$: X-ray wavelength (nm)
$\beta$: $(\beta 1^2 - \beta 2^2)$ 0.5
$\beta 1$: full width at half maximum (rad) of (hkl) peaks calculated as a result of peak separation
$\beta 2$: full width at half maximum of incident beam spread (rad)
$\theta$: Bragg angle

The crystallinity degree (X) was calculated by the following formula.

$$\text{Crystallinity degree } X = \{I(110) + I(200)\}/\{I(110) + I(200) + Iamr\} \times 100$$

Iamr: area of amorphous peak

The crystallite size ratio (110)/(200) is calculated by the following formula using the crystallite size calculated by Formula 1.

$$\text{Crystallite size ratio } (110)/(200) = (\text{crystallite size } (110)\ [\text{nm}])/(\text{crystallite size } (200)\ [\text{nm}])$$

<Amorphous Portion Thickness (nm) and Crystal Portion Thickness (nm)>

Using the SAXS crystal long period and the WAXS crystallinity degree measured by the above method, the amorphous portion thickness (nm) and the crystal portion thickness (nm) were calculated according to the following formula.

$$\text{Amorphous portion thickness [nm]} = (\text{crystal long period [nm]}) \times (1 - \text{crystallinity degree } [\%]/100)$$

<TOF-SIMS Analysis and Image Processing of Substrate Separator>

(1) TOF-SIMS analysis of separator

The separators obtained in Examples and Comparative Examples were subjected to TOF-SIMS analysis. A nano-TOF manufactured by ULVAC-PHI, INCORPORATED was used as a TOF-SIMS mass spectrometer. The analysis conditions are as follows.

(Image Measurement Conditions)

Primary ion: bismuth (Bi)
Acceleration voltage: 30 kV
Ion current: about 0.5 nA (as DC)
Analysis area: 100 $\mu$m $\times$ 100 $\mu$m
Analysis time: 90 minutes
Detection ion: positive ion (m/z = 28)
Neutralization: electron gun + Ar monomer ion
Vacuum degree: about $5.0 \times 10^{-5}$ Pa (oxygen was introduced to increase detection intensity of Si)

(Measurement Conditions in Depth Direction)

< <Analysis Conditions>>

Primary ion: bismuth (Bi)
Acceleration voltage: 30 kV
Ion current: about 1.2 nA (as DC)
Analysis area: 100 μm × 100 μm
Analysis time: 5 flames/cycle
Detection ion: Positive ion (m/z = 28)
Neutralization: electron gun + Ar monomer ion
Vacuum degree: about 5.0 × $10^{-5}$ Pa (oxygen was introduced to increase detection intensity of Si)

< < Sputtering Conditions > >

Sputter ion: GCIB ($Ar_{2500}^{+}$)
Acceleration voltage: 20 kV
Ion current: about 5 nA
Sputtering area: 400 μm × 400 μm
Sputtering time: 30 seconds/cycle
Neutralization: electron gun + Ar monomer ion

Spectral detection of Si ions (corresponding to positive ions of m/z = 28) was carried out under the above conditions. As an example, the TOF-SIMS analysis results of the separator of Example 1 are shown in FIG. 1, and the TOF-SIMS analysis results of the separator of Comparative Example 1 are shown in FIG. 11, respectively. Note that the units of the vertical and horizontal axes in FIG. 1 are pixels, and the units of the vertical and horizontal axes in FIG. 11 are pixels.

(II) Image Processing

Image data of the TOF-SIMS spectrum obtained as mentioned above was image-processed according to the following procedure.

(1) A filter that matches the beam shape (diameter: 2 μm, pixel resolution: 0.39 μm) is fabricated. A three-dimensional image of the filter is shown in FIG. 2, and a two-dimensional image is shown in FIG. 3. The filter value h1 is shown in Table 1 below. The units of the vertical and horizontal axes in FIG. 2 are pixels, and the units of each axis in FIG. 3 are pixels.

[Table 1]

| Filter value h1 | | | | | | | | | | | | |
|---|---|---|---|---|---|---|---|---|---|---|---|---|
| 0.000000 | 0.000001 | 0.000007 | 0.000023 | 0.000054 | 0.000091 | 0.000108 | 0.000091 | 0.000054 | 0.000023 | 0.000007 | 0.000001 | 0.000000 |
| 0.000001 | 0.000010 | 0.000045 | 0.000152 | 0.000362 | 0.000610 | 0.000725 | 0.000610 | 0.000362 | 0.000152 | 0.000045 | 0.000010 | 0.000001 |
| 0.000007 | 0.000045 | 0.000216 | 0.000725 | 0.001724 | 0.002900 | 0.003448 | 0.002900 | 0.001724 | 0.000725 | 0.000216 | 0.000045 | 0.000007 |
| 0.000023 | 0.000152 | 0.000725 | 0.002438 | 0.005799 | 0.009753 | 0.011598 | 0.009753 | 0.005799 | 0.002438 | 0.000725 | 0.000152 | 0.000023 |
| 0.000054 | 0.000362 | 0.001724 | 0.005799 | 0.013793 | 0.023196 | 0.027585 | 0.023196 | 0.013793 | 0.005799 | 0.001724 | 0.000362 | 0.000054 |
| 0.000091 | 0.000610 | 0.002900 | 0.009753 | 0.023196 | 0.039011 | 0.046392 | 0.039011 | 0.023196 | 0.009753 | 0.002900 | 0.000610 | 0.000091 |
| 0.000108 | 0.000725 | 0.003448 | 0.011598 | 0.027585 | 0.046392 | 0.055170 | 0.046392 | 0.027585 | 0.011598 | 0.003448 | 0.000725 | 0.000108 |
| 0.000091 | 0.000610 | 0.002900 | 0.009753 | 0.023196 | 0.039011 | 0.046392 | 0.039011 | 0.023196 | 0.009753 | 0.002900 | 0.000610 | 0.000091 |
| 0.000054 | 0.000362 | 0.001724 | 0.005799 | 0.013793 | 0.023196 | 0.027585 | 0.023196 | 0.013793 | 0.005799 | 0.001724 | 0.000362 | 0.000054 |
| 0.000023 | 0.000152 | 0.000725 | 0.002438 | 0.005799 | 0.009753 | 0.011598 | 0.009753 | 0.005799 | 0.002438 | 0.000725 | 0.000152 | 0.000023 |
| 0.000007 | 0.000045 | 0.000216 | 0.000725 | 0.001724 | 0.002900 | 0.003448 | 0.002900 | 0.001724 | 0.000725 | 0.000216 | 0.000045 | 0.000007 |
| 0.000001 | 0.000010 | 0.000045 | 0.000152 | 0.000362 | 0.000610 | 0.000725 | 0.000610 | 0.000362 | 0.000152 | 0.000045 | 0.000010 | 0.000001 |
| 0.000000 | 0.000001 | 0.000007 | 0.000023 | 0.000054 | 0.000091 | 0.000108 | 0.000091 | 0.000054 | 0.000023 | 0.000007 | 0.000001 | 0.000000 |

(Calculation Method of Filter Value)

Using the function fspecial of the Image Processing Toolbox of the numerical calculation software MATLAB (registered trademark) manufactured by Mathworks, Inc., the filter value was measured.
Fspecia ("gaussian", [13 13], 1.69865)

(2) The fabricated filter is applied to two-dimensional data.
(3) The average value and the standard deviation of the two-dimensional data after the application of the filter are calculated.
(4) Average value + standard deviation × 3 is binarized as a threshold value.
(In the case of the normal distribution, since 99.74% of the value falls within a range of the average value + the standard deviation × 3, it is intended to numerically extract a specific portion.)
(5) Expansion contraction for 7 pixels is carried out to connect an extraction region in the vicinity.
(6) A region having a small area (50 pixels or less) is removed.
(7) A parameter of each of the remaining regions is calculated.

extraction area (pixel), simple center of gravity position (x0, y0)
maximum value in region, average value of region, and distance between the weighted centers of gravity positions (xm, ym)

(8) A distance between the weighted centers of gravity positions is calculated.

Using WeightedCentroid option of the function registrationprops of the Image Processing Toolbox of the numerical arithmetic software MATLAB manufactured by Mathworks, calculation was carried out.
regionprops (cc, i, 'weightedCentroid')
Here, cc is a variable indicating the extracted region, and I is a variable storing the two-dimensional data after the application of the filter.
As an example, the TOF-SIMS analysis results of the separator subjected to image processing of the above (1) to (2) are shown in FIG. 4 (Example 1) and FIG. 12 (Comparative Example 1), and the TOF-SIMS analysis results of the separator subjected to image processing of the above (1) to (6) are shown in FIG. 5 (Example 1) and FIG. 13 (Comparative Example 1). Note that the units of the vertical and horizontal axes of FIG. 4 are pixels, the units of the vertical and horizontal axes of FIG. 12 are pixels, the units of the vertical and horizontal axes of FIG. 5 are pixels, and the units of the vertical and horizontal axes of FIG. 13 are pixels.

(III) Voronoi Tessellation

Voronoi tessellation was carried out based on the previously calculated weighted center of gravity position (xm, ym) to obtain a Voronoi region, and an area thereof was calculated. The numerical calculation software MATLAB manufactured by Mathworks, Inc. was used for the calculation.
A diagram of the Voronoi region as shown in FIG. 6 (Example 1) or FIG. 14 (Comparative Example 1) can be obtained by the following calculation procedure. Note that the units of the vertical and horizontal axes in FIG. 6 are pixels, and the units of the vertical and horizontal axes in FIG. 14 are pixels. VXB and VYB are temporary variables used in the calculation.

```
[VXB, VYB] = Voronoi (xm, ym);
Plot (VXB, VYB, '-b', xm, ym,' .r');
```

Calculation of the region by Voronoi tessellation and calculation of an area thereof were carried out by the procedure shown below. First, the following calculation procedure is carried out.

```
DTB = delaunayTriangulation ([xm, ym]);
[VB, rB] = VoronoiDaigram (DTB);
```

DTB is a temporary variable used in the middle of the calculation and delaunayTriangulation (xm, ym) is a function that creates a Delaunary triangulation as an element of the temporary variable. VB is a matrix variable storing a position list indicating the positions of the end points of the triangles constituting the Voronoi tessellation, and rB is a column of a list indicating which end point included in VB is used by each Voronoi region subjected to the Voronoi tessellation.

Next, each Voronoi region indicated by each row of rB is subjected to the following calculation in the order of the row. Calculations are carried out in order from 1 to the end of the list shown in rB. Calculations for the kth column list are carried out as follows.

(1) If the end point of VB indicated by the k-th list rB {k} of rB includes a point corresponding to the outside of the image area, the area is excluded from the calculation target as an unclosed area. This is because the region in contact with the edge of the image includes the boundary of the edge of the image that is not Voronoi tessellation indicating the island structure, so that it is considered that this region does not have an area indicating the original feature of the island structure. Here, the list pointed to by k having no points to exclude is determined to represent a valid Voronoi region.
(2) The area A of the Voronoi region k determined as valid by the previous determination is calculated as follows.

$$rBK = rB\{k\};$$

$$XPB = VB\ (rBK, 1);$$

$$YPB = VB\ (rBK, 2);$$

$$A(i) = polyarea\ (XPB, YPB);$$

i is a number assigned to each valid area in order, and starts from 1 and is increased by 1 each time a substitution is made in the above calculation. rBK, XPB, and YPB are temporary variables used in the calculation.

For these calculations (1) and (2), k is incremented from 1 in order, and when the calculation is completed to the end of the list of rB, only the area of the area determined as valid as the Voronoi region is substituted for A.
As a result of this calculation, the Voronoi area that was determined as valid and whose area was calculated is illustrated, for example, in FIG. 7 (Example 1) and FIG. 15 (Comparative Example 1). Note that the units of the vertical and horizontal axes in FIG. 7 are pixels, and the units of the vertical and horizontal axes in FIG. 15 are pixels.
As an example of the calculation results of the area, histograms of separators are shown in FIG. 8 (Example 1) and FIG. 16 (Comparative Example 1).
Since the Voronoi area is calculated based on the image, it is represented by the number of pixels, but it can be converted into the actual area from the imaging conditions when obtaining this image. If the length of one side of a pixel obtained from the conditions set at the time of imaging is lp (μm), the area corresponding to one pixel is $lp^2$ ($\mu m^2$). The actual area can be obtained by multiplying the area of the Voronoi region expressed in pixels by the area of one pixel. For example, when an area of 100 μm square is imaged with 256 × 256 pixels, the length of one side of the pixel is 0.39 μm, and the area of one pixel is 0.153 $\mu m^2$. For example, the actual area of the Voronoi region with a calculated area of 100 pixels is 153 $\mu m^2$. The area thus obtained from the image in pixels can be easily converted into the actual area. Examples of histograms after conversion are shown in FIG. 9 (Example 1) and FIG. 17 (Comparative Example 1). If the length of one side of a pixel is lp (μm), the actual area of the Voronoi region is converted in the same manner as above, except that the area corresponding to one pixel is $lp^2$ ($\mu m^2$ ), a converted scaled histogram may be obtained.
Next, a method of calculating parameters representing features of distribution of areas of Voronoi regions from this histogram will be described. This calculation was carried out by fitting the area distribution to the following probability distribution function.

[Mathematical Formula 1]

$$y = f(x|\mathrm{k}, \mu, \sigma) = \left(\frac{1}{\sigma}\right)\exp\left(-\left(1 + \mathrm{k}\frac{(x-\mu)}{\sigma}\right)^{-\frac{1}{\mathrm{k}}}\right)\left(1 + \mathrm{k}\frac{(x-\mu)}{\sigma}\right)^{-1-\frac{1}{\mathrm{k}}}$$

Here, x is the input data. There are three fitting parameters: a shape parameter k, a position parameter μ indicating maximum value, and a scale parameter σ indicating variation.
The calculation was carried out using the GeneralizedExtremeValueDistribution option of the fitdist function of

the Statistics and Machine Learning Toolbox of the numerical calculation software MATLAB manufactured by Mathworks Inc. Implementation proceeds as follows, using the previously calculated area A as x.
pd = fitdist (A, 'GeneralizedExtremeValueDistribution');

The output pd holds aforementioned values of k, $\mu$, and $\sigma$ as a structural body containing the fitting results, and each individual data is pd. k, pd. mu, pd. sigma and can be accessed as sigma. Examples of fitting results are shown in FIG. 10 (Example 1) and FIG. 18 (Comparative Example 1). This time, of the distribution parameters obtained by this fitting, $\sigma$ indicating the peak position and variation was used. $\sigma$/mu can also be calculated using the obtained mu and $\sigma$.

<Compression Resistance Test>

Two separators were cut into pieces of 10 cm × 10 cm and stacked, and then the air permeability Sj was measured. Further, the thickness was measured at 9 arbitrary points within an area of 8 cm × 8 cm based on the intersection of the diagonal lines in the top view and the average value was calculated, followed by covering with PET films (10 cm × 10 cm) from above and below to form a laminated body. Further, the laminated body was sandwiched between two rubber sheets (10 cm × 10 cm) having a thickness of 5 mm from above and below, and pressure was applied while heating using a mini test press (product number: MP-WCH) manufactured by Toyo Seiki Seisaku-Sho, Ltd. The PET film and the rubber sheet were used so as to apply pressure uniformly over the entire surface, and the uniformity was confirmed by a pressure sensor. The temperature of upper and lower heaters of the press was 90°C, followed by holding for 3 minutes so that 8 MPa was uniformly applied to the sample of 10 cm×10 cm. After the heating and compression operation, the air permeability Sh of the two stacked separators was measured. Further, the thickness of the two separators stacked together was measured at arbitrary 9 points within an area of 8 cm × 8 cm based on the intersection of the diagonal lines in the top view, and the average value was calculated. According to the following formula, a change in thickness before compression and thickness after compression is quantified as a thickness reduction rate (%), and a change in air permeability after compression and air permeability before compression was quantified as an air permeability change rate.

$$\text{Thickness reduction rate (\%)} = ((\text{thickness after compression operation } (\mu m) - \text{thickness before compression operation } (\mu m))/\text{thickness before compression operation } (\mu m)) \times 100$$

$$\text{Air permeability change rate (\%)} = ((\text{air permeability Sh after compression (sec)} - \text{air permeability Sj before compression (sec)})/\text{air permeability Sj before compression (sec)}) \times 100$$

<Contact Angle of Coating Solution (°)>

Using a contact angle meter (CA-V) (model name) manufactured by Kyowa Interface Science Co., Ltd., 2 $\mu$l of each coating solution was dropped on the surface of a clean separator substrate, and the contact angle was measured after 40 seconds. For the contact angle, the average value of contact angles measured three times in MD and TD was adopted. This measurement method was carried out on both the front and back surfaces of the microporous membrane as the separator substrate, and either one of the larger numerical values was adopted.

<Confirmation of Progress of Crosslinking Reaction in Coating Step>

The TMA rupture temperature before and after coating the polyolefin microporous membrane as the separator substrate with the coating solution was measured, and the crosslinking reaction in the coating step was confirmed by comparing both temperatures. Regarding the TMA rupture temperature, the progress of the crosslinking reaction was evaluated according to the following criteria.

(Coating of Inorganic Porous Layer or Thermoplastic Polymer-Containing Layer)

A (Good): 190°C or higher
B (Acceptable): 170°C to 190°C
C (Poor): 170°C or lower

(Coating of Active Layer or Heat-Resistant Resin Layer)

A (Good): 200°C or higher
B (Acceptable): 180°C to 200°C
C (Poor): 180°C or lower

<Battery Evaluation I: Cycle Test, Hot Box Test and Nail Penetration Test>

A laminate cell or a 4680 type cylindrical battery was fabricated according to the following procedure, and a cycle test (1), a hot box test and a nail penetration test were carried out using the laminate cell, and a cycle test (2) was carried out using the 4680 type cylindrical battery.

(Fabrication of Battery used in Safety Test)

a. Fabrication of Positive Electrode

After mixing $LiNi_{0.8}Mn_{0.1}Co_{0.1}O_2$ as the positive electrode active material, carbon black as the conductive aid and a polyvinylidene fluoride solution as the binder at a solid content weight ratio of 91:5:4, N-Methyl-2-pyrrolidone was added as the dispersion solvent so as to have a solid content of 68% by weight, followed by mixing to prepare a slurry solution. This slurry solution was applied on both sides of an aluminum foil having a thickness of 15 μm so that a part of the aluminum foil was exposed, and then the solvent was removed by drying. Further, the coated aluminum foil was rolled by a roll press so that the density of the positive electrode mixture portion was 2.8 $g/cm^3$ . Thereafter, the rolled aluminum foil was cut so as to include the aluminum foil exposed area to obtain a positive electrode.

b. Fabrication of Negative Electrode

After mixing artificial graphite as the negative electrode active material, and a styrene-butadiene rubber and an aqueous carboxymethyl cellulose solution as the binders at a solid content weight ratio of 96.4:1.9:1.7, water was added as the dispersion solvent so as to have a solid content of 50% by weight, followed by mixing to prepare a slurry solution. This slurry solution was applied on a copper foil having a thickness of 10 μm so that a part of the copper foil was exposed, and then the solvent was removed by drying. Further, the coated copper foil was rolled by a roll press so that the density of the negative electrode mixture portion was 1.45 $g/cm^3$ . Thereafter, the rolled copper foil was cut so as to include the copper foil exposed area to obtain a negative electrode.

c. Preparation of Nonaqueous Electrolytic Solution

As shown in Table 18 and Table 19, an electrolytic solution and an electrolyte were mixed to prepare a nonaqueous electrolytic solution.

d-1. Battery Assembly of Laminate Cell

While zigzag-folding a long separator having a width of 55 mm so that active material surfaces of a positive electrode and a negative electrode face each other and are interposed between the positive electrode and the negative electrode, a laminated body composed of 15 double-sided negative electrodes and 14 double-sided positive electrodes was obtained. At this time, a heat-resistant B layer of the sample 1 was disposed so as to face the positive electrode. Aluminum lead pieces with a sealant were welded to the exposed areas of the 14 positive electrode aluminum foils of this laminated body, and nickel lead pieces with a sealant were welded to the exposed areas of the 15 negative electrode copper foils, followed by inserting into an aluminum laminate exterior body and further laminate-sealing of three sides in total including the side where the positive and negative lead pieces are exposed and the other two sides. Next, the above nonaqueous electrolytic solution was injected into the exterior body, and then the opening was sealed to fabricate a 28-opposed laminate type battery. After being left to stand at room temperature for one day, initial charge of the fabricated battery was carried out for 8 hours in total by a method of charging to a cell voltage of 4.2 V at a current value of 330 mA (0.3 C) in an atmosphere at 25°C and, after reaching that voltage, performing constant voltage charging to maintain 4.2 V. Subsequently, the battery was discharged to a cell voltage of 3.0 V at a current value of 330 mA (0.3 C).

d-2. Battery Assembly of Cylindrical Battery

Using the above positive electrode, negative electrode and electrolytic solution, and using a long separator so that the active material surfaces of the positive electrode and the negative electrode face each other and are interposed between the positive electrode and the negative electrode, a cylindrical (4680 type) lithium secondary battery (battery

dimensions: diameter of 46 mm, height of 80 mm) was fabricated. When fabricating the battery, the positive electrode and the negative electrode having maximum length that can be placed inside the battery container were enclosed. At this time, the coating layer of the separator was disposed so as to face the positive electrode. After being left to stand at room temperature for one day, initial charge of the fabricated battery was carried out for 8 hours in total by a method of charging to a cell voltage of 4.2 V at a current value of 5 A (0.3 C) in an atmosphere at 25°C and, after reaching that voltage, performing constant voltage charging to maintain 4.2 V. Subsequently, the battery was discharged to a cell voltage of 3.0 V at a current value of 5 A (0.3 C).

(Cycle Test (1): at 5°C and at 50°C)

The battery obtained in aforementioned "d-1. Battery Assembly of Laminate Cell" was charged and discharged for 1,000 cycles in each atmosphere at 5°C or 50°C, respectively. As for charging, the battery was charged for 3 hours in total by a method of charging to a cell voltage of 4.2 V at a constant current of 1 A (1.0 C) and, after reaching that voltage, performing constant voltage charging to maintain 4.2 V. As for discharging, the battery was discharged to a cell voltage of 3.0 V at a current value of 1 A (1.0 C). The capacity retention was calculated from the discharge capacity of the 1,000th cycle and the discharge capacity of the 1st cycle. When the capacity retention rate is high, it was evaluated to have satisfactory cycle characteristics.

(Hot Box Test)

After subjecting the battery obtained by aforementioned "d-1. Battery Assembly of Laminate Cell" to charging-discharging at 5°C for 300 cycles, the battery was stored in a hot box set at high temperature of 136°C for one hour, and the state of the battery was observed during storage and after storage.

When the heat shrinkage of the microporous membrane housed in the battery as the separator progresses due to high-temperature storage, internal short circuiting occurs in the positive electrode and the negative electrode, which are both electrodes of the battery, and ignition or explosion may be observed. Batteries in which such ignition or explosion was observed were rated as rejects, while batteries in which ignition or explosion was not observed were rated as accepted products.

This hot box test was carried out on 100 batteries for the same separator, and the passing rate (%) was calculated.

(Nail Penetration Test)

A test, in which a battery obtained in aforementioned "d-1. Battery Assembly of Laminate Cell" charged to 4.2 V is hit with an iron nail having a diameter of 3 mmφ at a speed of 20 mm/sec and punctured to cause internal short circuiting, was carried out. This test is capable of measuring time-dependent change behavior of voltage reduction of the battery due to internal short circuiting, and battery surface temperature increase behavior due to internal short circuiting, to elucidate these phenomena during internal short circuiting. Inadequate shutdown function of the separator during internal short circuiting or membrane rupture at low temperature can also result in sharp heat release of the battery, which may lead to ignition of the electrolytic solution and fuming and/or explosion of the battery.

As mentioned above, pass/fail of the battery subjected to the nail penetration test was determined. This nail penetration test was carried out on 100 batteries for the same separator, and the number X of batteries, which did not cause ignition, fuming and explosion, was calculated as passing rate (X/100), which are shown in Tables 2 to 17.

(Cycle Test (2))

The battery obtained in aforementioned "d-2. Battery Assembly of Cylindrical Battery" was charged and discharged for 500 cycles in an atmosphere at 40°C. As for charging, the battery was charged for 3 hours in total by a method of charging to a cell voltage of 4.2 V at a constant current of 17.5 A (1.0 C) and, after reaching that voltage, performing constant voltage charging to maintain 4.2 V. As for discharging, the battery was discharged to a cell voltage of 3.0 V at a current value of 17.5 A (1.0 C). The capacity retention rate was calculated from the discharge capacity of the 1,000th cycle and the discharge capacity of the 1st cycle. When the capacity retention rate is high, it was evaluated to have satisfactory cycle characteristics.

<Battery Evaluation II>

(Fabrication of Battery)

For battery evaluation, a nonaqueous secondary battery including a sample piece was fabricated and evaluated

according to the following procedure. A 4680 type cylindrical battery was fabricated, and a collapse test, a cycle test capacity retention rate and a cycle life test were carried out or measured 4 days after coating the separator.

a. Fabrication of Positive Electrode

After mixing $LiNi_{0.6}Mn_{0.2}Co_{0.2}O_2$ as the positive electrode active material, carbon black as the conductive aid and a polyvinylidene fluoride solution as the binder at a solid content weight ratio of 91:5:4, N-Methyl-2-pyrrolidone was added as the dispersion solvent so as to have a solid content of 68% by weight, followed by mixing to prepare a slurry solution. This slurry solution was applied on both sides of an aluminum foil having a thickness of 15 μm so that a part of the aluminum foil was exposed, and then the solvent was removed by drying. Further, the coated aluminum foil was rolled by a roll press so that the density of the positive electrode mixture portion was 2.8 g/$cm^3$ . Thereafter, the rolled aluminum foil was cut so as to include the aluminum foil exposed area to obtain a positive electrode.

b. Fabrication of Negative Electrode

After mixing carbon-coated silicon powder as the negative electrode active material, lithium-doped carbon-coated silicon oxide powder and graphite powder, a styrene-butadiene rubber and an aqueous carboxymethyl cellulose solution as the binders at a solid content weight ratio of 3:27:66.4:1.9:1.7, water was added as the dispersion solvent so as to have a solid content of 50% by weight, followed by mixing to prepare a slurry solution. This slurry solution was applied on a copper foil having a thickness of 10 μm so that a part of the copper foil was exposed, and then the solvent was removed by drying. Further, the coated copper foil was rolled by a roll press so that the density of the negative electrode mixture portion was 1.45 g/$cm^3$ . Thereafter, the rolled copper foil was cut so as to include the copper foil exposed area to obtain a negative electrode.

c: Fabrication of Electrolytic Solution

$LiPF_6$ as the solute was dissolved in a mixed solvent of ethylene carbonate:ethyl methyl carbonate = 1:2 (volume ratio) so as to have the concentration of 1.0 mol/L to prepare a nonaqueous electrolytic solution.

d. Battery Assembly

Using the above positive electrode, negative electrode and electrolytic solution, and using a long separator so that the active material surfaces of the positive electrode and the negative electrode face each other and are interposed between the positive electrode and the negative electrode, a cylindrical (4680 type) lithium secondary battery (battery dimensions: diameter of 46 mm, height of 80 mm) was fabricated. When fabricating the battery, the positive electrode and the negative electrode having maximum length that can be placed inside the battery container were enclosed. At this time, the coating layer of the separator was disposed so as to face the positive electrode. After being left to stand at room temperature for one day, initial charge of the fabricated battery was carried out for 8 hours in total by a method of charging to a cell voltage of 4.2 V at a current value of 1 A (0.06 C) in an atmosphere at 25°C and, after reaching that voltage, performing constant voltage charging to maintain 4.2 V. Subsequently, the battery was discharged to a cell voltage of 3.0 V at a current value of 1 A (0.06 C).

(Bar Impact Test (Collapse Test))

Using the battery obtained in aforementioned "d. Battery Assembly" of Battery Evaluation II, a SUS rod having a diameter of 15.8 mmφ was disposed perpendicular to the length direction of the battery, and then a weight of 9.1 kg was freely dropped from a height of 61 cm and collided, and then temperature rise and ignition situation were confirmed by a predetermined number of cells. After collision, cells in which heat release of 80°C or higher occurred were evaluated as the rejects, and the passing rate (%) based on the total number of cells was calculated.

(Cycle Test Capacity Retention Rate (%))

The battery obtained in aforementioned "d. Battery Assembly" of Battery Evaluation II was charged and discharged for 500 cycles in an atmosphere at 55°C. As for charging, the battery was charged for 3 hours in total by a method of charging to a cell voltage of 4.2 V at a constant current of 8.7 A (0.5 C) and, after reaching that voltage, performing constant voltage charging to maintain 4.2 V. As for discharging, the battery was discharged to a cell voltage of 3.0 V at a current value of 8.7 A (0.5 C). The capacity retention was calculated from the discharge capacity of the 1,000th cycle and the discharge capacity of the 1st cycle. When the capacity retention rate is high, it was evaluated to

have satisfactory cycle characteristics.

(Cycle Life Test)

The battery obtained in aforementioned "d. Battery Assembly" of Battery Evaluation II was repeatedly charged and discharged in an atmosphere at 65°C until the capacity retention rate reached 50% or less. As for charging, the battery was charged for 3 hours in total by a method of charging to a cell voltage of 4.2 V at a constant current of 8.7 A (0.5 C) and, after reaching that voltage, performing constant voltage charging to maintain 4.2 V. As for discharging, the battery was discharged to a cell voltage of 3.0 V at a current value of 8.7 A (0.5 C). The number of cycles at which the capacity retention rate became 50% or less was recorded as the cycle life. When the capacity retention rate is high, it was evaluated to have satisfactory cycle characteristics.

[Method for Producing Silane-Modified Polyolefin]

A polyolefin starting material used as a silane-modified polyolefin has a viscosity-average molecular weight (Mv) of 10,000 or more and 1,000,000 or less, a weight-average molecular weight (Mw) of 30,000 or more and 920,000 or less and a number-average molecular weight of 10,000 or more and 150,000 or less, and may be propylene or butene copolymerized α-olefin. While melt kneading the polyethylene starting material with an extruder, an organic peroxide (di-t-butyl peroxide) was added to generate radicals in the polymer chain of α-olefin. Thereafter, trimethoxyalkoxide-substituted vinylsilane is injected into the melt kneaded mixture and alkoxysilyl groups are introduced into the α-olefin polymer by an addition reaction to form a silane-graft structure. A suitable amount of an antioxidant (pentaerythritoltetrakis[3-(3,5-di-t-butyl-4-hydroxyphenyl)propionate]) is simultaneously added to adjust the radical concentration in the system, thus suppressing a chain-style chain reaction (gelation) in the α-olefin. The obtained silane-grafted polyolefin molten resin is cooled in water and pelletized, and after heat-drying at 80°C for 2 days, the moisture or unreacted trimethoxyalkoxide-substituted vinylsilane are removed. The residual concentration of the unreacted trimethoxyalkoxide-substituted vinylsilane in the pellets was about 3,000 ppm or less. By using octenyltrialkoxysilane in place of trimethoxyalkoxide-substituted vinylsilane, it is possible to produce a silane-modified polyolefin in which the number of methylene ($CH_2$ )s constituting the linking portion to the main chain is 8. By using dodecyltrialkoxysilane in place of trimethoxyalkoxide-substituted vinylsilane, it is possible to produce a silane-modified polyolefin in which the number of methylene ($CH_2$)s constituting the linking portion to the main chain is 12.

[Method for Producing Polyolefin other than Silane-Modified Polyolefin]

The polyolefin used in the method for producing a polyolefin other than silane-modified polyolefin is not preferred to be limited, but can be produced by the following method. In a vessel type polymerization reactor equipped with a stirring device, α-olefin such as hexane, ethylene, 1-pentene or 1-butene, a catalyst component such as hydrogen, a Ziegler-Natta catalyst or a metallocene catalyst, a co-catalyst component such as triisobutylaluminum or diisobutylaluminum hydride, and an antistatic agent were continuously fed to obtain a polymerized slurry of polyethylene. At this time, the polymerized slurry is continuously discharged into a flash drum with a constant temperature so that the polymerization temperature is kept constant by jacket cooling and the level in the polymerization reactor is kept constant, and then the unreacted ethylene and hydrogen are separated. Further, the solvent is separated using a centrifuge and dried by blowing nitrogen to obtain polyethylene powder. To the polyethylene powder thus obtained, an aliphatic saturated alcohol such as methanol and calcium stearate are added, followed by uniform mixing using a Henschel mixer and further removal of the material that did not pass through a sieve having an appropriate opening, thus obtaining a polyolefin other than the silane-modified polyolefin.

[Preparation of Resin Starting Material]

(Preparation of Resin Starting Material A1)

100 Parts by weight of polyolefin having a viscosity-average molecular weight of 150,000 was mixed with 1.4 parts by weight of vinyltrimethoxysilane and 0.025 part by weight of di-t-butyl peroxide as an organic peroxide and 0.15 part by weight of calcium stearate, and after mixing using a Henschel mixer, the mixture thus obtained was melt-kneaded at a temperature of 220°C using a twin-screw extruder (screw diameter of 44 mm, L/D = 35) TEX-44 manufactured by The Japan Steel Works, Ltd. to granulate a resin starting material A1.

(Preparation of Resin Starting Material B1)

The polymerization reaction was carried out by continuously feeding ethylene so that the polymerization pressure reached 0.5 MPa while feeding 55 L/h of hexane, 0.5 g/h of a Ziegler-Natta catalyst containing $Mg_6 (C_4 H_9 )_{12} Al(C_2 H_5 )_3$ and titanium tetrachloride as the catalyst component, and 9 mmol/h of a mixture of trisobutylaluminum and diisobutylaluminum hydride (9:1 mixture) as the co-catalyst component in a vessel type 300 L polymerization reactor kept at 53°C by jacket cooling, thus obtaining a polymerized slurry of polyethylene. At this time, STATSAFE 3000 was added as the antistatic agent so that the concentration relative to the polyethylene powder became 15 ppm. Further, 1-butene was continuously added as the $\alpha$-olefin so that the concentration relative to the gas phase ethylene concentration became 6.9 mol%. The polymerized slurry of polyethylene was continuously discharged into a flash drum with pressure of 0.05 MPa so that the level in the polymerization reactor was kept constant, and unreacted ethylene was separated. Thereafter, the solvent was separated by centrifugation and then dried under a nitrogen stream using a drum type dryer adjusted to a jacket of 80°C and an oxygen concentration of 80 ppm to obtain polyethylene powder. To the polyethylene powder thus obtained, 150 ppb of methanol and 1,000 ppm of calcium stearate (wet process) were added, followed by removal of the material that did not pass through a sieve having an opening of 425 $\mu$m, thus obtaining a resin starting material B1.

(Preparation of Resin Starting Material C2)

The polymerization reaction was carried out by continuously feeding ethylene so that the polymerization pressure reached 0.5 MPa while feeding 40 L/h of hexane adjusted to 3°C, 0.2 g/h of a Ziegler-Natta catalyst containing $Mg_6 (C_4 H_9 )_{12} Al(C_2 H_5 )_3$ and titanium tetrachloride as the catalyst component, and 10 mmol/h of a mixture of trisobutylaluminum and diisobutylaluminum hydride (9:1 mixture) as the co-catalyst component in a vessel type 300 L polymerization reactor kept at 80°C by jacket cooling, thus obtaining a polymerized slurry of polyethylene. At this time, STATSAFE 3000 was added as the antistatic agent so that the concentration relative to the polyethylene powder became 15 ppm. Further, 1-butene was continuously added as the $\alpha$-olefin so that the concentration relative to the gas phase ethylene concentration became 5 mol%. Further, hydrogen was added so that the concentration relative to the gas phase ethylene concentration became 5.5 mol%. The polymerized slurry of polyethylene was continuously discharged into a flash drum with pressure of 0.05 MPa so that the level in the polymerization reactor was kept constant, and unreacted ethylene was separated. Thereafter, the solvent was separated by centrifugation and then dried under a nitrogen stream using a drum type dryer adjusted to a jacket of 80°C and an oxygen concentration of 80 ppm to obtain polyethylene powder. To the polyethylene powder thus obtained, 150 ppb of methanol and 1,000 ppm of calcium stearate (wet process) were added, followed by removal of the material that did not pass through a sieve having an opening of 425 $\mu$m , thus obtaining a resin starting material C2.

(Preparation of Other Resin Starting Materials)

In the same manner as in the preparation of the above resin starting material A1, except for changing the molecular weight and the copolymer concentration of the polyolefin starting material, the amount of trimethoxyalkoxide-substituted vinylsilane charged and the kneading conditions, resin starting materials A2 to A12 and resin starting materials D1 to D14 shown in Tables 20 to 25 were prepared. However, octenyloctenyltrialkoxysilane was used in place of trimethoxyalkoxide-substituted vinylsilane when preparing resin a raw material D13, and dodecyltrialkoxysilane was used in place of trimethoxyalkoxide-substituted vinylsilane when preparing D14. In the same manner as in the preparation of the resin starting material B1, except for changing the amount of the starting material charged, the polymerization reactor temperature and the polymerization pressure, resin starting materials B2 to B6 and E1 to E5 shown in Tables 20 to 25 were prepared. In the same manner as in the preparation of the resin starting material C2, except for changing the amount of the starting material charged, the polymerization reactor temperature and the polymerization pressure, resin starting materials C1, C3 to C5 and F1 to F4 shown in Tables 20 to 25 were prepared.

[Example 1] Fabrication and Evaluation of Separator

(Fabrication of Polyolefin Microporous Membrane as Separator)

To the entire mixed resin composition of 30% by weight of a resin A1, 30% by weight of a resin B1 and 40% by weight of a resin C2, 1,000 ppm by weight of pentaerythrityl-tetrakis-[3-(3,5-di-t-butyl-4-hydroxyphenyl)propionate] was added as the antioxidant, followed by dry blending using a tumbler blender to obtain a mixture. The mixture thus obtained was fed to a twin-screw extruder through a feeder in a nitrogen atmosphere. Liquid paraffin (kinematic viscosity at 37.78°C is $7.59 \times 10^{-5}$ $m^2$ /s) was injected into an extruder cylinder by a plunger pump.

The mixture was melt kneaded with liquid paraffin in an extruder, and adjusted with a feeder and a pump so

that the quantity ratio of liquid paraffin in the extruded polyolefin composition was 75% by weight (i.e., polymer concentration of 25% by weight). The melt kneading conditions were as follows: a preset temperature of 230°C, a screw rotational speed of 100 rpm and a discharge throughput of 80 kg/h.

Subsequently, the melt kneaded mixture was extrusion cast through a T-die on a cooling roll controlled to a surface temperature of 25°C to obtain a gel sheet (sheet-shaped molded body) having a raw membrane thickness of 1,250 μm .

The sheet-shaped molded body was then simultaneously fed into a biaxial tenter stretching machine for biaxial stretching to obtain a stretched sheet. The stretching conditions were as follows: an MD factor of 7.0, a TD factor of 6.4 (i.e., a factor of 7 × 6.4) and a biaxial stretching temperature of 125°C. The stretched gel sheet was then fed into a dichloromethane tank and thoroughly immersed in the dichloromethane for extraction removal of the liquid paraffin, and then dichloromethane was dried off to obtain a porous body. The porous body to was fed to a TD tenter and heat setting (HS) was carried out at a heat preset temperature of 133°C and a stretch ratio of 1.8 based on the sheet width of a tenter inlet port, and then relaxation was carried out to a factor of 1.6 in the TD, based on the sheet width of an inlet port of the TD tenter to obtain a microporous membrane. The edges of the microporous membrane thus obtained were then cut and rolled into a mother roll having a width of 1,100 mm and a length of 5,000 m.

<Coating of Inorganic Coating Layer>

(Method for Preparing Acrylic Latex)

The acrylic latex to be used as the resin binder of the inorganic particle layer was prepared by the following method. In a reactor equipped with a stirrer, a reflux condenser, a drip tank and a thermometer, 70.4 parts by weight of ion-exchanged water, 0.5 part by weight of "AQUALON KH1025" (registered trademark, aqueous 25% solution manufactured by Dai-ichi Kogyo Seiyaku Co., Ltd.) as the emulsifier, and 0.5 part by weight of "ADEKA REASOAP SR1025" (registered trademark, aqueous 25% solution manufactured by Adeka Corporation) were charged. The temperature inside the reactor was then raised to 80°C, and 7.5 parts by weight of an aqueous 2% solution of ammonium persulfate was added while keeping the temperature at 80°C, to obtain an initial mixture. Five minutes after completion of the addition of the aqueous ammonium persulfate solution, the emulsified liquid was added dropwise from the drip tank into the reactor over a period of 150 minutes. The emulsified liquid was prepared by forming a mixture of 70 parts by weight of butyl acrylate, 29 parts by weight of methyl methacrylate, 1 part by weight of methacrylic acid, 3 parts by weight of "AQUALON KH1025" (registered trademark, aqueous 25% solution manufactured by Dai-ichi Kogyo Seiyaku Co., Ltd.) and 3 parts by weight of "ADEKA REASOAP SR1025" (registered trademark, aqueous 25% solution manufactured by Adeka Corporation) as emulsifiers, 7.5 parts by weight of an aqueous 2% solution of ammonium persulfate, and 52 parts by weight of ion-exchanged water, and mixing the mixture with a homomixer for 5 minutes.

After completion of the dropwise addition of the emulsified liquid, the temperature inside the reactor was kept at 80°C for 90 minutes, followed by cooling to room temperature. The obtained emulsion was adjusted to a pH of 8.0 with an aqueous 25% ammonium hydroxide solution, and then a small amount of water was added to obtain an acrylic latex with a solid content of 40%. The obtained acrylic latex had a number-mean particle size of 145 nm and a glass transition temperature of -23°C.

(Formation of Inorganic Porous Layer)

A dispersion was prepared by uniformly dispersing 95 parts by weight of aluminum hydroxide oxide (mean particle size: 1.4 μm) as inorganic particles and 0.4 part by weight (in terms of solid content) of an aqueous ammonium polycarboxylate solution (SN dispersant 5468 manufactured by SAN NOPCO LIMITED, solid component concentration: 40%) as the ionic dispersing agent, in 100 parts by weight of water. The obtained dispersion was shredded with a bead mill (cell volume: 200 cc, zirconia bead diameter: 0.1 mm, filling volume: 80%) and the particle size distribution of the inorganic particles was adjusted to D50 = 1.0 μm, to prepare an inorganic particle-containing slurry. To the dispersion with adjusted particle size distribution, 4.6 parts by weight (in terms of solid content) of the acrylic latex (solid component concentration of 40%, average grain size of 145 nm, glass transition temperature of -23°C, constituent monomer: butyl acrylate, methyl methacrylate, methacrylic acid) produced the following method as a resin binder was added to prepare an inorganic particle-containing slurry.

The substrate was then continuously wound out from a mother roll of the microporous membrane and one side of the microporous membrane was coated with the inorganic particle-containing slurry using a gravure reverse coater, followed by drying with a dryer at 60°C to remove water and further winding up to obtain a mother roll of the separator.

At the time of evaluation, the separator unwound from the mother roll was slit as necessary and used as a separator for evaluation.

The thickness, the air permeability, the porosity, the puncture strength, and the air permeability change rate

before and after a compression test of compressing by 30% in thickness of the obtained polyolefin microporous membrane were measured and shown in Table 2. Various evaluations were carried out on the separator for evaluation and the battery including the same according to the evaluation methods mentioned above. The evaluation results are shown in Table 2.

[Examples 2 to 33, Comparative Examples 4 and 7] Fabrication and Evaluation of Separators

The same operation as in Example 1 was carried out, except for changing the molecular weight mixed composition, the fabrication conditions and the composite configuration conditions of the polyolefin microporous membrane, as shown in Tables 2 to 8, separators shown in Tables 2 to 8 were obtained. The separators thus obtained and batteries including the same were subjected to various evaluations according to the above evaluation method. The evaluation results are also shown in Tables 2 to 8.

In the same manner as in the production method mentioned in aforementioned [Method for Producing Silane-Modified Polyolefin], silane-modified PPs mentioned in Examples 28 and 30 were produced using polypropylene (E-100GV) manufactured by Prime Polymer Co., Ltd. Polypropylene (E-100GV) manufactured by Prime Polymer Co., Ltd. was used as PP.

As PP-PE mentioned in Example 28, a block polymer of olefin crystal/ethylene butylene/olefin crystal (DYNARON6201B) manufactured by JSR Corporation was used.

[Comparative Example 1] Fabrication and Evaluation of Separator

The same operation as in Example 1 was carried out, except that a resin B1 and a resin C2 were used at a ratio of 50:50 (weight ratio), and the fabrication conditions of a polyolefin microporous membrane and the composite configuration conditions were changed as shown in Table 7, a separator shown in Table 7 was obtained. The separators thus obtained and batteries including the same were subjected to various evaluations according to the above evaluation method. The evaluation results are also shown in Table 7.

[Comparative Example 2] Fabrication and Evaluation of Separator

In an extruder, 24 kg/h of a silane-unmodified polyethylene having a weight-average molecular weight of 350,000 and a melting point of 136.2°C (VH035, manufactured by Korea Petrochemical Ind. Co., Ltd.), 24 kg/h of a resin starting material A1 and 112 kg/h of liquid paraffin (kinematic viscosity at 37.78°C: $7.59 \times 10^{-5}$ $m^2$ /s) were mixed. At this time, the weight ratio of silane-unmodified polyethylene: silane-modified polyethylene:liquid paraffin was 15:15:70. Further, 0.5 part by weight of vinyltriethoxysilane as the carbon-carbon double bond group-containing alkoxysilane compound based on 100 parts by weight of the total of a silane-unmodified polyethylene, a silane-modified polyethylene and liquid paraffin, 2 parts by weight of dibutyltin dilaurate as the crosslinking catalyst based on 100 parts by weight of a carbon-carbon double bond group-containing alkoxysilane compound, and 2,5-dimethyl-2,5-di(tert-butylperoxy)hexane (DHBP) as the initiator based on 100 parts by weight of the carbon-carbon double bond group-containing alkoxysilane compound were introduced into the extruder, followed by mixing. Then, the mixture thus obtained was extruded at a temperature of 200°C to obtain a silane-modified polyethylene composition. The silane-modified polyethylene composition thus obtained was formed into a sheet using a T-die and cooling casting rolls, and then biaxially stretched in MD and direction, then TD direction by a tenter type sequential stretching machine. The MD stretch ratio was 5.5 and the TD stretch ratio was 5.0. The stretching temperature was 105°C in the MD direction and 125°C in the TD direction. Liquid paraffin was extracted from the stretched sheet using methylene chloride and heat-set at 126°C at a stretch ratio of 1.3 to 1.1 to fabricate a porous membrane. This porous membrane was subjected to aqueous crosslinking for 48 hours under the conditions of 85°C and relative humidity of 85% to obtain separators shown in Table 7. The separator thus obtained and a battery including the same were subjected to various evaluations according to the above evaluation method. The evaluation results are also shown in Table 7.

[Comparative Example 3] Fabrication and Evaluation of Separator

A modified polyolefin H3-1 containing an average 7.7 alkylene groups having 3 carbon atoms as short chain branches (SCB) based on 1,000 carbon atoms (VH035H, manufactured by Korea Petrochemical Ind. Co., Ltd.) was prepared. This modified polyolefin had a weight-average molecular weight of 380,000 and a melting point of 129.1°C. At this time, the modified polyolefin was a polyolefin including repeating units derived from ethylene and $\alpha$-olefin, and the repeating units derived from $\alpha$-olefin are those derived from 1-pentene. In an extruder, 7.5 kg/h of the modified polyolefin H3-1 prepared as polyolefin to be charged, 7.5 kg/h of silane-unmodified polyethylene having a weight-average molecular weight of 300,000 and a melting point of 135°C (VH035, manufactured by Korea Petrochemical Ind. Co., Ltd.),

35 kg/h of liquid paraffin (kinematic viscosity at 37.78°C: 7.59 $\times$ $10^{-5}$ $m^2/s$), 2,5-dimethyl-2,5-di(tert-butylperoxy)hexane (DHBP) as the initiator, a carbon-carbon double bond group-containing alkoxysilane such as vinyltrimethoxysilane (VTMS) as the crosslinking agent, and dibutyltin dilaurate (DBTDL) as the catalyst were fed, followed by mixing. At this time, the weight ratio of the modified polyolefin H3-1 to the silane-unmodified polyolefin was 50:50, and when the number of carbon atoms of the alkyl group of the repeating unit derived from α-olefin was 3, the number of carbon atoms of the main polyolefin chain of the polyolefin to be charged was 1,000. The weight ratio of the polyolefin charged to the plasticizer was 30:70. The content of the carbon-carbon double bond-containing alkoxyvinylsilane was 0.3 part by weight based on 100 parts by weight of the total content of the polyolefin to be charged and the plasticizer, the content of the initiator content was 1.7 parts by weight based on 100 parts by weight of the carbon-carbon double bond-containing alkoxysilane, and the content of the crosslinking catalyst was 6.7 parts by weight based on 100 parts by weight of the carbon-carbon double bond-containing alkoxysilane. As a result of mixing in the extruder, the mixture thus obtained was extruded under the temperature condition of 190°C to obtain a silane-modified polyolefin composition H3-2. The silane-modified polyolefin composition H3-2 thus obtained was formed into a sheet using a T-die and cooled casting rolls, and then biaxially stretched in a tenter type sequential stretching machine that performs MD stretching followed by TD stretching. Both MD and TD stretch ratios were 7.0. The stretching temperature was 103°C for MD and 118°C for TD. Considering the melting temperature of modified polyolefin, the composition was stretched at a lower temperature than that used for general polyolefin alone. Liquid paraffin was extracted from the stretched sheet using methylene chloride and heat-fixed at 124°C to fabricate a porous membrane. This porous membrane was subjected to aqueous crosslinking for 24 hours under the conditions of 85°C and relative humidity of 85% to obtain a separator shown in Table 7. The separator thus obtained and a battery including the same were subjected to various evaluations according to the above evaluation method. The evaluation results are also shown in Table 7.

[Comparative Example 5] Fabrication and Evaluation of Separator

In a super mixer, 18 parts by weight of a high-density polyethylene having a viscosity-average molecular weight (Mv) of 270,000 "SH800" (trademark, manufactured by Asahi Kasei Chemicals Corporation), 12 parts by weight of an ultra-high molecular weight polyethylene having Mv of 2,000,000 "UH850" (trademark, manufactured by Asahi Kasei Chemicals Corporation), 20 parts by weight of silica having an average primary particle diameter of 15 nm "DM10C" (trademark, manufactured by Tokuyama Corporation), 30 parts by weight of liquid paraffin "SMOIL P-350P" (trademark, manufactured by Matsumura Oil Research Corporation, and 0.3 part by weight of pentaerythryl-tetrakis-[3-(3,5-di-t-butyl-4-hydroxyphenyl)propionate] as the antioxidant was charged, followed by pre-mixing. The mixture thus obtained was fed through a feeder to a feed port of a twin-screw extruder. Liquid paraffin was side-fed to a cylinder of the twin-screw extruder so that the ratio of liquid paraffin to the total mixture (100 parts by weight) that is melt-kneaded and extruded is 50 parts by weight. The melt-kneading conditions were as follows: preset temperature of 200°C, screw rotational speed of 180 rpm and discharge rate of 12 kg/h. Subsequently, the melt-kneaded mixture was extruded between cooling rolls controlled at surface temperatures of 25°C through gear pumps, conduits and T-dies, each of which was set at a temperature of 220°C to obtain a sheet-shaped polyolefin composition. The sheet-shaped polyolefin composition was then continuously introduced into a simultaneous biaxial tenter, where it was simultaneously biaxially stretched 7 times in the longitudinal direction and 7 times in the transverse direction. At this time, the preset temperature of the simultaneous biaxial tenter was 123°C. The sheet-shaped polyolefin composition was then introduced into a methylene chloride bath and thoroughly immersed in methylene chloride to extract and remove liquid paraffin. Thereafter, methylene chloride was dried. Further, the sheet-shaped polyolefin composition was then introduced into a transverse tenter, stretched 1.4 times in the transverse direction, relaxed to 1.2 times at the final outlet, and rolled to obtain a separator shown in Table 7. The preset temperature of the transverse stretching section is 132°C, and that of the relaxation section is 137°C. The separator thus obtained and a battery including the same were subjected to various evaluations according to the above evaluation method. The evaluation results are also shown in Table 8.

[Comparative Example 6] Fabrication and Evaluation of Separator

25 Parts by weight of high-density polyethylene (HDPE) having a weight-average molecular weight (Mw) of 380,000 and a molecular weight distribution (Mw/Mn) of 5, 0.5 part by weight of a resin starting material A1 having a kinematic viscosity at 40°C, and 70 parts by weight of paraffin oil were mixed and introduced into a twin-screw extruder (inner diameter of 58 mm, LID = 56, twin screw extruder). This mixture was discharged from the twin-screw extruder into a T-die having a width of 300 mm under the conditions of 200°C and a screw rotational speed of 40 rpm. The discharged material was then passed through a casting roll at a temperature of 40°C to fabricate a base sheet having a thickness of 800 μm. This base sheet was stretched 6 times in a longitudinal direction in a roll stretching machine at 110°C, and then stretched 7 times in a transverse direction in a tenter stretching machine at 125°C to fabricate a stretched film. This stretched film was impregnated in a dichloromethane leach tank at 25°C for 1 minute to extract and remove

paraffin oil, thus fabricating a porous membrane. This porous membrane was dried at 50°C, heated to 125°C in a tenter-type stretching machine and then heat-fixed 1.25 times in the transverse direction (TD) compared to before stretching. This porous membrane was crosslinked in a constant temperature and humidity chamber at a temperature of 85°C and humidity of 85% for 72 hours to obtain a separator shown in Table 8. The separator thus obtained and a battery including the same were subjected to various evaluations according to the above evaluation method. The evaluation results are also shown in Table 8.

[Comparative Example 8] Fabrication and Evaluation of Separator

In an extruder, 22.4 kg/h of a silane-unmodified polyethylene having a weight-average molecular weight of 900,000 and a melting point of 135°C, 22.4 kg/h of a resin starting material A1 and 115.2 kg/h of liquid paraffin (kinematic viscosity at 37.78°C: $7.59 \times 10^{-5}$ $m^2$/s) were mixed. At this time, the weight ratio of silane-unmodified polyethylene:silane-modified polyethylene:liquid paraffin was 14:14:72. Further, 0.5 part by weight of vinyltriethoxysilane as the carbon-carbon double bond group-containing alkoxysilane compound based on 100 parts by weight of the total of silane-unmodified polyethylene, silane-modified polyethylene and liquid paraffin, 2 parts by weight of dibutyltin dilaurate as the crosslinking catalyst based on 100 parts by weight of a carbon-carbon double bond group-containing alkoxysilane compound, and 2,5-dimethyl-2,5-di(tert-butylperoxy)hexane (DHBP) as the initiator based on 100 parts by weight of the carbon-carbon double bond group-containing alkoxysilane compound was introduced into the extruder, followed by mixing. Then, the mixture thus obtained was extruded at a temperature of 200°C to obtain a silane-modified polyethylene composition. The silane-modified polyethylene composition thus obtained was formed into a sheet using a T-die and cooling casting rolls, and then biaxially stretched in MD and direction then TD direction by a tenter type sequential stretching machine. The MD stretch ratio was 5.5 and the TD stretch ratio was 5.0. The stretching temperature was 105°C in the MD direction and 125°C in the TD direction. Liquid paraffin was extracted from the stretched sheet using methylene chloride and heat-set at 126°C at a stretch ratio of 1.3 to 1.1 to fabricate a porous membrane. This porous membrane was subjected to aqueous crosslinking for 48 hours under the conditions of 85°C and relative humidity of 85% to obtain a separator shown in Table 8. The separator thus obtained and a battery including the same were subjected to various evaluations according to the above evaluation method. The evaluation results are also shown in Table 8.

[Examples 1 and 34 to 39, Comparative Examples 1, 4, 7, 9 and 10]

As shown in Tables 2, 7 and 9 to 14, the separators obtained in Examples 1 and 34 to 39 and Comparative Examples 1, 4, 7, 9 and 10 were arranged in order of the air permeability change ratio when compressed by 30% in the thickness direction, and their effects on the first battery configuration (Table 9, Table 10), the second battery configuration (Table 11, Table 12), and the third battery configuration (Table 13, Table 14 ) were tested, respectively.

[Relationship between Separator of Example 1 and Various Battery Configurations: Examples 1A to 1Q]

The batteries produced by changing the battery configuration of the separator obtained in Example 1 as shown in Tables 15 to 17 were evaluated. The battery evaluation results are also shown in Tables 15 to 17, with branch numbers of Examples 1A to 1Q according to the battery configuration.

[Electrolytic Solution Mixing Conditions, Electrolyte Mixing Conditions, Resin Starting Material Composition]

The electrolytic solution mixing conditions used for the fabrication of the battery and the separator and various evaluations are shown in Table 18, the electrolyte mixing conditions are shown in Table 19, and the resin starting material compositions are shown in Tables 20 to 22, respectively.

[Table 2]

| | | | | Example 1 | Example 2 | Example 3 | Example 4 | Example 5 | Example 6 |
|---|---|---|---|---|---|---|---|---|---|
| Separator | Substrate separator Composition and formulation of starting materials | | Number of starting material A | A1 | A1 | A1 | A1 | A1 | A1 |
| | | | % by weight | 30 | 30 | 55 | 10 | 5 | 50 |
| | | | Number of starting material B | B1 | B2 | B3 | B3 | - | - |
| | | | % by weight | 30 | 30 | 25 | 45 | - | - |
| | | | Number of starting material C | C2 | C2 | C2 | C2 | C2 | C2 |
| | | | % by weight | 40 | 40 | 20 | 45 | 95 | 50 |
| | Substrate separator Physical properties | Thickness | μm | 16.0 | 18.0 | 11.5 | 9.0 | 7.5 | 12.0 |
| | | Air permeability | sec/100 $cm^3$ | 160 | 160 | 160 | 160 | 155 | 158 |
| | | Porosity | % | 50 | 50 | 50 | 50 | 45 | 45 |
| | | Puncture strength | gf | 610 | 650 | 510 | 450 | 400 | 480 |
| | | Air permeability change ratio when compressed by 30% in thickness direction | - | 4.0 | 3.8 | 3.2 | 2.1 | 6.1 | 6.3 |

(continued)

| | | | | Example 1 | Example 2 | Example 3 | Example 4 | Example 5 | Example 6 |
|---|---|---|---|---|---|---|---|---|---|
| | Substrate separator Voronoi tessellation information | Voronoi area (mu) at maximum frequency | $\mu m^2$ | 8.90 | 8.70 | 9.10 | 8.84 | 9.66 | 9.30 |
| | | Spread (σ) | - | 3.10 | 2.70 | 2.91 | 3.00 | 2.93 | 2.69 |
| | | σ/mu | $\mu m^{-2}$ | 0.35 | 0.31 | 0.32 | 0.34 | 0.30 | 0.29 |
| | Coating layer composite configuration | Coating thickness | μm | 4.5 | 4.1 | 4.5 | 4.8 | 4.5 | 4.5 |
| | | Type of coating layer | - | Boehmite particle layer | Boehmite particle layer | Boehmite particle layer | Boehmite particle layer | Boehmite particle layer | Boehmite particle layer |
| | | Total thickness | μm | 20.5 | 22.1 | 16.0 | 13.8 | 12.0 | 16.5 |
| | | Meltdown temperature | °C | over 250 | over 250 | over 250 | over 250 | over 250 | over 250 |
| Battery configuration | Positive electrode NxMyCz | | x:y:z | 8:1:1 | 8:1:1 | 8:1:1 | 8:1:1 | 8:1:1 | 8:1:1 |
| | Negative electrode | | Si % by weight | 15 | 15 | 15 | 15 | 15 | 15 |
| | Type of electrolyte | | - | S1 | S1 | S1 | S1 | S1 | S1 |
| | Electrolyte concentration | | mol/L | 1.5 | 1.5 | 1.5 | 1.5 | 1.5 | 1.5 |
| | Composition of electrolytic solution | | - | P1 | P1 | P1 | P1 | P1 | P1 |
| Effect | Cycle capacity retention rate at 50°C | | % | 93 | 93 | 92 | 94 | 91 | 92 |
| | Cycle capacity retention rate at 5°C | | % | 88 | 87 | 88 | 86 | 82 | 88 |
| | Nail penetration test passing rate | | % | 99 | 99 | 98 | 96 | 55 | 52 |
| | Hot box test passing rate after cycle test for 300 cycles at 5°C | | % | 98 | 98 | 99 | 97 | 76 | 70 |
| | Cycle characteristics (4680 type battery) | | % | 91 | 90 | 98 | 87 | 84 | 86 |

[Table 3]

| | | | | Example 7 | Example 8 | Example 9 | Example 10 | Example 11 | Example 12 |
|---|---|---|---|---|---|---|---|---|---|
| Separator | Substrate separator Composition and formulation of starting materials | | Number of starting material A | A1 | A8 | A1 | A1 | A1 | A1 |
| | | | % by weight | 50 | 30 | 30 | 65 | 30 | 30 |
| | | | Number of starting material B | B6 | B1 | B1 | B3 | B3 | B5 |
| | | | % by weight | 30 | 30.0 | 30.0 | 15.0 | 30 | 30 |
| | | | Number of starting material C | C2 | C2 | C2 | C2 | C2 | C2 |
| | | | % by weight | 20 | 40 | 40 | 20 | 40 | 40 |
| | Substrate separator Physical properties | Thickness | μm | 16.0 | 16.0 | 22.5 | 8.2 | 21.0 | 11.0 |
| | | Air permeability | sec/100 $cm^3$ | 166 | 150 | 143 | 144 | 133 | 154 |
| | | Porosity | % | 43 | 50 | 51 | 52 | 55 | 40 |
| | | Puncture strength | gf | 510 | 525 | 605 | 353 | 610 | 450 |
| | | Air permeability change ratio when compressed by 30% in thickness direction | - | 6.2 | 5.2 | 4.8 | 5.1 | 3.3 | 2.8 |

(continued)

| | | | | Example 7 | Example 8 | Example 9 | Example 10 | Example 11 | Example 12 |
|---|---|---|---|---|---|---|---|---|---|
| | Substrate separator Voronoi tessellation information | Voronoi area (mu) at maximum frequency | $\mu m^2$ | 9.19 | 9.53 | 7.07 | 16.80 | 9.35 | 14.30 |
| | | Spread (σ) | - | 2.81 | 0.65 | 1.17 | 3.01 | 1.94 | 3.10 |
| | | σ/mu | $\mu m^{-2}$ | 0.31 | 0.07 | 0.17 | 0.18 | 0.21 | 0.22 |
| | Coating layer composite configuration | Coating thickness | μm | 4.5 | 4.1 | 4.8 | 4.1 | 4.1 | 4.6 |
| | | Type of coating layer | - | Boehmite particle layer | Boehmite particle layer | Boehmite particle layer | Boehmite particle layer | Boehmite particle layer | Boehmite particle layer |
| | | Total thickness | μm | 20.5 | 20.1 | 27.3 | 12.3 | 25.1 | 15.6 |
| | | Meltdown temperature | °C | over 250 | over 250 | over 250 | over 250 | over 250 | over 250 |
| Battery configuration | Positive electrode NxMyCz | | x:y:z | 8:1:1 | 8:1:1 | 8:1:1 | 8:1:1 | 8:1:1 | 8:1:1 |
| | Negative electrode | | Si % by weight | 15 | 15 | 15 | 15 | 15 | 15 |
| | Type of electrolyte | | - | S1 | S1 | S1 | S1 | S1 | S1 |
| | Electrolyte concentration | | mol/L | 1.5 | 1.5 | 1.5 | 1.5 | 1.5 | 1.5 |
| | Composition of electrolytic solution | | - | P1 | P1 | P1 | P1 | P1 | P1 |
| Effect | Cycle capacity retention rate at 50°C | | % | 91 | 85 | 88 | 93 | 93 | 92 |
| | Cycle capacity retention rate at 5°C | | % | 87 | 80 | 72 | 59 | 85 | 87 |
| | Nail penetration test passing rate | | % | 55 | 85 | 85 | 71 | 98 | 99 |
| | Hot box test passing rate after cycle test for 300 cycles at 5°C | | % | 72 | 76 | 70 | 61 | 92 | 72 |
| | Cycle characteristics (4680 type battery) | | % | 85 | 63 | 65 | 48 | 78 | 49 |

[Table 4]

| | | | Example 13 | Example 14 | Example 15 | Example 16 | Example 17 | Example 18 | Example 19 |
|---|---|---|---|---|---|---|---|---|---|
| Separator | Substrate separator Composition and formulation of starting materials | Number of starting material A | A2 | A3 | A4 | A5 | A1 | A1 | A1 |
| | | % by weight | 30 | 30 | 30 | 30 | 30 | 30 | 30 |
| | | Number of starting material B | B3 | B3 | B3 | B3 | B3 | B3 | B3 |
| | | % by weight | 30 | 30 | 30 | 30 | 30 | 30 | 30 |
| | | Number of starting material C | C2 | C2 | C2 | C2 | C3 | C4 | C5 |
| | | % by weight | 40 | 40 | 40 | 40 | 40 | 40 | 40 |
| | Substrate separator Physical properties | Thickness (μm) | 15.5 | 16.0 | 10.5 | 9.0 | 8.0 | 8.2 | 8.0 |
| | | Air permeability (sec/100 $cm^3$) | 180 | 175 | 135 | 138 | 144 | 158 | 152 |
| | | Porosity (%) | 58 | 54 | 52 | 45 | 38 | 42 | 35 |
| | | Puncture strength (gf) | 610 | 615 | 440 | 450 | 320 | 350 | 377 |
| | | Air permeability change ratio when compressed by 30% in thickness direction (-) | 2.6 | 1.2 | 1.5 | 1.4 | 3.2 | 3.3 | 2.8 |

(continued)

| | | | | Example 13 | Example 14 | Example 15 | Example 16 | Example 17 | Example 18 | Example 19 |
|---|---|---|---|---|---|---|---|---|---|---|
| | Substrate separator Voronoi tessellation information | Voronoi area (mu) at maximum frequency | $\mu m^2$ | 10.80 | 11.80 | 17.00 | 7.52 | 17.00 | 15.20 | 13.60 |
| | | Spread (σ) | - | 2.94 | 3.80 | 5.58 | 2.54 | 5.10 | 4.30 | 4.77 |
| | | σ/mu | $\mu m^{-2}$ | 0.27 | 0.32 | 0.33 | 0.34 | 0.30 | 0.28 | 0.35 |
| | Coating layer composite configuration | Coating thickness | μm | 4.0 | 3.8 | 4.5 | 4.8 | 4.8 | 4.8 | 5.1 |
| | | Type of coating laver | - | Boehmite particle layer | Boehmite particle layer | Boehmite particle layer | Boehmite particle layer | Boehmite particle layer | Boehmite particle layer | Boehmite particle layer |
| | | Total thickness | μm | 19.5 | 19.8 | 15.0 | 13.8 | 12.8 | 13.0 | 13.1 |
| | | Meltdown temperature | °C | over 250 | over 250 | over 250 | over 250 | over 250 | over 250 | over 250 |
| Battery configuration | Positive electrode NxMyCz | | x:y:z | 8:1:1 | 8:1:1 | 8:1:1 | 8:1:1 | 8:1:1 | 8:1:1 | 8:1:1 |
| | Negative electrode | | Si % by weight | 15 | 15 | 15 | 15 | 15 | 15 | 15 |
| | Type of electrolyte | | - | S1 | S1 | S1 | S1 | S1 | S1 | S1 |
| | Electrolyte concentration | | mol/L | 1.5 | 1.5 | 1.5 | 1.5 | 1.5 | 1.5 | 1.5 |
| | Composition of electrolytic solution | | - | P1 | P1 | P1 | P1 | P1 | P1 | P1 |
| Effect | Cycle capacity retention rate at 50°C | | % | 99 | 99 | 98 | 99 | 90 | 92 | 91 |
| | Cycle capacity retention rate at 5°C | | % | 88 | 96 | 96 | 97 | 85 | 85 | 87 |
| | Nail penetration test passing rate | | % | 99 | 95 | 98 | 98 | 96 | 96 | 97 |
| | Hot box test passing rate after cycle test for 300 cycles at 5°C | | % | 98 | 98 | 81 | 97 | 76 | 72 | 73 |
| | Cycle characteristics (4680 type battery) | | % | 95 | 81 | 41 | 95 | 42 | 41 | 39 |

[Table 5]

| | | | | Example 20 | Example 21 | Example 22 | Example 23 | Example 24 | Example 25 | Example 26 |
|---|---|---|---|---|---|---|---|---|---|---|
| Separator | Substrate separator Composition and formulation of starting materials | | Number of starting material A | A1 | A1 | A1 | A2 | A2 | A4 | A4 |
| | | | % by weight | 30 | 30 | 30 | 30 | 30 | 30 | 30 |
| | | | Number of starting material B | B3 | B3 | B3 | B3 | B3 | B3 | B3 |
| | | | % by weight | 30.0 | 3.0 | 60.0 | 3.0 | 67.0 | 3.0 | 67.0 |
| | | | Number of starting material C | C1 | C2 | C2 | C2 | C2 | C2 | C2 |
| | | | % by weight | 40 | 67 | 10 | 67 | 3 | 67 | 3 |
| | Substrate separator Physical properties | Thickness | μm | 9.8 | 7.5 | 12.0 | 16.0 | 16.0 | 16.5 | 11.5 |
| | | Air permeabilit y | sec/100 cm$^3$ | 165 | 152 | 172 | 165 | 150 | 133 | 145 |
| | | Porosity | % | 46 | 39 | 43 | 47 | 50 | 58 | 54 |
| | | Puncture strength | gf | 470 | 420 | 560 | 580 | 510 | 480 | 540 |
| | | Air permeabilit y change ratio when compressed by 30% in thickness direction | - | 5.3 | 5.5 | 4.8 | 4.6 | 4.6 | 4.8 | 4.6 |

(continued)

| | | | | Example 20 | Example 21 | Example 22 | Example 23 | Example 24 | Example 25 | Example 26 |
|---|---|---|---|---|---|---|---|---|---|---|
| | Substrate separator Voronoi tessellation information | Voronoi area (mu) at maximum frequency | $\mu m^2$ | 17.10 | 10.80 | 14.10 | 2.50 | 5.30 | 7.48 | 11.70 |
| | | Spread ($\sigma$) | - | 6.67 | 4.61 | 7.25 | 1.30 | 2.81 | 3.97 | 6.38 |
| | | $\sigma$/mu | $\mu m^{-2}$ | 0.39 | 0.43 | 0.51 | 0.52 | 0.53 | 0.53 | 0.55 |
| | Coating layer composite configurati on | Coating thickness | $\mu m$ | 4.5 | 4.1 | 3.6 | 4.8 | 4.8 | 5.1 | 4.8 |
| | | Type of coating layer | - | Boehmite particle layer | Boehmite particle layer | Boehmite particle layer | Boehmite particle layer | Boehmite particle layer | Boehmite particle layer | Boehmite particle layer |
| | | Total thickness | $\mu m$ | 14.3 | 11.6 | 15.6 | 20.8 | 20.8 | 21.6 | 16.3 |
| | | Meltdown temperature | °C | over 250 | over 250 | over 250 | over 250 | over 250 | over 250 | over 250 |
| Battery configuration | Positive electrode NxMyCz | | x:y:z | 8:1:1 | 8:1:1 | 8:1:1 | 8:1:1 | 8:1:1 | 8:1:1 | 8:1:1 |
| | Negative electrode | | Si % by weight | 15 | 15 | 15 | 15 | 15 | 15 | 15 |
| | Type of electrolyte | | - | S1 | S1 | S1 | S1 | S1 | S1 | S1 |
| | Electrolyte concentration | | mol/L | 1.5 | 1.5 | 1.5 | 1.5 | 1.5 | 1.5 | 1.5 |
| | Composition of electrolytic solution | | - | P1 | P1 | P1 | P1 | P1 | P1 | P1 |
| Effect | Cycle capacity retention rate at 50°C | | % | 70 | 73 | 72 | 85 | 85 | 84 | 81 |
| | Cycle capacity retention rate at 5°C | | % | 61 | 68 | 65 | 68 | 69 | 71 | 72 |
| | Nail penetration test passing rate | | % | 84 | 85 | 83 | 75 | 72 | 81 | 85 |
| | Hot box test passing rate after cycle test for 300 cycles at 5°C | | % | 65 | 58 | 57 | 70 | 68 | 75 | 80 |
| | Cycle characteristics (4680 type battery) | | % | 39 | 52 | 37 | 34 | 42 | 56 | 51 |

[Table 6]

| | | | | Example 27 | Example 28 | Example 29 | Example 30 | Example 31 | Example 32 | Example 33 |
|---|---|---|---|---|---|---|---|---|---|---|
| Separator | Substrate separator Composition and formulation of starting materials | | Number of starting material A | A10 | See Examples Silane-modified PP: PP-PE:C6 = 10:10:80 | A12 | See Examples Silane-modified PP: PP:C6 = 10: 10:80 | A2 | A9 | A11 |
| | | | % by weight | 30 | | 30 | | 100 | 30 | 30 |
| | | | Number of starting material B | B3 | | B3 | | - | B3 | B3 |
| | | | % by weight | 30 | | 30 | | - | 30 | 30 |
| | | | Number of starting material C | C2 | | C2 | | - | C2 | C2 |
| | | | % by weight | 40 | | 40 | | - | 40 | 40 |
| | Substrate separator Physical properties | Thickness | μm | 9.8 | 7.5 | 12.0 | 10.0 | 7.5 | 12.0 | 16.0 |
| | | Air permeability | sec/100 $cm^3$ | 125 | 151 | 158 | 160 | 160 | 157 | 161 |
| | | Porosity | % | 45 | 39 | 50 | 52 | 41 | 47 | 49 |
| | | Puncture strength | gf | 410 | 415 | 480 | 520 | 382 | 428 | 420 |
| | | Air permeability change ratio when compressed by 30% in thickness direction | - | 7.5 | 7.2 | 7.3 | 7.1 | 7.6 | 5.1 | 5.2 |

(continued)

| | | | | Example 27 | Example 28 | Example 29 | Example 30 | Example 31 | Example 32 | Example 33 |
|---|---|---|---|---|---|---|---|---|---|---|
| | Substrate separator Voronoi tessellation information | Voronoi area (mu) at maximum frequency | $\mu m^2$ | 12.90 | 8.60 | 1.59 | 17.00 | 1.30 | 16.80 | 1.49 |
| | | Spread ($\sigma$) | - | 7.78 | 5.36 | 1.40 | 0.70 | 8.20 | 8.30 | 0.80 |
| | | $\sigma$/mu | $\mu m^{-2}$ | 0.60 | 0.62 | 0.88 | 0.04 | 6.31 | 0.49 | 0.54 |
| | Coating layer composite configuration | Coating thickness | $\mu m$ | 4.5 | 4.2 | 4.2 | 4.3 | 4.5 | 4.5 | 4.4 |
| | | Type of coating layer | - | Boehmite particle layer | Boehmite particle layer | Boehmite particle layer | Boehmite particle layer | Boehmite particle layer | Boehmite particle layer | Boehmite particle layer |
| | | Total thickness | $\mu m$ | 14.3 | 11.7 | 16.2 | 14.3 | 12.0 | 16.5 | 20.4 |
| | | Meltdown temperature | °C | over 250 | over 250 | over 250 | over 250 | 200°C | over 250 | over 250 |
| Battery configuration | Positive electrode NxMyCz | | x:y:z | 8:1:1 | 8:1:1 | 8:1:1 | 8:1:1 | 8:1:1 | 8:1:1 | 8:1:1 |
| | Negative electrode | | Si % by weight | 15 | 15 | 15 | 15 | 15 | 15 | 15 |
| | Type of electrolyte | | - | S1 | S1 | S1 | S1 | S1 | S1 | S1 |
| | Electrolyte concentration | | mol/L | 1.5 | 1.5 | 1.5 | 1.5 | 1.5 | 1.5 | 1.5 |
| | Composition of electrolytic solution | | - | P1 | P1 | P1 | P1 | P1 | P1 | P1 |
| Effect | Cycle capacity retention rate at 50°C | | % | 63 | 64 | 67 | 61 | 65 | 82 | 79 |
| | Cycle capacity retention rate at 5°C | | % | 53 | 53 | 55 | 51 | 55 | 68 | 68 |
| | Nail penetration test passing rate | | % | 61 | 63 | 63 | 64 | 62 | 79 | 75 |
| | Hot box test passing rate after cycle test for 300 cycles at 5°C | | % | 52 | 50 | 51 | 55 | 52 | 68 | 63 |
| | Cycle characteristics (4680 type battery) | | % | 33 | 54 | 37 | 31 | 35 | 32 | 34 |

[Table 7]

| | | | | Comparative Example 1 | Comparative Example 2 | Comparative Example 3 | Comparative Example 4 |
|---|---|---|---|---|---|---|---|
| Separator | Substrate separator Composition and formulation of starting materials | | Number of starting material A | B1:C2 = 50: 50 | See description [Comparative Example 2] | See description [Comparative Example 3] | A6 |
| | | | % by weight | | | | 30 |
| | | | Number of starting material B | | | | B3 |
| | | | % by weight | | | | 30 |
| | | | Number of starting material C | | | | C2 |
| | | | % by weight | | | | 40 |
| | Substrate separator Physical properties | Thickness | μm | 15.2 | 11.0 | 12.4 | 13.7 |
| | | Air permeability | sec/100 $cm^3$ | 140 | 130 | 162 | 180 |
| | | Porosity | % | 38 | 40 | 42 | 48 |
| | | Puncture strength | gf | 550 | 560 | 388 | 525 |
| | | Air permeability change ratio when compressed by 30% in thickness direction | - | 12.4 | 14.7 | 15.2 | 8.2 |
| | Substrate separator Voronoi tessellation information | Voronoi area (mu) at maximum frequency | $\mu m^2$ | 18.46 | 16.20 | 18.40 | 1.30 |
| | | Spread (σ) | - | 7.72 | 0.37 | 0.80 | 0.40 |
| | | σ/mu | $\mu m^{-2}$ | 0.42 | 0.02 | 0.04 | 0.31 |
| | Coating layer composite configuration | Coating thickness | μm | 5.0 | 6.2 | 6.1 | 5.5 |
| | | Type of coating layer | - | Boehmite particle layer | Boehmite particle layer | Boehmite particle layer | Boehmite particle layer |
| | | Total thickness | μm | 20.2 | 17.2 | 18.5 | 19.2 |
| | | Meltdown temperature | °C | 161 | over 250 | over 250 | over 250 |

(continued)

| | | | Comparative Example 1 | Comparative Example 2 | Comparative Example 3 | Comparative Example 4 |
|---|---|---|---|---|---|---|
| Battery configuration | Positive electrode NxMyCz | x:y:z | 8:1:1 | 8:1:1 | 8:1:1 | 8:1:1 |
| | Negative electrode | Si % by weight | 15 | 15 | 15 | 15 |
| | Type of electrolyte | - | S1 | S1 | S1 | S1 |
| | Electrolyte concentration | mol/L | 1.5 | 1.5 | 1.5 | 1.5 |
| | Composition of electrolytic solution | - | P1 | P1 | P1 | P1 |
| Effect | Cycle capacity retention rate at 50°C | % | 52 | 25 | 30 | 61 |
| | Cycle capacity retention rate at 5°C | % | 2 | 5 | 3 | 6 |
| | Nail penetration test passing rate | % | 30 | 20 | 32 | 84 |
| | Hot box test passing rate after cycle test for 300 cycles at 5°C | % | 5 | 3 | 3 | 16 |
| | Cycle characteristics (4680 type battery) | % | 22 | 15 | 10 | 41 |

[Table 8]

| | | | | Comparative Example 5 | Comparative Example 6 | Comparative Example 7 | Comparative Example 8 |
|---|---|---|---|---|---|---|---|
| Separator | Substrate separator Composition and formulation of starting materials | | Number of starting material A | See description [Comparative Example 5] | See description [Comparative Example 6] | A7 | See description [Comparative Example 8] |
| | | | % by weight | | | 30 | |
| | | | Number of starting material B | | | B3 | |
| | | | % bv weight | | | 30 | |
| | | | Number of starting material C | | | C2 | |
| | | | % by weight | | | 40 | |
| | Substrate separator Physical properties | Thickness | μm | 14.7 | 13.3 | 12.0 | 10.0 |
| | | Air permeability | sec/100 $cm^3$ | 80 | 166 | 184 | 135 |
| | | Porosity | % | 56 | 40 | 42 | 43 |
| | | Puncture strength | gf | 320 | 550 | 560 | 433 |
| | | Air permeability change ratio when compressed by 30% in thickness direction | - | 11.0 | 10.8 | 11.3 | 13.5 |
| | Substrate separator Voronoi tessellation information | Voronoi area (mu) at maximum frequency | 2 μm | 14.97 | 0.40 | 0.37 | 1.40 |
| | | Spread (σ) | - | 8.68 | 0.75 | 8.33 | 8.60 |
| | | σ/mu | -2 μm | 0.58 | 1.88 | 22.51 | 6.14 |
| | Coating layer composite configuration | Coating thickness | μm | 4.8 | 5.2 | 5.5 | 6.3 |
| | | Type of coating laver | | Boehmite particle laver | Boehmite particle laver | Boehmite particle laver | Boehmite particle laver |
| | | Total thickness | μm | 19.5 | 18.5 | 17.5 | 16.3 |
| | | Meltdown temperature | °C | 180 | over 250 | 165 | over 250 |

(continued)

| | | | Comparative Example 5 | Comparative Example 6 | Comparative Example 7 | Comparative Example 8 |
|---|---|---|---|---|---|---|
| Battery configuration | Positive electrode NxMyCz | x:v:z | 8:1:1 | 8:1:1 | 8:1:1 | 8:1:1 |
| | Negative electrode | Si % by weight | 15 | 15 | 15 | 15 |
| | Type of electrolyte | - | S1 | S1 | S1 | S1 |
| | Electrolyte concentration | mol/L | 1.5 | 1.5 | 1.5 | 1.5 |
| | Composition of electrolytic solution | - | P1 | P1 | P1 | P1 |
| Effect | Cycle capacity retention rate at 50°C | % | 55 | 67 | 30 | 21 |
| | Cycle capacity retention rate at 5°C | % | 5 | 7 | 2 | 5 |
| | Nail penetration test passing rate | % | 15 | 17 | 82 | 82 |
| | Hot box test passing rate after cycle test for 300 cycles at 5°C | % | 2 | 3 | 12 | 2 |
| | Cycle characteristics (4680 type battery) | % | 25 | 37 | 10 | 9 |

Table 9]

| | | | | Example 34 | Example 35 | Example 36 | Example 1 | Example 37 |
|---|---|---|---|---|---|---|---|---|
| | Substrate separator Composition and formulation of starting materials | | Number of starting material A | A3 | A5 | A2 | A1 | A1 |
| | | | % by weight | 30 | 30 | 30 | 30 | 50 |
| | | | Number of starting material B | B3 | B3 | B3 | B1 | - |
| | | | % by weight | 30 | 30 | 30 | 30 | - |
| | | | Number of starting material C | C2 | C2 | C2 | C2 | C2 |
| | | | % by weight | 40 | 40 | 40 | 40 | 50 |
| | Separator production step | Extrusion temperature | °C | 230 | 230 | 230 | 230 | 210 |
| | | Biaxial stretching temperature | °C | 125 | 123 | 125 | 125 | 123 |
| | | Biaxial stretching stretch ratio | MD/TD (factor) | 7 × 6.4 | 7 × 6.4 | 7 × 6.4 | 7 × 6.4 | 7 × 6.4 |
| | | Heat setting temperature | °C | 130 | 130 | 129 | 133 | 133 |
| | | Stretching factor and relaxation factor at heat setting treatment step | Max-min (factor) | 1.8-1.6 | 1.8-1.6 | 1.8-1.6 | 1.8-1.6 | 1.8-1.6 |

(continued)

| | | | | Example 34 | Example 35 | Example 36 | Example 1 | Example 37 |
|---|---|---|---|---|---|---|---|---|
| Separator | Substrate separator Physical properties | Thickness | μm | 16 | 9.0 | 15.5 | 16.0 | 12.0 |
| | | Air permeability | sec/100 $cm^3$ | 175 | 138 | 180 | 160 | 158 |
| | | Porosity | % | 54 | 45 | 58 | 50 | 45 |
| | | Puncture strength | gf | 615 | 450 | 610 | 610 | 480 |
| | | Air permeability change ratio when compressed by 30% in thickness direction | - | 1.2 | 1.4 | 2.6 | 4.0 | 6.3 |
| | Substrate separator Voronoi tessellation information | Voronoi area (mu) at maximum frequency | $\mu m^2$ | 11.80 | 7.52 | 10.80 | 8.90 | 9.30 |
| | | Spread (σ) | - | 3.80 | 2.54 | 2.94 | 3.10 | 2.69 |
| | | σ/mu | $\mu m^{-2}$ | 0.32 | 0.34 | 0.27 | 0.35 | 0.29 |
| | Coating layer composite configuration | Coating thickness | μm | 3.8 | 4.8 | 4 | 4.5 | 4.5 |
| | | Type of coating layer | - | Boehmite particle layer | Boehmite particle layer | Boehmite particle layer | Boehmite particle layer | Boehmite particle layer |
| | | Total thickness | μm | 19.8 | 4.8 | 19.5 | 20.5 | 16.5 |
| | | Meltdown temperature | °C | over 250 | over 250 | over 250 | over 250 | over 250 |
| Battery configuration | Positive electrode NxMyCz | | x:y:z | 8:1:1 | 8:1:1 | 8:1:1 | 8:1:1 | 8:1:1 |
| | Negative electrode | | Si % by weight | 15 | 15 | 15 | 15 | 15 |
| | Type of electrolyte | | - | S1 | S1 | S1 | S1 | S1 |
| | Electrolyte concentration | | mol/L | 1.5 | 1.5 | 1.5 | 1.5 | 1.5 |

(continued)

| | | | Example 34 | Example 35 | Example 36 | Example 1 | Example 37 |
|---|---|---|---|---|---|---|---|
| effect Effect | Cycle capacity retention rate at 50°C | % | 99 | 99 | 99 | 93 | 92 |
| | Cycle capacity retention rate at 5°C | % | 96 | 97 | 88 | 88 | 88 |
| | Nail penetration test passing rate | % | 95 | 98 | 99 | 99 | 52 |
| | Hot box test passing rate after cycle test for 300 cycles at 5°C | % | 98 | 97 | 98 | 98 | 70 |
| | Cycle characteristics (4680 type battery) | % | 86 | 89 | 90 | 82 | 83 |

[Table 10]

| | | | | Example 38 | Example 39 | Comparative Example 9 | Comparative Example 10 | Comparative Example 1 |
|---|---|---|---|---|---|---|---|---|
| Separator | Substrate separator Composition and formulation of starting materials | | Number of starting material A | B1:C2 = 50:50 | A12 | C3 100% | B2:C2 = 50:50 | B1:C2 = 50:50 |
| | | | % by weight | | 30 | | | |
| | | | Number of starting material B | | B3 | | | |
| | | | % by weight | | 30 | | | |
| | | | Number of starting material C | | C2 | | | |
| | | | % by weight | | 40 | | | |
| | Separator production step | Extrusion temperature | °C | 210 | 220 | 190 | 200 | 200 |
| | | Biaxial stretching temperature | °C | 121 | 125 | 128 | 127 | 129 |
| | | Biaxial stretching stretch ratio | MD/TD (factor) | 7 × 7 | 7 × 6.4 | 7 × 6.4 | 7 × 6.4 | 7 × 6.4 |
| | | Heat setting temperature | °C | 132 | 133 | 132 | 128 | 133 |
| | | Stretching factor and relaxation factor at heat setting treatment step | Max-min (factor) | 1.8-1.7 | 1.8-1.6 | 1.8-1.6 | 1.8-1.6 | 1.8-1.6 |
| | Substrate separator Physical properties | Thickness | μm | 8.5 | 12.0 | 11.5 | 9.2 | 15.2 |
| | | Air permeability | sec/100 $cm^3$ | 90 | 158 | 140 | 80 | 140 |
| | | Porosity | % | 41 | 50 | 38 | 39 | 38 |
| | | Puncture strength | gf | 350 | 480 | 410 | 304 | 550 |
| | | Air permeability change ratio when compressed by 30% in thickness direction | - | 6.9 | 7.3 | 10.5 | 11.5 | 12.4 |

(continued)

| | | | | Example 38 | Example 39 | Comparative Example 9 | Comparative Example 10 | Comparative Example 1 |
|---|---|---|---|---|---|---|---|---|
| | Substrate separator Voronoi tessellation information | Voronoi area (mu) at maximum frequency | $\mu m^2$ | 17.50 | 1.59 | 18.30 | 18.50 | 18.46 |
| | | Spread ($\sigma$) | - | 7.50 | 1.40 | 7.60 | 7.80 | 7.72 |
| | | $\sigma$/mu | $\mu m^{-2}$ | 0.43 | 0.88 | 0.42 | 0.42 | 0.42 |
| | Coating layer composite configuration | Coating thickness | $\mu m$ | 5 | 4.2 | 5 | 5 | 5 |
| | | Type of coating layer | - | Boehmite particle layer | Boehmite particle layer | Boehmite particle layer | Boehmite particle layer | Boehmite particle layer |
| | | Total thickness | $\mu m$ | 13.5 | 16.2 | 16.5 | 14.2 | 20.2 |
| | | Meltdown temperature | °C | 161 | over 250 | 161 | 161 | 161 |
| Battery configuration | Positive electrode NxMyCz | | x:y:z | 8:1:1 | 8:1:1 | 8:1:1 | 8:1:1 | 8:1:1 |
| | Negative electrode | | Si % by weight | 15 | 15 | 15 | 15 | 15 |
| | Type of electrolyte | | - | S1 | S1 | S1 | S1 | S1 |
| | Electrolyte concentration | | mol/L | 1.5 | 1.5 | 1.5 | 1.5 | 1.5 |
| effect Effect | Cycle capacity retention rate at 50°C | | % | 80 | 67 | 52 | 52 | 52 |
| | Cycle capacity retention rate at 5°C | | % | 76 | 55 | 2 | 2 | 2 |
| | Nail penetration test passing rate | | % | 35 | 63 | 30 | 30 | 30 |
| | Hot box test passing rate after cycle test for 300 cycles at 5°C | | % | 66 | 51 | 5 | 5 | 5 |
| | Cycle characteristics (4680 type battery) | | % | 45 | 38 | 23 | 24 | 23 |

[Table 11]

| | | | | Example 34 | Example 35 | Example 36 | Example 1 | Example 37 |
|---|---|---|---|---|---|---|---|---|
| | Substrate separator Composition and formulation of starting materials | | Number of starting material A | A3 | A5 | A2 | A1 | A1 |
| | | | % by weight | 30 | 30 | 30 | 30 | 50 |
| | | | Number of starting material B | B3 | B3 | B3 | B1 | - |
| | | | % by weight | 30 | 30 | 30 | 30 | - |
| | | | Number of starting material C | C2 | C2 | C2 | C2 | C2 |
| | | | % by weight | 40 | 40 | 40 | 40 | 50 |
| | Separator production step | Extrusion temperature | °C | 230 | 230 | 230 | 230 | 210 |
| | | Biaxial stretching temperature | °C | 125 | 123 | 125 | 125 | 123 |
| | | Biaxial stretching stretch ratio | MD/TD (factor) | 7 × 6.4 | 7 × 6.4 | 7 × 6.4 | 7 × 6.4 | 7 × 6.4 |
| | | Heat setting temperature | °C | 130 | 130 | 129 | 133 | 133 |
| | | Stretching factor and relaxation factor at heat setting treatment step | Max-min (factor) | 1.8-1.6 | 1.8-1.6 | 1.8-1.6 | 1.8-1.6 | 1.8-1.6 |

(continued)

| | | | | Example 34 | Example 35 | Example 36 | Example 1 | Example 37 |
|---|---|---|---|---|---|---|---|---|
| Separator | Substrate separator Physical properties | Thickness | μm | 16.0 | 9.0 | 15.5 | 16.0 | 12.0 |
| | | Air permeability | sec/100 $cm^3$ | 175 | 138 | 180 | 160 | 158 |
| | | Porosity | % | 54 | 45 | 58 | 50 | 45 |
| | | Puncture strength | gf | 615 | 450 | 610 | 610 | 480 |
| | | Air permeability change ratio when compressed by 30% in thickness direction | - | 1.2 | 1.4 | 2.6 | 4.0 | 6.3 |
| | Substrate separator Voronoi tessellation information | Voronoi area (mu) at maximum frequency | $\mu m^2$ | 11.80 | 7.52 | 10.80 | 8.90 | 9.30 |
| | | Spread (σ) | - | 3.80 | 2.54 | 2.94 | 3.10 | 2.69 |
| | | σ/mu | $\mu m^{-2}$ | 0.32 | 0.34 | 0.27 | 0.35 | 0.29 |
| | Coating layer composite configuration | Coating thickness | μm | 3.8 | 4.8 | 4 | 4.5 | 4.5 |
| | | Type of coating layer | - | Boehmite particle layer | Boehmite particle layer | Boehmite particle layer | Boehmite particle layer | Boehmite particle layer |
| | | Total thickness | μm | 19.8 | 4.8 | 19.5 | 20.5 | 16.5 |
| | | Meltdown temperature | °C | over 250 | over 250 | over 250 | over 250 | over 250 |
| Battery configuration | Positive electrode NxMyCz | | x:y:z | 8:1:1 | 8:1:1 | 8:1:1 | 8:1:1 | 8:1:1 |
| | Negative electrode | | Si % by weight | 50 | 50 | 50 | 50 | 50 |
| | Type of electrolyte | | - | S1 | S1 | S1 | S1 | S1 |
| | Electrolyte concentration | | mol/L | 1.5 | 1.5 | 1.5 | 1.5 | 1.5 |

(continued)

| | | | Example 34 | Example 35 | Example 36 | Example 1 | Example 37 |
|---|---|---|---|---|---|---|---|
| effect Effect | Cycle capacity retention rate at 50°C | % | 94 | 92 | 92 | 88 | 85 |
| | Cycle capacity retention rate at 5°C | % | 90 | 90 | 79 | 83 | 80 |
| | Nail penetration test passing rate | % | 90 | 93 | 92 | 93 | 51 |
| | Hot box test passing rate after cycle test for 300 cycles at 5°C | % | 93 | 89 | 90 | 92 | 61 |
| | Cycle characteristics (4680 type battery) | % | 79 | 81 | 83 | 78 | 75 |

[Table 12]

| | | | | Example 38 | Example 39 | Comparative Example 9 | Comparative Example 10 | Comparative Example 1 |
|---|---|---|---|---|---|---|---|---|
| Separator | Substrate separator Composition and formulation of starting materials | | Number of starting material A | B1:C2 = 50: 50 | A12 | C3 100% | B2:C2 = 50: 50 | B1:C2 = 50: 50 |
| | | | % by weight | | 30 | | | |
| | | | Number of starting material B | | B3 | | | |
| | | | % by weight | | 30 | | | |
| | | | Number of starting material C | | C2 | | | |
| | | | % by weight | | 40 | | | |
| | Separator production step | Extrusion temperature | °C | 210 | 220 | 190 | 200 | 200 |
| | | Biaxial stretching temperature | °C | 121 | 125 | 128 | 127 | 129 |
| | | Biaxial stretching stretch ratio | MD/TD (factor) | 7 × 7 | 7 × 6.4 | 7 × 6.4 | 7 × 6.4 | 7 × 6.4 |
| | | Heat setting temperature | °C | 132 | 133 | 132 | 128 | 133 |
| | | Stretching factor and relaxation factor at heat setting treatment step | Max-min (factor) | 1.8-1.7 | 1.8-1.6 | 1.8-1.6 | 1.8-1.6 | 1.8-1.6 |
| | Substrate separator Physical properties | Thickness | μm | 8.5 | 12.0 | 11.5 | 9.2 | 15.2 |
| | | Air permeability | sec/100 $cm^3$ | 90 | 158 | 140 | 80 | 140 |
| | | Porosity | % | 41 | 50 | 38 | 39 | 38 |
| | | Puncture strength | gf | 350 | 480 | 410 | 304 | 550 |
| | | Air permeability change ratio when compressed by 30% in thickness direction | - | 6.9 | 7.3 | 10.5 | 11.5 | 12.4 |

(continued)

| | | | | Example 38 | Example 39 | Comparative Example 9 | Comparative Example 10 | Comparative Example 1 |
|---|---|---|---|---|---|---|---|---|
| | Substrate separator Voronoi tessellation information | Voronoi area (mu) at maximum frequency | $\mu m^2$ | 17.50 | 1.59 | 18.30 | 18.50 | 18.46 |
| | | Spread ($\sigma$) | - | 7.50 | 1.40 | 7.60 | 7.80 | 7.72 |
| | | $\sigma$/mu | $\mu m^{-2}$ | 0.43 | 0.88 | 0.42 | 0.42 | 0.42 |
| | Coating layer composite configuration | Coating thickness | $\mu m$ | 5 | 4.2 | 5 | 5 | 5 |
| | | Type of coating laver | | Boehmite particle layer | Boehmite particle layer | Boehmite particle layer | Boehmite particle layer | Boehmite particle layer |
| | | Total thickness | $\mu m$ | 13.5 | 16.2 | 16.5 | 14.2 | 20.2 |
| | | Meltdown temperature | °C | 161 | over 250 | 161 | 161 | 161 |
| Battery configuration | Positive electrode NxMyCz | | x:y:z | 8:1:1 | 8:1:1 | 8:1:1 | 8:1:1 | 8:1:1 |
| | Negative electrode | | Si % by weight | 15 | 50 | 50 | 50 | 50 |
| | Type of electrolyte | | - | S1 | S1 | S1 | S1 | S1 |
| | Electrolyte concentration | | mol/L | 1.5 | 1.5 | 1.5 | 1.5 | 1.5 |
| effect Effect | Cycle capacity retention rate at 50°C | | % | 72 | 52 | 12 | 28 | 34 |
| | Cycle capacity retention rate at 5°C | | % | 68 | 46 | 2 | 5 | 2 |
| | Nail penetration test passing rate | | % | 32 | 55 | 28 | 33 | 31 |
| | Hot box test passing rate after cycle test for 300 cycles at 5°C | | % | 55 | 41 | 5 | 5 | 5 |
| | cycle characteristics (4680 type battery) | | % | 31 | 23 | 13 | 21 | 20 |

[Table 13]

| | | | | Example 34 | Example 35 | Example 36 | Example 1 | Example 37 |
|---|---|---|---|---|---|---|---|---|
| | Substrate separator Composition and formulation of starting materials | | Number of starting material A | A3 | A5 | A2 | A1 | A1 |
| | | | % by weight | 30 | 30 | 30 | 30 | 50 |
| | | | Number of starting material B | B3 | B3 | B3 | B1 | - |
| | | | % by weight | 30 | 30 | 30 | 30 | - |
| | | | Number of starting material C | C2 | C2 | C2 | C2 | C2 |
| | | | % by weight | 40 | 40 | 40 | 40 | 50 |
| | Separator production step | Extrusion temperature | °C | 230 | 230 | 230 | 230 | 210 |
| | | Biaxial stretching temperature | °C | 125 | 123 | 125 | 125 | 123 |
| | | Biaxial stretching stretch ratio | MD/TD (factor) | 7 × 6.4 | 7 × 6.4 | 7 × 6.4 | 7 × 6.4 | 7 × 6.4 |
| | | Heat setting temperature | °C | 130 | 130 | 129 | 133 | 133 |
| | | Stretching factor and relaxation factor at heat setting treatment step | Max-min (factor) | 1.8-1.6 | 1.8-1.6 | 1.8-1.6 | 1.8-1.6 | 1.8-1.6 |

(continued)

| | | | | Example 34 | Example 35 | Example 36 | Example 1 | Example 37 |
|---|---|---|---|---|---|---|---|---|
| Separator | Substrate separator Physical properties | Thickness | μm | 16.0 | 9.0 | 15.5 | 16.0 | 12.0 |
| | | Air permeability | sec/100 $cm^3$ | 175 | 138 | 180 | 160 | 158 |
| | | Porosity | % | 54 | 45 | 58 | 50 | 45 |
| | | Puncture strength | gf | 615 | 450 | 610 | 610 | 480 |
| | | Air permeability change ratio when compressed by 30% in thickness direction | - | 1.2 | 1.4 | 2.6 | 4.0 | 6.3 |
| | Substrate separator Voronoi tessellation information | Voronoi area (mu) at maximum frequency | $\mu m^2$ | 11.80 | 7.52 | 10.80 | 8.90 | 9.30 |
| | | Spread (σ) | - | 3.80 | 2.54 | 2.94 | 3.10 | 2.69 |
| | | σ/mu | $\mu m^{-2}$ | 0.32 | 0.34 | 0.27 | 0.35 | 0.29 |
| | Coating layer composite configuration | Coating thickness | μm | 3.8 | 4.8 | 4 | 4.5 | 4.5 |
| | | Type of coating layer | - | Boehmite particle layer | Boehmite particle layer | Boehmite particle layer | Boehmite particle layer | Boehmite particle layer |
| | | Total thickness | μm | 19.8 | 4.8 | 19.5 | 20.5 | 16.5 |
| | | Meltdown temperature | °C | over 250 | over 250 | over 250 | over 250 | over 250 |
| Battery configuration | Positive electrode NxMyCz | | x:y:z | 8:1:1 | 8:1:1 | 8:1:1 | 8:1:1 | 8:1:1 |
| | Negative electrode | | Si % by weight | 90 | 90 | 90 | 90 | 90 |
| | Type of electrolyte | | - | S1 | S1 | S1 | S1 | S1 |
| | Electrolyte concentration | | mol/L | 1.5 | 1.5 | 1.5 | 1.5 | 1.5 |

(continued)

| | | | Example 34 | Example 35 | Example 36 | Example 1 | Example 37 |
|---|---|---|---|---|---|---|---|
| Effect | Cycle capacity retention rate at 50°c | % | 84 | 80 | 83 | 75 | 70 |
| | Cycle capacity retention rate at 5°C | % | 79 | 78 | 71 | 72 | 68 |
| | Nail penetration test passing rate | % | 75 | 81 | 80 | 80 | 38 |
| | Hot box test passing rate after cycle test for 300 cycles at 5°C | % | 80 | 75 | 75 | 77 | 52 |
| | Cycle characteristics (4680 type battery) | % | 69 | 69 | 73 | 65 | 59 |

[Table 14]

| | | | | Example 38 | Example 39 | Comparative Example 9 | Comparative Example 10 | Comparative Example 1 |
|---|---|---|---|---|---|---|---|---|
| Separator | Substrate separator Composition and formulation of starting materials | | Number of starting material A | B1:C2 = 50: 50 | A12 | C3 100% | B2:C2 = 50: 50 | B1:C2 = 50: 50 |
| | | | % by weight | | 30 | | | |
| | | | Number of starting material B | | B3 | | | |
| | | | % by weight | | 30 | | | |
| | | | Number of starting material C | | C2 | | | |
| | | | % by weight | | 40 | | | |
| | Separator production step | Extrusion temperature | °C | 210 | 220 | 190 | 200 | 200 |
| | | Biaxial stretching temperature | °C | 121 | 125 | 128 | 127 | 129 |
| | | Biaxial stretching stretch ratio | MD/TD (factor) | 7 × 7 | 7 × 6.4 | 7 × 6.4 | 7 × 6.4 | 7 × 6.4 |
| | | Heat setting temperature | °C | 132 | 133 | 132 | 128 | 133 |
| | | Stretching factor and relaxation factor at heat setting treatment step | Max-min (factor) | 1.8-1.7 | 1.8-1.6 | 1.8-1.6 | 1.8-1.6 | 1.8-1.6 |
| | Substrate separator Physical properties | Thickness | μm | 8.5 | 12.0 | 11.5 | 9.2 | 15.2 |
| | | Air permeability | sec/100 $cm^3$ | 90 | 158 | 140 | 80 | 140 |
| | | Porosity | % | 41 | 50 | 38 | 39 | 38 |
| | | Puncture strength | gf | 350 | 480 | 410 | 304 | 550 |
| | | Air permeability change ratio when compressed by 30% in thickness direction | - | 6.9 | 7.3 | 10.5 | 11.5 | 12.4 |

(continued)

| | | | | Example 38 | Example 39 | Comparative Example 9 | Comparative Example 10 | Comparative Example 1 |
|---|---|---|---|---|---|---|---|---|
| | substrate separator Voronoi tessellation information | Voronoi area (mu) at maximum frequency Voronoi area (mu) | $\mu m^2$ | 17.50 | 1.59 | 18.30 | 18.50 | 18.46 |
| | | Spread ($\sigma$) | - | 7.50 | 1.40 | 7.60 | 7.80 | 7.72 |
| | | $\sigma$/mu | $\mu m^{-2}$ | 0.43 | 0.88 | 0.42 | 0.42 | 0.42 |
| | Coating layer composite configuration | Coating thickness | $\mu m$ | 5 | 4.2 | 5 | 5 | 5 |
| | | Type of coating layer | - | Boehmite particle layer | Boehmite particle layer | Boehmite particle layer | Boehmite particle layer | Boehmite particle layer |
| | | Total thickness | $\mu m$ | 13.5 | 16.2 | 16.5 | 14.2 | 20.2 |
| | | Meltdown temperature | °C | 161 | over 250 | 161 | 161 | 161 |
| Battery configuration | Positive electrode NxMyCz | | x:y:z | 8:1:1 | 8:1:1 | 8:1:1 | 8:1:1 | 8:1:1 |
| | Negative electrode | | Si % by weight | 15 | 90 | 90 | 90 | 90 |
| | Type of electrolyte | | - | S1 | S1 | S1 | S1 | S1 |
| | Electrolyte concentration | | mol/L | 1.5 | 1.5 | 1.5 | 1.5 | 1.5 |
| Effect | Cycle capacity retention rate at 50°C | | % | 61 | 21 | 5 | 7 | 5 |
| | Cycle capacity retention rate at 5°C | | % | 55 | 8 | 2 | 5 | 2 |
| | Nail penetration test passing rate | | % | 33 | 52 | 29 | 30 | 28 |
| | Hot box test passing rate after cycle test for 300 cycles at 5°C | | % | 46 | 48 | 0 | 0 | 0 |
| | Cycle characteristics (4680 type battery) | | % | 32 | 11 | 8 | 9 | 6 |

[Table 15]

| | | | | Example 1A | Example 1B | Example 1C | Example 1D | Example 1E | Example 1F |
|---|---|---|---|---|---|---|---|---|---|
| Separator | Substrate separator Composition and formulation of starting materials | | Number of starting material A | A1 | A1 | A1 | A1 | A1 | A1 |
| | | | % by weight | 30 | 30 | 30 | 30 | 30 | 30 |
| | | | Number of starting material B | B2 | B2 | B2 | B2 | B2 | B2 |
| | | | % by weight | 30 | 30 | 30 | 30 | 30 | 30 |
| | | | Number of starting material C | C2 | C2 | C2 | C2 | C2 | C2 |
| | | | % by weight | 40 | 40 | 40 | 40 | 40 | 40 |
| | Substrate separator Physical properties | Thickness | μm | 18 | 18 | 18 | 18 | 18 | 18 |
| | | Air permeability | sec/100 $cm^3$ | 160 | 160 | 160 | 160 | 160 | 160 |
| | | Porosity | % | 50 | 50 | 50 | 50 | 50 | 50 |
| | | Puncture strength | gf | 650 | 650 | 650 | 650 | 650 | 650 |
| | | Air permeability change ratio when compressed by 30% in thickness direction | - | 3.8 | 3.8 | 3.8 | 3.8 | 3.8 | 3.8 |

(continued)

| | | | | Example 1A | Example 1B | Example 1C | Example 1D | Example 1E | Example 1F |
|---|---|---|---|---|---|---|---|---|---|
| | Substrate separator Voronoi tessellation information | Voronoi area (mu) at maximum frequency Voronoi area (mu) | 2 μm | 8.90 | 8.90 | 8.90 | 8.90 | 8.90 | 8.90 |
| | | Spread (σ) | - | 3.10 | 3.10 | 3.10 | 3.10 | 3.10 | 3.10 |
| | | σ/mu | -2 μm | 0.35 | 0.35 | 0.35 | 0.35 | 0.35 | 0.35 |
| | Coating layer composite configuration | Coating thickness | μm | 4.5 | 4.5 | 4.5 | 4.5 | 4.5 | 4.5 |
| | | Type of coating layer | - | boehmite particle layer | boehmite particle layer | boehmite particle layer | boehmite particle layer | boehmite particle layer | boehmite particle layer |
| | | Total thickness | μm | 22.5 | 22.5 | 22.5 | 22.5 | 22.5 | 22.5 |
| | | Meltdown temperature | °C | over 250 | over 250 | over 250 | over 250 | over 250 | over 250 |
| Battery configuration | Positive electrode NxMyCz | | x:y:z | 6:2:2 | 9:0.5:0.5 | 8:1:1 | 8:1:1 | 8:1:1 | 8:1:1 |
| | Negative electrode | | Si % by weight | 5 | 5 | 5 | 85 | 25 | 25 |
| | Type of electrolyte | | - | S1 | S1 | S1 | S1 | S1 | S2 |
| | Electrolyte concentration | | mol/L | 1.5 | 1.5 | 1.5 | 1.5 | 1.5 | 1.5 |
| | Composition of electrolytic solution | | - | P1 | P1 | P1 | P1 | P1 | P1 |
| Effect | Cycle capacity retention rate at 50°C | | % | 93 | 95 | 92 | 90 | 93 | 89 |
| | Cycle capacity retention rate at 5°C | | % | 86 | 85 | 87 | 88 | 87 | 80 |
| | Nail penetration test passing rate | | % | 99 | 90 | 99 | 88 | 97 | 99 |
| | Hot box test passing rate after cycle test for 300 cycles at 5°C | | % | 98 | 87 | 95 | 83 | 93 | 94 |
| | Cycle characteristics (4680 type battery) | | % | 90 | 74 | 92 | 73 | 92 | 94 |

[Table 16]

| | | | | Example 1G | Example 1H | Example 1I | Example 1J | Example 1K | Example 1L |
|---|---|---|---|---|---|---|---|---|---|
| Separator | Substrate separator Composition and formulation of starting materials | | Number of starting material A | A1 | A1 | A1 | A1 | A1 | A1 |
| | | | % by weight | 30 | 30 | 30 | 30 | 30 | 30 |
| | | | Number of starting material B | B2 | B2 | B2 | B2 | B2 | B2 |
| | | | % by weight | 30 | 30 | 30 | 30 | 30 | 30 |
| | | | Number of starting material C | C2 | C2 | C2 | C2 | C2 | C2 |
| | | | % by weight | 40 | 40 | 40 | 40 | 40 | 40 |
| | Substrate separator Physical properties | Thickness | μm | 18 | 18 | 18 | 18 | 18 | 18 |
| | | Air permeability | sec/100 $cm^3$ | 160 | 160 | 160 | 160 | 160 | 160 |
| | | Porosity | % | 50 | 50 | 50 | 50 | 50 | 50 |
| | | Puncture strength | gf | 650 | 650 | 650 | 650 | 650 | 650 |
| | | Air permeability change ratio when compressed by 30% in thickness direction | - | 3.8 | 3.8 | 3.8 | 3.8 | 3.8 | 3.8 |

(continued)

| | | | Example 1G | Example 1H | Example 1I | Example 1J | Example 1K | Example 1L |
|---|---|---|---|---|---|---|---|---|
| Substrate separator Voronoi tessellation information | Voronoi area (mu) at maximum frequency Voronoi area (mu) | 2 μm | 8.90 | 8.90 | 8.90 | 8.90 | 8.90 | 8.90 |
| | Spread (σ) | - | 3.10 | 3.10 | 3.10 | 3.10 | 3.10 | 3.10 |
| | Σ/mu | -2 μm | 0.35 | 0.35 | 0.35 | 0.35 | 0.35 | 0.35 |
| Coating layer composite configuration | Coating thickness | μm | 4.5 | 4.5 | 4.5 | 4.5 | 4.5 | 4.5 |
| | Type of coating layer | - | boehmite particle layer | boehmite particle layer | boehmite particle layer | boehmite particle layer | boehmite particle layer | boehmite particle layer |
| | Total thickness | μm | 22.5 | 22.5 | 22.5 | 22.5 | 22.5 | 22.5 |
| | Meltdown temperature | °C | over 250 | over 250 | over 250 | over 250 | over 250 | over 250 |
| Battery configuration | Positive electrode NxMyCz | x:y:z | 8:1:1 | 8:1:1 | 8:1:1 | 8:1:1 | 8:1:1 | 8:1:1 |
| | Negative electrode | Si % by weight | 25 | 25 | 25 | 25 | 25 | 25 |
| | Type of electrolyte | - | S3 | S4 | S5 | S6 | S1 | S1 |
| | Electrolyte concentration | mol/L | 1.5 | 1.5 | 1.5 | 1.5 | 1.5 | 1.5 |
| | Composition of electrolytic solution | - | P1 | P1 | P1 | P1 | P2 | P3 |
| Effect | Cycle capacity retention rate at 50°C | % | 93 | 95 | 93 | 93 | 94 | 95 |
| | Cycle capacity retention rate at 5°C | % | 85 | 81 | 87 | 87 | 86 | 86 |
| | Nail penetration test passing rate | % | 93 | 95 | 90 | 92 | 99 | 99 |
| | Hot box test passing rate after cycle test for 300 cycles at 5°C | % | 85 | 78 | 82 | 84 | 95 | 96 |
| | Cycle characteristics (4680 type battery) | % | 86 | 88 | 91 | 89 | 94 | 90 |

[Table 17]

| | | | | Example 1M | Example 1N | Example 1O | Example 1P | Example 1Q |
|---|---|---|---|---|---|---|---|---|
| Separator | Substrate separator Composition and formulation of starting materials | | Number of starting material A | A1 | A1 | A1 | A1 | A1 |
| | | | % by weight | 30 | 30 | 30 | 30 | 30 |
| | | | Number of starting material B | B2 | B2 | B2 | B2 | B2 |
| | | | % by weight | 30 | 30 | 30 | 30 | 30 |
| | | | Number of starting material C | C2 | C2 | C2 | C2 | C2 |
| | | | % by weight | 40 | 40 | 40 | 40 | 40 |
| | Substrate separator Physical properties | Thickness | μm | 18 | 18 | 18 | 18 | 18 |
| | | Air permeability | sec/100 $cm^3$ | 160 | 160 | 160 | 160 | 160 |
| | | Porosity | % | 50 | 50 | 50 | 50 | 50 |
| | | Puncture strength | gf | 650 | 650 | 650 | 650 | 650 |
| | | Air permeability change ratio when compressed by 30% in thickness direction | - | 3.8 | 3.8 | 3.8 | 3.8 | 3.8 |

(continued)

| | | | | Example 1M | Example 1N | Example 1O | Example 1P | Example 1Q |
|---|---|---|---|---|---|---|---|---|
| | Substrate separator Voronoi tessellation information | Voronoi area (mu) at maximum frequency Voronoi area (mu) | 2 μm | 8.90 | 8.90 | 8.90 | 8.90 | 8.90 |
| | | Spread (σ) | - | 3.10 | 3.10 | 3.10 | 3.10 | 3.10 |
| | | σ/mu | -2 μm | 0.35 | 0.35 | 0.35 | 0.35 | 0.35 |
| | Coating layer composite configuration | Coating thickness | μm | 4.5 | 4.5 | 4.5 | 4.5 | 4.5 |
| | | Type of coating layer | - | boehmite particle layer | boehmite particle layer | boehmite particle layer | boehmite particle layer | boehmite particle layer |
| | | Total thickness | μm | 22.5 | 22.5 | 22.5 | 22.5 | 22.5 |
| | | Meltdown temperature | °C | over 250 | over 250 | over 250 | over 250 | over 250 |
| Battery configuration | Positive electrode NxMyCz | | x:y:z | 8:1:1 | 8:1:1 | 8:1:1 | 8:1:1 | 8:1:1 |
| | Negative electrode | | Si % by weight | 25 | 25 | 25 | 25 | 25 |
| | Type of electrolyte | | - | S1 | S1 | S1 | S1 | S1 |
| | Electrolyte concentration | | mol/L | 1.5 | 1.5 | 1.5 | 3.2 | 8 |
| | Composition of electrolytic solution | | - | P4 | P5 | P6 | P1 | P1 |
| Effect | Cycle capacity retention rate at 50°C | | % | 90 | 50 | 65 | 98 | 93 |
| | Cycle capacity retention rate at 5°C | | % | 85 | 3 | 2 | 89 | 90 |
| | Nail penetration test passing rate | | % | 99 | 0 | 0 | 98 | 98 |
| | Hot box test passing rate after cycle test for 300 cycles at 5°C | | % | 97 | 0 | 0 | 95 | 90 |
| | Cycle characteristics (4680 type battery) | | % | 56 | 49 | 50 | 92 | 92 |

[Table 18]

| Formulation of electrolytic solution | P1 | P2 | P3 | P4 | P5 | P6 |
|---|---|---|---|---|---|---|
| EC/% by weight | 50 | 15 | 50 | 20 | 0 | 0 |
| EMC/% by weight | 50 | 85 | 45 | 20 | 100 | 0 |
| AcN/% by weight | 0 | 0 | 5 | 60 | 0 | 100 |

[Table 19]

| Formulation of electrolyte | S1 | S2 | S3 | S4 | S5 | S6 |
|---|---|---|---|---|---|---|
| LiPF6 | 100 | - | - | - | 98 | 2 |
| LiBF4 | - | 100 | - | - | - | - |
| LiTFSI | - | - | 100 | - | - | - |
| LiFSI | - | - | - | 100 | 2 | 98 |

Table 20]

| | Starting material A | | | | | | | | | | | |
|---|---|---|---|---|---|---|---|---|---|---|---|---|
| Resin starting material | A1 | A2 | A3 | A4 | A5 | A6 | A7 | A8 | A9 | A10 | A11 | A12 |
| Mv | 143,000 | 80,000 | 113,000 | 118,000 | 149,000 | 174,000 | 143,600 | 370,000 | 165,000 | 161,000 | 158,000 | 139,000 |
| Mn | 15,500 | 15,900 | 12,500 | 12,100 | 15,400 | 16,200 | 15,300 | 47,300 | 15,100 | 15,600 | 15,500 | 15,500 |
| Mw | 130,000 | 66,300 | 94,400 | 98,800 | 135,000 | 145,000 | 128,000 | 311,000 | 138,000 | 135,000 | 132,000 | 118,000 |
| Mw/Mn | 8.4 | 4.2 | 7.6 | 8.2 | 8.8 | 9.0 | 8.4 | 6.6 | 9.1 | 8.7 | 8.5 | 7.6 |
| C3 mol% | 0.65 | 0.00 | 0.12 | 0.06 | 0.14 | 0.14 | 0.14 | 0.14 | 0.00 | 0.03 | 1.50 | 0.00 |
| C4 mol% | 0.45 | 0.50 | 0.01 | 0.01 | 0.02 | 0.02 | 0.02 | 0.03 | 0.03 | 0.00 | 0.00 | 1.20 |
| Vin-Si mol% @ 13C_NMR identification | 0.11 | 0.14 | 0.20 | 0.06 | 0.23 | 0.01 | 1.70 | 0.10 | 0.10 | 0.10 | 0.10 | 0.10 |
| Crystal long period | 23 | 18 | 19 | 25 | 26 | 2 | 23 | 33 | 28 | 28 | 27 | 21 |

[Table 21]

| Starting material B_Mv ≥ 1,800,000 | | | | | | |
|---|---|---|---|---|---|---|
| Resin starting material | B1 | B2 | B3 | B4 | B5 | B6 |
| Mv | 3,800,000 | 4,500,000 | 6,000,000 | 6,100,000 | 7,500,000 | 2,300,000 |
| Mn | 330,000 | 400,000 | 520,000 | 510,000 | 650,000 | 200,000 |
| Mw | 3,100,000 | 3,700,000 | 4,800,000 | 4,900,000 | 6,100,000 | 1,867,000 |
| Mw/Mn | 9.4 | 9.3 | 9.2 | 9.6 | 9.4 | 9.3 |
| C3 mol% | 0.00 | 0.03 | 0.00 | 0.04 | 0.00 | 0.00 |
| C4 mol% | 0.00 | 0.06 | 0.03 | 0.00 | 0.00 | 0.00 |
| Vin-Si mol% @ 13C_NMR identification | 0.00 | 0.00 | 0.00 | 0.00 | 0.00 | 0.00 |
| Crystal long period | - | - | - | - | - | - |

[Table 22]

| Starting material C_Mv < 1,800,000 | | | | | |
|---|---|---|---|---|---|
| Resin starting material | C1 | C2 | C3 | C4 | C5 |
| Mv | 360,000 | 790,000 | 810,000 | 780,000 | 750,000 |
| Mn | 50,300 | 63,000 | 64,000 | 65,000 | 63,000 |
| Mw | 314,000 | 690,000 | 700,000 | 720,000 | 580,000 |
| Mw/Mn | 6.2 | 11.0 | 10.9 | 11.1 | 9.2 |
| C3 mol% | 0.00 | 0.00 | 0.03 | 0.00 | 0.05 |
| C4 mol% | 0.00 | 0.00 | 0.00 | 0.06 | 0.04 |
| Vin-Si mol% @ 13C_NMR identification | 0.00 | 0.00 | 0.00 | 0.00 | 0.00 |
| Crystal long period | - | - | - | - | - |

<Evaluation of Separators having Multilayer Structure and Batteries Including the Same>

[Table 23-1]

| Resin D | D1 | D2 | D3 | D4 | D5 | D6 | D7 |
|---|---|---|---|---|---|---|---|
| Mn | 15,600 | 15,900 | 12,700 | 12,300 | 15,500 | 16,200 | 15,500 |
| Mw | 130,000 | 66,500 | 94,500 | 98,800 | 135,000 | 145,000 | 128,000 |
| Mw/Mn | 8.33 | 4.18 | 7.44 | 8.03 | 8.71 | 8.95 | 8.26 |
| Mv | 143,100 | 80,100 | 113,200 | 118,100 | 149,000 | 174,200 | 143,200 |
| C3 | 0.65 | 0.14 | 0.12 | 0.06 | 0.14 | 0.14 | 0.14 |
| C4 | 0.45 | 0.5 | 0.01 | 0.01 | 0.02 | 0.02 | 0.02 |
| Vin-Si | 0.11 | 0.14 | 0.2 | 0.06 | 0.23 | 0.01 | 1.7 |
| Crystallinity degree of resin D | 62 | 62 | 48 | 61 | 64 | 63 | 55 |
| Crystallite size of resin D | 23 | 23 | 16 | 25 | 25 | 23 | 18 |
| Number of $CH_2$ | 2 | 2 | 2 | 2 | 2 | 2 | 2 |

[Table 23-2]

| Resin D | D8 | D9 | D10 | D11 | D12 | D13 | D14 |
|---|---|---|---|---|---|---|---|
| Mn | 47,500 | 15,200 | 15,600 | 15,700 | 15,600 | 16,700 | 17,000 |
| Mw | 311,000 | 138,100 | 135,100 | 132,200 | 118,200 | 82,000 | 85,000 |
| Mw/Mn | 6.55 | 9.09 | 8.66 | 8.42 | 7.58 | 8.20 | 8.29 |
| Mv | 370,000 | 165,100 | 161,000 | 158,000 | 139,200 | 90,000 | 95,100 |
| C3 | 0.14 | 0 | 0.03 | 1.5 | 0 | 0.16 | 0.13 |
| C4 | 0.03 | 0.03 | 0 | 0 | 1.2 | 0.55 | 0.53 |
| Vin-Si | 0.1 | 0.1 | 0.1 | 0.1 | 0.1 | 0.13 | 0.14 |
| Crystallinity degree of resin D | 63 | 62 | 69 | 67 | 65 | 56 | 55 |
| Crystallite size of resin D | 24 | 19 | 27 | 26 | 24 | 21 | 19 |
| Number of $CH_2$ | 2 | 2 | 2 | 2 | 2 | 8 | 12 |

[Table 24]

| Resin E | E1 | E2 | E3 | E4 | E5 |
|---|---|---|---|---|---|
| Mn | 400,100 | 520,100 | 510,100 | 650,200 | 200,000 |
| Mw | 3,700,000 | 4,800,000 | 4,900,100 | 6,100,000 | 1,867,000 |
| Mw/Mn | 9.2 | 9.2 | 9.6 | 9.4 | 9.3 |
| Mv | 4,500,000 | 6,000,100 | 6,100,100 | 7,500,100 | 2,300,000 |
| C3 | 0.03 | 0 | 0.04 | 0 | 0 |
| C4 | 0.06 | 0.03 | 0 | 0 | 0 |
| Vin-Si | 0 | 0 | 0 | 0 | 0 |

[Table 25]

| Resin F | F1 | F2 | F3 | F4 |
|---|---|---|---|---|
| Mn | 63,000 | 64,100 | 65,100 | 63,000 |
| Mw | 690,100 | 700,100 | 720,100 | 580,000 |
| Mw/Mn | 11.0 | 10.9 | 11.1 | 9.2 |
| Mv | 790,100 | 810,100 | 780,200 | 750,200 |
| C3 | 0 | 0.03 | 0 | 0 |
| C4 | 0 | 0 | 0.06 | 0 |
| Vin-Si | 0 | 0 | 0 | 0 |

(Method for Preparing Acrylic Latex)

The acrylic latex to be used as the thermoplastic polymer or the resin binder was prepared by the following method. In a reactor equipped with a stirrer, a reflux condenser, a drip tank and a thermometer, 70.4 parts by weight of ion-exchanged water, 0.5 part by weight of "AQUALON KH1025" (registered trademark, aqueous 25% solution manufactured by Dai-ichi Kogyo Seiyaku Co., Ltd.) as the emulsifier, and 0.5 part by weight of "ADEKA REASOAP SR1025" (registered trademark, aqueous 25% solution manufactured by Adeka Corporation) were charged. The temperature inside the reactor was then raised to 80°C, and 7.5 parts by weight of an aqueous 2% solution of ammonium persulfate

was added while keeping the temperature at 80°C, to obtain an initial mixture. Five minutes after completion of the addition of the aqueous ammonium persulfate solution, the emulsified liquid was added dropwise from the drip tank into the reactor over a period of 150 minutes. The emulsified liquid was prepared by forming a mixture of 70 parts by weight of butyl acrylate, 29 parts by weight of methyl methacrylate, 1 part by weight of methacrylic acid, 3 parts by weight of "AQUALON KH1025" (registered trademark, aqueous 25% solution manufactured by Dai-ichi Kogyo Seiyaku Co., Ltd.) and 3 parts by weight of "ADEKA REASOAP SR1025" (registered trademark, aqueous 25% solution manufactured by Adeka Corporation) as emulsifiers, 7.5 parts by weight of an aqueous 2% solution of ammonium persulfate, and 52 parts by weight of ion-exchanged water, and mixing the mixture with a homomixer for 5 minutes.

After completion of the dropwise addition of the emulsified liquid, the temperature inside the reactor was kept at 80°C for 90 minutes, followed by cooling to room temperature. The obtained emulsion was adjusted to a pH of 8.0 with an aqueous 25% ammonium hydroxide solution, and then a small amount of water was added to obtain an acrylic latex with a solid content of 40%. The obtained acrylic latex had a number-mean particle size of 145 nm and a glass transition temperature of -23°C.

(Other Resins)

A commercially available PVDF latex and polyvinylidene fluoride-hexafluoropropylene (PVDF-HFP) were prepared. Using the above acrylic latex and PVDF latex, an aqueous mixture of PVDF and acrylic (the mixing ratio is shown in the table below) was prepared. Further, an acrylic resin was formed by core-shell polymerization to prepare a PVDF/acrylic (core-shell type polymerization) mixture.

<Confirmation of Crosslinking by Coating of Inorganic Porous Layer on Separator Substrate>

[Example 40-1: Fabrication and Evaluation of Separator and Confirmation of Crosslinking in Coating Step]

(Fabrication of Polyolefin Microporous Membrane as Separator Substrate)

To the entire mixed resin composition of 30.0% by weight of a resin D2 (the number of silane-grafted linking portions $CH_2$ is 2), 30.0% by weight of a resin E3 and 40.0% by weight of a resin F3, 1,000 ppm by weight of pentaerythrityl-tetrakis-[3-(3,5-di-t-butyl-4-hydroxyphenyl)propionate] as the antioxidant was added, followed by dry blending using a tumbler blender to obtain a mixture. The mixture thus obtained was fed to a twin-screw extruder through a feeder in a nitrogen atmosphere. Liquid paraffin (kinematic viscosity at 37.78°C is $7.59 \times 10^{-5}$ $m^2$ Is) was injected into an extruder cylinder by a plunger pump.

The mixture was melt kneaded with liquid paraffin in an extruder, and adjusted with a feeder and a pump so that the quantity ratio of liquid paraffin in the extruded polyolefin composition was 75% by weight (i.e., polymer concentration of 25% by weight). The melt kneading conditions were as follows: a preset temperature of 230°C, a screw rotational speed of 100 rpm and a discharge throughput of 80 kg/h. Subsequently, the melt kneaded mixture was extrusion cast through a T-die on a cooling roll controlled to a surface temperature of 25°C to obtain a gel sheet (sheet-shaped molded body) having a raw membrane thickness of 1,250 μm.

The sheet-shaped molded body was then simultaneously fed into a biaxial tenter stretching machine for biaxial stretching to obtain a stretched sheet. The stretching conditions were as follows: an MD factor of 7.0, a TD factor of 6.4 (i.e., a factor of 7 × 6.4) and a biaxial stretching temperature of 125°C. The stretched gel sheet was then fed into a dichloromethane tank and thoroughly immersed in the dichloromethane for extraction removal of the liquid paraffin, and then dichloromethane was dried off to obtain a porous body. The porous body to was fed to a TD tenter and heat setting (HS) was carried out at a heat preset temperature of 133°C and a stretch ratio of 1.8 based on the sheet width of an inlet port of the TD tenter, and then relaxation was carried out to a factor of 1.6 in the TD based on the sheet width of a tenter inlet port to obtain a microporous membrane. The edges of the microporous membrane thus obtained were then cut and rolled into a mother roll having a width of 1,100 mm and a length of 5,000 m.

The polyolefin microporous membrane thus obtained was used as a separator substrate, followed by measurement and evaluation according to the above methods. The evaluation results are shown in Table 26.

(Coating of Inorganic Porous Layer and Confirmation of Crosslinking)

Next, as shown in Table 26, boehmite was selected as the inorganic particles.

A dispersion was prepared by uniformly dispersing inorganic particles and a predetermined proportion of an aqueous ammonium polycarboxylate solution (SN dispersant 5468, manufactured by SAN NOPCO LIMITED, solid component concentration: 40%) as the ionic dispersing agent in 100 parts by weight of water. The dispersion thus obtained was shredded with a bead mill (cell volume: 200 cc, zirconia bead diameter: 0.1 mm, filling volume: 80%) and

the particle size distribution of the inorganic particles was adjusted to D50 = 1.0 μm. To the dispersion with adjusted particle size distribution, the acrylic latex (solid component concentration of 40%, average grain size of 145 nm, glass transition temperature of -23°C, constituent monomer: butyl acrylate, methyl methacrylate, methacrylic acid) as the resin binder was added so as to have the weight proportion of the inorganic particles shown in Table 26 to prepare an inorganic particle-containing slurry.

The pH of the inorganic particle-containing slurry and the contact angle of the coating solution with respect to the clean separator substrate surface were also measured according to the above methods.

The microporous membrane was then continuously wound out from a mother roll of the microporous membrane and one surface of the microporous membrane was coated with the inorganic particle-containing slurry using a gravure reverse coater, followed by drying with a dryer at 60°C to remove water and further winding up to obtain a mother roll of the multilayer separator having a coating thickness as shown in Table 26. The progress of the crosslinking reaction in the coating step was confirmed from the comparison of the TMA rupture temperatures before and after coating.

At the time of evaluation, the multilayer separator unwound from the mother roll was slit as necessary and used as a separator for evaluation.

The separator thus obtained was subjected to various evaluations according to the above evaluation method. The evaluation results are also shown in Table 26.

(Test of Battery Including Multilayer Separator Coated with Inorganic Microporous Layer)

In Example 40-1, a separator substrate composed of a polyolefin microporous membrane and a multilayer separator coated with an inorganic porous layer were obtained. Further, using the multilayer separator, a nonaqueous secondary battery was fabricated according to the method for fabricating a battery described above, and the battery was evaluated. The battery evaluation results are shown in Table 26.

[Example 40-2 to Example 40-53,Comparative Example 11-1 to Comparative Example 11-7]

The same operation as in Example 40-1 was carried out, except for changing the resin composition and the molecular weight mixed composition of the polyolefin microporous membrane, the fabrication conditions, the substrate properties, the type and ratio of the inorganic particles, the composition and physical properties of the coating solution, etc., as shown in Table 26, separator substrates composed of a polyolefin microporous membrane and multilayer separators coated with an inorganic porous layer were obtained. The separator substrates and multilayer separators thus obtained were subjected to various evaluations according to the above evaluation method. The evaluation results are also shown in Table 26. Using multilayer separators coated with an inorganic porous layer, nonaqueous secondary batteries were obtained. The batteries thus obtained were subjected to various evaluations according to the above evaluation method. The evaluation results are also shown in Table 26.

[Table 26-1]

| Coating of inorganic particles | | | | | | | | | | | |
|---|---|---|---|---|---|---|---|---|---|---|---|
| Evaluation item | | Example 40-1 | Example 40-2 | Example 40-3 | Example 40-4 | Example 40-5 | Example 40-6 | Example 40-7 | Example 40-8 | Example 40-9 | Example 40-10 |
| Starting material | Type of resin D | D2 | D2 | D2 | D2 | D2 | D2 | D2 | D2 | D2 | D2 |
| | Type of resin E | E3 | E3 | E3 | E3 | E3 | E3 | E3 | E3 | E3 | E3 |
| | Type of resin F | F3 | F3 | F3 | F3 | F3 | F3 | F3 | F3 | F3 | F3 |
| | Content of resin D | 30.0 | 30.0 | 30.0 | 30.0 | 30.0 | 30.0 | 30.0 | 30.0 | 30.0 | 30.0 |
| | Content of resin E | 30.0 | 30.0 | 30.0 | 30.0 | 30.0 | 30.0 | 30.0 | 30.0 | 30.0 | 30.0 |
| | Content of resin F | 40.0 | 40.0 | 40.0 | 40.0 | 40.0 | 40.0 | 40.0 | 40.0 | 40.0 | 40.0 |
| Substrate physical properties | Substrate thickness | 9.9 | 9.8 | 10.2 | 10.1 | 9.8 | 9.8 | 10.1 | 10.3 | 9.9 | 10.1 |
| | Substrate porosity | 45 | 44 | 46 | 47 | 44 | 46 | 44 | 45 | 46 | 43 |
| | Substrate air permeability | 132 | 134 | 133 | 131 | 134 | 131 | 135 | 124 | 134 | 125 |
| | Substrate puncture strength | 800 | 765 | 802 | 824 | 765 | 806 | 756 | 788 | 804 | 758 |
| Coating solution | Coating thickness | 4 | 4 | 4 | 4 | 4 | 4 | 4 | 4 | 4 | 4 |
| | Weight ratio of inorganic particles | 95 | 70 | 97 | 50 | 98 | 6 | 99 | 4 | 95 | 95 |
| | Type of inorganic particles | Boehmite | Boehmite | Boehmite | Boehmite | Boehmite | Boehmite | Boehmite | Boehmite | Alumina | Boehmite |
| | pH of coating solution | 9 | 9 | 9 | 9 | 9 | 9 | 9 | 9 | 9 | 4 |
| | Contact angle of coating solution | 50 | 50 | 50 | 50 | 50 | 50 | 50 | 50 | 50 | 50 |

(continued)

| Coating of inorganic particles | | | | | | | | | | | |
|---|---|---|---|---|---|---|---|---|---|---|---|
| Evaluation item | | Example 40-1 | Example 40-2 | Example 40-3 | Example 40-4 | Example 40-5 | Example 40-6 | Example 40-7 | Example 40-8 | Example 40-9 | Example 40-10 |
| X-ray structure analysis | Crystal long period | 38.0 | 34.9 | 34.5 | 38.0 | 35.2 | 34.5 | 37.3 | 32.2 | 37.3 | 36.6 |
| | Crystallinity degree | 68.9 | 70.6 | 69.5 | 71.3 | 68.5 | 69.0 | 70.2 | 70.4 | 71.0 | 70.6 |
| | Amorphous portion thickness | 12 | 10 | 11 | 11 | 11 | 11 | 11 | 10 | 11 | 11 |
| | Crvstallite size (110) | 22.6 | 21.5 | 21.5 | 23.0 | 25.1 | 23.7 | 21.9 | 22.0 | 21.9 | 21.2 |
| | Crystallite size ratio (110)/(200) | 1.1 | 1.3 | 1.3 | 1.3 | 1.4 | 1.2 | 1.2 | 1.2 | 1.3 | 1.1 |
| | MD cross-sectional crystal orientation degree | 0.90 | 0.93 | 0.89 | 0.92 | 0.95 | 0.95 | 0.90 | 0.92 | 0.94 | 0.93 |
| | TD cross-sectional crystal orientation deffee | 0.90 | 0.90 | 0.90 | 0.91 | 0.91 | 0.93 | 0.95 | 0.90 | 0.91 | 0.93 |
| | MD/TD | 1.00 | 1.04 | 0.99 | 1.01 | 1.04 | 1.02 | 0.95 | 1.01 | 1.04 | 1.00 |
| TOF-SIMS | Voronoi area (mu) | 9.09 | 8.86 | 8.79 | 9.03 | 8.77 | 8.97 | 9.01 | 8.73 | 8.75 | 8.83 |
| | Spread (σ) of the Voronoi area frequency distribution | 3.05 | 3.02 | 2.93 | 2.97 | 2.91 | 3.09 | 3.02 | 3.08 | 2.96 | 2.94 |
| | σ/mu | 0.34 | 0.34 | 0.33 | 0.33 | 0.33 | 0.34 | 0.34 | 0.35 | 0.34 | 0.33 |
| NMR | C4 unit modification rate of resin a | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |

(continued)

| Coating of inorganic particles | | | | | | | | | | | |
|---|---|---|---|---|---|---|---|---|---|---|---|
| Evaluation item | | Example 40-1 | Example 40-2 | Example 40-3 | Example 40-4 | Example 40-5 | Example 40-6 | Example 40-7 | Example 40-8 | Example 40-9 | Example 40-10 |
| Confirmation of crosslinking | TMA rupture temperature before coating | 153.5 | 148.8 | 151.7 | 150.9 | 152.5 | 151.7 | 153.9 | 153.2 | 153.4 | 148.3 |
| | TMA rupture temperature after coating | >200 | >200 | >200 | >200 | >200 | >200 | >200 | >200 | >200 | >200 |
| | Confirmation of progress of crosslinking reaction in coating step | A | A | A | A | A | A | A | A | A | A |
| Battery evaluation | Collapse test passing rate | 76.1 | 76.1 | 74.0 | 71.4 | 79.9 | 65.2 | 82.1 | 65.3 | 74.5 | 83.2 |
| | Cycle test capacity retention rate (@55°C) | 67.3 | 67.8 | 65.0 | 69.0 | 62.9 | 73.5 | 59.2 | 79.0 | 55.7 | 72.6 |
| | Cycle life (@65°C, capacity retention rate 50%) | 797 | 747 | 746 | 689 | 688 | 636 | 637 | 513 | 787 | 837 |

[Table 26-2]

| Coating of inorganic particles | | | | | | | | | | | |
|---|---|---|---|---|---|---|---|---|---|---|---|
| Evaluation item | | Example 40-11 | Example 40-12 | Example 40-13 | Example 40-14 | Example 40-15 | Example 40-16 | Example 40-17 | Example 40-18 | Example 40-19 | Example 40-20 |
| Starting material | Type of resin D | D2 | D2 | D2 | D2 | D2 | D2 | D2 | D2 | D11 | D1 |
| | Type of resin E | E3 | E3 | E3 | E3 | E3 | E3 | E3 | E3 | E3 | E2 |
| | Type of resin F | F3 | F3 | F3 | F3 | F3 | F3 | F3 | F3 | F4 | F5 |
| | Content of resin D | 30.0 | 30.0 | 30.0 | 30.0 | 30.0 | 30.0 | 30.0 | 30.0 | 30.0 | 30.5 |
| | Content of resin E | 30.0 | 30.0 | 30.0 | 30.0 | 30.0 | 30.0 | 30.0 | 30.0 | 5.5 | 17.0 |
| | Content of resin F | 40.0 | 40.0 | 40.0 | 40.0 | 40.0 | 40.0 | 40.0 | 40.0 | 64.5 | 52.5 |
| Substrate physical properties | Substrate thickness | 10.1 | 9.7 | 10.1 | 9.8 | 10.1 | 10.1 | 10.1 | 9.9 | 9.9 | 9.9 |
| | Substrate porosity | 47 | 43 | 45 | 45 | 44 | 43 | 44 | 44 | 45 | 46 |
| | Substrate air permeability | 133 | 132 | 134 | 134 | 133 | 135 | 136 | 134 | 136 | 135 |
| | Substrate puncture strength | 826 | 753 | 778 | 773 | 774 | 752 | 782 | 772 | 807 | 813 |
| Coating solution | Coating thickness | 4 | 4 | 4 | 4 | 4 | 4 | 4 | 4 | 4 | 4 |
| | Weight ratio of inorganic particles | 95 | 95 | 95 | 95 | 95 | 95 | 95 | 95 | 95 | 95 |
| | Type of inorganic particles | Boehmite | Boehmite | Boehmite | Boehmite | Boehmite | Boehmite | Boehmite | Boehmite | Boehmite | Boehmite |
| | pH of coating solution | 12 | 6.5 | 7.6 | 7 | 9 | 9 | 9 | 9 | 9 | 9 |
| | Contact angle of coating solution | 50 | 50 | 50 | 50 | 40 | 60 | 10 | 90 | 50 | 50 |

(continued)

| Coating of inorganic particles | | | | | | | | | | | |
|---|---|---|---|---|---|---|---|---|---|---|---|
| Evaluation item | | Example 40-11 | Example 40-12 | Example 40-13 | Example 40-14 | Example 40-15 | Example 40-16 | Example 40-17 | Example 40-18 | Example 40-19 | Example 40-20 |
| X-ray structure analysis | Crystal long period | 33.6 | 32.3 | 35.5 | 33.3 | 36.2 | 34.5 | 37.3 | 34.0 | 21.0 | 32.0 |
| | Crystallinity degree | 72.6 | 72.7 | 68.6 | 67.1 | 72.4 | 69.0 | 71.4 | 69.1 | 71.0 | 73.7 |
| | Amorphous portion thickness | 9 | 9 | 11 | 11 | 10 | 11 | 11 | 11 | 6 | 8 |
| | Crystallite size (110) | 23.7 | 24.5 | 24.9 | 24.5 | 26.3 | 24.3 | 23.7 | 23.1 | 26.4 | 21.1 |
| | Crystallite size ratio (110)/(200) | 1.3 | 1.1 | 1.4 | 1.3 | 1.3 | 1.2 | 1.4 | 1.4 | 1.1 | 1.3 |
| | MD cross-sectional crystal orientation degree | 0.90 | 0.90 | 0.91 | 0.91 | 0.90 | 0.94 | 0.90 | 0.91 | 0.94 | 0.90 |
| | TD cross-sectional crystal orientation degree | 0.92 | 0.92 | 0.92 | 0.94 | 0.92 | 0.94 | 0.90 | 0.93 | 0.91 | 0.93 |
| | MD/TD | 0.98 | 0.98 | 0.99 | 0.97 | 0.97 | 0.99 | 1.00 | 0.99 | 1.03 | 0.97 |
| TOF-SIMS | Voronoi area (mu) | 9.08 | 8.93 | 8.73 | 8.76 | 9.08 | 9.14 | 9.03 | 8.86 | 8.91 | 9.26 |
| | Spread ($\sigma$) of the Voronoi area frequency distribution | 2.95 | 3.05 | 3.05 | 2.90 | 3.04 | 3.06 | 3.06 | 2.94 | 2.93 | 3.08 |
| | $\sigma$/mu | 0.32 | 0.34 | 0.35 | 0.33 | 0.33 | 0.33 | 0.34 | 0.33 | 0.33 | 0.33 |
| NMR | C4 unit modification rate of resin a | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |

(continued)

| Coating of inorganic particles | | | | | | | | | | | |
|---|---|---|---|---|---|---|---|---|---|---|---|
| Evaluation item | | Example 40-11 | Example 40-12 | Example 40-13 | Example 40-14 | Example 40-15 | Example 40-16 | Example 40-17 | Example 40-18 | Example 40-19 | Example 40-20 |
| Confirmation of crosslinking | TMA rupture temperature before coating | 148.4 | 149.6 | 151.2 | 149.0 | 149.1 | 153.1 | 153.1 | 153.0 | 151.1 | 152.7 |
| | TMA rupture temperature after coating | >200 | >200 | >200 | 183.7 | >200 | >200 | >200 | 185.7 | >200 | >200 |
| | Confirmation of progress of crosslinking reaction in coating step | A | A | A | B | A | A | A | B | A | A |
| Battery evaluation | Collapse test passing rate | 83.8 | 72.0 | 70.4 | 51.7 | 73.2 | 65.9 | 78.2 | 51.2 | 80.0 | 79.1 |
| | Cycle test capacity retention rate (@55°C) | 67.8 | 69.1 | 70.1 | 63.9 | 63.2 | 52.4 | 53.9 | 69.7 | 62.5 | 70.0 |
| | Cycle life (@65°C, capacity retention rate 50%) | 837 | 767 | 768 | 590 | 755 | 754 | 611 | 608 | 702 | 750 |

[Table 26-3]

| Coating of inorganic particles | | | | | | | | | | | |
|---|---|---|---|---|---|---|---|---|---|---|---|
| Evaluation item | | Example 40-21 | Example 40-22 | Example 40-23 | Example 40-24 | Example 40-25 | Example 40-26 | Example 40-27 | Example 40-28 | Example 40-29 | Example 40-30 |
| Starting material | Type of resin D | D7 | D7 | D5 | D5 | D2 | D6 | D1 | D3 | D5 | D1 |
| | Type of resin E | E2 | E5 | E3 | E3 | E4 | E3 | E3 | E4 | E4 | E4 |
| | Type of resin F | F5 | F3 | F3 | F5 | F5 | F4 | F5 | F3 | F2 | F2 |
| | Content of resin D | 20.0 | 20.0 | 15.0 | 14.5 | 68.0 | 55.0 | 22.0 | 8.0 | 23.0 | 30.0 |
| | Content of resin E | 50.0 | 67.0 | 45.0 | 32.0 | 17.0 | 27.0 | 52.0 | 62.0 | 20.0 | 25.0 |
| | Content of resin F | 30.0 | 13.0 | 40.0 | 53.5 | 15.0 | 18.0 | 26.0 | 30.0 | 57.0 | 45.0 |
| Substrate physical properties | Substrate thickness | 9.7 | 9.9 | 10.2 | 10.3 | 10.2 | 9.8 | 10.0 | 9.9 | 9.7 | 9.8 |
| | Substrate porosity | 47 | 48 | 44 | 45 | 45 | 46 | 45 | 44 | 43 | 46 |
| | Substrate air permeability | 133 | 133 | 135 | 135 | 136 | 135 | 135 | 138 | 132 | 136 |
| | Substrate puncture strength | 810 | 790 | 763 | 773 | 780 | 778 | 754 | 756 | 775 | 785 |
| Coating solution | Coating thickness | 4 | 4 | 4 | 4 | 4 | 4 | 4 | 4 | 4 | 4 |
| | Weight ratio of inorganic particles | 95 | 95 | 95 | 95 | 95 | 95 | 95 | 95 | 95 | 95 |
| | Type of inorganic particles | Boehmite | Boehmite | Boehmite | Boehmite | Boehmite | Boehmite | Boehmite | Boehmite | Boehmite | Boehmite |
| | pH of coating solution | 9 | 9 | 9 | 9 | 9 | 9 | 9 | 9 | 9 | 9 |
| | Contact angle of coating solution | 50 | 50 | 50 | 50 | 50 | 50 | 50 | 50 | 50 | 50 |

(continued)

| Coating of inorganic particles | | | | | | | | | | | |
|---|---|---|---|---|---|---|---|---|---|---|---|
| Evaluation item | | Example 40-21 | Example 40-22 | Example 40-23 | Example 40-24 | Example 40-25 | Example 40-26 | Example 40-27 | Example 40-28 | Example 40-29 | Example 40-30 |
| X-ray structure analysis | Crystal long period | 39.0 | 48.0 | 35.0 | 37.0 | 32.9 | 37.3 | 32.1 | 33.0 | 32.2 | 32.4 |
| | Crystallinity degree | 65.7 | 71.3 | 78.2 | 61.0 | 68.2 | 67.7 | 68.3 | 72.5 | 68.0 | 71.1 |
| | Amorphous portion thickness | 13 | 14 | 8 | 14 | 10 | 12 | 10 | 9 | 10 | 9 |
| | Crystallite size (110) | 26.2 | 23.5 | 25.0 | 21.3 | 11.0 | 15.0 | 35.0 | 48.0 | 25.6 | 25.5 |
| | Crystallite size ratio (110)/(200) | 1.1 | 1.2 | 1.4 | 1.1 | 1.3 | 1.1 | 1.1 | 1.4 | 0.8 | 1.0 |
| | MD cross-sectional crystal orientation degree | 0.90 | 0.93 | 0.94 | 0.94 | 0.95 | 0.90 | 0.94 | 0.95 | 0.92 | 0.91 |
| | TD cross-sectional crystal orientation degree | 0.92 | 0.90 | 0.93 | 0.93 | 0.94 | 0.94 | 0.93 | 0.95 | 0.93 | 0.92 |
| | MD/TD | 0.98 | 1.02 | 1.01 | 1.01 | 1.01 | 0.96 | 1.01 | 1.00 | 0.99 | 0.99 |
| TOF-SIMS | Voronoi area (mu) | 8.71 | 9.19 | 9.05 | 8.72 | 9.05 | 8.95 | 9.09 | 8.83 | 9.04 | 8.93 |
| | Spread (σ) of the Voronoi area frequency distribution | 3.07 | 3.06 | 3.09 | 3.05 | 2.96 | 3.07 | 3.09 | 2.99 | 3.02 | 3.05 |
| | σ/mu | 0.35 | 0.33 | 0.34 | 0.35 | 0.33 | 0.34 | 0.34 | 0.34 | 0.33 | 0.34 |
| NMR | C4 unit modification rate of resin a | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |

(continued)

| Coating of inorganic particles | | | | | | | | | | | |
|---|---|---|---|---|---|---|---|---|---|---|---|
| Evaluation item | | Example 40-21 | Example 40-22 | Example 40-23 | Example 40-24 | Example 40-25 | Example 40-26 | Example 40-27 | Example 40-28 | Example 40-29 | Example 40-30 |
| Confirmation of crosslinking | TMA rupture temperature before coating | 152.4 | 151.0 | 150.7 | 149.2 | 149.2 | 149.7 | 151.7 | 152.9 | 152.4 | 152.5 |
| | TMA rupture temperature after coating | >200 | >200 | >200 | >200 | >200 | >200 | >200 | >200 | >200 | >200 |
| | Confirmation of progress of crosslinking reaction in coating step | A | A | A | A | A | A | A | A | A | A |
| Battery evaluation | Collapse test passing rate | 71.5 | 66.0 | 75.6 | 77.7 | 66.7 | 76.8 | 75.7 | 64.1 | 75.5 | 78.8 |
| | Cycle test capacity retention rate (@55°C) | 73.3 | 75.0 | 56.3 | 55.1 | 65.8 | 60.4 | 56.2 | 53.8 | 65.5 | 65.5 |
| | Cycle life (@65°C, capacity retention rate 50%) | 747 | 713 | 733 | 733 | 771 | 783 | 783 | 771 | 673 | 781 |

[Table 26-4]

| Coating of inorganic particles | | | | | | | | | | | |
|---|---|---|---|---|---|---|---|---|---|---|---|
| Evaluation item | | Example 40-31 | Example 40-32 | Example 40-33 | Example 40-34 | Example 40-35 | Example 40-36 | Example 40-37 | Example 40-38 | Example 40-39 | Example 40-40 |
| Starting material | Type of resin D | D3 | D1 | D1 | D2 | D2 | D2 | D2 | D2 | D2 | D2 |
| | Type of resin E | E2 | E3 | E3 | E3 | E3 | E3 | E3 | E3 | E3 | E3 |
| | Type of resin F | F2 | F2 | F2 | F3 | F3 | F3 | F3 | F3 | F3 | F3 |
| | Content of resin D | 27.0 | 35.5 | 39.0 | 30.0 | 30.0 | 30.0 | 30.0 | 30.0 | 30.0 | 30.0 |
| | Content of resin E | 20.0 | 26.5 | 29.0 | 30.0 | 30.0 | 30.0 | 30.0 | 30.0 | 30.0 | 30.0 |
| | Content of resin F | 53.0 | 38.0 | 32.0 | 40.0 | 40.0 | 40.0 | 40.0 | 40.0 | 40.0 | 40.0 |
| Substrate physical properties | Substrate thickness | 10.0 | 10.2 | 10.2 | 9.9 | 10.2 | 10.2 | 10.2 | 9.7 | 9.8 | 10.0 |
| | Substrate porosity | 45 | 44 | 45 | 47 | 47 | 47 | 46 | 44 | 46 | 45 |
| | Substrate air permeability | 129 | 134 | 128 | 123 | 129 | 128 | 134 | 133 | 134 | 127 |
| | Substrate puncture strength | 780 | 773 | 770 | 734 | 772 | 784 | 800 | 797 | 786 | 780 |
| Coating solution | Coating thickness | 4 | 4 | 4 | 4 | 4 | 4 | 4 | 4 | 4 | 4 |
| | Weight ratio of inorganic particles | 95 | 95 | 95 | 95 | 95 | 95 | 95 | 95 | 95 | 95 |
| | Type of inorganic particles | boehmite | boehmite | boehmite | boehmite | boehmite | boehmite | boehmite | boehmite | boehmite | boehmite |
| | pH of coating solution | 9 | 9 | 9 | 9 | 9 | 9 | 9 | 9 | 9 | 9 |
| | Contact angle of coating solution | 50 | 50 | 50 | 50 | 50 | 50 | 50 | 50 | 50 | 50 |

(continued)

| Coating of inorganic particles | | | | | | | | | | | |
|---|---|---|---|---|---|---|---|---|---|---|---|
| Evaluation item | | Example 40-31 | Example 40-32 | Example 40-33 | Example 40-34 | Example 40-35 | Example 40-36 | Example 40-37 | Example 40-38 | Example 40-39 | Example 40-40 |
| X-ray structure analysis | Crystal long period | 32.4 | 36.0 | 34.5 | 37.8 | 37.7 | 36.1 | 38.0 | 37.5 | 36.1 | 37.9 |
| | Crystallinity degree | 68.1 | 69.6 | 69.0 | 68.5 | 67.7 | 69.9 | 70.3 | 67.9 | 68.9 | 68.7 |
| | Amorphous portion thickness | 10 | 11 | 11 | 12 | 12 | 11 | 11 | 12 | 11 | 12 |
| | Crystallite size (110) | 25.6 | 24.8 | 21.3 | 25.1 | 25.4 | 22.4 | 25.2 | 23.0 | 21.8 | 25.8 |
| | Crystallite size ratio (110)/(200) | 1.5 | 1.9 | 2.1 | 1.2 | 1.4 | 1.1 | 1.4 | 1.2 | 1.2 | 1.2 |
| | MD cross-sectional crystal orientation degree | 0.90 | 0.94 | 0.95 | 0.69 | 0.71 | 0.88 | 0.82 | 0.87 | 0.98 | 0.86 |
| | TD cross-sectional crystal orientation degree | 0.92 | 0.92 | 0.94 | 0.89 | 0.87 | 0.75 | 0.89 | 0.82 | 0.86 | 0.97 |
| | MD/TD | 0.98 | 1.02 | 1.01 | 0.78 | 0.82 | 1.17 | 0.92 | 1.06 | 1.10 | 0.89 |
| TOF-SIMS | Voronoi area (mu) | 9.30 | 9.07 | 9.21 | 9.00 | 8.77 | 8.81 | 9.05 | 8.96 | 9.30 | 9.13 |
| | Spread (σ) of the Voronoi area frequency distribution | 2.95 | 3.00 | 2.91 | 3.09 | 3.06 | 3.03 | 3.02 | 2.99 | 3.07 | 3.07 |
| | σ/mu | 0.32 | 0.33 | 0.32 | 0.34 | 0.35 | 0.34 | 0.33 | 0.33 | 0.33 | 0.34 |
| NMR | C4 unit modification rate of resin a | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |

(continued)

| Coating of inorganic particles | | | | | | | | | | | |
|---|---|---|---|---|---|---|---|---|---|---|---|
| Evaluation item | | Example 40-31 | Example 40-32 | Example 40-33 | Example 40-34 | Example 40-35 | Example 40-36 | Example 40-37 | Example 40-38 | Example 40-39 | Example 40-40 |
| Confirmation of crosslinking | TMA rupture temperature before coating | 152.6 | 149.1 | 149.5 | 148.0 | 150.7 | 151.5 | 154.2 | 149.1 | 151.3 | 149.4 |
| | TMA rupture temperature after coating | >200 | >200 | >200 | >200 | >200 | >200 | >200 | >200 | >200 | >200 |
| | Confirmation of progress of crosslinking reaction in coating step | A | A | A | A | A | A | A | A | A | A |
| Battery evaluation | Collapse test passing rate | 79.8 | 77.9 | 72.3 | 63.9 | 70.4 | 67.9 | 75.7 | 75.4 | 71.8 | 67.5 |
| | Cycle test capacity retention rate (@55°C) | 63.7 | 63.5 | 65.5 | 63.9 | 64.8 | 65.9 | 66.3 | 66.9 | 66.4 | 65.3 |
| | Cycle life (@65°C, capacity retention rate 50%) | 779 | 772 | 670 | 548 | 689 | 704 | 763 | 762 | 702 | 623 |

[Table 26-5]

| Coating of inorganic particles | | | | | | | | | | | |
|---|---|---|---|---|---|---|---|---|---|---|---|
| Evaluation item | | Example 40-41 | Example 40-42 | Example 40-43 | Example 40-44 | Example 40-45 | Example 40-46 | Example 40-47 | Example 40-48 | Example 40-49 | Example 40-50 |
| starting material | Type of resin D | D2 | D8 | D3 | D10 | D10 | D11 | D5 | D4 | D9 | D7 |
| | Type of resin E | E3 | E3 | E4 | E3 | E2 | E2 | E5 | E5 | E4 | E2 |
| | Type of resin F | F3 | F5 | F4 | F5 | F3 | F5 | F4 | F2 | F4 | F3 |
| | Content of resin D | 30.0 | 31.0 | 24.5 | 30.5 | 43.5 | 29.5 | 33.5 | 26.5 | 31.0 | 68.0 |
| | Content of resin E | 30.0 | 10.0 | 57.0 | 15.0 | 26.5 | 20.0 | 26.5 | 26.5 | 45.0 | 10.5 |
| | Content of resin F | 40.0 | 59.0 | 18.5 | 54.5 | 30.0 | 50.5 | 40.0 | 47.0 | 24.0 | 21.5 |
| Substrate physical properties | Substrate thickness | 9.9 | 10.1 | 10.1 | 10.1 | 10.2 | 9.8 | 10.1 | 10.1 | 10.0 | 9.9 |
| | Substrate porosity | 46 | 45 | 46 | 46 | 44 | 43 | 45 | 47 | 46 | 46 |
| | Substrate air permeability | 133 | 134 | 134 | 134 | 133 | 134 | 131 | 121 | 133 | 134 |
| | Substrate puncture strength | 736 | 792 | 802 | 808 | 771 | 745 | 782 | 822 | 800 | 808 |
| Coating solution | Coating thickness | 4 | 4 | 4 | 4 | 4 | 4 | 4 | 4 | 4 | 4 |
| | Weight ratio of inorganic particles | 95 | 95 | 95 | 95 | 95 | 95 | 95 | 95 | 95 | 95 |
| | Type of inorganic particles | Boehmite | Boehmite | Boehmite | Boehmite | Boehmite | Boehmite | Boehmite | Boehmite | Boehmite | Boehmite |
| | pH of coating solution | 9 | 9 | 9 | 9 | 9 | 9 | 9 | 9 | 9 | 9 |
| | Contact angle of coating solution | 50 | 50 | 50 | 50 | 50 | 50 | 50 | 50 | 50 | 50 |

(continued)

| Coating of inorganic particles | | | | | | | | | | | |
|---|---|---|---|---|---|---|---|---|---|---|---|
| Evaluation item | | Example 40-41 | Example 40-42 | Example 40-43 | Example 40-44 | Example 40-45 | Example 40-46 | Example 40-47 | Example 40-48 | Example 40-49 | Example 40-50 |
| X-ray structure analysis | Crystal long period | 36.6 | 35.4 | 33.3 | 36.2 | 35.7 | 34.9 | 32.5 | 37.3 | 32.6 | 33.1 |
| | Crystallinity degree | 67.2 | 70.2 | 72.8 | 69.8 | 67.8 | 72.1 | 68.7 | 69.4 | 68.5 | 69.5 |
| | Amorphous portion thickness | 12 | 11 | 9 | 11 | 11 | 10 | 10 | 11 | 10 | 10 |
| | Crystallite size (110) | 20.5 | 23.3 | 21.1 | 25.3 | 24.6 | 26.5 | 22.5 | 24.1 | 23.1 | 26.2 |
| | crystallite size ratio (110)/(200) | 1.1 | 1.2 | 1.4 | 1.3 | 1.4 | 1.4 | 1.1 | 1.2 | 1.3 | 1.4 |
| | MD cross-sectional crystal orientation degree | 0.85 | 0.93 | 0.93 | 0.94 | 0.91 | 0.89 | 0.94 | 0.91 | 0.93 | 0.92 |
| | TD cross-sectional crystal orientation degree | 0.68 | 0.92 | 0.91 | 0.92 | 0.95 | 0.92 | 0.93 | 0.92 | 0.94 | 0.94 |
| | MD/TD | 1.25 | 1.02 | 1.02 | 1.01 | 0.95 | 0.97 | 1.01 | 1.00 | 0.99 | 0.98 |
| TOF-SIMS | Voronoi area (mu) | 9.25 | 9.91 | 9.20 | 9.56 | 6.20 | 9.78 | 8.50 | 11.32 | 9.82 | 5.70 |
| | Spread ($\sigma$) of the Voronoi area frequency distribution | 3.03 | 1.80 | 4.20 | 2.15 | 2.81 | 2.67 | 3.24 | 3.07 | 3.90 | 2.68 |
| | $\sigma$/mu | 0.33 | 0.18 | 0.46 | 0.22 | 0.45 | 0.21 | 0.38 | 0.27 | 0.40 | 0.47 |
| NMR | C4 unit modification rate of resin a | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |

(continued)

| Coating of inorganic particles | | | | | | | | | | | |
|---|---|---|---|---|---|---|---|---|---|---|---|
| Evaluation item | | Example 40-41 | Example 40-42 | Example 40-43 | Example 40-44 | Example 40-45 | Example 40-46 | Example 40-47 | Example 40-48 | Example 40-49 | Example 40-50 |
| Confirmation of crosslinking | TMA rupture temperature before coating | 148.3 | 149.2 | 152.3 | 151.2 | 153.8 | 153.7 | 149.6 | 151.4 | 149.7 | 149.1 |
| | TMA rupture temperature after coating | >200 | >200 | 185.7 | >200 | >200 | >200 | >200 | 192 | 198.2 | >200 |
| | Confirmation of progress of crosslinking reaction in coating step | A | A | B | A | A | A | A | B | B | A |
| Battery evaluation | Collapse test passing rate | 65.1 | 77.3 | 64.3 | 76.0 | 72.2 | 74.8 | 65.2 | 65.9 | 65.0 | 73.7 |
| | Cycle test capacity retention rate (@55°C) | 64.8 | 57.8 | 61.8 | 61.6 | 64.9 | 61.5 | 63.9 | 57.3 | 59.1 | 66.1 |
| | Cycle life (@65°C, capacity retention rate 50%) | 534 | 530 | 543 | 642 | 645 | 728 | 673 | 670 | 596 | 545 |

[Table 26-6]

| Coating of inorganic particles | | | | |
|---|---|---|---|---|
| Evaluation item | | Example 40-51 | Example 40-52 | Example 40-53 |
| Starting material | Type of resin D | D9 | D13 | D14 |
| | Type of resin E | E5 | E3 | E4 |
| | Type of resin F | F2 | F3 | F4 |
| | Content of resin D | 5.0 | 30.0 | 30.0 |
| | Content of resin E | 22.5 | 30.0 | 30.0 |
| | Content of resin F | 72.5 | 40.0 | 40.0 |
| Substrate physical properties | Substrate thickness | 10.1 | 10.1 | 9.9 |
| | Substrate porosity | 44 | 43 | 42 |
| | Substrate air permeability | 134 | 145 | 143 |
| | Substrate puncture strength | 764 | 740 | 720 |
| Coating solution | Coating thickness | 4 | 4 | 4 |
| | Weight ratio of inorganic particles | 95 | 95 | 95 |
| | Type of inorganic particles | boehmite | boehmite | boehmite |
| | pH of coating solution | 9 | 9 | 9 |
| | Contact angle of coating solution | 50 | 50 | 50 |
| X-ray structure analysis | Crystal long period | 37.6 | 37.4 | 39.0 |
| | Crystallinity | 72.7 | 65.0 | 70.0 |
| | Amorphous portion thickness | 10 | 13.09 | 11.7 |
| | Crystallite size (110) | 22.9 | 21.0 | 20.6 |
| | Crystallite size ratio (110)/(200) | 1.3 | 1 | 1.1 |
| | MD cross-sectional crystal orientation degree | 0.90 | 0.96 | 0.87 |
| | TD cross-sectional crystal orientation degree | 0.90 | 0.91 | 0.89 |
| | MD/TD | 1.00 | 1.05 | 0.98 |
| TOF-SIMS | Voronoi area (mu) | 12.80 | 8.82 | 8.98 |
| | Spread ($\sigma$) of the Voronoi area frequency distribution | 2.96 | 2.98 | 3.08 |
| | $\sigma$/mu | 0.23 | 0.34 | 0.34 |
| NMR | C4 unit modification rate of resin a | 0.5 | 0.5 | 0.5 |
| | Number of silane-grafted linking portions $CH_2$ | 2 | 8 | 12 |
| Confirmation of crosslinking | TMA rupture temperature before coating | 148.9 | 147.8 | 147.5 |
| | TMA rupture temperature after coating | 185.7 | 182.3 | 179.1 |
| | Confirmation of progress of crosslinking reaction in coating step | B | B | B |

(continued)

| Coating of inorganic particles | | | | |
|---|---|---|---|---|
| Evaluation item | | Example 40-51 | Example 40-52 | Example 40-53 |
| Battery evaluation | Collapse test passing rate | 71.8 | 65.3 | 54.2 |
| | Cycle test capacity retention rate (@55°C) | 55.3 | 65.2 | 64.2 |
| | Cycle life (@65°C, capacity retention rate 50%) | 531 | 670 | 651 |

[Table 26-7]

| Coating of inorganic particles | | | | | | | | |
|---|---|---|---|---|---|---|---|---|
| Evaluation item | | Comparative Example 11-1 | Comparative Example 11-2 | Comparative Example 11-3 | Comparative Example 11-4 | Comparative Example 11-5 | Comparative Example 11-6 | Comparative Example 11-7 |
| Starting material | Type of resin D | D12 | D8 | D12 | D5 | D6 | D5 | - |
| | Type of resin E | E2 | E5 | E2 | E4 | E2 | E5 | E3 |
| | Type of resin F | F4 | F3 | F4 | F3 | F4 | F3 | F3 |
| | Content of resin D | 29.5 | 13.0 | 5.5 | 25.0 | 77.0 | 2.0 | - |
| | Content of resin E | 2.5 | 73.0 | 72.0 | 0.5 | 10.0 | 70.0 | 26.7 |
| | Content of resin F | 68.0 | 14.0 | 22.5 | 74.5 | 13.0 | 28.0 | 100.0 |
| Substrate physical properties | Substrate thickness | 10.3 | 10.3 | 9.9 | 10.0 | 9.8 | 9.7 | 9.8 |
| | Substrate porosity | 45 | 46 | 47 | 46 | 46 | 43 | 47 |
| | Substrate air permeability | 138 | 133 | 133 | 133 | 132 | 140 | 133 |
| | Substrate puncture strength | 800 | 777 | 760 | 750 | 776 | 753 | 824 |
| Coating solution | Coating thickness | 4 | 4 | 4 | 4 | 4 | 4 | 4 |
| | Weight ratio of inorganic particles | 95 | 95 | 95 | 95 | 95 | 95 | 95 |
| | Type of inorganic particles | Boehmite | Boehmite | Boehmite | Boehmite | Boehmite | Boehmite | Boehmite |
| | pH of coating solution | 9 | 9 | 9 | 9 | 9 | 9 | 9 |
| | Contact angle of coating solution | 50 | 50 | 50 | 50 | 50 | 50 | 50 |

(continued)

| Coating of inorganic particles | | | | | | | | |
|---|---|---|---|---|---|---|---|---|
| Evaluation item | | Comparative Example 11-1 | Comparative Example 11-2 | Comparative Example 11-3 | Comparative Example 11-4 | Comparative Example 11-5 | Comparative Example 11-6 | Comparative Example 11-7 |
| X-ray structure analysis | Crystal long period | 19.0 | 51.0 | 28.6 | 33.0 | 34.5 | 37.5 | 37.0 |
| | Crystallinity | 75.9 | 68.0 | 58.0 | 82.1 | 69.5 | 69.3 | 70.0 |
| | Amorphous portion thickness | 4.57 | 16.32 | 12.0 | 5.9 | 11 | 12 | 11 |
| | Crystallite size (110) | 22.2 | 21.2 | 24.8 | 22.4 | 9.0 | 51.0 | 20.5 |
| | Crystallite size ratio (110)/(200) | 1.4 | 1.2 | 1.2 | 1.3 | 1.1 | 1.2 | 1.2 |
| | MD cross-sectional crystal orientation degree | 0.89 | 0.94 | 0.93 | 0.90 | 0.92 | 0.95 | 0.90 |
| | TD cross-sectional crystal orientation degree | 0.93 | 0.95 | 0.89 | 0.90 | 0.90 | 0.91 | 0.94 |
| | MD/TD | 0.96 | 0.98 | 1.04 | 1.00 | 1.02 | 1.05 | 0.95 |
| TOF-SIMS | Voronoi area (mu) | 8.73 | 8.75 | 9.13 | 9.01 | 9.01 | 9.01 | 9.08 |
| | Spread ($\sigma$) of the Voronoi area frequency distribution | 2.93 | 3.04 | 3.04 | 3.07 | 2.96 | 2.91 | 3.02 |
| | $\sigma$/mu | 0.34 | 0.35 | 0.33 | 0.34 | 0.33 | 0.32 | 0.33 |
| NMR | C4 unit modification rate of resin a | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 |

(continued)

| Coating of inorganic particles | | | | | | | | |
|---|---|---|---|---|---|---|---|---|
| Evaluation item | | Comparative Example 11-1 | Comparative Example 11-2 | Comparative Example 11-3 | Comparative Example 11-4 | Comparative Example 11-5 | Comparative Example 11-6 | Comparative Example 11-7 |
| Confirmation of crosslinking | TMA rupture temperature before coating | 150.9 | 151.7 | 148.2 | 148.8 | 148.3 | 151.0 | 151.6 |
| | TMA rupture temperature after coating | 167.4 | 167.9 | 167.5 | 167.9 | >200 | >200 | 169.0 |
| | Confirmation of progress of crosslinking reaction in coating step | C | C | C | C | A | A | C |
| Battery evaluation | Collapse test passing rate | 18.1 | 17.8 | 18.3 | 20.1 | 17.7 | 17.8 | 20.8 |
| | Cycle test capacity retention rate (@55°C) | 39.5 | 33.2 | 27.7 | 29.8 | 65.0 | 36.0 | 39.2 |
| | Cycle life (@65°C, capacity retention rate 50%) | 292 | 289 | 264 | 275 | 294 | 275 | 288 |

<Confirmation of Crosslinking by Coating Thermoplastic Polymer-Containing Layer on Separator Substrate>

[Example 41-1]

The same operation as in Example 40-1 was carried out, except for changing the fabrication conditions of the polyolefin microporous membrane, etc., as shown in Table 27, a separator substrate composed of a polyolefin microporous membrane was obtained.

Next, as shown in Table 27, a thermoplastic polymer-containing coating solution was obtained by adjusting the type of the resin and the concentration of the organic solvent, and the pH of the coating solution and the contact angle of the coating solution with respect to the clean separator substrate surface were also measured according to the above methods.

Further, in the same manner as in Example 40-1, the separator substrate was coated with the coating solution using a gravure reverse coater to obtain a multilayer separator having a coating thickness as shown in Table 27. The progress of the crosslinking reaction in the coating step was also confirmed from the comparison of the TMA rupture temperatures before and after coating. The multilayer separator thus obtained was subjected to various evaluations according to the above evaluation method. The evaluation results are also shown in Table 27.

Further, using the multilayer separator, a nonaqueous secondary battery was fabricated according to the method for fabricating a battery described above, and the battery was evaluated. The battery evaluation results are also shown in Table 7.

[Example 41-2 to Example 41-49, Comparative Example 12-1 to Comparative Example 12-7]

The same operation as in Example 41-1 was carried out, except for changing the resin composition and the molecular weight mixed composition of the polyolefin microporous membrane, the fabrication conditions, the substrate properties, the type of the thermoplastic resin, the composition and physical properties of the coating solution, etc., as shown in Table 27, separator substrates composed of a polyolefin microporous membrane and multilayer separators coated with a thermoplastic polymer-containing layer were obtained. The separator substrates and multilayer separators thus obtained were subjected to various evaluations according to the above evaluation method. The evaluation results are also shown in Table 27.

Further, using multilayer separators coated with a thermoplastic polymer-containing layer, nonaqueous secondary batteries were obtained. The batteries thus obtained were subjected to various evaluations according to the above evaluation method. The evaluation results are also shown in Table 27.

[Table 27-1]

| Coating of thermoplastic polymer-containing layer | | | | | | | | | | | |
|---|---|---|---|---|---|---|---|---|---|---|---|
| Evaluation item | | Example 41-1 | Example 41-2 | Example 41-3 | Example 41-4 | Example 41-5 | Example 41-6 | Example 41-7 | Example 41-8 | Example 41-9 | Example 41-10 |
| Starting material | Type of resin D | D2 | D2 | D2 | D2 | D2 | D2 | D2 | D2 | D2 | D2 |
| | Type of resin E | E3 | E3 | E3 | E3 | E3 | E3 | E3 | E3 | E3 | E3 |
| | Type of resin F | F3 | F3 | F3 | F3 | F3 | F3 | F3 | F3 | F3 | F3 |
| | Content of resin D | 30.0 | 30.0 | 30.0 | 30.0 | 30.0 | 30.0 | 30.0 | 30.0 | 30.0 | 30.0 |
| | Content of resin E | 30.0 | 30.0 | 30.0 | 30.0 | 30.0 | 30.0 | 30.0 | 30.0 | 30.0 | 30.0 |
| | Content of resin F | 40.0 | 40.0 | 40.0 | 40.0 | 40.0 | 40.0 | 40.0 | 40.0 | 40.0 | 40.0 |
| Substrate physical properties | Substrate thickness | 10.2 | 9.8 | 9.9 | 10.0 | 10.0 | 9.9 | 10.1 | 9.7 | 10.0 | 9.9 |
| | Substrate porosity | 44 | 46 | 44 | 45 | 46 | 44 | 47 | 44 | 45 | 46 |
| | Substrate air permeability | 128 | 128 | 127 | 127 | 128 | 128 | 127 | 128 | 128 | 128 |
| | Substrate puncture strength | 394 | 391 | 766 | 780 | 794 | 758 | 830 | 775 | 794 | 802 |
| Coating solution | Coating thickness | 0.5 | 0.5 | 0.5 | 0.5 | 0.5 | 0.5 | 0.5 | 0.5 | 0.5 | 0.5 |
| | Type of resin | Acrylic latex | PVDF latex | PVDF: acrylic = 95:5 | PVDF: acrylic = 1:1 | PVDF/acrylic (core-shell type polymerization) | Acrylic latex | Acrylic latex | Acrylic latex | Acrylic latex | Acrylic latex |
| | pH of coating solution | 9 | 9 | 9 | 9 | 9 | 4 | 12 | 6.5 | 7.6 | 7 |
| | Contact angle of coating solution | 50 | 50 | 50 | 50 | 50 | 50 | 50 | 50 | 50 | 50 |

(continued)

| Coating of thermoplastic polymer-containing layer | | | | | | | | | | | |
|---|---|---|---|---|---|---|---|---|---|---|---|
| Evaluation item | | Example 41-1 | Example 41-2 | Example 41-3 | Example 41-4 | Example 41-5 | Example 41-6 | Example 41-7 | Example 41-8 | Example 41-9 | Example 41-10 |
| X-ray structure analysis | Crystal long period | 33.8 | 37 | 36.2 | 33.0 | 33.3 | 33.4 | 32.9 | 35.7 | 35.0 | 37.4 |
| | Crystallinity degree | 68.8 | 69.6 | 68.7 | 68.7 | 71.2 | 70.3 | 69.4 | 69.3 | 67.9 | 69.8 |
| | Amorphous portion thickness | 11 | 11 | 11 | 10 | 10 | 10 | 10 | 11 | 11 | 11 |
| | Crystallite size (110) | 21.4 | 26.5 | 26.1 | 23.8 | 24.9 | 26.3 | 26.2 | 21.1 | 23.8 | 22.7 |
| | Crystallite size ratio (110)/(200) | 1.2 | 1.1 | 1.3 | 1.4 | 1.3 | 1.1 | 1.2 | 1.4 | 1.4 | 1.1 |
| | MD cross-sectional crystal orientation degree | 0.95 | 0.91 | 0.90 | 0.93 | 0.92 | 0.94 | 0.94 | 0.91 | 0.90 | 0.91 |
| | TD cross-sectional crystal orientation degree | 0.94 | 0.90 | 0.93 | 0.92 | 0.95 | 0.92 | 0.91 | 0.91 | 0.95 | 0.95 |
| | MD/TD | 1.01 | 1.02 | 0.97 | 1.01 | 0.96 | 1.02 | 1.04 | 1.00 | 0.95 | 0.96 |
| TOF-SIMS | Voronoi area (mu) | 8.77 | 9.12 | 9.22 | 8.80 | 9.24 | 8.93 | 8.98 | 9.18 | 8.71 | 8.70 |
| | Spread (σ) of the Voronoi area frequency distribution | 3.04 | 3.07 | 2.99 | 3.05 | 3.05 | 2.94 | 3.04 | 2.94 | 3.04 | 3.09 |
| | σ/mu | 0.35 | 0.34 | 0.32 | 0.35 | 0.33 | 0.33 | 0.34 | 0.32 | 0.35 | 0.36 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |

(continued)

| Coating of thermoplastic polymer-containing layer | | | | | | | | | | | |
|---|---|---|---|---|---|---|---|---|---|---|---|
| Evaluation item | | Example 41-1 | Example 41-2 | Example 41-3 | Example 41-4 | Example 41-5 | Example 41-6 | Example 41-7 | Example 41-8 | Example 41-9 | Example 41-10 |
| Confirmation of crosslinking | TMA rupture temperature before coating | 150.1 | 150.2 | 153.4 | 149.0 | 153.8 | 148.9 | 149.7 | 153.9 | 152.4 | 153.0 |
| | TMA rupture temperature after coating | >200 | >200 | >200 | >200 | >200 | >200 | >200 | >200 | >200 | 175.7 |
| | Confirmation of progress of crosslinking reaction in coating step | A | A | A | A | A | A | A | A | A | B |
| Battery evaluation | Collapse test passing rate | 61.9 | 68.0 | 63.1 | 61.5 | 64.8 | 65.9 | 64.2 | 57.5 | 59.3 | 51.7 |
| | Cycle test capacity retention rate | 70.3 | 76.5 | 74.3 | 71.4 | 72.3 | 74.0 | 72.9 | 69.0 | 68.6 | 66.3 |
| | Cycle life | 872 | 943 | 918 | 897 | 895 | 906 | 904 | 836 | 837 | 661 |

[Table 27-2]

| Coating of thermoplastic polymer-containing layer | | | | | | | | | | | |
|---|---|---|---|---|---|---|---|---|---|---|---|
| Evaluation item | | Example 41-11 | Example 41-12 | Example 41-13 | Example 41-14 | Example 41-15 | Example 41-16 | Example 41-17 | Example 41-18 | Example 41-19 | Example 41-20 |
| Starting material | Type of resin D | D2 | D2 | D2 | D2 | D11 | D1 | D7 | D7 | D5 | D5 |
| | Type of resin E | E3 | E3 | E3 | E3 | E3 | E2 | E2 | E5 | E3 | E3 |
| | Type of resin F | F3 | F3 | F3 | F3 | F4 | F5 | F5 | F3 | F3 | F5 |
| | Content of resin D | 30.0 | 30.0 | 30.0 | 30.0 | 30.0 | 30.5 | 20.0 | 20.0 | 15.0 | 14.5 |
| | Content of resin E | 30.0 | 30.0 | 30.0 | 30.0 | 5.5 | 17.0 | 50.0 | 67.0 | 45.0 | 32.0 |
| | Content of resin F | 40.0 | 40.0 | 40.0 | 40.0 | 64.5 | 52.5 | 30.0 | 13.0 | 40.0 | 53.5 |
| Substrate physical properties | Substrate thickness | 9.7 | 9.7 | 10.0 | 9.8 | 9.9 | 9.9 | 9.7 | 9.9 | 10.2 | 10.3 |
| | Substrate porosity | 43 | 45 | 46 | 46 | 45 | 46 | 47 | 48 | 44 | 45 |
| | Substrate air permeability | 129 | 127 | 131 | 123 | 136 | 135 | 133 | 133 | 135 | 135 |
| | Substrate puncture strength | 769 | 779 | 816 | 800 | 807 | 813 | 810 | 790 | 763 | 773 |
| Coating solution | Coating thickness | 0.5 | 0.5 | 0.5 | 0.5 | 0.5 | 0.5 | 0.5 | 0.5 | 0.5 | 0.5 |
| | Type of resin | Acrylic latex | Acrylic latex | Acrylic latex | Acrylic latex | Acrylic latex | Acrylic latex | Acrylic latex | Acrylic latex | Acrylic latex | Acrylic latex |
| | pH of coating solution | 9 | 9 | 9 | 9 | 9 | 9 | 9 | 9 | 9 | 9 |
| | Contact angle of coating solution | 40 | 60 | 10 | 90 | 50 | 50 | 50 | 50 | 50 | 50 |

(continued)

| Coating of thermoplastic polymer-containing layer | | | | | | | | | | | |
|---|---|---|---|---|---|---|---|---|---|---|---|
| Evaluation item | | Example 41-11 | Example 41-12 | Example 41-13 | Example 41-14 | Example 41-15 | Example 41-16 | Example 41-17 | Example 41-18 | Example 41-19 | Example 41-20 |
| X-ray structure analysis | Crystal long period | 35.3 | 35.5 | 37.3 | 35.9 | 21.0 | 32.0 | 39.0 | 48.0 | 35.0 | 37.0 |
| | Crystallinity degree | 72.7 | 72.4 | 71.5 | 67.5 | 71.0 | 73.7 | 65.7 | 71.3 | 78.2 | 61.0 |
| | Amorphous portion thickness | 10 | 10 | 11 | 12 | 6 | 8 | 13 | 14 | 8 | 14 |
| | Crystallite size (110) | 25.9 | 22.9 | 20.6 | 23.4 | 26.4 | 21.1 | 26.2 | 23.5 | 25.0 | 21.3 |
| | Crystallite size ratio (110)/(200) | 1.4 | 1.4 | 1.4 | 1.2 | 1.1 | 1.3 | 1.1 | 1.2 | 1.4 | 1.1 |
| | MD cross-sectional crystal orientation degree | 0.92 | 0.91 | 0.95 | 0.90 | 0.94 | 0.90 | 0.90 | 0.93 | 0.94 | 0.94 |
| | TD cross-sectional crystal orientation degree | 0.94 | 0.91 | 0.91 | 0.94 | 0.91 | 0.93 | 0.92 | 0.90 | 0.93 | 0.93 |
| | MD/TD | 0.98 | 1.00 | 1.04 | 0.95 | 1.03 | 0.97 | 0.98 | 1.02 | 1.01 | 1.01 |
| TOF-SIMS | Voronoi area (mu) | 9.24 | 8.84 | 9.27 | 8.78 | 8.91 | 9.26 | 8.71 | 9.19 | 9.05 | 8.72 |
| | Spread ($\sigma$) of the Voronoi area frequency distribution | 3.05 | 2.94 | 2.93 | 2.92 | 2.93 | 3.08 | 3.07 | 3.06 | 3.09 | 3.05 |
| | $\sigma$/mu | 0.33 | 0.33 | 0.32 | 0.33 | 0.33 | 0.33 | 0.35 | 0.33 | 0.34 | 0.35 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |
| Confirmation of crosslinking | TMA rupture temperature before coating | 151.8 | 149.3 | 153.8 | 154.3 | 151.1 | 152.7 | 152.4 | 151.0 | 150.7 | 149.2 |
| | TMA rupture temperature after coating | >200 | >200 | >200 | 174.7 | >200 | >200 | >200 | >200 | >200 | >200 |
| | Confirmation of progress of crosslinking reaction in coating step | A | A | A | B | A | A | A | A | A | A |

(continued)

| Coating of thermoplastic polymer-containing layer | | | | | | | | | | | |
|---|---|---|---|---|---|---|---|---|---|---|---|
| Evaluation item | | Example 41-11 | Example 41-12 | Example 41-13 | Example 41-14 | Example 41-15 | Example 41-16 | Example 41-17 | Example 41-18 | Example 41-19 | Example 41-20 |
| Battery evaluation | Collapse test passing rate | 66.6 | 57.2 | 69.7 | 51.2 | 65.0 | 64.1 | 56.5 | 51.0 | 60.6 | 62.7 |
| | Cycle test capacity retention rate | 67.4 | 75.6 | 65.5 | 79.1 | 69.5 | 77.0 | 80.3 | 82.0 | 63.3 | 62.1 |
| | Cycle life | 828 | 828 | 777 | 778 | 782 | 830 | 827 | 793 | 813 | 813 |

[Table 27-3]

| Coating of thermoplastic polymer-containing layer | | | | | | | | | | | |
|---|---|---|---|---|---|---|---|---|---|---|---|
| Evaluation item | | Example 41-21 | Example 41-22 | Example 41-23 | Example 41-24 | Example 41-25 | Example 41-26 | Example 41-27 | Example 41-28 | Example 41-29 | Example 41-30 |
| Starting material | Type of resin D | D2 | D6 | D1 | D3 | D5 | D1 | D3 | D1 | D1 | D2 |
| | Type of resin E | E4 | E3 | E3 | E4 | E4 | E4 | E2 | E3 | E3 | E3 |
| | Type of resin F | F5 | F4 | F5 | F3 | F2 | F2 | F2 | F2 | F2 | F3 |
| | Content of resin D | 68.0 | 55.0 | 22.0 | 8.0 | 23.0 | 30.0 | 27.0 | 35.5 | 39.0 | 30.0 |
| | Content of resin E | 17.0 | 27.0 | 52.0 | 62.0 | 20.0 | 25.0 | 20.0 | 26.5 | 29.0 | 30.0 |
| | Content of resin F | 15.0 | 18.0 | 26.0 | 30.0 | 57.0 | 45.0 | 53.0 | 38.0 | 32.0 | 40.0 |
| Substrate physical properties | Substrate thickness | 10.2 | 9.8 | 10.0 | 9.9 | 9.7 | 9.8 | 10.0 | 10.2 | 10.2 | 9.9 |
| | Substrate porosity | 45 | 46 | 45 | 44 | 43 | 46 | 45 | 44 | 45 | 47 |
| | Substrate air permeability | 136 | 135 | 135 | 138 | 132 | 136 | 129 | 134 | 128 | 123 |
| | Substrate puncture strength | 780 | 778 | 754 | 756 | 775 | 785 | 780 | 773 | 770 | 734 |
| Coating solution | Coating thickness | 0.5 | 0.5 | 0.5 | 0.5 | 0.5 | 0.5 | 0.5 | 0.5 | 0.5 | 0.5 |
| | Type of resin | Acrylic latex | Acrylic latex | Acrylic latex | Acrylic latex | Acrylic latex | Acrylic latex | Acrylic latex | Acrylic latex | Acrylic latex | Acrylic latex |
| | Ph of coating solution | 9 | 9 | 9 | 9 | 9 | 9 | 9 | 9 | 9 | 9 |
| | Contact angle of coating solution | 50 | 50 | 50 | 50 | 50 | 50 | 50 | 50 | 50 | 50 |

(continued)

| Coating of thermoplastic polymer-containing layer | | | | | | | | | | | |
|---|---|---|---|---|---|---|---|---|---|---|---|
| X-ray structure analysis | Crystal long period | 32.9 | 37.3 | 32.1 | 33.0 | 32.2 | 32.4 | 32.4 | 36.0 | 34.5 | 37.8 |
| | Crystallinity degree | 68.2 | 67.7 | 68.3 | 72.5 | 68.0 | 71.1 | 68.1 | 69.6 | 69.0 | 68.5 |
| | Amorphous portion thickness | 10 | 12 | 10 | 9 | 10 | 9 | 10 | 11 | 11 | 12 |
| | Crystallite size (110) | 11.0 | 15.0 | 35.0 | 48.0 | 25.6 | 25.5 | 25.6 | 24.8 | 21.3 | 25.1 |
| | Crystallite size ratio (110)/(200) | 1.3 | 1.1 | 1.1 | 1.4 | 0.8 | 1.0 | 1.5 | 1.9 | 2.1 | 1.2 |
| | MD cross-sectional crystal orientation degree | 0.95 | 0.90 | 0.94 | 0.95 | 0.92 | 0.91 | 0.90 | 0.94 | 0.95 | 0.69 |
| | TD cross-sectional crystal orientation degree | 0.94 | 0.94 | 0.93 | 0.95 | 0.93 | 0.92 | 0.92 | 0.92 | 0.94 | 0.89 |
| | MD/TD | 1.01 | 0.96 | 1.01 | 1.00 | 0.99 | 0.99 | 0.98 | 1.02 | 1.01 | 0.78 |
| TOF-SIMS | Voronoi area (mu) | 9.05 | 8.95 | 9.09 | 8.83 | 9.04 | 8.93 | 9.30 | 9.07 | 9.21 | 9.00 |
| | Spread ($\sigma$) of the Voronoi area frequency distribution | 2.96 | 3.07 | 3.09 | 2.99 | 3.02 | 3.05 | 2.95 | 3.00 | 2.91 | 3.09 |
| | $\sigma$/mu | 0.33 | 0.34 | 0.34 | 0.34 | 0.33 | 0.34 | 0.32 | 0.33 | 0.32 | 0.34 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |
| Confirmation of crosslinking | TMA rupture temperature before coating | 149.2 | 149.7 | 151.7 | 152.9 | 152.4 | 152.5 | 152.6 | 149.1 | 149.5 | 148.0 |
| | TMA rupture temperature after coating | >200 | >200 | >200 | >200 | >200 | >200 | >200 | >200 | >200 | >200 |
| | Confirmation of progress of crosslinking reaction in coating step | A | A | A | A | A | A | A | A | A | A |

(continued)

| Coating of thermoplastic polymer-containing layer | | | | | | | | | | | |
|---|---|---|---|---|---|---|---|---|---|---|---|
| Battery evaluation | Collapse test passing rate | 51.7 | 61.8 | 60.7 | 49.1 | 60.5 | 63.8 | 64.8 | 62.9 | 57.3 | 48.9 |
| | Cycle test capacity retention rate | 72.8 | 67.4 | 63.2 | 60.8 | 72.5 | 72.5 | 70.7 | 70.5 | 72.5 | 70.9 |
| | Cycle life | 851 | 863 | 863 | 851 | 753 | 861 | 859 | 852 | 750 | 628 |

[Table 27-4]

| Coating of thermoplastic polymer-containing layer | | | | | | | | | | | |
|---|---|---|---|---|---|---|---|---|---|---|---|
| Evaluation item | | Example 41-31 | Example 41-32 | Example 41-33 | Example 41-34 | Example 41-35 | Example 41-36 | Example 41-37 | Example 41-38 | Example 41-39 | Example 41-40 |
| Starting material | Type of resin D | D2 | D2 | D2 | D2 | D2 | D2 | D2 | D8 | D3 | D10 |
| | Type of resin E | E3 | E3 | E3 | E3 | E3 | E3 | E3 | E3 | E4 | E3 |
| | Type of resin F | F3 | F3 | F3 | F3 | F3 | F3 | F3 | F5 | F4 | F5 |
| | Content of resin D | 30.0 | 30.0 | 30.0 | 30.0 | 30.0 | 30.0 | 30.0 | 31.0 | 24.5 | 30.5 |
| | Content of resin E | 30.0 | 30.0 | 30.0 | 30.0 | 30.0 | 30.0 | 30.0 | 10.0 | 57.0 | 15.0 |
| | Content of resin F | 40.0 | 40.0 | 40.0 | 40.0 | 40.0 | 40.0 | 40.0 | 59.0 | 18.5 | 54.5 |
| Substrate physical properties | Substrate thickness | 10.2 | 10.2 | 10.2 | 9.7 | 9.8 | 10.0 | 9.9 | 10.1 | 10.1 | 10.1 |
| | Substrate porosity | 47 | 47 | 46 | 44 | 46 | 45 | 46 | 45 | 46 | 46 |
| | Substrate air permeability | 129 | 128 | 134 | 133 | 134 | 127 | 133 | 134 | 134 | 134 |
| | Substrate puncture strength | 772 | 784 | 800 | 797 | 786 | 780 | 736 | 792 | 802 | 808 |
| Coating solution | Coating thickness | 0.5 | 0.5 | 0.5 | 0.5 | 0.5 | 0.5 | 0.5 | 0.5 | 0.5 | 0.5 |
| | Type of resin | Acrylic latex | Acrylic latex | Acrylic latex | Acrylic latex | Acrylic latex | Acrylic latex | Acrylic latex | Acrylic latex | Acrylic latex | Acrylic latex |
| | pH of coating solution | 9 | 9 | 9 | 9 | 9 | 9 | 9 | 9 | 9 | 9 |
| | Contact angle of coating solution | 50 | 50 | 50 | 50 | 50 | 50 | 50 | 50 | 50 | 50 |

(continued)

| Coating of thermoplastic polymer-containing layer | | | | | | | | | | | |
|---|---|---|---|---|---|---|---|---|---|---|---|
| Evaluation item | | Example 41-31 | Example 41-32 | Example 41-33 | Example 41-34 | Example 41-35 | Example 41-36 | Example 41-37 | Example 41-38 | Example 41-39 | Example 41-40 |
| X-ray structure analysis | Crystal long period | 37.7 | 36.1 | 38.0 | 37.5 | 36.1 | 37.9 | 36.6 | 35.4 | 33.3 | 36.2 |
| | Crystallinity degree | 67.7 | 69.9 | 70.3 | 67.9 | 68.9 | 68.7 | 67.2 | 70.2 | 72.8 | 69.8 |
| | Amorphous portion thickness | 12 | 11 | 11 | 12 | 11 | 12 | 12 | 11 | 9 | 11 |
| | Crystallite size (110) | 25.4 | 22.4 | 25.2 | 23.0 | 21.8 | 25.8 | 20.5 | 23.3 | 21.1 | 25.3 |
| | Crystallite size ratio (110)/(200) | 1.4 | 1.1 | 1.4 | 1.2 | 1.2 | 1.2 | 1.1 | 1.2 | 1.4 | 1.3 |
| | MD cross-sectional crystal orientation degree | 0.71 | 0.88 | 0.82 | 0.87 | 0.98 | 0.86 | 0.85 | 0.93 | 0.93 | 0.94 |
| | TD cross-sectional crystal orientation degree | 0.87 | 0.75 | 0.89 | 0.82 | 0.86 | 0.97 | 0.68 | 0.92 | 0.91 | 0.92 |
| | MD/TD | 0.82 | 1.17 | 0.92 | 1.06 | 1.10 | 0.89 | 1.25 | 1.02 | 1.02 | 1.01 |
| TOF-SIMS | Voronoi area (mu) | 8.77 | 8.81 | 9.05 | 8.96 | 9.30 | 9.13 | 9.25 | 9.91 | 9.20 | 9.56 |
| | Spread (σ) of the Voronoi area frequency distribution | 3.06 | 3.03 | 3.02 | 2.99 | 3.07 | 3.07 | 3.03 | 1.80 | 4.20 | 2.15 |
| | σ/mu | 0.35 | 0.34 | 0.33 | 0.33 | 0.33 | 0.34 | 0.33 | 0.18 | 0.46 | 0.22 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions CH2 | 2 | 2 | 2 | 2 | 2 | 2 | 2 | 2 | 2 | 2 |
| Confirmation of crosslinking | TMA rupture temperature before coating | 150.7 | 151.5 | 154.2 | 149.1 | 151.3 | 149.4 | 148.3 | 149.2 | 152.3 | 151.2 |
| | TMA rupture temperature after coating | >200 | >200 | >200 | >200 | >200 | >200 | >200 | >200 | 175.7 | >200 |
| | Confirmation of progress of crosslinking reaction in coating step | A | A | A | A | A | A | A | A | B | A |

(continued)

| Coating of thermoplastic polymer-containing layer | | | | | | | | | | | |
|---|---|---|---|---|---|---|---|---|---|---|---|
| Evaluation item | | Example 41-31 | Example 41-32 | Example 41-33 | Example 41-34 | Example 41-35 | Example 41-36 | Example 41-37 | Example 41-38 | Example 41-39 | Example 41-40 |
| Battery evaluation | Collapse test passing rate | 55.4 | 52.9 | 60.7 | 60.4 | 56.8 | 52.5 | 50.1 | 62.3 | 49.3 | 61.0 |
| | Cycle test capacity retention rate | 71.8 | 72.9 | 73.3 | 73.9 | 73.4 | 72.3 | 71.8 | 64.8 | 68.8 | 68.6 |
| | Cycle life | 769 | 784 | 843 | 842 | 782 | 703 | 614 | 610 | 623 | 722 |

[Table 27-5]

| Coating of thermoplastic polymer-containing layer | | | | | | | | | | |
|---|---|---|---|---|---|---|---|---|---|---|
| Evaluation item | | Example 41-41 | Example 41-42 | Example 41-43 | Example 41-44 | Example 41-45 | Example 41-46 | Example 41-47 | Example 41-48 | Example 41-49 |
| Starting material | Type of resin D | D10 | D11 | D5 | D4 | D9 | D7 | D9 | D13 | D14 |
| | Type of resin E | E2 | E2 | E5 | E5 | E4 | E2 | E5 | E3 | E4 |
| | Type of resin F | F3 | F5 | F4 | F2 | F4 | F3 | F2 | F3 | F4 |
| | Content of resin D | 43.5 | 29.5 | 33.5 | 26.5 | 31.0 | 68.0 | 5.0 | 30.0 | 30.0 |
| | Content of resin E | 26.5 | 20.0 | 26.5 | 26.5 | 45.0 | 10.5 | 22.5 | 30.0 | 30.0 |
| | Content of resin F | 30.0 | 50.5 | 40.0 | 47.0 | 24.0 | 21.5 | 72.5 | 40.0 | 40.0 |
| Substrate physical properties | Substrate thickness | 10.2 | 9.8 | 10.1 | 10.1 | 10.0 | 9.9 | 10.1 | 10.1 | 9.9 |
| | Substrate porosity | 44 | 43 | 45 | 47 | 46 | 46 | 44 | 43 | 42 |
| | Substrate air permeability | 133 | 134 | 131 | 121 | 133 | 134 | 134 | 145 | 143 |
| | Substrate puncture strength | 771 | 745 | 782 | 822 | 800 | 808 | 764 | 740 | 720 |
| Coating solution | Coating thickness | 0.5 | 0.5 | 0.5 | 0.5 | 0.5 | 0.5 | 0.5 | 0.5 | 0.5 |
| | Type of resin | Acrylic latex | Acrylic latex | Acrylic latex | Acrylic latex | Acrylic latex | Acrylic latex | Acrylic latex | Acrylic latex | Acrylic latex |
| | pH of coating solution | 9 | 9 | 9 | 9 | 9 | 9 | 9 | 9 | 9 |
| | Contact angle of coating solution | 50 | 50 | 50 | 50 | 50 | 50 | 50 | 50 | 50 |

(continued)

| Coating of thermoplastic polymer-containing layer | | | | | | | | | | |
|---|---|---|---|---|---|---|---|---|---|---|
| Evaluation item | | Example 41-41 | Example 41-42 | Example 41-43 | Example 41-44 | Example 41-45 | Example 41-46 | Example 41-47 | Example 41-48 | Example 41-49 |
| X-ray structure analysis | Crystal long period | 35.7 | 34.9 | 32.5 | 37.3 | 32.6 | 33.1 | 37.6 | 37.4 | 39.0 |
| | Crystallinity degree | 67.8 | 72.1 | 68.7 | 69.4 | 68.5 | 69.5 | 72.7 | 65.0 | 70.0 |
| | Amorphous portion thickness | 11 | 10 | 10 | 11 | 10 | 10 | 10 | 13.09 | 11.7 |
| | Crystallite size (110) | 24.6 | 26.5 | 22.5 | 24.1 | 23.1 | 26.2 | 22.9 | 21.0 | 20.6 |
| | crystallite size ratio (110)/(200) | 1.4 | 1.4 | 1.1 | 1.2 | 1.3 | 1.4 | 1.3 | 1 | 1.1 |
| | MD cross-sectional crystal orientation degree | 0.91 | 0.89 | 0.94 | 0.91 | 0.93 | 0.92 | 0.90 | 0.96 | 0.87 |
| | TD cross-sectional crystal orientation degree | 0.95 | 0.92 | 0.93 | 0.92 | 0.94 | 0.94 | 0.90 | 0.91 | 0.89 |
| | MD/TD | 0.95 | 0.97 | 1.01 | 1.00 | 0.99 | 0.98 | 1.00 | 1.05 | 0.98 |
| TOF-SIMS | Voronoi area (mu) | 6.20 | 9.78 | 8.50 | 11.32 | 9.82 | 5.70 | 12.80 | 8.82 | 8.98 |
| | Spread (σ) of the Voronoi area frequency distribution | 2.81 | 2.67 | 3.24 | 3.07 | 3.90 | 2.68 | 2.96 | 2.98 | 3.08 |
| | σ/mu | 0.45 | 0.21 | 0.38 | 0.27 | 0.40 | 0.47 | 0.23 | 0.34 | 0.34 |
| NMR | C4 unit modification rate | 0.5 | 0.5 | 0.5 | 0.5 | 0.5 | 0.5 | 0.5 | 0.5 | 0.5 |
| | Number of silane-grafted linking portions CH2 | 2 | 2 | 2 | 2 | 2 | 2 | 2 | 8 | 12 |
| Confirmation of crosslinking | TMA rupture temperature before coating | 153.8 | 153.7 | 149.6 | 151.4 | 149.7 | 149.1 | 148.9 | 147.8 | 147.5 |
| | TMA rupture temperature after coating | >200 | >200 | >200 | 179 | 188.2 | >200 | 175.7 | 171.3 | 168.1 |
| | Confirmation of progress of crosslinking reaction in coating step | A | A | A | B | B | A | B | B | B |

(continued)

| Coating of thermoplastic polymer-containing layer | | | | | | | | | | |
|---|---|---|---|---|---|---|---|---|---|---|
| Evaluation item | | Example 41-41 | Example 41-42 | Example 41-43 | Example 41-44 | Example 41-45 | Example 41-46 | Example 41-47 | Example 41-48 | Example 41-49 |
| Battery evaluation | Collapse test passing rate | 57.2 | 59.8 | 50.2 | 50.9 | 50.0 | 58.7 | 56.8 | 50.3 | 39.2 |
| | Cycle test capacity retention rate | 71.9 | 68.5 | 70.9 | 64.3 | 66.1 | 73.1 | 62.3 | 72.2 | 71.2 |
| | Cycle life | 725 | 808 | 753 | 750 | 676 | 625 | 611 | 590 | 571 |

[Table 27-6]

| Coating of thermoplastic polymer-containing layer | | | | | | | | |
|---|---|---|---|---|---|---|---|---|
| Evaluation item | | Comparative Example 12-1 | Comparative Example 12-2 | Comparative Example 12-3 | Comparative Example 12-4 | Comparative Example 12-5 | Comparative Example 12-6 | Comparative Example 12-7 |
| Starting material | Type of resin D | D12 | D8 | D12 | D5 | D6 | D5 | |
| | Type of resin E | E2 | E5 | E2 | E4 | E2 | E5 | E3 |
| | Type of resin F | F4 | F3 | F4 | F3 | F4 | F3 | F3 |
| | Content of resin D | 29.5 | 13.0 | 5.5 | 25.0 | 77.0 | 2.0 | - |
| | Content of resin E | 2.5 | 73.0 | 72.0 | 0.5 | 10.0 | 70.0 | 26.7 |
| | Content of resin F | 68.0 | 14.0 | 22.5 | 74.5 | 13.0 | 28.0 | 73.3 |
| Substrate physical properties | Substrate thickness | 10.3 | 10.3 | 9.9 | 10.0 | 9.8 | 9.7 | 9.8 |
| | Substrate porosity | 45 | 46 | 47 | 46 | 46 | 43 | 47 |
| | Substrate air permeability | 138 | 133 | 133 | 133 | 132 | 140 | 133 |
| | Substrate puncture strength | 800 | 777 | 760 | 750 | 776 | 753 | 824 |
| Coating solution | Coating thickness | 0.5 | 0.5 | 0.5 | 0.5 | 0.5 | 0.5 | 0.5 |
| | Type of resin | Acrylic latex | Acrylic latex | Acrylic latex | Acrylic latex | Acrylic latex | Acrylic latex | Acrylic latex |
| | pH of coating solution | 9 | 9 | 9 | 9 | 9 | 9 | 9 |
| | Contact angle of coating solution | 50 | 50 | 50 | 50 | 50 | 50 | 50 |

(continued)

| Coating of thermoplastic polymer-containing layer | | | | | | | | |
|---|---|---|---|---|---|---|---|---|
| Evaluation item | | Comparative Example 12-1 | Comparative Example 12-2 | Comparative Example 12-3 | Comparative Example 12-4 | Comparative Example 12-5 | Comparative Example 12-6 | Comparative Example 12-7 |
| X-ray structure analysis | Crystal long period | 19.0 | 51.0 | 23.6 | 45.0 | 34.5 | 37.5 | 37.0 |
| | Crystallinity degree | 78.9 | 73.0 | 56.0 | 85.3 | 69.5 | 69.3 | 70.0 |
| | Amorphous portion thickness | 4 | 14 | 10.4 | 6.6 | 11 | 12 | 11 |
| | Crystallite size (110) | 22.2 | 21.2 | 24.8 | 22.4 | 9.0 | 51.0 | 20.5 |
| | Crystallite size ratio (110)/(200) | 1.4 | 1.2 | 1.2 | 1.3 | 1.1 | 1.2 | 1.2 |
| | MD cross-sectional crystal orientation degree | 0.89 | 0.94 | 0.93 | 0.90 | 0.92 | 0.95 | 0.90 |
| | TD cross-sectional crystal orientation degree | 0.93 | 0.95 | 0.89 | 0.90 | 0.90 | 0.91 | 0.94 |
| | MD/TD | 0.96 | 0.98 | 1.04 | 1.00 | 1.02 | 1.05 | 0.95 |
| TOF-SIMS | Voronoi area (mu) | 8.73 | 8.75 | 9.13 | 9.01 | 9.01 | 9.01 | 9.08 |
| | Spread (σ) of the Voronoi area frequency distribution | 2.93 | 3.04 | 3.04 | 3.07 | 2.96 | 2.91 | 3.02 |
| | σ/mu | 0.34 | 0.35 | 0.33 | 0.34 | 0.33 | 0.32 | 0.33 |
| NMR | C4 unit modification rate | 0.5 | 0.5 | 0.5 | 0.5 | 0.5 | 0.5 | 0.5 |
| | Number of silane-grafted linking portions CH2 | 2 | 2 | 2 | 2 | 2 | 2 | 2 |

(continued)

| Coating of thermoplastic polymer-containing layer | | | | | | | | |
|---|---|---|---|---|---|---|---|---|
| Evaluation item | | Comparative Example 12-1 | Comparative Example 12-2 | Comparative Example 12-3 | Comparative Example 12-4 | Comparative Example 12-5 | Comparative Example 12-6 | Comparative Example 12-7 |
| Confirmation of crosslinking | TMA rupture temperature before coating | 150.9 | 151.7 | 148.2 | 148.8 | 148.3 | 151.0 | 151.6 |
| | TMA rupture temperature after coating | 167.4 | 167.9 | 167.5 | 167.9 | >200 | >200 | 169.0 |
| | Confirmation of progress of crosslinking reaction in coating step | C | C | C | C | A | A | C |
| Battery evaluation | Collapse test passing rate | 8.4 | 8.5 | 9.9 | 9.6 | 7.5 | 7.7 | 13.4 |
| | Cycle test capacity retention rate | 36.8 | 31.7 | 25.4 | 27.7 | 63.5 | 32.6 | 35.0 |
| | Cycle life | 392 | 403 | 381 | 359 | 413 | 384 | 377 |

<Confirmation of Crosslinking by Coating Active Layer on Separator Substrate>

[Example 42-1]

The same operation as in Example 40-1 was carried out, except for changing the fabrication conditions of the polyolefin microporous membrane, etc., as shown in Table 28, a separator substrate composed of a polyolefin microporous membrane was obtained.

Next, as shown in Table 28, commercially available PVDF-HFP was prepared as the fluorine-based resin. Further, 95 parts by weight of aluminum hydroxide oxide (average particle size of 1.4 μm) as the inorganic particles, PVDF-HFP and N-methyl-2-pyrrolidone (NMP) as the organic solvent were mixed to prepare a coating solution having an organic solvent concentration shown in Table 28.

Further, in the same manner as in Example 40-1, a separator substrate was coated with the coating solution using a gravure reverse coater, followed by water washing and further drying, a multilayer separator having a coating thickness as shown in Table 28 was obtained. The progress of the crosslinking reaction in the coating step was confirmed from the comparison of the TMA rupture temperatures before and after coating. The multilayer separator thus obtained was subjected to various evaluations according to the evaluation method described above. The evaluation results are also shown in Table 28.

Further, using the multilayer separator, a nonaqueous secondary battery was fabricated according to the method for fabricating a battery described above, and the battery was evaluated. The evaluation results of the battery is also shown in Table 28.

[Example 42-2 to Example 42-43, Comparative Example 13-1 to Comparative Example 13-7]

The same operation as in Example 42-1 was carried out, except for changing the resin composition and the molecular weight mixed composition of the polyolefin microporous membrane, the fabrication conditions, the substrate properties, the type of the fluorine-based resin, the composition and physical properties of the coating solution, etc., as shown in Table 28, separator substrates composed of a polyolefin microporous membrane and multilayer separators coated with an active layer were obtained. The separator substrates and multilayer separators thus obtained were subjected to various evaluations according to the above evaluation method. The evaluation results are also shown in Table 28.

Further, using multilayer separators coated with an active layer, nonaqueous secondary batteries were obtained. The batteries thus obtained were subjected to various evaluations according to the above evaluation method. The evaluation results are also shown in Table 28.

[Table 28-1]

| Coating of active layer | | | | | | | | | | | |
|---|---|---|---|---|---|---|---|---|---|---|---|
| Evaluation item | | Example 42-1 | Example 42-2 | Example 42-3 | Example 42-4 | Example 42-5 | Example 42-6 | Example 42-7 | Example 42-8 | Example 42-9 | Example 42-10 |
| Starting material | Type of resin D | D2 | D2 | D2 | D2 | D2 | D2 | D2 | D2 | D11 | D1 |
| | Type of resin E | E3 | E3 | E3 | E3 | E3 | E3 | E3 | E3 | E3 | E2 |
| | Type of resin F | F3 | F3 | F3 | F3 | F3 | F3 | F3 | F3 | F4 | F5 |
| | Content of resin D | 30.0 | 30.0 | 30.0 | 30.0 | 30.0 | 30.0 | 30.0 | 30.0 | 30.0 | 30.5 |
| | Content of resin E | 30.0 | 30.0 | 30.0 | 30.0 | 30.0 | 30.0 | 30.0 | 30.0 | 5.5 | 17.0 |
| | Content of resin F | 40.0 | 40.0 | 40.0 | 40.0 | 40.0 | 40.0 | 40.0 | 40.0 | 64.5 | 52.5 |
| Substrate physical properties | Substrate thickness | 10.3 | 10.2 | 10.1 | 9.9 | 10.1 | 9.8 | 9.8 | 9.9 | 9.9 | 9.9 |
| | Substrate porosity | 45 | 45 | 43 | 45 | 47 | 44 | 44 | 47 | 45 | 46 |
| | Substrate air permeability | 142 | 142 | 143 | 140 | 143 | 141 | 144 | 140 | 136 | 135 |
| | Substrate puncture strength | 779 | 780 | 750 | 776 | 818 | 757 | 771 | 818 | 807 | 813 |
| Coating solution | Coating thickness | 3 | 3 | 3 | 3 | 3 | 3 | 3 | 3 | 4 | 4 |
| | Type of resin | PVDF -HFP | PVDF | PVDF -HFP | PVDF -HFP | PVDF -HFP | PVDF -HFP | PVDF -HFP | PVDF -HFP | PVDF -HFP | PVDF -HFP |
| | Organic solvent concentration | 80 | 80 | 71 | 95 | 65 | 97 | 65 | 99 | 80 | 80 |

(continued)

| Coating of active layer | | | | | | | | | | | |
|---|---|---|---|---|---|---|---|---|---|---|---|
| Evaluation item | | Example 42-1 | Example 42-2 | Example 42-3 | Example 42-4 | Example 42-5 | Example 42-6 | Example 42-7 | Example 42-8 | Example 42-9 | Example 42-10 |
| X-ray structure analysis | Crystal long period | 32.3 | 34.1 | 35.5 | 32.3 | 36.9 | 38.0 | 37.6 | 34.1 | 21.0 | 32.0 |
| | Crystallinity degree | 69.1 | 67.4 | 70.1 | 72.6 | 71.3 | 70.1 | 68.6 | 70.3 | 71.0 | 73.7 |
| | Amorphous portion thickness | 10 | 11 | 11 | 9 | 11 | 11 | 12 | 10 | 6 | 8 |
| | Crystallite size (110) | 25.3 | 22.9 | 20.9 | 25.6 | 21.8 | 21.0 | 23.6 | 24.1 | 26.4 | 21.1 |
| | Crystallite size ratio (110)/(200) | 1.1 | 1.4 | 1.3 | 1.3 | 1.4 | 1.4 | 1.2 | 1.3 | 1.1 | 1.3 |
| | MD cross-sectional crystal orientation degree | 0.95 | 0.92 | 0.95 | 0.90 | 0.94 | 0.93 | 0.93 | 0.89 | 0.94 | 0.90 |
| | TD cross-sectional crystal orientation degree | 0.92 | 0.90 | 0.95 | 0.91 | 0.90 | 0.94 | 0.93 | 0.95 | 0.91 | 0.93 |
| | MD/TD | 1.03 | 1.02 | 1.00 | 0.99 | 1.04 | 1.00 | 1.00 | 0.94 | 1.03 | 0.97 |
| TOF-SIMS | Voronoi area (mu) | 9.13 | 9.10 | 8.84 | 9.15 | 8.86 | 9.03 | 9.28 | 8.83 | 8.91 | 9.26 |
| | Spread ($\sigma$) of the Voronoi area frequency distribution | 3.07 | 2.97 | 2.97 | 3.01 | 3.00 | 2.97 | 2.96 | 3.10 | 2.93 | 3.08 |
| | $\sigma$/mu | 0.34 | 0.33 | 0.34 | 0.33 | 0.34 | 0.33 | 0.32 | 0.35 | 0.33 | 0.33 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions ($CH_2$) | 2 | 2 | 2 | 2 | 2 | 2 | 2 | 2 | 2 | 2 |

(continued)

| Coating of active layer | | | | | | | | | | | |
|---|---|---|---|---|---|---|---|---|---|---|---|
| Evaluation item | | Example 42-1 | Example 42-2 | Example 42-3 | Example 42-4 | Example 42-5 | Example 42-6 | Example 42-7 | Example 42-8 | Example 42-9 | Example 42-10 |
| Confirmation of crosslinking | TMA rupture temperature before coating | 148.8 | 151.4 | 153.8 | 149.0 | 150.1 | 150.9 | 149.0 | 150.8 | 151.1 | 152.7 |
| | TMA rupture temperature after coating | >200 | >200 | >200 | >200 | >200 | >200 | 193 | 193.8 | >200 | >200 |
| | Confirmation of progress of crosslinking reaction in coating step | A | A | A | A | A | A | B | B | A | A |
| Battery evaluation | Collapse test passing rate | 77.7 | 82.6 | 76.0 | 76.7 | 74.8 | 76.0 | 74.8 | 73.0 | 82.0 | 81.1 |
| | Cycle test capacity retention rate | 68.6 | 66.4 | 65.9 | 61.8 | 60.1 | 59.6 | 53.7 | 49.3 | 68.5 | 76.0 |
| | Cycle life | 950 | 915 | 931 | 934 | 919 | 915 | 901 | 900 | 862 | 910 |

[Table 28-2]

| Coating of active layer | | | | | | | | | | | |
|---|---|---|---|---|---|---|---|---|---|---|---|
| Evaluation item | | Example 42-11 | Example 42-12 | Example 42-13 | Example 42-14 | Example 42-15 | Example 42-16 | Example 42-17 | Example 42-18 | Example 42-19 | Example 42-20 |
| Starting material | Type of resin D | D7 | D7 | D5 | D5 | D2 | D6 | D1 | D3 | D5 | D1 |
| | Type of resin E | E2 | E5 | E3 | E3 | E4 | E3 | E3 | E4 | E4 | E4 |
| | Type of resin F | F5 | F3 | F3 | F5 | F5 | F4 | F5 | F3 | F2 | F2 |
| | Content of resin D | 20.0 | 20.0 | 15.0 | 14.5 | 68.0 | 55.0 | 22.0 | 8.0 | 23.0 | 30.0 |
| | Content of resin E | 50.0 | 67.0 | 45.0 | 32.0 | 17.0 | 27.0 | 52.0 | 62.0 | 20.0 | 25.0 |
| | Content of resin F | 30.0 | 13.0 | 40.0 | 53.5 | 15.0 | 18.0 | 26.0 | 30.0 | 57.0 | 45.0 |
| Substrate physical properties | Substrate thickness | 9.7 | 9.9 | 10.2 | 10.3 | 10.2 | 9.8 | 10.0 | 9.9 | 9.7 | 9.8 |
| | Substrate porosity | 47 | 48 | 44 | 45 | 45 | 46 | 45 | 44 | 43 | 46 |
| | Substrate air permeability | 133 | 133 | 135 | 135 | 136 | 135 | 135 | 138 | 132 | 136 |
| | Substrate puncture strength | 810 | 790 | 763 | 773 | 780 | 778 | 754 | 756 | 775 | 785 |
| Coating solution | Coating thickness | 4 | 4 | 4 | 4 | 4 | 4 | 4 | 4 | 4 | 4 |
| | Type of resin | PVDF -HFP | PVDF -HFP | PVDF -HFP | PVDF -HFP | PVDF -HFP | PVDF -HFP | PVDF -HFP | PVDF -HFP | PVDF -HFP | PVDF -HFP |
| | Organic solvent concentration | 80 | 80 | 80 | 80 | 80 | 80 | 80 | 80 | 80 | 80 |

(continued)

| Coating of active layer | | | | | | | | | | | |
|---|---|---|---|---|---|---|---|---|---|---|---|
| Evaluation item | | Example 42-11 | Example 42-12 | Example 42-13 | Example 42-14 | Example 42-15 | Example 42-16 | Example 42-17 | Example 42-18 | Example 42-19 | Example 42-20 |
| X-ray structure analysis | Crystal long period | 39.0 | 48.0 | 35.0 | 37.0 | 32.9 | 37.3 | 32.1 | 33.0 | 32.2 | 32.4 |
| | Crystallinity degree | 65.7 | 71.3 | 78.2 | 61.0 | 68.2 | 67.7 | 68.3 | 72.5 | 68.0 | 71.1 |
| | Amorphous portion thickness | 13 | 14 | 8 | 14 | 10 | 12 | 10 | 9 | 10 | 9 |
| | Crystallite size (110) | 26.2 | 23.5 | 25.0 | 21.3 | 11.0 | 15.0 | 35.0 | 48.0 | 25.6 | 25.5 |
| | Crystallite size ratio (110)/(200) | 1.1 | 1.2 | 1.4 | 1.1 | 1.3 | 1.1 | 1.1 | 1.4 | 0.8 | 1.0 |
| | MD cross-sectional crystal orientation degree | 0.90 | 0.93 | 0.94 | 0.94 | 0.95 | 0.90 | 0.94 | 0.95 | 0.92 | 0.91 |
| | TD cross-sectional crystal orientation degree | 0.92 | 0.90 | 0.93 | 0.93 | 0.94 | 0.94 | 0.93 | 0.95 | 0.93 | 0.92 |
| | MD/TD | 0.98 | 1.02 | 1.01 | 1.01 | 1.01 | 0.96 | 1.01 | 1.00 | 0.99 | 0.99 |
| TOF-SIMS | Voronoi area (mu) | 8.71 | 9.19 | 9.05 | 8.72 | 9.05 | 8.95 | 9.09 | 8.83 | 9.04 | 8.93 |
| | Spread (σ) of the Voronoi area frequency distribution | 3.07 | 3.06 | 3.09 | 3.05 | 2.96 | 3.07 | 3.09 | 2.99 | 3.02 | 3.05 |
| | σ/mu | 0.35 | 0.33 | 0.34 | 0.35 | 0.33 | 0.34 | 0.34 | 0.34 | 0.33 | 0.34 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions ($CH_2$) | 2 | 2 | 2 | 2 | 2 | 2 | 2 | 2 | 2 | 2 |

(continued)

| Coating of active layer | | | | | | | | | | | |
|---|---|---|---|---|---|---|---|---|---|---|---|
| Evaluation item | | Example 42-11 | Example 42-12 | Example 42-13 | Example 42-14 | Example 42-15 | Example 42-16 | Example 42-17 | Example 42-18 | Example 42-19 | Example 42-20 |
| Confirmation of crosslinking | TMA rupture temperature before coating | 152.4 | 151.0 | 150.7 | 149.2 | 149.2 | 149.7 | 151.7 | 152.9 | 152.4 | 152.5 |
| | TMA rupture temperature after coating | >200 | >200 | >200 | >200 | >200 | >200 | >200 | >200 | >200 | >200 |
| | Confirmation of progress of crosslinking reaction in coating step | A | A | A | A | A | A | A | A | A | A |
| Battery evaluation | Collapse test passing rate | 73.5 | 68.0 | 77.6 | 79.7 | 68.7 | 78.8 | 77.7 | 66.1 | 77.5 | 80.8 |
| | Cycle test capacity retention rate | 79.3 | 81.0 | 62.3 | 61.1 | 71.8 | 66.4 | 62.2 | 59.8 | 71.5 | 71.5 |
| | Cycle life | 907 | 873 | 893 | 893 | 931 | 943 | 943 | 931 | 833 | 941 |

[Table 28-3]

| Coating of active layer | | | | | | | | | | | |
|---|---|---|---|---|---|---|---|---|---|---|---|
| Evaluation item | | Example 42-21 | Example 42-22 | Example 42-23 | Example 42-24 | Example 42-25 | Example 42-26 | Example 42-27 | Example 42-28 | Example 42-29 | Example 42-30 |
| Starting material | Type of resin D | D3 | D1 | D1 | D2 | D2 | D2 | D2 | D2 | D2 | D2 |
| | Type of resin E | E2 | E3 | E3 | E3 | E3 | E3 | E3 | E3 | E3 | E3 |
| | Type of resin F | F2 | F2 | F2 | F3 | F3 | F3 | F3 | F3 | F3 | F3 |
| | Content of resin D | 27.0 | 35.5 | 39.0 | 30.0 | 30.0 | 30.0 | 30.0 | 30.0 | 30.0 | 30.0 |
| | Content of resin E | 20.0 | 26.5 | 29.0 | 30.0 | 30.0 | 30.0 | 30.0 | 30.0 | 30.0 | 30.0 |
| | Content of resin F | 53.0 | 38.0 | 32.0 | 40.0 | 40.0 | 40.0 | 40.0 | 40.0 | 40.0 | 40.0 |
| Substrate physical properties | Substrate thickness | 10.0 | 10.2 | 10.2 | 9.9 | 10.2 | 10.2 | 10.2 | 9.7 | 9.8 | 10.0 |
| | Substrate porosity | 45 | 44 | 45 | 47 | 47 | 47 | 46 | 44 | 46 | 45 |
| | Substrate air permeability | 129 | 134 | 128 | 123 | 129 | 128 | 134 | 133 | 134 | 127 |
| | Substrate puncture strength | 780 | 773 | 770 | 734 | 772 | 784 | 800 | 797 | 786 | 780 |
| Coating solution | Coating thickness | 4 | 4 | 4 | 4 | 4 | 4 | 4 | 4 | 4 | 4 |
| | Type of resin | PVDF -HFP | PVDF -HFP | PVDF -HFP | PVDF -HFP | PVDF -HFP | PVDF -HFP | PVDF -HFP | PVDF -HFP | PVDF -HFP | PVDF -HFP |
| | Organic solvent concentration | 80 | 80 | 80 | 80 | 80 | 80 | 80 | 80 | 80 | 80 |

(continued)

| Coating of active layer | | | | | | | | | | | |
|---|---|---|---|---|---|---|---|---|---|---|---|
| | Evaluation item | Example 42-21 | Example 42-22 | Example 42-23 | Example 42-24 | Example 42-25 | Example 42-26 | Example 42-27 | Example 42-28 | Example 42-29 | Example 42-30 |
| X-ray structure analysis | Crystal long period | 32.4 | 36.0 | 34.5 | 37.8 | 37.7 | 36.1 | 38.0 | 37.5 | 36.1 | 37.9 |
| | Crystallinity degree | 68.1 | 69.6 | 69.0 | 68.5 | 67.7 | 69.9 | 70.3 | 67.9 | 68.9 | 68.7 |
| | Amorphous portion thickness | 10 | 11 | 11 | 12 | 12 | 11 | 11 | 12 | 11 | 12 |
| | Crystallite size (110) | 25.6 | 24.8 | 21.3 | 25.1 | 25.4 | 22.4 | 25.2 | 23.0 | 21.8 | 25.8 |
| | Crystallite size ratio (110)/(200) | 1.5 | 1.9 | 2.1 | 1.2 | 1.4 | 1.1 | 1.4 | 1.2 | 1.2 | 1.2 |
| | MD cross-sectional crystal orientation degree | 0.90 | 0.94 | 0.95 | 0.69 | 0.71 | 0.88 | 0.82 | 0.87 | 0.98 | 0.86 |
| | TD cross-sectional crystal orientation degree | 0.92 | 0.92 | 0.94 | 0.89 | 0.87 | 0.75 | 0.89 | 0.82 | 0.86 | 0.97 |
| | MD/TD | 0.98 | 1.02 | 1.01 | 0.78 | 0.82 | 1.17 | 0.92 | 1.06 | 1.10 | 0.89 |
| TOF-SIMS | Voronoi area (mu) | 9.30 | 9.07 | 9.21 | 9.00 | 8.77 | 8.81 | 9.05 | 8.96 | 9.30 | 9.13 |
| | Spread (σ) of the Voronoi area frequency distribution | 2.95 | 3.00 | 2.91 | 3.09 | 3.06 | 3.03 | 3.02 | 2.99 | 3.07 | 3.07 |
| | σ/mu | 0.32 | 0.33 | 0.32 | 0.34 | 0.35 | 0.34 | 0.33 | 0.33 | 0.33 | 0.34 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions ($CH_2$) | 2 | 2 | 2 | 2 | 2 | 2 | 2 | 2 | 2 | 2 |

(continued)

| Coating of active layer | | | | | | | | | | | |
|---|---|---|---|---|---|---|---|---|---|---|---|
| Evaluation item | | Example 42-21 | Example 42-22 | Example 42-23 | Example 42-24 | Example 42-25 | Example 42-26 | Example 42-27 | Example 42-28 | Example 42-29 | Example 42-30 |
| Confirmation of crosslinking | TMA rupture temperature before coating | 152.6 | 149.1 | 149.5 | 148.0 | 150.7 | 151.5 | 154.2 | 149.1 | 151.3 | 149.4 |
| | TMA rupture temperature after coating | >200 | >200 | >200 | >200 | >200 | >200 | >200 | >200 | >200 | >200 |
| | Confirmation of progress of crosslinking reaction in coating step | A | A | A | A | A | A | A | A | A | A |
| Battery evaluation | Collapse test passing rate | 81.8 | 79.9 | 74.3 | 65.9 | 72.4 | 69.9 | 77.7 | 77.4 | 73.8 | 69.5 |
| | Cycle test capacity retention rate | 69.7 | 69.5 | 71.5 | 69.9 | 70.8 | 71.9 | 72.3 | 72.9 | 72.4 | 71.3 |
| | Cycle life | 939 | 932 | 830 | 708 | 849 | 864 | 923 | 922 | 862 | 783 |

[Table 28-4]

| Coating of active layer | | | | | | | | | | | |
|---|---|---|---|---|---|---|---|---|---|---|---|
| Evaluation item | | Example 42-31 | Example 42-32 | Example 42-33 | Example 42-34 | Example 42-35 | Example 42-36 | Example 42-37 | Example 42-38 | Example 42-39 | Example 42-40 |
| Starting material | Type of resin D | D2 | D8 | D3 | D10 | D10 | D11 | D5 | D4 | D9 | D7 |
| | Type of resin E | E3 | E3 | E4 | E3 | E2 | E2 | E5 | E5 | E4 | E2 |
| | Type of resin F | F3 | F5 | F4 | F5 | F3 | F5 | F4 | F2 | F4 | F3 |
| | Content of resin D | 30.0 | 31.0 | 24.5 | 30.5 | 43.5 | 29.5 | 33.5 | 26.5 | 31.0 | 68.0 |
| | Content of resin E | 30.0 | 10.0 | 57.0 | 15.0 | 26.5 | 20.0 | 26.5 | 26.5 | 45.0 | 10.5 |
| | Content of resin F | 40.0 | 59.0 | 18.5 | 54.5 | 30.0 | 50.5 | 40.0 | 47.0 | 24.0 | 21.5 |
| Substrate physical properties | Substrate thickness | 9.9 | 10.1 | 10.1 | 10.1 | 10.2 | 9.8 | 10.1 | 10.1 | 10.0 | 9.9 |
| | Substrate porosity | 46 | 45 | 46 | 46 | 44 | 43 | 45 | 47 | 46 | 46 |
| | Substrate air permeability | 133 | 134 | 134 | 134 | 133 | 134 | 131 | 121 | 133 | 134 |
| | Substrate puncture strength | 736 | 792 | 802 | 808 | 771 | 745 | 782 | 822 | 800 | 808 |
| Coating solution | Coating thickness | 4 | 4 | 4 | 4 | 4 | 4 | 4 | 4 | 4 | 4 |
| | Type of resin | PVDF -HFP | PVDF -HFP | PVDF -HFP | PVDF -HFP | PVDF -HFP | PVDF -HFP | PVDF -HFP | PVDF -HFP | PVDF -HFP | PVDF -HFP |
| | Organic solvent concentration | 80 | 80 | 80 | 80 | 80 | 80 | 80 | 80 | 80 | 80 |

(continued)

| Coating of active layer | | | | | | | | | | | |
|---|---|---|---|---|---|---|---|---|---|---|---|
| Evaluation item | | Example 42-31 | Example 42-32 | Example 42-33 | Example 42-34 | Example 42-35 | Example 42-36 | Example 42-37 | Example 42-38 | Example 42-39 | Example 42-40 |
| X-ray structure analysis | Crystal long period | 36.6 | 35.4 | 33.3 | 36.2 | 35.7 | 34.9 | 32.5 | 37.3 | 32.6 | 33.1 |
| | Crystallinity degree | 67.2 | 70.2 | 72.8 | 69.8 | 67.8 | 72.1 | 68.7 | 69.4 | 68.5 | 69.5 |
| | Amorphous portion thickness | 12 | 11 | 9 | 11 | 11 | 10 | 10 | 11 | 10 | 10 |
| | Crystallite size (110) | 20.5 | 23.3 | 21.1 | 25.3 | 24.6 | 26.5 | 22.5 | 24.1 | 23.1 | 26.2 |
| | Crystallite size ratio (110)/(200) | 1.1 | 1.2 | 1.4 | 1.3 | 1.4 | 1.4 | 1.1 | 1.2 | 1.3 | 1.4 |
| | MD cross-sectional crystal orientation degree | 0.85 | 0.93 | 0.93 | 0.94 | 0.91 | 0.89 | 0.94 | 0.91 | 0.93 | 0.92 |
| | TD cross-sectional crystal orientation degree | 0.68 | 0.92 | 0.91 | 0.92 | 0.95 | 0.92 | 0.93 | 0.92 | 0.94 | 0.94 |
| | MD/TD | 1.25 | 1.02 | 1.02 | 1.01 | 0.95 | 0.97 | 1.01 | 1.00 | 0.99 | 0.98 |
| TOF-SIMS | Voronoi area (mu) | 9.25 | 9.91 | 9.20 | 9.56 | 6.20 | 9.78 | 8.50 | 11.32 | 9.82 | 5.70 |
| | Spread (σ) of the Voronoi area frequency distribution | 3.03 | 1.80 | 4.20 | 2.15 | 2.81 | 2.67 | 3.24 | 3.07 | 3.90 | 2.68 |
| | σ/mu | 0.33 | 0.18 | 0.46 | 0.22 | 0.45 | 0.21 | 0.38 | 0.27 | 0.40 | 0.47 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions ($CH_2$) | 2 | 2 | 2 | 2 | 2 | 2 | 2 | 2 | 2 | 2 |

(continued)

| Coating of active layer | | | | | | | | | | | |
|---|---|---|---|---|---|---|---|---|---|---|---|
| Evaluation item | | Example 42-31 | Example 42-32 | Example 42-33 | Example 42-34 | Example 42-35 | Example 42-36 | Example 42-37 | Example 42-38 | Example 42-39 | Example 42-40 |
| Confirmation of crosslinking | TMA rupture temperature before coating | 148.3 | 149.2 | 152.3 | 151.2 | 153.8 | 153.7 | 149.6 | 151.4 | 149.7 | 149.1 |
| | TMA rupture temperature after coating | >200 | >200 | 195.7 | >200 | >200 | >200 | >200 | 194 | 199.2 | >200 |
| | Confirmation of progress of crosslinking reaction in coating step | A | A | B | A | A | A | A | B | B | A |
| Battery evaluation | Collapse test passing rate | 67.1 | 79.3 | 66.3 | 78.0 | 74.2 | 76.8 | 67.2 | 67.9 | 67.0 | 75.7 |
| | Cycle test capacity retention rate | 70.8 | 63.8 | 67.8 | 67.6 | 70.9 | 67.5 | 69.9 | 63.3 | 65.1 | 72.1 |
| | Cycle life | 694 | 690 | 703 | 802 | 805 | 888 | 833 | 830 | 756 | 705 |

[Table 28-5]

| Coating of active layer | | | | |
|---|---|---|---|---|
| Evaluation item | | Example 42-41 | Example 42-42 | Example 42-43 |
| Starting material | Type of resin D | D9 | D13 | D14 |
| | Type of resin E | E5 | E3 | E4 |
| | Type of resin F | F2 | F3 | F4 |
| | Content of resin D | 5.0 | 30.0 | 30.0 |
| | Content of resin E | 22.5 | 30.0 | 30.0 |
| | Content of resin F | 72.5 | 40.0 | 40.0 |
| Substrate physical properties | Substrate thickness | 10.1 | 10.1 | 9.9 |
| | Substrate porosity | 44 | 43 | 42 |
| | Substrate air permeability | 134 | 145 | 143 |
| | Substrate puncture strength | 764 | 740 | 720 |
| Coating solution | Coating thickness | 4 | 5 | 6 |
| | Type of resin | PVDF -HFP | PVDF -HFP | PVDF -HFP |
| | Organic solvent concentration | 80 | 81 | 82 |
| X-ray structure analysis | Crystal long period | 37.6 | 37.4 | 39.0 |
| | Crystallinity degree | 72.7 | 65.0 | 70.0 |
| | Amorphous portion thickness | 10 | 13.09 | 11.7 |
| | Crystallite size (110) | 22.9 | 21.0 | 20.6 |
| | Crystallite size ratio (110)/(200) | 1.3 | 1 | 1.1 |
| | MD cross-sectional crystal orientation degree | 0.90 | 0.96 | 0.87 |
| | TD cross-sectional crystal orientation degree | 0.90 | 0.91 | 0.89 |
| | MD/TD | 1.00 | 1.05 | 0.98 |
| TOF-SIMS | Voronoi area (mu) | 12.80 | 8.82 | 8.98 |
| | Spread ($\sigma$) of the Voronoi area frequency distribution | 2.96 | 2.98 | 3.08 |
| | $\sigma$/mu | 0.23 | 0.34 | 0.34 |
| NMR | C4 unit modification rate | 0.5 | 0.5 | 0.5 |
| | Number of silane-grafted linking portions ($CH_2$) | 2 | 8 | 12 |
| Confirmation of crosslinking | TMA rupture temperature before coating | 148.9 | 147.8 | 147.5 |
| | TMA rupture temperature after coating | 195.7 | 188.3 | 184.1 |
| | Confirmation of progress of crosslinking reaction in coating step | B | B | B |
| Battery evaluation | Collapse test passing rate | 73.8 | 67.3 | 56.2 |
| | Cycle test capacity retention rate | 61.3 | 71.2 | 70.2 |
| | Cycle life | 691 | 830 | 811 |

[Table 28-6]

| Coating of active layer | | | | | | | | |
|---|---|---|---|---|---|---|---|---|
| Evaluation item | | Comparative Example 13-1 | Comparative Example 13-2 | Comparative Example 13-3 | Comparative Example 13-4 | Comparative Example 13-5 | Comparative Example 13-6 | Comparative Example 13-7 |
| Starting material | Type of resin D | D12 | D8 | D12 | D5 | D6 | D5 | - |
| | Type of resin E | E2 | E5 | E2 | E4 | E2 | E5 | E3 |
| | Type of resin F | F4 | F3 | F4 | F3 | F4 | F3 | F3 |
| | Content of resin D | 29.5 | 13.0 | 5.5 | 25.0 | 77.0 | 2.0 | - |
| | Content of resin E | 2.5 | 73.0 | 72.0 | 0.5 | 10.0 | 70.0 | 26.7 |
| | Content of resin F | 68.0 | 14.0 | 22.5 | 74.5 | 13.0 | 28.0 | 73.3 |
| Substrate physical properties | Substrate thickness | 10.3 | 10.3 | 9.9 | 10.0 | 9.8 | 9.7 | 9.8 |
| | Substrate porosity | 45 | 46 | 47 | 46 | 46 | 43 | 47 |
| | Substrate air permeability | 138 | 133 | 133 | 133 | 132 | 140 | 133 |
| | Substrate puncture strength | 800 | 777 | 760 | 750 | 776 | 753 | 824 |
| | Coating thickness | 3 | 3 | 3 | 3 | 3 | 3 | 3 |
| Coating solution | Type of resin | PVDF -HFP | PVDF -HFP | PVDF -HFP | PVDF -HFP | PVDF -HFP | PVDF -HFP | PVDF -HFP |
| | Organic solvent concentration | 80 | 80 | 80 | 80 | 80 | 80 | 80 |

(continued)

| Coating of active layer | | | | | | | | |
|---|---|---|---|---|---|---|---|---|
| Evaluation item | | Comparative Example 13-1 | Comparative Example 13-2 | Comparative Example 13-3 | Comparative Example 13-4 | Comparative Example 13-5 | Comparative Example 13-6 | Comparative Example 13-7 |
| X-ray structure analysis | Crystal long period | 19.0 | 51.0 | 23.6 | 45.0 | 34.5 | 37.5 | 37.0 |
| | Crvstallinitv degree | 78.9 | 73.0 | 56.0 | 85.3 | 69.5 | 69.3 | 70.0 |
| | Amorphous portion thickness | 4 | 14 | 10.4 | 6.6 | 11 | 12 | 11 |
| | Crvstallite size (110) | 22.2 | 21.2 | 24.8 | 22.4 | 9.0 | 51.0 | 20.5 |
| | Crystallite size ratio (110)/(200) | 1.4 | 1.2 | 1.2 | 1.3 | 1.1 | 1.2 | 1.2 |
| | MD cross-sectional crystal orientation degree | 0.89 | 0.94 | 0.93 | 0.90 | 0.92 | 0.95 | 0.90 |
| | TD cross-sectional crystal orientation degree | 0.93 | 0.95 | 0.89 | 0.90 | 0.90 | 0.91 | 0.94 |
| | MD/TD | 0.96 | 0.98 | 1.04 | 1.00 | 1.02 | 1.05 | 0.95 |
| TOF-SIMS | Voronoi area (mu) | 8.73 | 8.75 | 9.13 | 9.01 | 9.01 | 9.01 | 9.08 |
| | Spread ($\sigma$) of the Voronoi area frequency distribution | 2.93 | 3.04 | 3.04 | 3.07 | 2.96 | 2.91 | 3.02 |
| | $\sigma$/mu | 0.34 | 0.35 | 0.33 | 0.34 | 0.33 | 0.32 | 0.33 |
| NMR | C4 unit modification rate | 0.5 | 0.5 | 0.5 | 0.5 | 0.5 | 0.5 | 0.5 |
| | Number of silane-grafted linking portions ($CH_2$) | 2 | 2 | 2 | 2 | 2 | 2 | 2 |

(continued)

| Coating of active layer | | | | | | | | |
|---|---|---|---|---|---|---|---|---|
| Evaluation item | | Comparative Example 13-1 | Comparative Example 13-2 | Comparative Example 13-3 | Comparative Example 13-4 | Comparative Example 13-5 | Comparative Example 13-6 | Comparative Example 13-7 |
| Confirmation of crosslinking | TMA rupture temperature before coating | 150.9 | 151.7 | 148.2 | 148.8 | 148.3 | 151.0 | 151.6 |
| | TMA rupture temperature after coating | 172.8 | 173.3 | 172.9 | 173.3 | >200 | >200 | 174.4 |
| | Confirmation of progress of crosslinking reaction in coating step | C | C | C | C | A | A | C |
| Battery evaluation | Collapse test passing rate | 25.6 | 24.0 | 26.7 | 25.4 | 26.0 | 25.7 | 27.6 |
| | Cycle test capacity retention rate | 34.7 | 27.0 | 23.9 | 25.1 | 59.8 | 28.5 | 34.8 |
| | Cycle life | 340 | 316 | 305 | 317 | 314 | 300 | 306 |

<Confirmation of Crosslinking by Coating Heat-Resistant Resin Layer on Separator Substrate>

[Example 43-1]

The same operation as in Example 40-1 was carried out, except for changing the fabrication conditions of the polyolefin microporous membrane, etc., as shown in Table 29, a separator substrate composed of a polyolefin microporous membrane was obtained.

Next, as shown in Table 29, an inorganic filler having a predetermined inorganic particle size was prepared and was mixed with a para-aromatic aramid or a meta-aromatic aramid-containing coating solution so as to have a predetermined inorganic particle weight ratio and organic solvent concentration.

(In the case of Para-Aromatic Aramid)

To 5,000 parts by weight of N-methyl-2-pyrrolidone (NMP)/calcium chloride solution (calcium chloride concentration =7.1% by weight), 150 parts by weight of p-phenylenediamine was added, followed by dissolving with stirring in an $N_2$ atmosphere, followed by the addition of 273.94 parts by weight of terephthalic acid dichloride, stirring and further reaction for 1 hour, to obtain a poly-paraphenylene terephthalamide polymerization solution. 1,000 Parts by weight of the polymerization solution, 3,000 parts by weight of NMP and a predetermined amount of alumina ($Al_2O_3$) particles (having a particle size shown in Table 29) were stirred and mixed, and then dispersed by a homogenizer to obtain a coating solution. Using a drum-fixed bar coater, the coating solution was applied on one side of the polyolefin microporous membrane under the conditions of a clearance of 20 μm to 30 μm and a coating thickness shown in Table 29, and then dried at a temperature of about 70°C to obtain a multilayer separator.

(In the case of Meta-Aromatic Aramid)

100 Parts by weight of a meta-aromatic polyamide was mixed with a predetermined amount of boehmite (having a particle size shown in Table 29) at a weight ratio of 1:1, and then the mixture was mixed with a mixed solvent of dimethylacetamide (DMAc) and tripropylene glycol (TPG) (weight ratio = 1:1) so that the meta-aromatic polyamide concentration became 3% by weight to obtain a coating solution. Using a Mayer bar coater, the coating solution was applied on one side of the polyolefin microporous membrane under the conditions of a clearance of 20 μm to 30 μm and a coating thickness shown in Table 29 to obtain a coated separator. The coated separator was immersed in a coagulation liquid having a weight ratio of water:DMAc:TPG = 2:1:1 and a temperature of 35°C, followed by water washing and further drying to obtain a multilayer separator.

Regarding a multilayer separator coated with a heat-resistant resin layer containing para-or meta-aromatic aramid and an inorganic filler, the progress of the crosslinking reaction in the coating step was confirmed from the comparison of the TMA rupture temperatures before and after coating. The multilayer separator thus obtained was subject to various evaluations according to the above evaluation method. The evaluation results of the battery are also shown in Table 29.

(Test of Battery Including Multilayer Separator coated with Heat-Resistant Resin Layer)

In Example 43-1, using a multilayer separator, a nonaqueous secondary battery was fabricated according to the method for fabricating a battery described above and the battery was evaluated. The evaluation results of the battery are also shown in Table 29.

[Example 43-2 to Example 43-50, Comparative Example 14-1 to Comparative Example 14-7]

The same operation as in Example 43-1 was carried out, except for changing the resin composition and the molecular weight mixed composition of the polyolefin microporous membrane, the fabrication conditions, the substrate properties, the type, the particle size and the proportion of the inorganic filler, the type of aramid resin, the composition and physical properties of the coating solution, etc., as shown in Table 29, separator substrates composed of a polyolefin microporous membrane and multilayer separators coated with a heat-resistant resin layer were obtained. The separator substrates and multilayer separators thus obtained were subjected to various evaluations according to the above evaluation method. The evaluation results are also shown in Table 29.

Further, using multilayer separators coated with a heat-resistant resin layer, nonaqueous secondary batteries were obtained. The batteries thus obtained were subjected to various evaluations according to the above evaluation method. The evaluation results are also shown in Table 29.

[Table 29-1]

| Coating of heat-resistant resin laver | | | | | | | | | | | |
|---|---|---|---|---|---|---|---|---|---|---|---|
| Evaluation item | | Example 43-1 | Example 43-2 | Example 43-3 | Example 43-4 | Example 43-5 | Example 43-6 | Example 43-7 | Example 43-8 | Example 43-9 | Example 43-10 |
| Starting material | Tvpe of resin D | D2 | D2 | D2 | D2 | D2 | D2 | D2 | D2 | D2 | D2 |
| | Type of resin E | E3 | E3 | E3 | E3 | E3 | E3 | E3 | E3 | E3 | E3 |
| | Type of resin F | F3 | F3 | F3 | F3 | F3 | F3 | F3 | F3 | F3 | F3 |
| | Content of resin D | 30.0 | 30.0 | 30.0 | 30.0 | 30.0 | 30.0 | 30.0 | 30.0 | 30.0 | 30.0 |
| | Content of resin E | 30.0 | 30.0 | 30.0 | 30.0 | 30.0 | 30.0 | 30.0 | 30.0 | 30.0 | 30.0 |
| | Content of resin F | 40.0 | 40.0 | 40.0 | 40.0 | 40.0 | 40.0 | 40.0 | 40.0 | 40.0 | 40.0 |
| Substrate physical properties | Substrate thickness | 10.1 | 10.3 | 10.2 | 10.3 | 10 | 10.2 | 9.8 | 9.7 | 10.2 | 10.1 |
| | Substrate porosity | 45.2 | 43.1 | 46.7 | 45.3 | 44.5 | 46.2 | 44.6 | 44.9 | 46.8 | 45.4 |
| | Substrate air permeability | 142 | 142 | 142 | 142 | 142 | 142 | 142 | 142 | 142 | 142 |
| | Substrate puncture strength | 792 | 753 | 810 | 786 | 770 | 806 | 773 | 775 | 816 | 788 |
| Coating solution | Coating thickness | 3 | 3 | 3 | 3 | 3 | 3 | 3 | 3 | 3 | 3 |
| | Inorganic particle size | 0.7 | 0.3 | 0.8 | 0.1 | 1 | 0.7 | 0.7 | 0.7 | 0.7 | 0.7 |
| | Weight ratio of inorganic particles | 70 | 70 | 70 | 70 | 70 | 50 | 80 | 31 | 89 | 28 |
| | Organic solvent concentration | 80 | 80 | 80 | 80 | 80 | 80 | 80 | 80 | 80 | 80 |

(continued)

| Coating of heat-resistant resin layer | | | | | | | | | | | |
|---|---|---|---|---|---|---|---|---|---|---|---|
| Evaluation item | | Example 43-1 | Example 43-2 | Example 43-3 | Example 43-4 | Example 43-5 | Example 43-6 | Example 43-7 | Example 43-8 | Example 43-9 | Example 43-10 |
| X-ray structure analysis | Crystal long period | 32.4 | 35.4 | 35.9 | 34.7 | 33.9 | 32.2 | 32.4 | 35.5 | 32.3 | 34.4 |
| | Crystallinity degree | 68.7 | 67.7 | 71.9 | 69.1 | 69.5 | 70.8 | 69.2 | 69.2 | 69.1 | 67.5 |
| | Amorphous portion thickness | 10 | 11 | 10 | 11 | 10 | 9 | 10 | 11 | 10 | 11 |
| | Crvstallite size (110) | 25.1 | 25.3 | 23.6 | 26.1 | 24.8 | 22.9 | 26.5 | 22.8 | 26.4 | 23.7 |
| | Crystallite size ratio (110)/(200) | 1.3 | 1.2 | 1.1 | 1.2 | 1.4 | 1.2 | 1.1 | 1.2 | 1.2 | 1.3 |
| | MD cross-sectional crystal orientation degree | 0.901 | 0.93 | 0.928 | 0.935 | 0.904 | 0.944 | 0.901 | 0.935 | 0.894 | 0.931 |
| | TD cross-sectional crystal orientation degree | 0.92 | 0.90 | 0.92 | 0.93 | 0.94 | 0.91 | 0.93 | 0.91 | 0.95 | 0.93 |
| | MD/TD | 0.98 | 1.03 | 1.01 | 1.00 | 0.96 | 1.04 | 0.97 | 1.03 | 0.95 | 1.01 |
| TOF-SIMS | Voronoi area (mu) | 9.13 | 9.16 | 8.95 | 8.96 | 8.7 | 8.85 | 9.04 | 9.18 | 9.26 | 8.8 |
| | Spread ($\sigma$) of the Voronoi area frequency distribution | 2.94 | 2.95 | 3.07 | 3.02 | 2.94 | 3.04 | 2.9 | 3 | 3.09 | 3.05 |
| | $\sigma$/mu | 0.32 | 0.32 | 0.34 | 0.34 | 0.34 | 0.34 | 0.32 | 0.33 | 0.33 | 0.35 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |

(continued)

| Coating of heat-resistant resin laver | | | | | | | | | | | |
|---|---|---|---|---|---|---|---|---|---|---|---|
| Evaluation item | | Example 43-1 | Example 43-2 | Example 43-3 | Example 43-4 | Example 43-5 | Example 43-6 | Example 43-7 | Example 43-8 | Example 43-9 | Example 43-10 |
| Confirmation of crosslinking | TMA rupture temperature before coating | 152.9 | 151.1 | 152.8 | 153.8 | 149.2 | 154.2 | 150.2 | 152.3 | 154.2 | 150.6 |
| | TMA rupture temperature after coating | >200 | >200 | >200 | >200 | >200 | >200 | >200 | >200 | >200 | >200 |
| | Confirmation of progress of crosslinking reaction in coating step | A | A | A | A | A | A | A | A | A | A |
| Battery evaluation | Collapse test passing rate | 89.5 | 91.5 | 87.7 | 91.8 | 83.3 | 86.9 | 90.9 | 85.4 | 91.7 | 84.8 |
| | Cycle test capacity retention rate | 66.7 | 64.3 | 67.9 | 42.1 | 70.2 | 68.0 | 65.3 | 69.8 | 63.4 | 69.4 |
| | Cycle life | 849 | 827 | 826 | 700 | 701 | 836 | 832 | 816 | 817 | 729 |

[Table 29-2]

| Coating of heat-resistant resin layer | | | | | | | | | | | |
|---|---|---|---|---|---|---|---|---|---|---|---|
| Evaluation item | | Example 43-11 | Example 43-12 | Example 43-13 | Example 43-14 | Example 43-15 | Example 43-16 | Example 43-17 | Example 43-18 | Example 43-19 | Example 43-20 |
| Starting material | Type of resin D | D2 | D2 | D2 | D2 | D2 | D11 | D1 | D7 | D7 | D5 |
| | Type of resin E | E3 | E3 | E3 | E3 | E3 | E3 | E2 | E2 | E5 | E3 |
| | Type of resin F | F3 | F3 | F3 | F3 | F3 | F4 | F5 | F5 | F3 | F3 |
| | Content of resin D | 30.0 | 30.0 | 30.0 | 30.0 | 30.0 | 30.0 | 30.5 | 20.0 | 20.0 | 15.0 |
| | Content of resin E | 30.0 | 30.0 | 30.0 | 30.0 | 30.0 | 5.5 | 17.0 | 50.0 | 67.0 | 45.0 |
| | Content of resin F | 40.0 | 40.0 | 40.0 | 40.0 | 40.0 | 64.5 | 52.5 | 30.0 | 13.0 | 40.0 |
| Substrate physical properties | Substrate thickness | 9.8 | 10 | 10.1 | 9.8 | 10.3 | 9.9 | 9.9 | 9.7 | 9.9 | 10.2 |
| | Substrate porosity | 43.6 | 45.2 | 43.1 | 46.7 | 44.7 | 45 | 46 | 47 | 48 | 44 |
| | Substrate air permeability | 142 | 143 | 141 | 143 | 140 | 136 | 135 | 133 | 133 | 135 |
| | Substrate puncture strength | 769 | 788 | 756 | 812 | 781 | 807 | 813 | 810 | 790 | 763 |
| Coating solution | Coating thickness | 3 | 3 | 3 | 3 | 3 | 3 | 3 | 3 | 3 | 3 |
| | Inorganic particle size | 0.7 | 0.7 | 0.7 | 0.7 | 0.7 | 0.7 | 0.7 | 0.7 | 0.7 | 0.7 |
| | Weight ratio of inorganic particles | 91 | 70 | 70 | 70 | 70 | 70 | 70 | 70 | 70 | 70 |
| | Organic solvent concentration | 80 | 70 | 95 | 65 | 97 | 80 | 80 | 80 | 80 | 80 |

(continued)

| Coating of heat-resistant resin layer | | | | | | | | | | | |
|---|---|---|---|---|---|---|---|---|---|---|---|
| | Evaluation item | Example 43-11 | Example 43-12 | Example 43-13 | Example 43-14 | Example 43-15 | Example 43-16 | Example 43-17 | Example 43-18 | Example 43-19 | Example 43-20 |
| X-ray structure analysis | Crystal long period | 36 | 33 | 32 | 32 | 35 | 21.0 | 32.0 | 39.0 | 48.0 | 35.0 |
| | Crystallinity degree | 68.6 | 71 | 68 | 72 | 68 | 71.0 | 73.7 | 65.7 | 71.3 | 78.2 |
| | Amorphous portion thickness | 11 | 10 | 10 | 9 | 11 | 6 | 8 | 13 | 14 | 8 |
| | Crvstallite size (110) | 22.8 | 21 | 22.5 | 26.2 | 23.6 | 26.4 | 21.1 | 26.2 | 23.5 | 25.0 |
| | Crystallite size ratio (110)/(200) | 1.2 | 1.2 | 1.1 | 1.4 | 1.1 | 1.1 | 1.3 | 1.1 | 1.2 | 1.4 |
| | MD cross-sectional crystal orientation degree | 0.944 | 0.936 | 0.906 | 0.921 | 0.919 | 0.94 | 0.90 | 0.90 | 0.93 | 0.94 |
| | TD cross-sectional crystal orientation degree | 0.90 | 0.91 | 0.92 | 0.93 | 0.92 | 0.91 | 0.93 | 0.92 | 0.90 | 0.93 |
| | MD/TD | 1.05 | 1.03 | 0.99 | 0.99 | 1.00 | 1.03 | 0.97 | 0.98 | 1.02 | 1.01 |
| TOF-SIMS | Voronoi area (mu) | 8.93 | 9.11 | 9.16 | 9.28 | 9.19 | 8.91 | 9.26 | 8.71 | 9.19 | 9.05 |
| | Spread (σ) of the Voronoi area frequency distribution | 3.1 | 2.91 | 2.96 | 3.02 | 3 | 2.93 | 3.08 | 3.07 | 3.06 | 3.09 |
| | σ/mu | 0.35 | 0.32 | 0.32 | 0.33 | 0.33 | 0.33 | 0.33 | 0.35 | 0.33 | 0.34 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |

(continued)

| Coating of heat-resistant resin layer | | | | | | | | | | | |
|---|---|---|---|---|---|---|---|---|---|---|---|
| Evaluation item | | Example 43-11 | Example 43-12 | Example 43-13 | Example 43-14 | Example 43-15 | Example 43-16 | Example 43-17 | Example 43-18 | Example 43-19 | Example 43-20 |
| Confirmation of crosslinking | TMA rupture temperature before coating | 153.7 | 152.7 | 151.4 | 148.6 | 153.2 | 151.1 | 152.7 | 152.4 | 151.0 | 150.7 |
| | TMA rupture temperature after coating | >200 | >200 | >200 | 180.7 | 183.7 | >200 | >200 | >200 | >200 | >200 |
| | Confirmation of progress of crosslinking reaction in coating step | A | A | A | B | B | A | A | A | A | A |
| Battery evaluation | Collapse test passing rate | 91.5 | 86.6 | 87.6 | 85.3 | 85.6 | 94.0 | 93.1 | 85.5 | 80.0 | 89.6 |
| | Cycle test capacity retention rate | 48.2 | 65.7 | 65.7 | 63.6 | 64.7 | 65.5 | 73.0 | 76.3 | 78.0 | 59.3 |
| | Cycle life | 729 | 841 | 838 | 826 | 824 | 742 | 790 | 787 | 753 | 773 |

[Table 29-3]

| Coating of heat-resistant resin laver | | | | | | | | | | | |
|---|---|---|---|---|---|---|---|---|---|---|---|
| Evaluation item | | Example 43-21 | Example 43-22 | Example 43-23 | Example 43-24 | Example 43-25 | Example 43-26 | Example 43-27 | Example 43-28 | Example 43-29 | Example 43-30 |
| Starting material | Tvpe of resin D | D5 | D2 | D6 | D1 | D3 | D5 | D1 | D3 | D1 | D1 |
| | Type of resin E | E3 | E4 | E3 | E3 | E4 | E4 | E4 | E2 | E3 | E3 |
| | Type of resin F | F5 | F5 | F4 | F5 | F3 | F2 | F2 | F2 | F2 | F2 |
| | Content of resin D | 14.5 | 68.0 | 55.0 | 22.0 | 8.0 | 23.0 | 30.0 | 27.0 | 35.5 | 39.0 |
| | Content of resin E | 32.0 | 17.0 | 27.0 | 52.0 | 62.0 | 20.0 | 25.0 | 20.0 | 26.5 | 29.0 |
| | Content of resin F | 53.5 | 15.0 | 18.0 | 26.0 | 30.0 | 57.0 | 45.0 | 53.0 | 38.0 | 32.0 |
| Substrate physical properties | Substrate thickness | 10.3 | 10.2 | 9.8 | 10.0 | 9.9 | 9.7 | 9.8 | 10.0 | 10.2 | 10.2 |
| | Substrate porosity | 45 | 45 | 46 | 45 | 44 | 43 | 46 | 45 | 44 | 45 |
| | Substrate air permeability | 135 | 136 | 135 | 135 | 138 | 132 | 136 | 129 | 134 | 128 |
| | Substrate puncture strength | 773 | 780 | 778 | 754 | 756 | 775 | 785 | 780 | 773 | 770 |
| Coating solution | Coating thickness | 3 | 3 | 3 | 3 | 3 | 3 | 3 | 3 | 3 | 3 |
| | Inorganic particle size | 0.7 | 0.7 | 0.7 | 0.7 | 0.7 | 0.7 | 0.7 | 0.7 | 0.7 | 0.7 |
| | Weight ratio of inorganic particles | 70 | 70 | 70 | 70 | 70 | 70 | 70 | 70 | 70 | 70 |
| | Organic solvent concentration | 80 | 80 | 80 | 80 | 80 | 80 | 80 | 80 | 80 | 80 |

(continued)

| Coating of heat-resistant resin laver | | | | | | | | | | | |
|---|---|---|---|---|---|---|---|---|---|---|---|
| Evaluation item | | Example 43-21 | Example 43-22 | Example 43-23 | Example 43-24 | Example 43-25 | Example 43-26 | Example 43-27 | Example 43-28 | Example 43-29 | Example 43-30 |
| X-ray structure analysis | Crystal long period | 37.0 | 32.9 | 37.3 | 32.1 | 33.0 | 32.2 | 32.4 | 32.4 | 36.0 | 34.5 |
| | Crystallinity degree | 61.0 | 68.2 | 67.7 | 68.3 | 72.5 | 68.0 | 71.1 | 68.1 | 69.6 | 69.0 |
| | Amorphous portion thickness | 14 | 10 | 12 | 10 | 9 | 10 | 9 | 10 | 11 | 11 |
| | Crvstallite size (110) | 21.3 | 11.0 | 15.0 | 35.0 | 48.0 | 25.6 | 25.5 | 25.6 | 24.8 | 21.3 |
| | Crystallite size ratio (110)/(200) | 1.1 | 1.3 | 1.1 | 1.1 | 1.4 | 0.8 | 1.0 | 1.5 | 1.9 | 2.1 |
| | MD cross-sectional crystal orientation degree | 0.94 | 0.95 | 0.90 | 0.94 | 0.95 | 0.92 | 0.91 | 0.90 | 0.94 | 0.95 |
| | TD cross-sectional crystal orientation degree | 0.93 | 0.94 | 0.94 | 0.93 | 0.95 | 0.93 | 0.92 | 0.92 | 0.92 | 0.94 |
| | MD/TD | 1.01 | 1.01 | 0.96 | 1.01 | 1.00 | 0.99 | 0.99 | 0.98 | 1.02 | 1.01 |
| TOF-SIMS | Voronoi area (mu) | 8.72 | 9.05 | 8.95 | 9.09 | 8.83 | 9.04 | 8.93 | 9.30 | 9.07 | 9.21 |
| | Spread ($\sigma$) of the Voronoi area frequency distribution | 3.05 | 2.96 | 3.07 | 3.09 | 2.99 | 3.02 | 3.05 | 2.95 | 3.00 | 2.91 |
| | $\sigma$/mu | 0.35 | 0.33 | 0.34 | 0.34 | 0.34 | 0.33 | 0.34 | 0.32 | 0.33 | 0.32 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |

(continued)

| Coating of heat-resistant resin laver | | | | | | | | | | | |
|---|---|---|---|---|---|---|---|---|---|---|---|
| Evaluation item | | Example 43-21 | Example 43-22 | Example 43-23 | Example 43-24 | Example 43-25 | Example 43-26 | Example 43-27 | Example 43-28 | Example 43-29 | Example 43-30 |
| Confirmation of crosslinking | TMA rupture temperature before coating | 149.2 | 149.2 | 149.7 | 151.7 | 152.9 | 152.4 | 152.5 | 152.6 | 149.1 | 149.5 |
| | TMA rupture temperature after coating | >200 | >200 | >200 | >200 | >200 | >200 | >200 | >200 | >200 | >200 |
| | Confirmation of progress of crosslinking reaction in coating step | A | A | A | A | A | A | A | A | A | A |
| Battery evaluation | Collapse test passing rate | 91.7 | 80.7 | 90.8 | 89.7 | 78.1 | 89.5 | 92.8 | 93.8 | 91.9 | 86.3 |
| | Cycle test capacity retention rate | 58.1 | 68.8 | 63.4 | 59.2 | 56.8 | 68.5 | 68.5 | 66.7 | 66.5 | 68.5 |
| | Cycle life | 773 | 811 | 823 | 823 | 811 | 713 | 821 | 819 | 812 | 710 |

[Table 29-4]

| Coating of heat-resistant resin laver | | | | | | | | | | | |
|---|---|---|---|---|---|---|---|---|---|---|---|
| Evaluation item | | Example 43-31 | Example 43-32 | Example 43-33 | Example 43-34 | Example 43-35 | Example 43-36 | Example 43-37 | Example 43-38 | Example 43-39 | Example 43-40 |
| Starting material | Tvpe of resin D | D2 | D2 | D2 | D2 | D2 | D2 | D2 | D2 | D8 | D3 |
| | Type of resin E | E3 | E3 | E3 | E3 | E3 | E3 | E3 | E3 | E3 | E4 |
| | Type of resin F | F3 | F3 | F3 | F3 | F3 | F3 | F3 | F3 | F5 | F4 |
| | Content of resin D | 30.0 | 30.0 | 30.0 | 30.0 | 30.0 | 30.0 | 30.0 | 30.0 | 31.0 | 24.5 |
| | Content of resin E | 30.0 | 30.0 | 30.0 | 30.0 | 30.0 | 30.0 | 30.0 | 30.0 | 10.0 | 57.0 |
| | Content of resin F | 40.0 | 40.0 | 40.0 | 40.0 | 40.0 | 40.0 | 40.0 | 40.0 | 59.0 | 18.5 |
| Substrate physical properties | Substrate thickness | 9.9 | 10.2 | 10.2 | 10.2 | 9.7 | 9.8 | 10.0 | 9.9 | 10.1 | 10.1 |
| | Substrate porosity | 47 | 47 | 47 | 46 | 44 | 46 | 45 | 46 | 45 | 46 |
| | Substrate air permeability | 123 | 129 | 128 | 134 | 133 | 134 | 127 | 133 | 134 | 134 |
| | Substrate puncture strength | 734 | 772 | 784 | 800 | 797 | 786 | 780 | 736 | 792 | 802 |
| Coating solution | Coating thickness | 3 | 3 | 3 | 3 | 3 | 3 | 3 | 3 | 3 | 3 |
| | Inorganic particle size | 0.7 | 0.7 | 0.7 | 0.7 | 0.7 | 0.7 | 0.7 | 0.7 | 0.7 | 0.7 |
| | Weight ratio of inorganic particles | 70 | 70 | 70 | 70 | 70 | 70 | 70 | 70 | 70 | 70 |
| | Organic solvent concentration | 80 | 80 | 80 | 80 | 80 | 80 | 80 | 80 | 80 | 80 |

(continued)

| Coating of heat-resistant resin layer | | | | | | | | | | | |
|---|---|---|---|---|---|---|---|---|---|---|---|
| Evaluation item | | Example 43-31 | Example 43-32 | Example 43-33 | Example 43-34 | Example 43-35 | Example 43-36 | Example 43-37 | Example 43-38 | Example 43-39 | Example 43-40 |
| X-ray structure analysis | Crystal long period | 37.8 | 37.7 | 36.1 | 38.0 | 37.5 | 36.1 | 37.9 | 36.6 | 35.4 | 33.3 |
| | Crystallinity degree | 68.5 | 67.7 | 69.9 | 70.3 | 67.9 | 68.9 | 68.7 | 67.2 | 70.2 | 72.8 |
| | Amorphous portion thickness | 12 | 12 | 11 | 11 | 12 | 11 | 12 | 12 | 11 | 9 |
| | Crystallite size (110) | 25.1 | 25.4 | 22.4 | 25.2 | 23.0 | 21.8 | 25.8 | 20.5 | 23.3 | 21.1 |
| | Crystallite size ratio (110)/(200) | 1.2 | 1.4 | 1.1 | 1.4 | 1.2 | 1.2 | 1.2 | 1.1 | 1.2 | 1.4 |
| | MD cross-sectional crystal orientation degree | 0.69 | 0.71 | 0.88 | 0.82 | 0.87 | 0.98 | 0.86 | 0.85 | 0.93 | 0.93 |
| | TD cross-sectional crystal orientation degree | 0.89 | 0.87 | 0.75 | 0.89 | 0.82 | 0.86 | 0.97 | 0.68 | 0.92 | 0.91 |
| | MD/TD | 0.78 | 0.82 | 1.17 | 0.92 | 1.06 | 1.10 | 0.89 | 1.25 | 1.02 | 1.02 |
| TOF-SIMS | Voronoi area (mu) | 9.00 | 8.77 | 8.81 | 9.05 | 8.96 | 9.30 | 9.13 | 9.25 | 9.91 | 9.20 |
| | Spread (σ) of the Voronoi area frequency distribution | 3.09 | 3.06 | 3.03 | 3.02 | 2.99 | 3.07 | 3.07 | 3.03 | 1.80 | 4.20 |
| | σ/mu | 0.34 | 0.35 | 0.34 | 0.33 | 0.33 | 0.33 | 0.34 | 0.33 | 0.18 | 0.46 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 2 | 2 |

(continued)

| Coating of heat-resistant resin laver | | | | | | | | | | | |
|---|---|---|---|---|---|---|---|---|---|---|---|
| Evaluation item | | Example 43-31 | Example 43-32 | Example 43-33 | Example 43-34 | Example 43-35 | Example 43-36 | Example 43-37 | Example 43-38 | Example 43-39 | Example 43-40 |
| Confirmation of crosslinking | TMA rupture temperature before coating | 148.0 | 150.7 | 151.5 | 154.2 | 149.1 | 151.3 | 149.4 | 148.3 | 149.2 | 152.3 |
| | TMA rupture temperature after coating | >200 | >200 | >200 | >200 | >200 | >200 | >200 | >200 | >200 | 185.7 |
| | Confirmation of progress of crosslinking reaction in coating step | A | A | A | A | A | A | A | A | A | B |
| Battery evaluation | Collapse test passing rate | 77.9 | 84.4 | 81.9 | 89.7 | 89.4 | 85.8 | 81.5 | 79.1 | 91.3 | 78.3 |
| | Cycle test capacity retention rate | 66.9 | 67.8 | 68.9 | 69.3 | 69.9 | 69.4 | 68.3 | 67.8 | 60.8 | 64.8 |
| | Cycle life | 588 | 729 | 744 | 803 | 802 | 742 | 663 | 574 | 570 | 583 |

[Table 29-5]

| Coating of heat-resistant resin layer | | | | | | | | | | | |
|---|---|---|---|---|---|---|---|---|---|---|---|
| Evaluation item | | Example 43-41 | Example 43-42 | Example 43-43 | Example 43-44 | Example 43-45 | Example 43-46 | Example 43-47 | Example 43-48 | Example 43-49 | Example 43-50 |
| Starting material | Type of resin D | D10 | D10 | D11 | D5 | D4 | D9 | D7 | D9 | D13 | D14 |
| | Type of resin E | E3 | E2 | E2 | E5 | E5 | E4 | E2 | E5 | E3 | E4 |
| | Type of resin F | F5 | F3 | F5 | F4 | F2 | F4 | F3 | F2 | F3 | F4 |
| | Content of resin D | 30.5 | 43.5 | 29.5 | 33.5 | 26.5 | 31.0 | 68.0 | 5.0 | 30.0 | 30.0 |
| | Content of resin E | 15.0 | 26.5 | 20.0 | 26.5 | 26.5 | 45.0 | 10.5 | 22.5 | 30.0 | 30.0 |
| | Content of resin F | 54.5 | 30.0 | 50.5 | 40.0 | 47.0 | 24.0 | 21.5 | 72.5 | 40.0 | 40.0 |
| Substrate physical properties | Substrate thickness | 10.1 | 10.2 | 9.8 | 10.1 | 10.1 | 10.0 | 9.9 | 10.1 | 10.1 | 9.9 |
| | Substrate porosity | 46 | 44 | 43 | 45 | 47 | 46 | 46 | 44 | 43 | 42 |
| | Substrate air permeability | 134 | 133 | 134 | 131 | 121 | 133 | 134 | 134 | 145 | 143 |
| | Substrate puncture strength | 808 | 771 | 745 | 782 | 822 | 800 | 808 | 764 | 740 | 720 |
| Coating solution | Coating thickness | 3 | 3 | 3 | 3 | 3 | 3 | 3 | 3 | 3 | 3 |
| | Inorganic particle size | 0.7 | 0.7 | 0.7 | 0.7 | 0.7 | 0.7 | 0.7 | 0.7 | 0.7 | 0.7 |
| | Weight ratio of inorganic particles | 70 | 70 | 70 | 70 | 70 | 70 | 70 | 70 | 70 | 70 |
| | Organic solvent concentration | 80 | 80 | 80 | 80 | 80 | 80 | 80 | 80 | 80 | 80 |

(continued)

| Coating of heat-resistant resin layer | | | | | | | | | | | |
|---|---|---|---|---|---|---|---|---|---|---|---|
| Evaluation item | | Example 43-41 | Example 43-42 | Example 43-43 | Example 43-44 | Example 43-45 | Example 43-46 | Example 43-47 | Example 43-48 | Example 43-49 | Example 43-50 |
| X-ray structure analysis | Crystal long period | 36.2 | 35.7 | 34.9 | 32.5 | 37.3 | 32.6 | 33.1 | 37.6 | 37.4 | 39.0 |
| | Crystallinity degree | 69.8 | 67.8 | 72.1 | 68.7 | 69.4 | 68.5 | 69.5 | 72.7 | 65.0 | 70.0 |
| | Amorphous portion thickness | 11 | 11 | 10 | 10 | 11 | 10 | 10 | 10 | 13.09 | 11.7 |
| | Crystallite size (110) | 25.3 | 24.6 | 26.5 | 22.5 | 24.1 | 23.1 | 26.2 | 22.9 | 21.0 | 20.6 |
| | Crystallite size ratio (110)/(200) | 1.3 | 1.4 | 1.4 | 1.1 | 1.2 | 1.3 | 1.4 | 1.3 | 1 | 1.1 |
| | MD cross-sectional crystal orientation degree | 0.94 | 0.91 | 0.89 | 0.94 | 0.91 | 0.93 | 0.92 | 0.90 | 0.96 | 0.87 |
| | TD cross-sectional crystal orientation degree | 0.92 | 0.95 | 0.92 | 0.93 | 0.92 | 0.94 | 0.94 | 0.90 | 0.91 | 0.89 |
| | MD/TD | 1.01 | 0.95 | 0.97 | 1.01 | 1.00 | 0.99 | 0.98 | 1.00 | 1.05 | 0.98 |
| TOF-SIMS | Voronoi area (mu) | 9.56 | 6.20 | 9.78 | 8.50 | 11.32 | 9.82 | 5.70 | 12.80 | 8.82 | 8.98 |
| | Spread ($\sigma$) of the Voronoi area frequency distribution | 2.15 | 2.81 | 2.67 | 3.24 | 3.07 | 3.90 | 2.68 | 2.96 | 2.98 | 3.08 |
| | $\sigma$/mu | 0.22 | 0.45 | 0.21 | 0.38 | 0.27 | 0.40 | 0.47 | 0.23 | 0.34 | 0.34 |
| NMR | C4 unit modification rate | 0.5 | 0.5 | 0.5 | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 | 2 | 8 | 12 |

(continued)

| Coating of heat-resistant resin layer | | | | | | | | | | | |
|---|---|---|---|---|---|---|---|---|---|---|---|
| Evaluation item | | Example 43-41 | Example 43-42 | Example 43-43 | Example 43-44 | Example 43-45 | Example 43-46 | Example 43-47 | Example 43-48 | Example 43-49 | Example 43-50 |
| Confirmation of crosslinking | TMA rupture temperature before coating | 151.2 | 153.8 | 153.7 | 149.6 | 151.4 | 149.7 | 149.1 | 148.9 | 147.8 | 147.5 |
| | TMA rupture temperature after coating | >200 | >200 | >200 | >200 | 192 | 198.2 | >200 | 185.7 | 192.3 | 189.1 |
| | Confirmation of progress of crosslinking reaction in coating step | A | A | A | A | B | B | A | B | B | B |
| Battery evaluation | Collapse test passing rate | 90.0 | 86.2 | 88.8 | 79.2 | 79.9 | 79.0 | 87.7 | 85.8 | 79.3 | 68.2 |
| | Cycle test capacity retention rate | 64.6 | 67.9 | 64.5 | 66.9 | 60.3 | 62.1 | 69.1 | 58.3 | 68.2 | 67.2 |
| | Cycle life | 682 | 685 | 768 | 713 | 710 | 636 | 585 | 571 | 710 | 691 |

[Table 29-6]

| Coating of heat-resistant resin layer | | | | | | | | |
|---|---|---|---|---|---|---|---|---|
| Evaluation item | | Comparative Example 14-1 | Comparative Example 14-2 | Comparative Example 14-3 | Comparative Example 14-4 | Comparative Example 14-5 | Comparative Example 14-6 | Comparative Example 14-7 |
| Starting material | Type of resin D | D12 | D8 | D12 | D5 | D6 | D5 | |
| | Type of resin E | E2 | E5 | E2 | E4 | E2 | E5 | E3 |
| | Type of resin F | F4 | F3 | F4 | F3 | F4 | F3 | F3 |
| | Content of resin D | 29.5 | 13.0 | 5.5 | 25.0 | 77.0 | 2.0 | - |
| | Content of resin E | 2.5 | 73.0 | 72.0 | 0.5 | 10.0 | 70.0 | 26.7 |
| | Content of resin F | 68.0 | 14.0 | 22.5 | 74.5 | 13.0 | 28.0 | 73.3 |
| Substrate physical properties | Substrate thickness | 10.3 | 10.3 | 9.9 | 10.0 | 9.8 | 9.7 | 9.8 |
| | Substrate porosity | 45 | 46 | 47 | 46 | 46 | 43 | 47 |
| | Substrate air permeability | 138 | 133 | 133 | 133 | 132 | 140 | 133 |
| | Substrate puncture strength | 800 | 777 | 760 | 750 | 776 | 753 | 824 |
| Coating solution | Coating thickness | 3 | 3 | 3 | 3 | 3 | 3 | 3 |
| | Inorganic particle size | 0.7 | 0.7 | 0.7 | 0.7 | 0.7 | 0.7 | 0.7 |
| | Weight ratio of inorganic particles | 70 | 70 | 70 | 70 | 70 | 70 | 70 |
| | Organic solvent concentration | 80 | 80 | 80 | 80 | 80 | 80 | 80 |

(continued)

| Coating of heat-resistant resin layer | | | | | | | | |
|---|---|---|---|---|---|---|---|---|
| Evaluation item | | Comparative Example 14-1 | Comparative Example 14-2 | Comparative Example 14-3 | Comparative Example 14-4 | Comparative Example 14-5 | Comparative Example 14-6 | Comparative Example 14-7 |
| X-ray structure analysis | Crystal long period | 19.0 | 51.0 | 23.6 | 45.0 | 34.5 | 37.5 | 37.0 |
| | Crystallinity degree | 78.9 | 73.0 | 56.0 | 85.3 | 69.5 | 69.3 | 70.0 |
| | Amorphous portion thickness | 4 | 14 | 10.4 | 6.6 | 11 | 12 | 11 |
| | Crystallite size (110) | 22.2 | 21.2 | 24.8 | 22.4 | 9.0 | 51.0 | 20.5 |
| | Crystallite size ratio (110)/(200) | 1.4 | 1.2 | 1.2 | 1.3 | 1.1 | 1.2 | 1.2 |
| | MD cross-sectional crystal orientation degree | 0.89 | 0.94 | 0.93 | 0.90 | 0.92 | 0.95 | 0.90 |
| | TD cross-sectional crystal orientation degree | 0.93 | 0.95 | 0.89 | 0.90 | 0.90 | 0.91 | 0.94 |
| | MD/TD | 0.96 | 0.98 | 1.04 | 1.00 | 1.02 | 1.05 | 0.95 |
| TOF-SIMS | Voronoi area (mu) | 8.73 | 8.75 | 9.13 | 9.01 | 9.01 | 9.01 | 9.08 |
| | Spread ($\sigma$) of the Voronoi area frequency distribution | 2.93 | 3.04 | 3.04 | 3.07 | 2.96 | 2.91 | 3.02 |
| | $\sigma$/mu | 0.34 | 0.35 | 0.33 | 0.34 | 0.33 | 0.32 | 0.33 |
| NMR | C4 unit modification rate | 0.5 | 0.5 | 0.5 | 0.5 | 0.5 | 0.5 | 0.5 |
| | Number of silane-grafted linking portions $CH_2$ | 2 | 2 | 2 | 2 | 2 | 2 | 2 |

(continued)

| Coating of heat-resistant resin layer | | | | | | | | |
|---|---|---|---|---|---|---|---|---|
| Evaluation item | | Comparative Example 14-1 | Comparative Example 14-2 | Comparative Example 14-3 | Comparative Example 14-4 | Comparative Example 14-5 | Comparative Example 14-6 | Comparative Example 14-7 |
| Confirmation of crosslinking | TMA rupture temperature before coating | 150.9 | 151.7 | 148.2 | 148.8 | 148.3 | 151.0 | 151.6 |
| | TMA rupture temperature after coating | 160.0 | 160.5 | 160.1 | 160.5 | >200 | >200 | 161.6 |
| | Confirmation of progress of crosslinking reaction in coating step | C | C | C | C | C | C | C |
| Battery evaluation | Collapse test passing rate | 27.3 | 26.0 | 27.3 | 30.6 | 28.1 | 25.9 | 30.6 |
| | Cycle test capacity retention rate | 26.9 | 21.6 | 13.8 | 17.8 | 53.1 | 23.4 | 25.3 |
| | Cycle life | 254 | 276 | 231 | 233 | 262 | 270 | 269 |

REFERENCE SIGNS LIST

$t_c$ : Crystal portion thickness
$t_a$: Amorphous portion thickness
$f_c$ : Crystal long period
$a_c$ : Crystal orientation degree

## Claims

1. A separator for a nonaqueous secondary battery, comprising silicon (Si)-containing molecules, wherein

   in a Si-containing image detected by a time-of-flight secondary ion mass spectrometry (TOF-SIMS) measurement of the separator for a nonaqueous secondary battery, a Voronoi area (mu) at maximum frequency of Voronoi polygons obtained by carrying out Voronoi tessellation is within a range of 1.0 $\mu m^2$ to 17.5 $\mu m^2$, and a spread ($\sigma$) of a Voronoi area frequency distribution of the Si-containing image detected by the TOF-SIMS measurement is within a range of 0.5 $\mu m^2$ to 8.5 $\mu m^2$.

2. The separator for a nonaqueous secondary battery according to claim 1, wherein a ratio ($\sigma$/mu) of the spread ($\sigma$) of the Voronoi area frequency distribution to the Voronoi area (mu) at maximum frequency is 0.06 to 0.70.

3. A separator for a nonaqueous secondary battery, comprising silicon (Si)-containing molecules, wherein in a Si-containing image detected by a time-of-flight secondary ion mass spectrometry (TOF-SIMS) measurement of the separator for a nonaqueous secondary battery, a Voronoi area (mu) at maximum frequency of Voronoi polygons obtained by carrying out Voronoi tessellation is within a range of 6.0 $\mu m^2$ to 12.0 $\mu m^2$.

4. The separator for a nonaqueous secondary battery according to claim 3, wherein a spread ($\sigma$) of a Voronoi area frequency distribution of the Si-containing image detected by the TOF-SIMS measurement is within a range of 2.0 $\mu m^2$ to 4.0 $\mu m^2$.

5. The separator for a nonaqueous secondary battery according to claim 3 or 4, wherein a ratio ($\sigma$/mu) of the spread ($\sigma$) of the Voronoi area frequency distribution to the Voronoi area (mu) at maximum frequency is 0.20 to 0.40.

6. The separator for a nonaqueous secondary battery according to any one of claims 1 to 5, wherein the Si-containing molecules are dispersed in a state of not being a sea-island structure in the separator for a nonaqueous secondary battery.

7. The separator for a nonaqueous secondary battery according to any one of claims 1 to 6, wherein the separator for a nonaqueous secondary battery is a polyethylene microporous membrane, and
   an air permeability change ratio when compressed by 30% in thickness (air permeability Sh after compression/air permeability Sj before compression) is 1.1 to 7.0 times.

8. A separator for a nonaqueous secondary battery, comprising a polyethylene microporous membrane, wherein
   an air permeability change ratio when compressed by 30% in thickness (air permeability Sh after compression/air permeability Sj before compression) is 1.1 to 7.0 times.

9. The separator for a nonaqueous secondary battery according to claim 8, comprising a silane-modified polyethylene, and a polyolefin other than the silane-modified polyethylene.

10. A separator for a nonaqueous secondary battery, comprising a silane-modified polyolefin, wherein a crystal long period of a polyethylene detected by a small-angle X-ray scattering measurement is 20 to 50 nm, a crystallinity degree detected by a wide-angle X-ray scattering measurement is 60% to 80%, and a crystallite size (110) of a polyethylene detected by a wide-angle X-ray scattering measurement is 10 to 50 nm.

11. The separator for a nonaqueous secondary battery according to claim 10, wherein an amorphous portion thickness calculated from the crystal long period of a polyethylene detected by a small-angle X-ray scattering measurement

and the crystallinity degree detected by a wide-angle X-ray scattering measurement by the following formula:

$$\text{Formula: amorphous portion thickness [nm]} = (\text{crystal long period [nm]}) \times (1 - \text{crystallinity degree [\%]}/100) \text{ is 3 to 23 nm.}$$

**12.** The separator for a nonaqueous secondary battery according to claim 10 or 11, wherein a cross-sectional crystal orientation degree of polyethylene measured from the MD direction by a wide-angle X-ray scattering measurement is 0.70 to 0.99, and a cross-sectional crystal orientation degree of polyethylene measured from the TD direction is 0.70 to 0.99.

**13.** The separator for a nonaqueous secondary battery according to any one of claims 10 to 12, wherein a ratio MD/TD of the cross-sectional crystal orientation degree of polyethylene measured from the MD direction and the cross-sectional crystal orientation degree of polyethylene measured from the TD direction is 0.5 to 1.2.

**14.** The separator for a nonaqueous secondary battery according to any one of claims 10 to 13, wherein a ratio (110)/(200) of the crystallite size (110) of polyethylene and the crystallite size (200) of a polyethylene detected by a wide-angle X-ray scattering measurement is 0.9 to 2.0.

**15.** The separator for a nonaqueous secondary battery according to any one of claims 10 to 14, wherein the silane-modified polyolefin is a silane-modified polyethylene.

**16.** The separator for a nonaqueous secondary battery according to any one of claims 10 to 15, wherein, in a silicon (Si)-containing functional group of the silane-modified polyolefin, the number of methylenes ($CH_2$) constituting the linking portion of the organic moiety to the main chain is 2 to 10.

**17.** The separator for a nonaqueous secondary battery according to any one of claims 10 to 16, comprising a polyolefin microporous membrane as a substrate, and an inorganic porous layer containing inorganic particles and a resin binder stacked on at least one side of the polyolefin microporous membrane.

**18.** The separator for a nonaqueous secondary battery according to claim 17, wherein a content of the inorganic particles in the inorganic porous layer is 5% by weight to 99% by weight based on the total weight of the inorganic porous layer.

**19.** The separator for a nonaqueous secondary battery according to claim 17 or 18, wherein the inorganic particle is at least one selected from the group consisting of alumina, silica, titania, zirconia, magnesia, ceria, yttria, zinc oxide, iron oxide, silicon nitride, titanium nitride, boron nitride, silicon carbide, aluminum hydroxide oxide, talc, kaolinite, dickite, nacrite, halloysite, pyrophyllite, montmorillonite, sericite, mica, amesite, bentonite, asbestos, zeolite, diatomaceous earth, quartz sand and glass fibers.

**20.** The separator for a nonaqueous secondary battery according to any one of claims 10 to 16, comprising a polyolefin microporous membrane as a substrate and a thermoplastic polymer-containing layer formed on at least one side of the polyolefin microporous membrane, wherein a thermoplastic polymer contained in the thermoplastic polymer-containing layer includes at least one of a polymerization unit of (meth)acrylic acid ester and/or (meth)acrylic acid, polyvinylidene fluoride (PVDF), polyvinylidene fluoride-hexafluoropropylene (PVDF-HFP) and polyvinylidene fluoride-chlorotrifluoroethylene (PVDF-CTFE).

**21.** The separator for a nonaqueous secondary battery according to any one of claims 10 to 16, comprising a polyolefin microporous membrane as a substrate and an active layer disposed on at least one side of the polyolefin microporous membrane, wherein the active layer contains at least one fluorine atom-containing polyvinyl compound selected from the group consisting of polyvinylidene fluoride-hexafluoropropylene (PVDF-HFP) and polyvinylidene fluoride-chlorotrifluoroethylene (PVDF-CTFE), and inorganic particles.

**22.** The separator for a nonaqueous secondary battery according to any one of claims 10 to 16, comprising a polyolefin microporous membrane as a substrate, and a heat-resistant resin layer containing a heat-resistant resin stacked on at least one side of the polyolefin microporous membrane, wherein the heat-resistant resin contains at least one selected from the group consisting of wholly aromatic polyamide, polyimide, polyamideimide, polysulfone, polyketone, polyether, polyether ketone, polyetherimide and cellulose.

**23.** The separator for a nonaqueous secondary battery according to claim 22, wherein the heat-resistant resin layer contains 30% by weight to 90% by weight of an inorganic filler having a mean particle size of 0.2 μm to 0.9 μm.

**24.** The separator for a nonaqueous secondary battery according to any one of claims 10 to 23, further comprising a polyolefin other than the silane-modified polyolefin.

**25.** The separator for a nonaqueous secondary battery according to any one of claims 10 to 24, wherein, in a Si-containing image detected by a time-of-flight secondary ion mass spectrometry (TOF-SIMS) measurement of the separator for a nonaqueous secondary battery, a Voronoi area (mu) at maximum frequency of Voronoi polygons obtained by carrying out Voronoi tessellation is within a range of 6.00 $\mu m^2$ to 12.00 $\mu m^2$.

**26.** The separator for a nonaqueous secondary battery according to claim 25, wherein a spread (σ) of a Voronoi area frequency distribution of the Si-containing image detected by the TOF-SIMS measurement is within a range of 2.00 $\mu m^2$ to 4.00 $\mu m^2$.

**27.** The separator for a nonaqueous secondary battery according to claim 25 or 26, wherein a ratio (σ/mu) of the spread (σ) of the Voronoi area frequency distribution to the Voronoi area (mu) at maximum frequency is 0.20 to 0.40.

**28.** A nonaqueous secondary battery comprising a positive electrode, a negative electrode, the separator for a nonaqueous secondary battery according to any one of claims 1 to 27, and a nonaqueous electrolytic solution.

**29.** The nonaqueous secondary battery according to claim 28, wherein the positive electrode contains a lithium (Li)-nickel (Ni)-manganese (Mn)-cobalt (Co) composite oxide represented by the formula: $Li\text{-}Ni_x\text{-}Mn_y\text{-}Co_z$, where x represents a Ni ratio, y represents a Mn ratio, z represents a Co ratio and $x+y+z = 1$, and the Ni ratio x in the above formula is 5 to 9.

**30.** The nonaqueous secondary battery according to claim 28 or 29, wherein the negative electrode contains a negative electrode active material, and a Si ratio in the negative electrode active material is 5% by weight to 90% by weight.

**31.** The nonaqueous secondary battery according to any one of claims 28 to 30, wherein the nonaqueous electrolytic solution contains a lithium salt in a concentration within a range of 1.2 mol/L to 10 mol/L.

**32.** The nonaqueous secondary battery according to any one of claims 28 to 31, wherein the nonaqueous electrolytic solution contains ethyl methyl carbonate (EMC) and/or acetonitrile (AcN), and the total content of EMC and AcN in the nonaqueous electrolytic solution is within a range of 50% by weight to 90% by weight.

**33.** A method for producing the separator for a nonaqueous secondary battery according to any one of claims 17 to 19, the method comprising the following steps:

(1) a sheet-forming step of extruding the silane-modified polyolefin, the polyethylene and a plasticizer into a sheet using an extruder, cooling to solidify the sheet, and molding the sheet into a sheet-shaped molded body;
(2) a stretching step of biaxially stretching the sheet-shaped molded body at an area increase of 20-fold or more and 250-fold or less to obtain a stretched sheet;
(3) a porous body-forming step of extracting the plasticizer from the stretched sheet to form a porous body;
(4) a heat treatment step of subjecting the porous body to a heat treatment to undergo stretching and relaxation in a transverse direction, thus obtaining a heat-treated porous body;
(5A) a coating step of applying a coating solution containing the inorganic particles and the resin binder and a surfactant, and having a pH of 6.7 or lower or 7.5 or higher on at least one surface of the heat-treated porous body to form the inorganic porous layer onto at least one surface of the heat-treated porous body;
(6) a drying step of drying to remove a solvent in the inorganic porous layer; and
(7) an assembly step of housing a laminated body or a wound body of electrodes and the separator for an aqueous secondary battery, and a nonaqueous electrolytic solution in an exterior body; wherein the silane-modified polyolefin forms a crosslinked structure in at least one step of (5A), (6) and (7).

**34.** A method for producing the separator for a nonaqueous secondary battery according to claim 20, the method comprising the following steps:

(1) a sheet-forming step of extruding the silane-modified polyolefin, the polyethylene and a plasticizer into a sheet using an extruder, cooling to solidify the sheet, and molding the sheet into a sheet-shaped molded body;

(2) a stretching step of biaxially stretching the sheet-shaped molded body at an area increase of 20-fold or more and 250-fold or less to obtain a stretched sheet;
(3) a porous body-forming step of extracting the plasticizer from the stretched sheet to form a porous body;
(4) a heat treatment step of subjecting the porous body to a heat treatment to undergo stretching and relaxation in a transverse direction, thus obtaining a heat-treated porous body;
(5B) a coating step of applying a coating solution containing the thermoplastic polymer and a surfactant, and having a pH of 6.7 or lower or 7.5 or higher onto at least one surface of the heat-treated porous body to form a thermoplastic polymer-containing layer on at least one surface of the heat-treated porous body;
(6) a drying step of drying to remove a solvent in the thermoplastic polymer-containing layer; and
(7) an assembly step of housing a laminated body or a wound body of electrodes and the separator for an aqueous secondary battery, and a nonaqueous electrolytic solution in an exterior body; wherein the silane-modified polyolefin forms a crosslinked structure in at least one step of (5B), (6) and (7).

**35.** A method for producing the separator for a nonaqueous secondary battery according to claim 21, the method comprising the following steps:

(1) a sheet-forming step of extruding the silane-modified polyolefin, the polyethylene and a plasticizer into a sheet using an extruder, cooling to solidify the sheet, and molding the sheet into a sheet-shaped molded body;
(2) a stretching step of biaxially stretching the sheet-shaped molded body at an area increase of 20-fold or more and 250-fold or less to obtain a stretched sheet;
(3) a porous body-forming step of extracting the plasticizer from the stretched sheet to form a porous body;
(4) a heat treatment step of subjecting the porous body to a heat treatment to undergo stretching and relaxation in a transverse direction, thus obtaining a heat-treated porous body;
(5C) a coating step of applying a coating solution containing the fluorine atom-containing polyvinyl compound, the inorganic particles and an organic solvent onto at least one surface of the heat-treated porous body, to form the active layer on at least one surface of the heat-treated porous body;
(6) a drying step of drying to remove a solvent in the active layer; and
(7) an assembly step of housing a laminated body or a wound body of electrodes and the separator for an aqueous secondary battery, and a nonaqueous electrolytic solution in an exterior body; wherein the silane-modified polyolefin forms a crosslinked structure in at least one step of (5C), (6) and (7).

**36.** The method for producing a separator for a nonaqueous secondary battery according to claim 35, the method comprising, between the coating step (5C) and the drying step (6), the following step:
(5.5C) a water washing step of substituting the organic solvent in the active layer with an aqueous solvent; wherein the silane-modified polyolefin forms the crosslinked structure in the step (5.5C).

**37.** The method for producing the separator for a nonaqueous secondary battery according to claim 22 or 23, the method comprising the following steps:

(1) a sheet-forming step of extruding the silane-modified polyolefin, the polyethylene and a plasticizer into a sheet using an extruder, cooling to solidify the sheet, and molding the sheet into a sheet-shaped molded body;
(2) a stretching step of biaxially stretching the sheet-shaped molded body at an area increase of 20-fold or more and 250-fold or less to obtain a stretched sheet;
(3) a porous body-forming step of extracting the plasticizer from the stretched sheet to form a porous body;
(4) a heat treatment step of subjecting the porous body to a heat treatment to undergo stretching and relaxation in a transverse direction, thus obtaining a heat-treated porous body;
(5D) a coating step of applying a coating solution containing the heat-resistant resin and an organic solvent onto at least one surface of the heat-treated porous body, to form the heat-resistant resin layer on at least one surface of the heat-treated porous body;
(6) a drying step of drying to remove a solvent in the heat-resistant resin layer; and
(7) an assembly step of housing a laminated body or a wound body of electrodes and the separator for a nonaqueous secondary battery, and a nonaqueous electrolytic solution in an exterior body; wherein the silane-modified polyolefin forms a crosslinked structure in at least one step of (5D), (6) and (7).

**38.** The method for producing the separator for a nonaqueous secondary battery according to claim 37, the method comprising, between the coating step (5D) and the drying step (6), the following step:
(5.5D) a water washing step of substituting the organic solvent in the heat-resistant resin layer with an aqueous solvent; wherein the silane-modified polyolefin forms the crosslinked structure in the step (5.5D).

FIG. 1

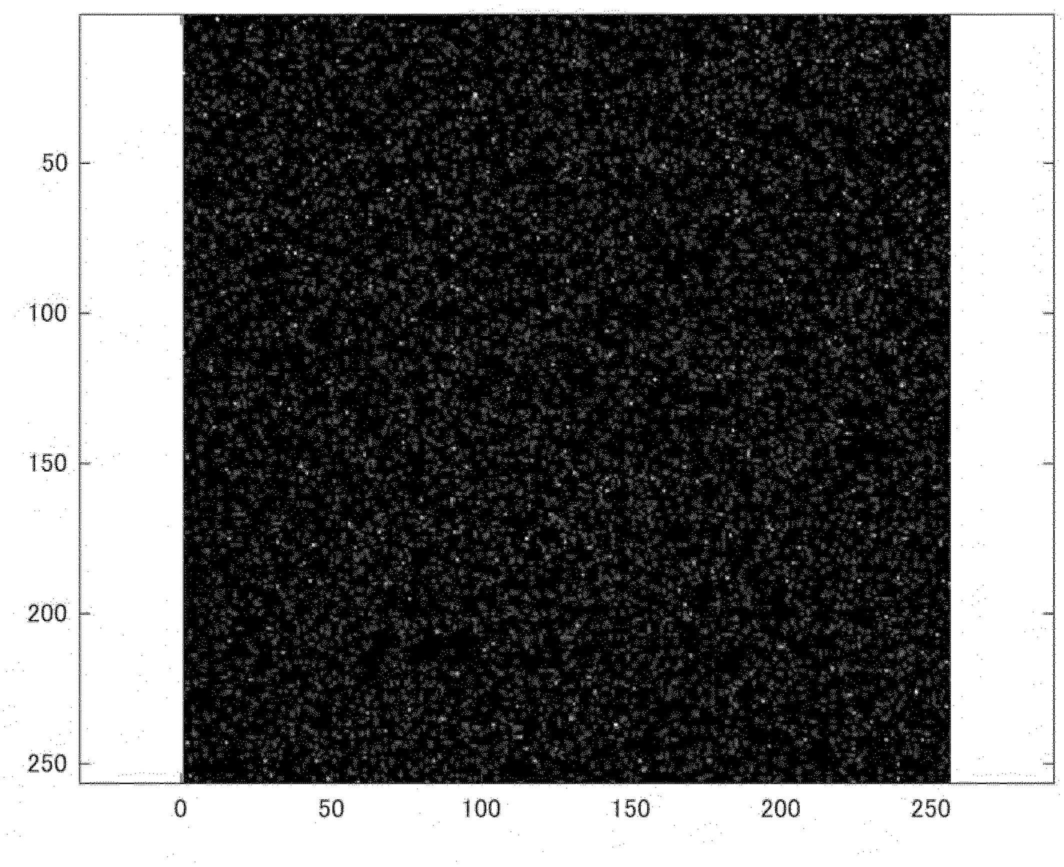

FIG. 2

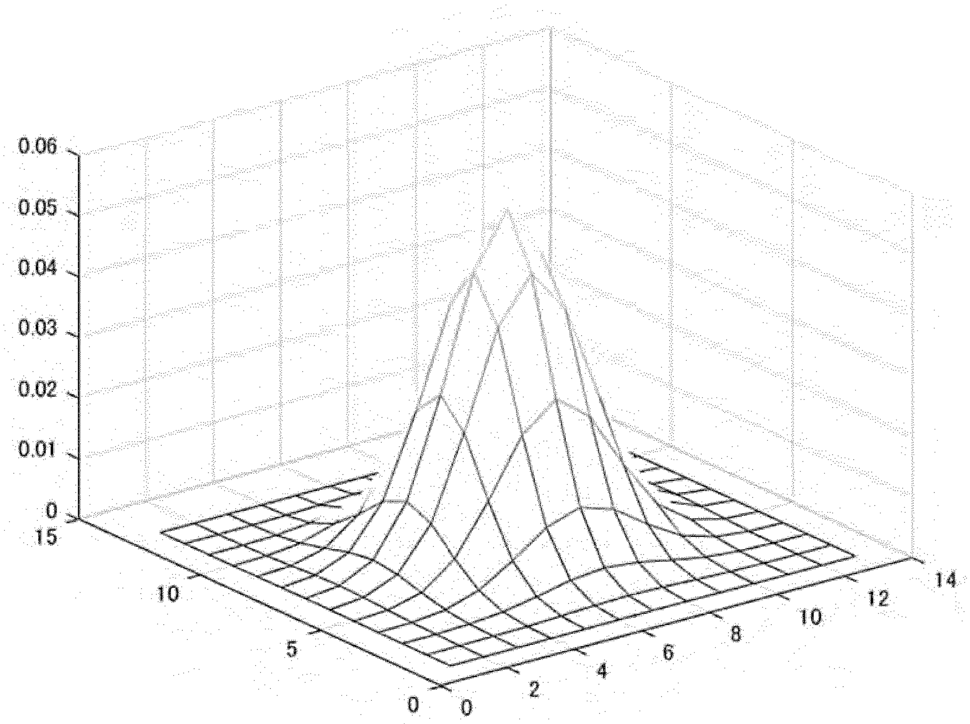
0.06
0.05
0.04
0.03
0.02
0.01
0
15
10
5
0
0
2
4
6
8
10
12
14

FIG. 3

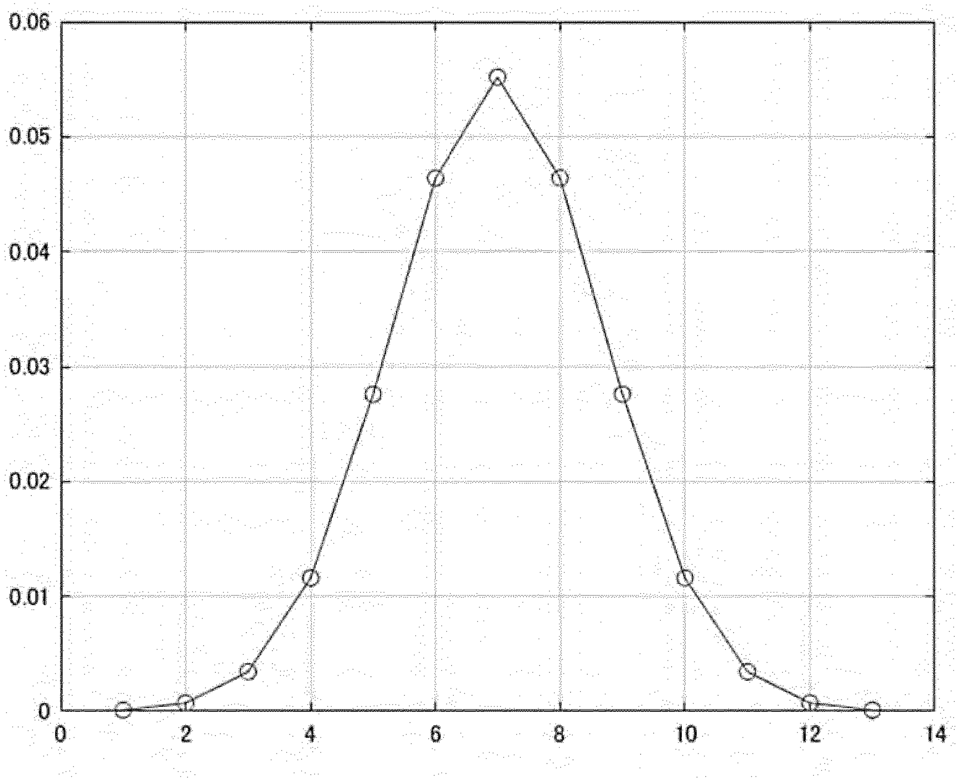
0.06
0.05
0.04
0.03
0.02
0.01
0
0
2
4
6
8
10
12
14

FIG. 4

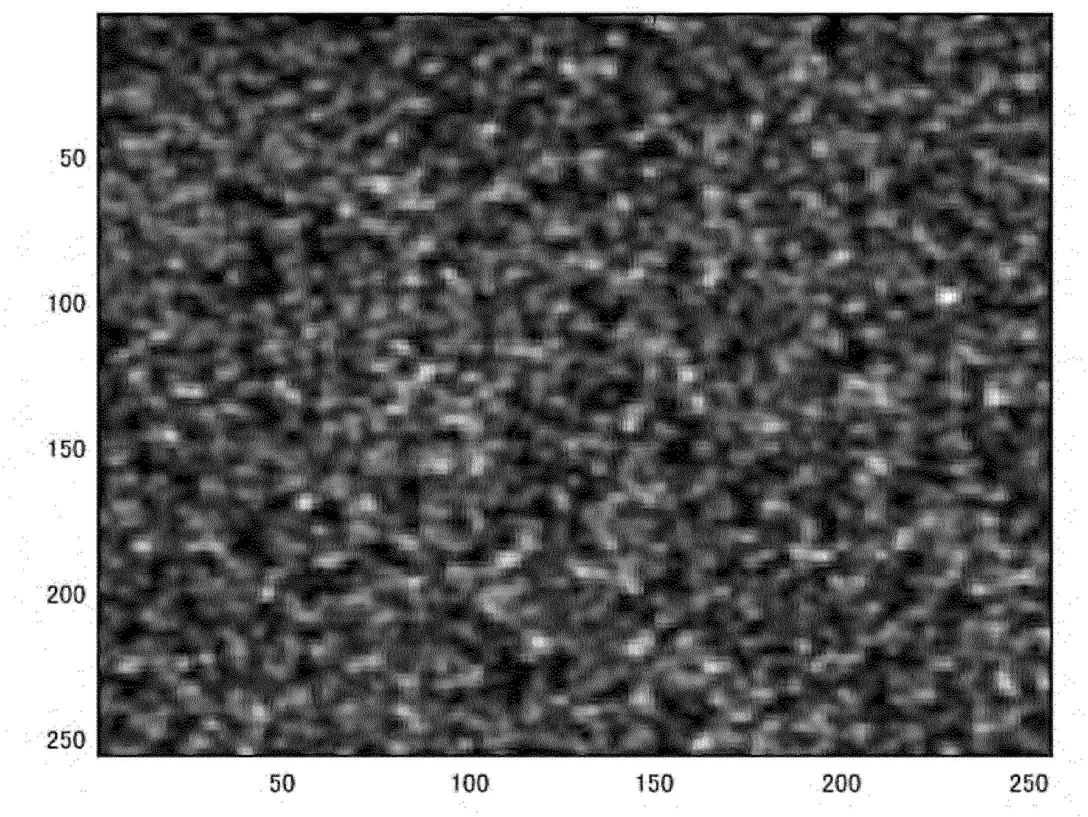
50
100
150
200
250
50
100
150
200
250

FIG. 5

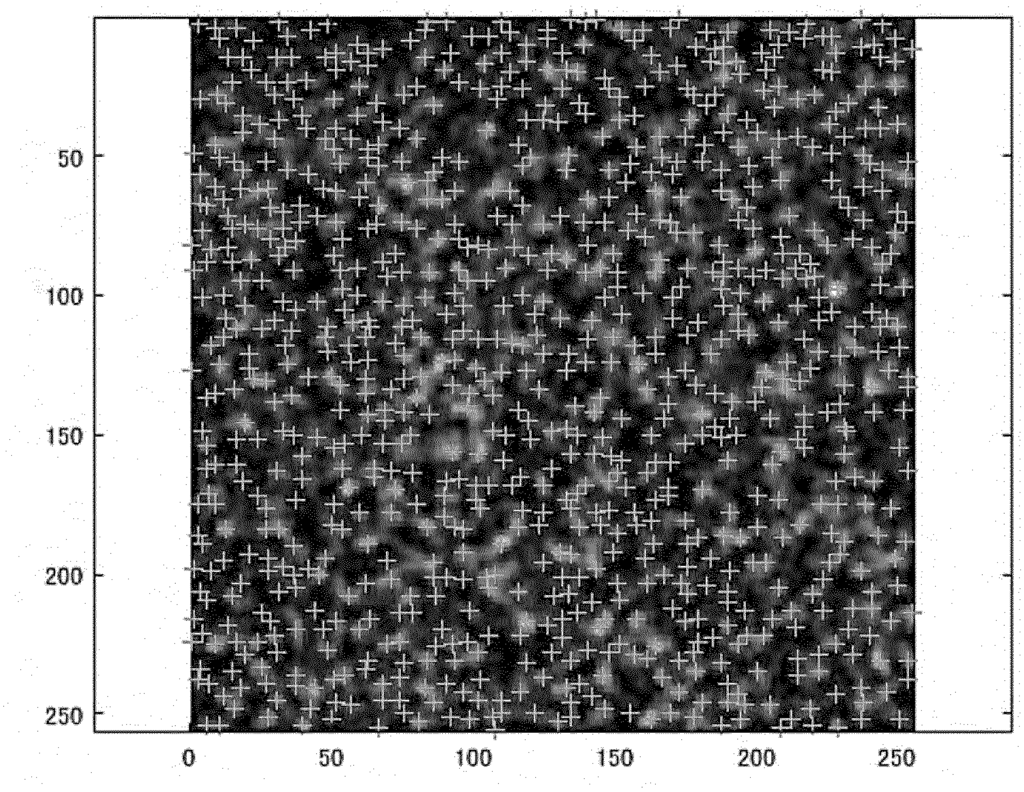
50
100
150
200
250
0
50
100
150
200
250

FIG. 6

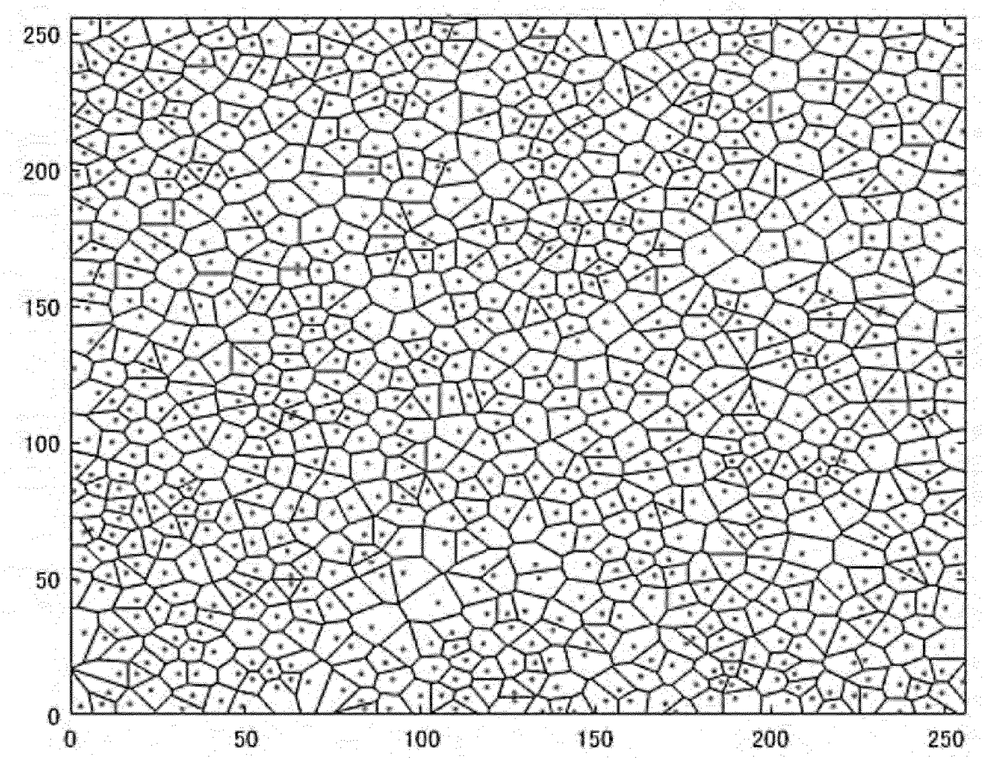
250
200
150
100
50
0
0
50
100
150
200
250

FIG. 7

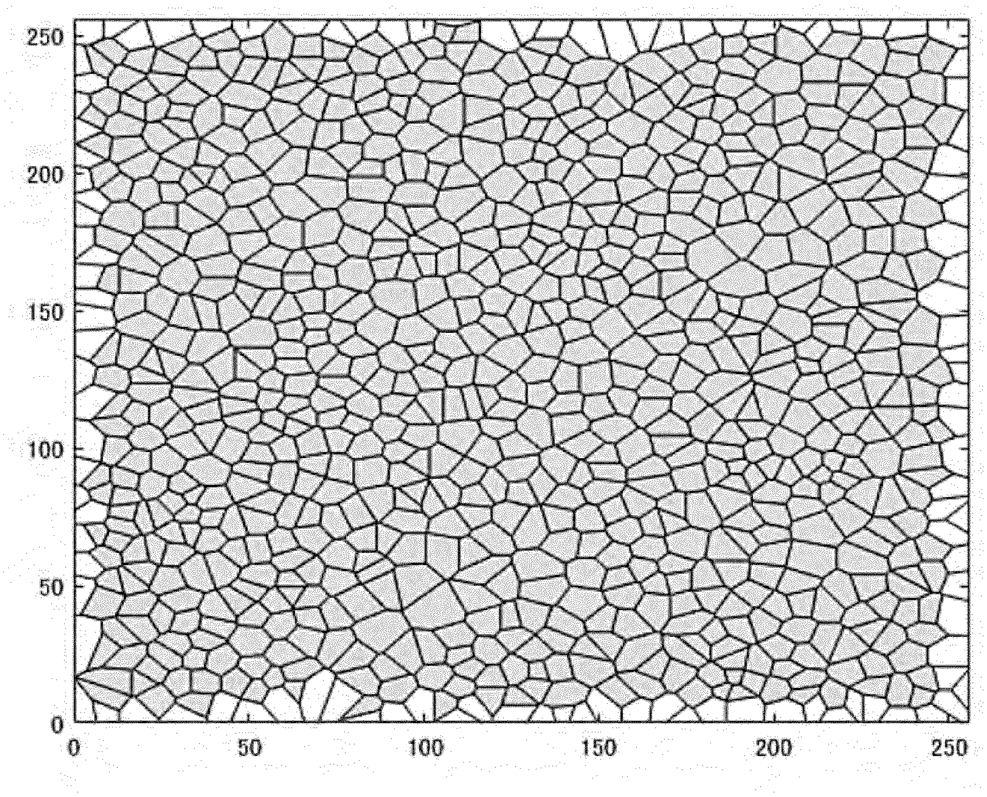
250
200
150
100
50
0
0
50
100
150
200
250

FIG. 8

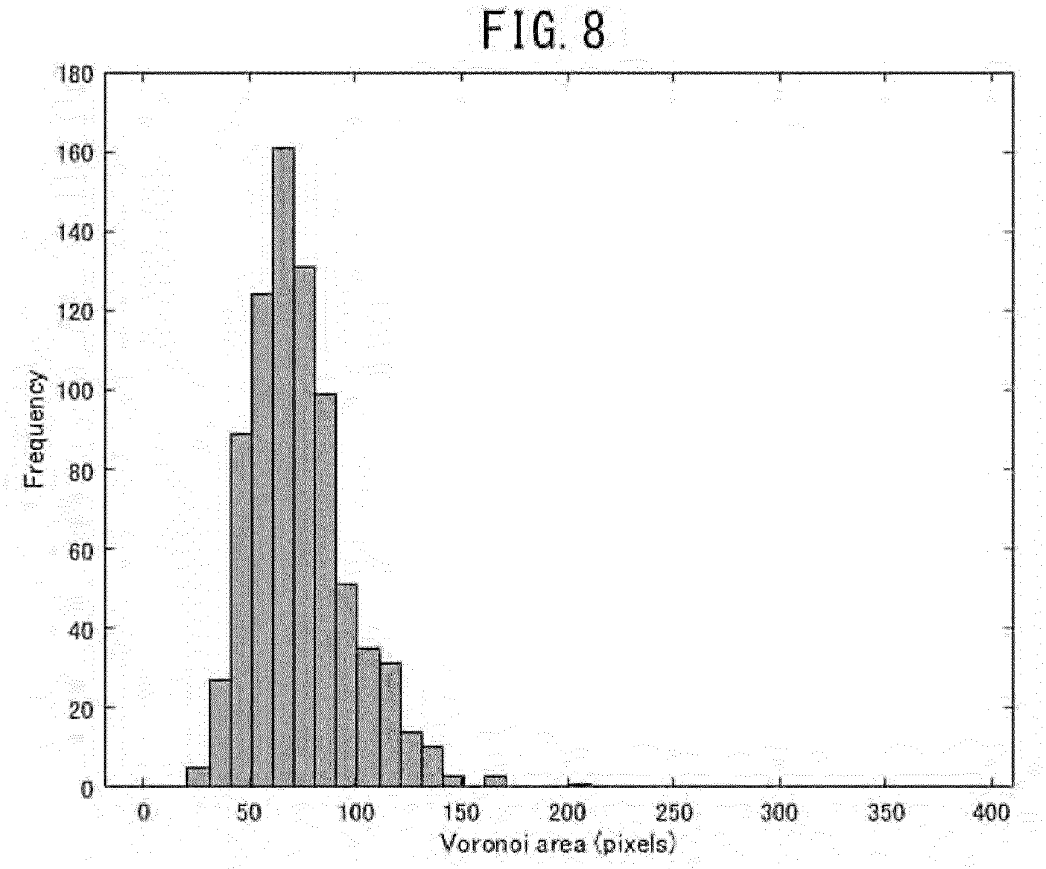
Frequency
180
160
140
120
100
80
60
40
20
0
0
50
100
150
200
250
300
350
400
Voronoi area (pixels)

FIG. 9

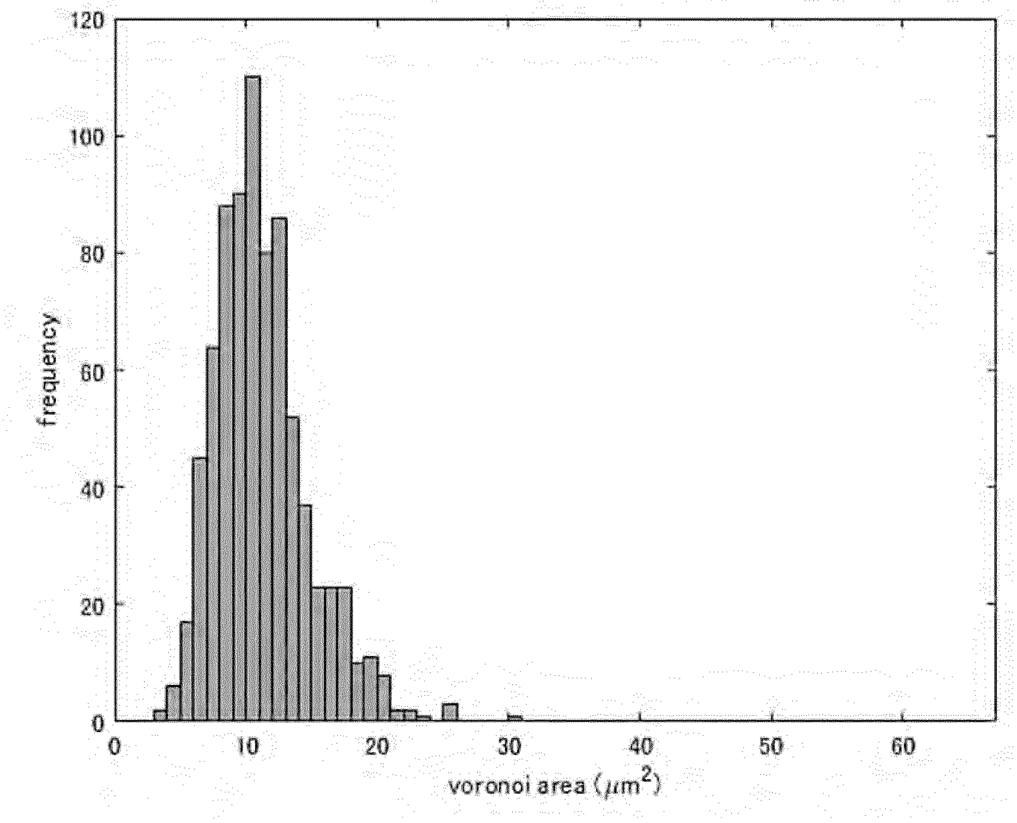
frequency
120
100
80
60
40
20
0
0
10
20
30
40
50
60
voronoi area (μm²)

FIG. 10

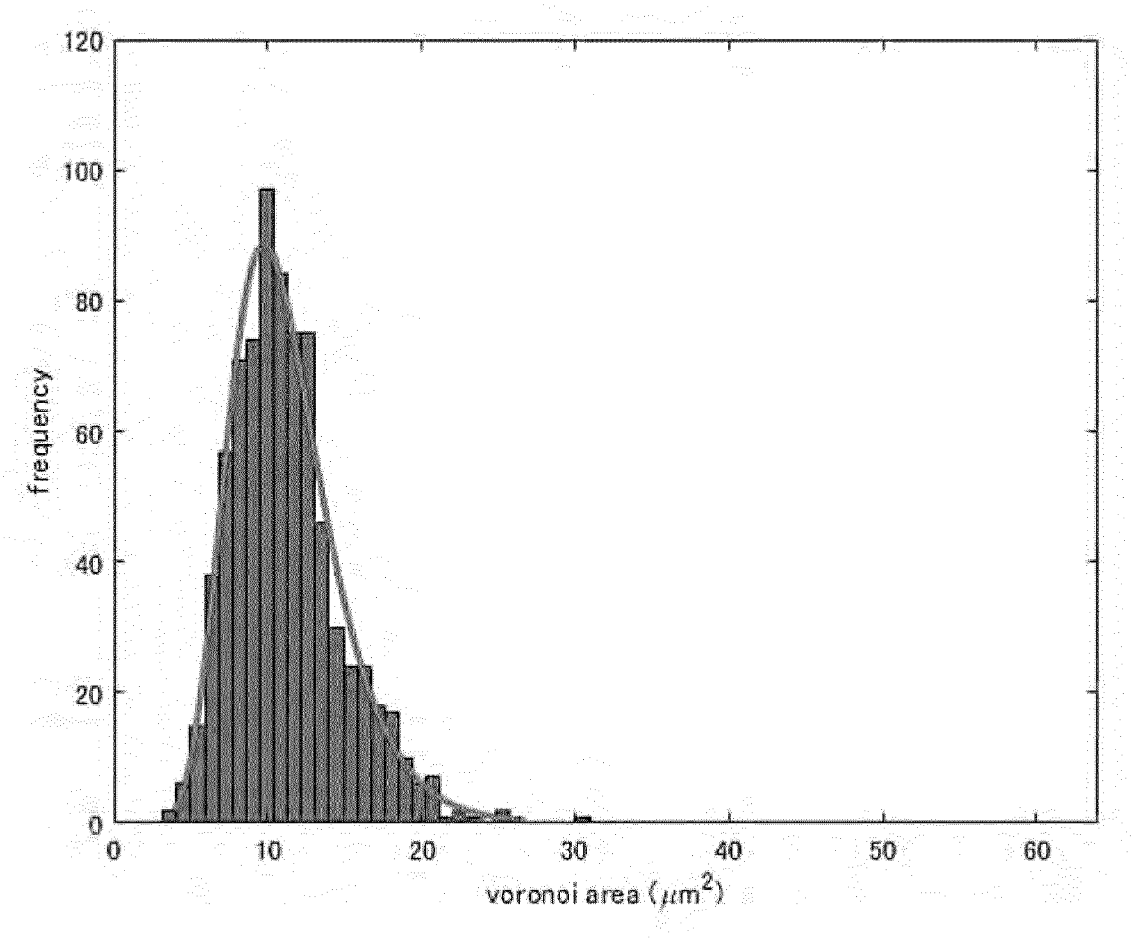
120
100
80
60
40
20
0
frequency
0
10
20
30
40
50
60
voronoi area ($\mu m^2$)

FIG. 11

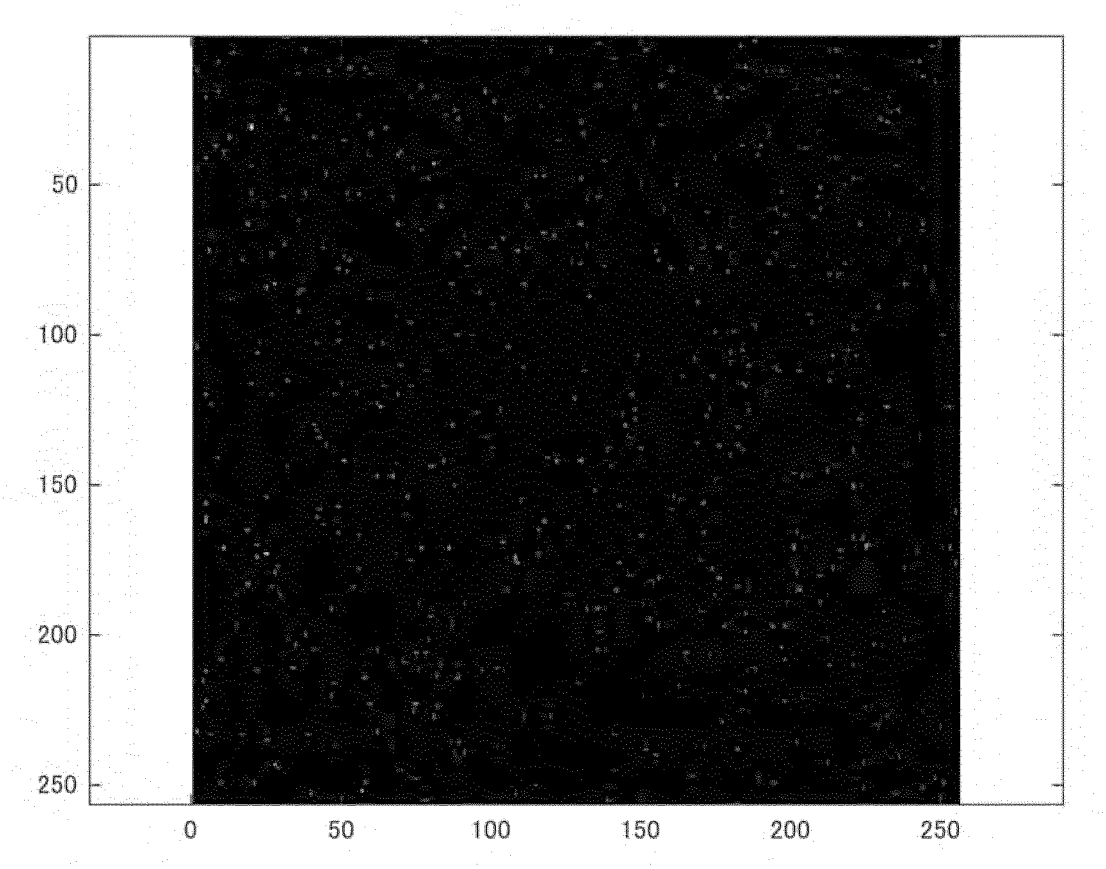

FIG. 12

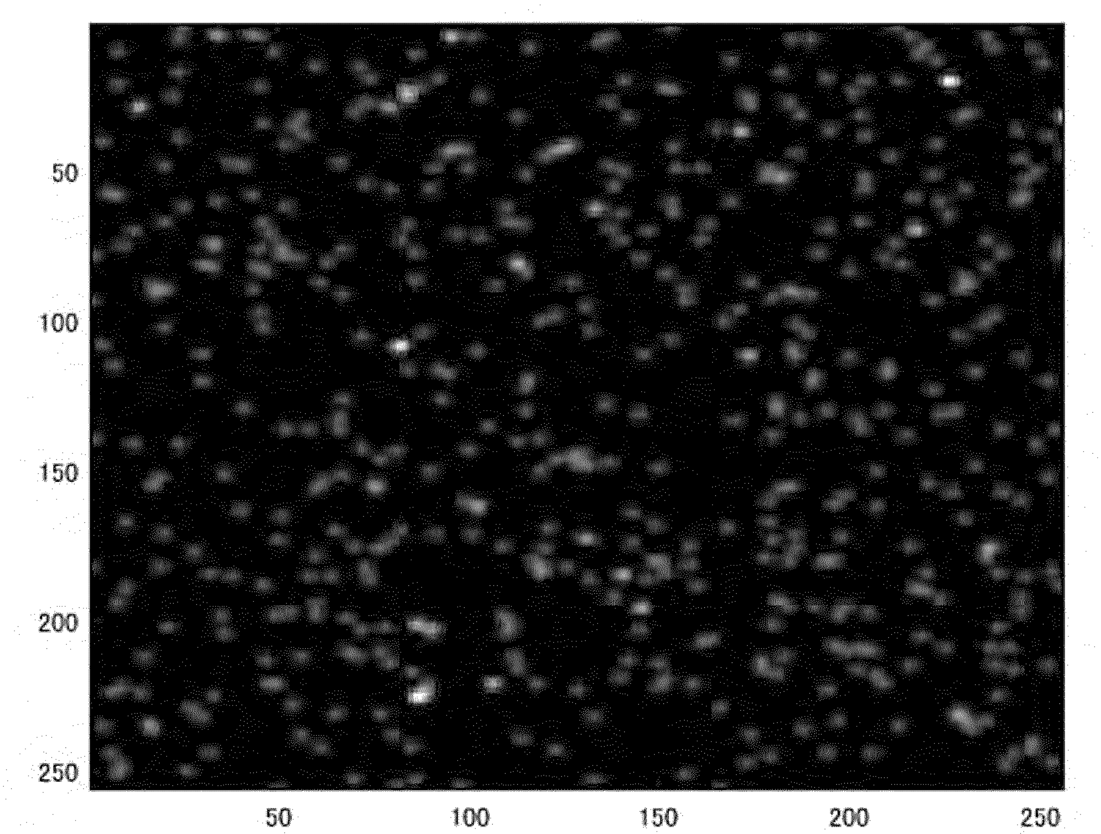
50
100
150
200
250
50
100
150
200
250

FIG. 13

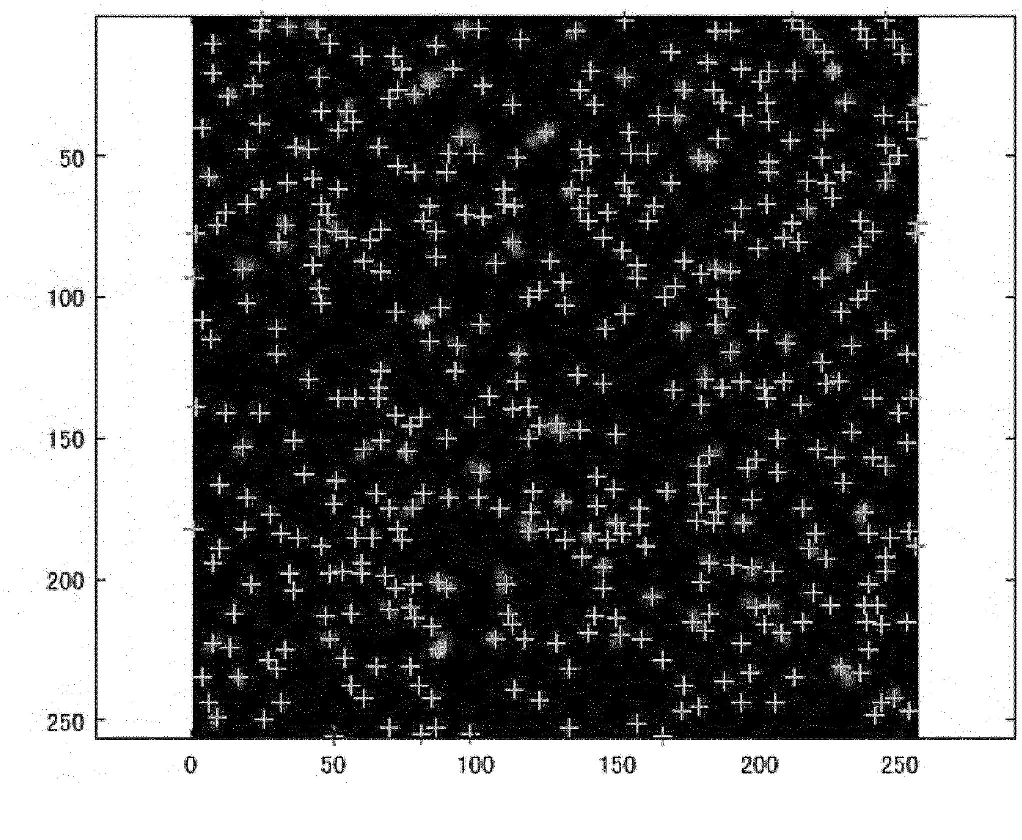
50
100
150
200
250
0
50
100
150
200
250

FIG. 14

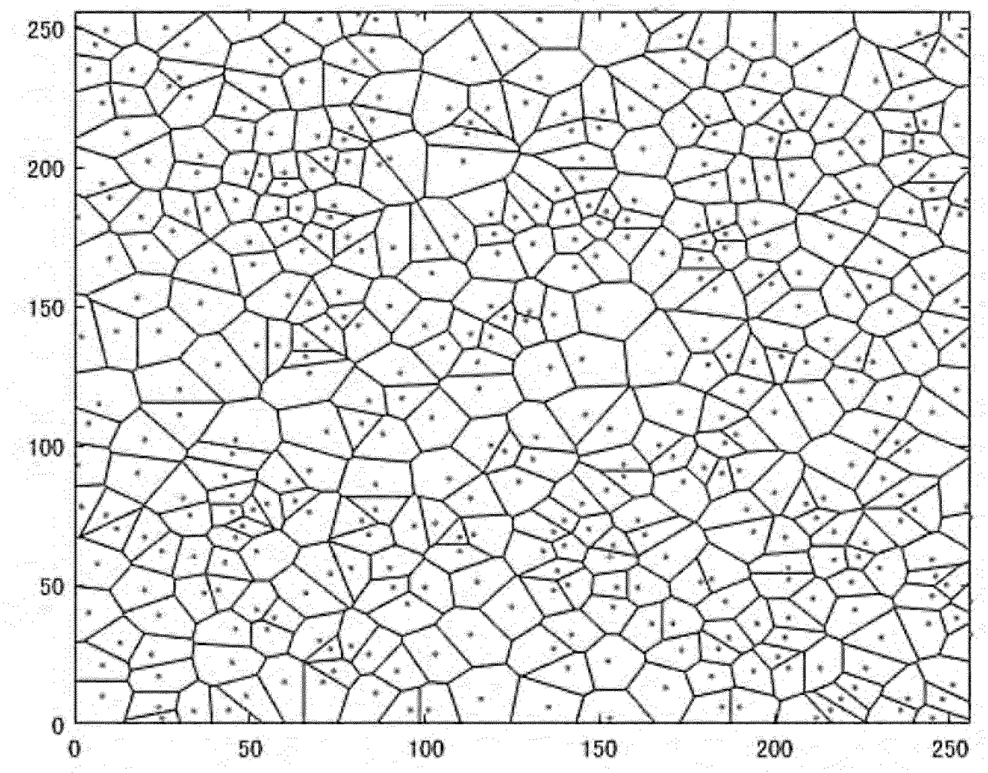
250
200
150
100
50
0
0
50
100
150
200
250

FIG. 15

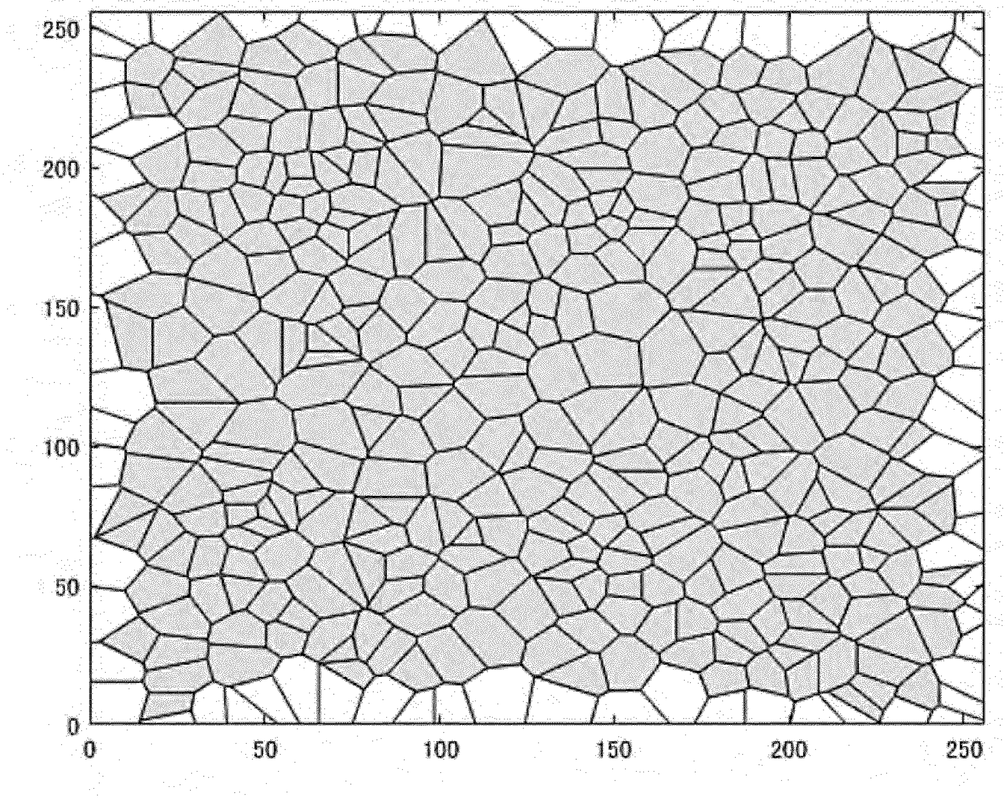
250
200
150
100
50
0
0
50
100
150
200
250

FIG. 16

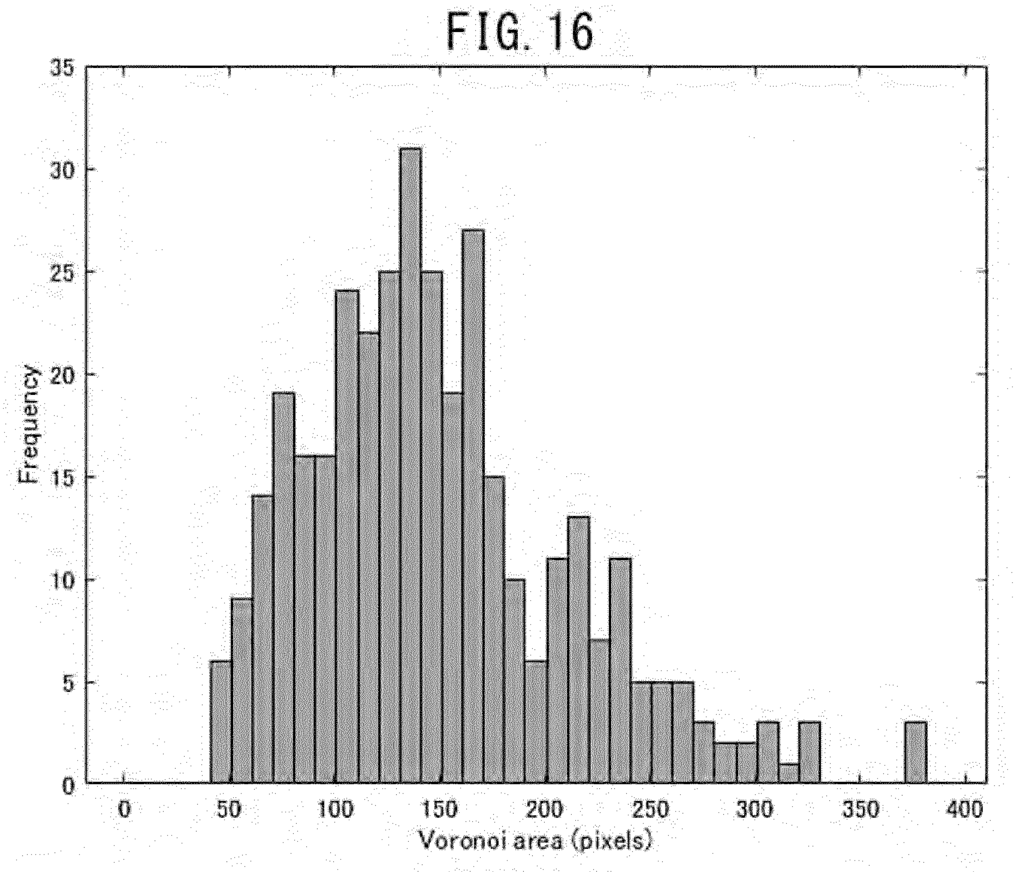
35
30
25
20
15
10
5
0
Frequency
0
50
100
150
200
250
300
350
400
Voronoi area (pixels)

FIG. 17

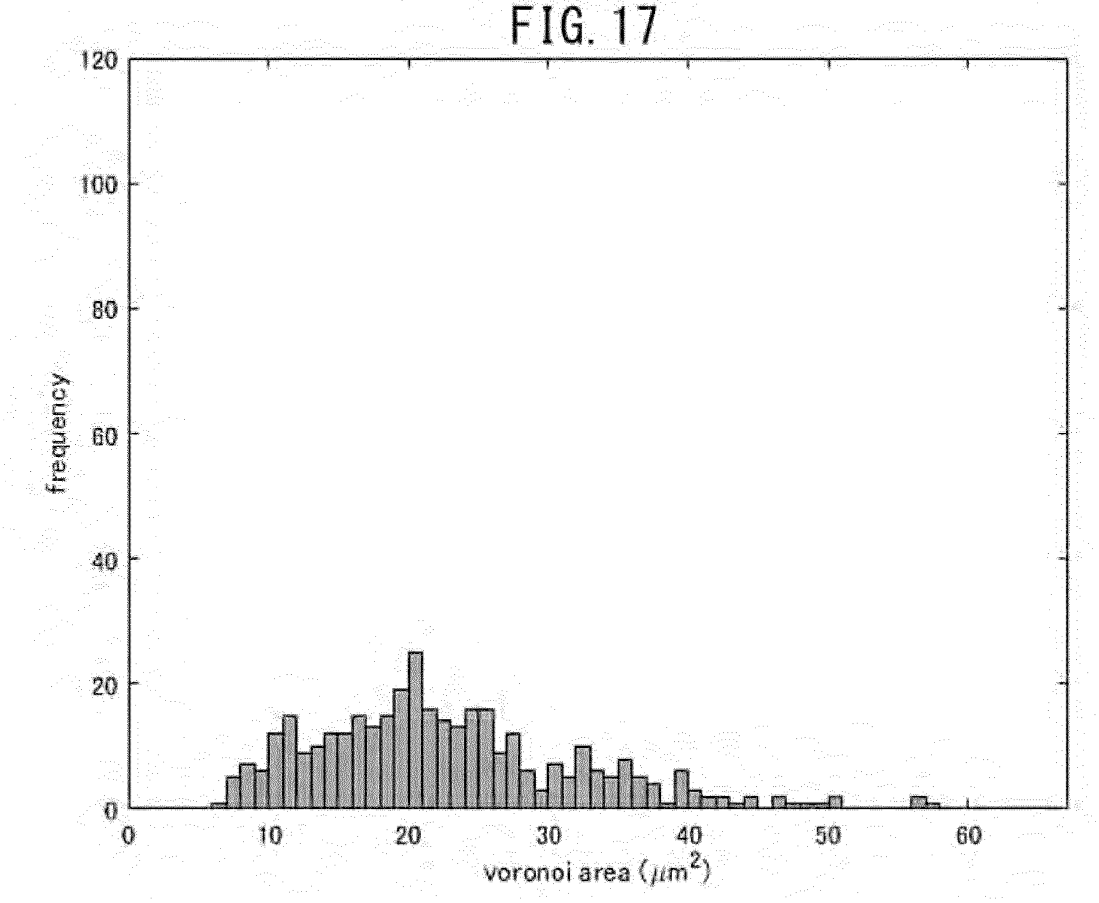
120
100
80
60
40
20
0
frequency
0
10
20
30
40
50
60
voronoi area ($\mu m^2$)

FIG. 18

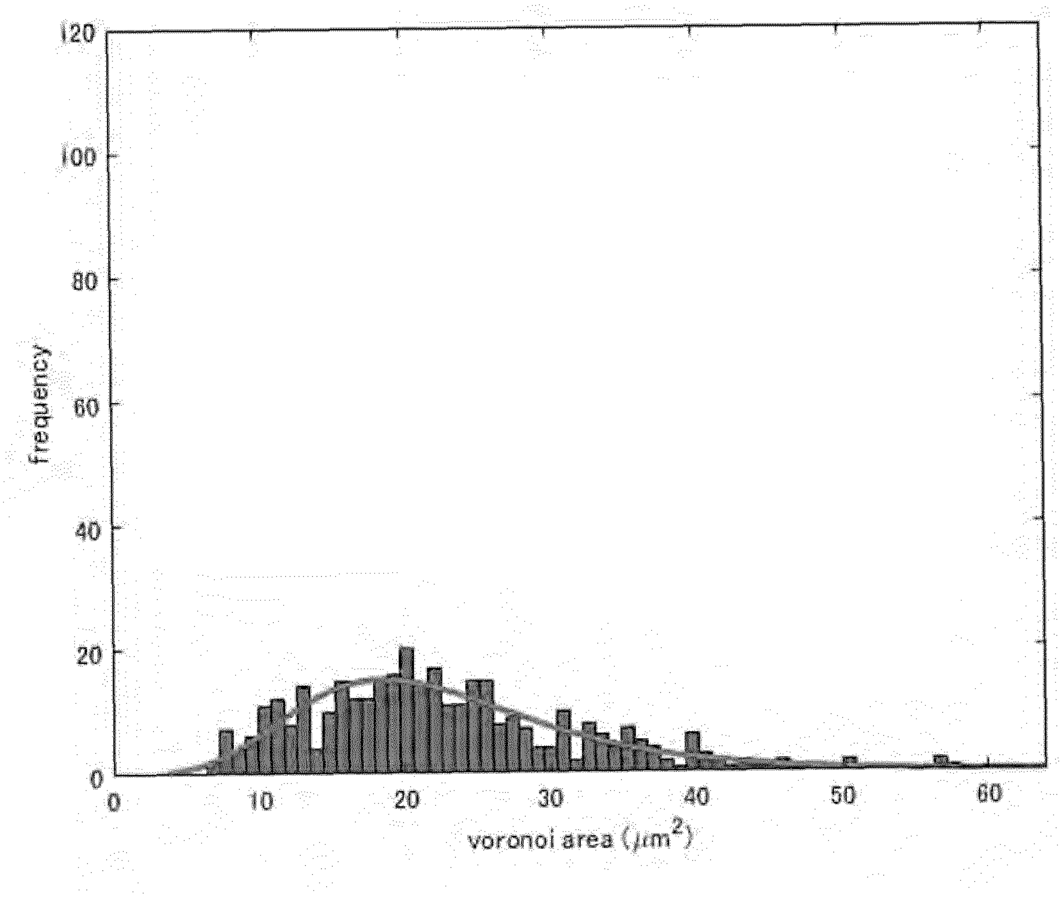
120
100
80
60
40
20
0
frequency
0
10
20
30
40
50
60
voronoi area (μm²)

FIG. 19

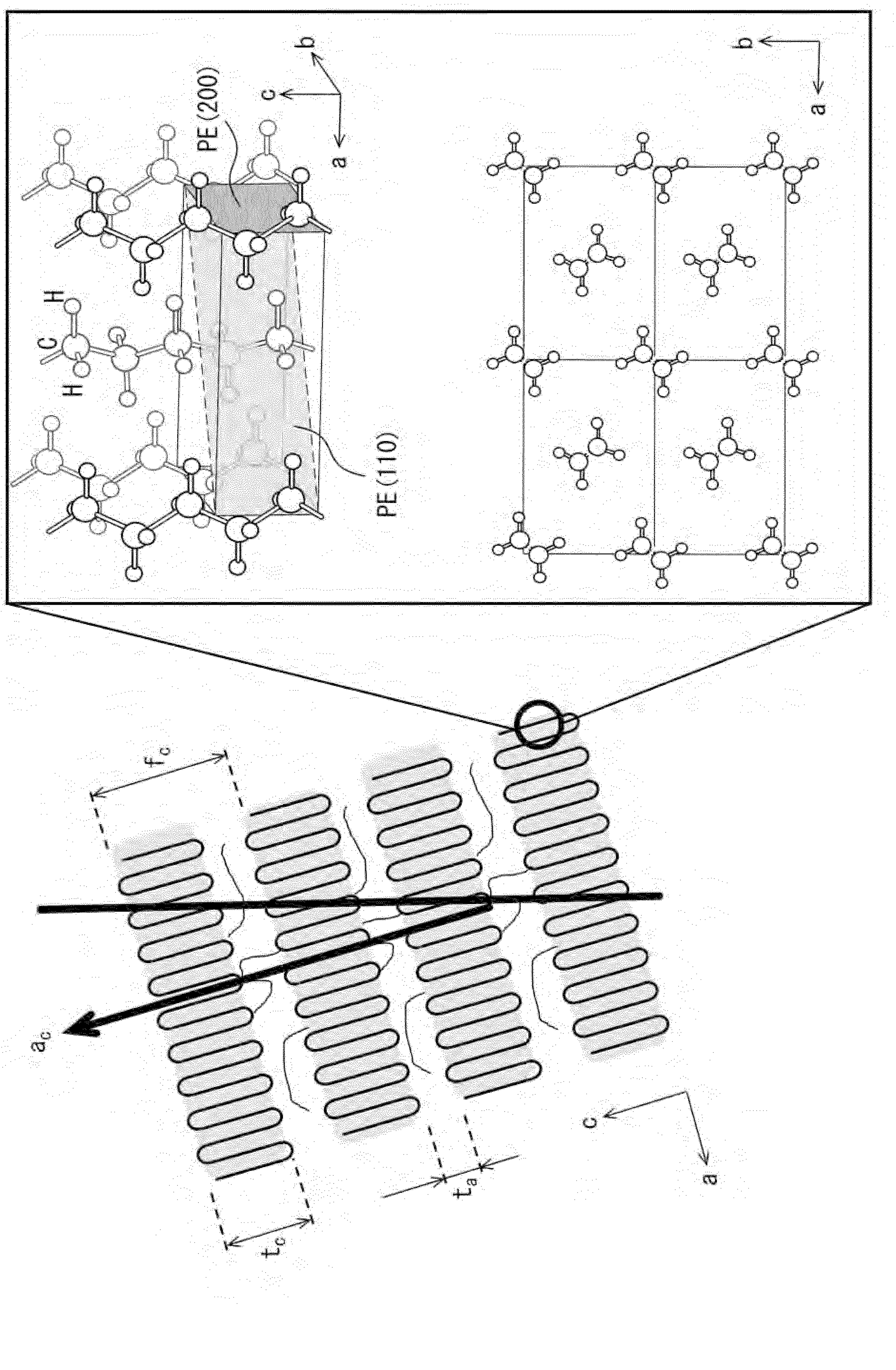

# INTERNATIONAL SEARCH REPORT

International application No.
**PCT/JP2021/040166**

**A. CLASSIFICATION OF SUBJECT MATTER**

***H01M 4/38***(2006.01)i; ***H01M 4/505***(2010.01)i; ***H01M 4/525***(2010.01)i; ***H01M 10/052***(2010.01)i; ***H01M 10/0569***(2010.01)i; ***H01M 50/417***(2021.01)i; ***H01M 50/449***(2021.01)i; ***H01M 50/451***(2021.01)i; ***H01M 50/463***(2021.01)i
FI: H01M50/417; H01M10/052; H01M4/525; H01M4/505; H01M4/38 Z; H01M10/0569; H01M50/463 Z; H01M50/449; H01M50/451

According to International Patent Classification (IPC) or to both national classification and IPC

**B. FIELDS SEARCHED**

Minimum documentation searched (classification system followed by classification symbols)

H01M4/38; H01M4/505; H01M4/525; H01M10/052; H01M10/0569; H01M50/417; H01M50/449; H01M50/451; H01M50/463

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | ZHU, Xiaoming et al. A Highly Thermostable Ceramic-Grafted Microporous Polyethylene Separator for Safer Lithium-Ion Batteries. Applied Materials and Interfaces. 2015, vol. 7, pp. 24119-24126, DOI: 10.1021/acsami.5b07230<br>abstract, fig. 1 | 1-8, 28-32 |
| X<br><br>Y | JP 2007-265666 A (SANYO ELECTRIC CO LTD) 11 October 2007 (2007-10-11)<br>claims, table 1 | 8, 28-32<br><br>1-38 |
| Y | WO 2020/075866 A1 (ASAHI KASEI KABUSHIKI KAISHA) 16 April 2020 (2020-04-16)<br>claims, examples | 1-38 |
| Y | JP 2020-031047 A (W SCOPE KOREA CO LTD) 27 February 2020 (2020-02-27)<br>claims | 1-38 |
| Y | JP 2001-176484 A (NITTO DENKO CORP) 29 June 2001 (2001-06-29)<br>claims, paragraph [0018] | 1-38 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 December 2021** | **14 December 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2021/040166**

**C. DOCUMENTS CONSIDERED TO BE RELEVANT**

| Category* | Citation of document, with indication, where appropriate, of the relevant passages | Relevant to claim No. |
|---|---|---|
| Y | JP 4-212264 A (ASAHI CHEM IND CO LTD) 03 August 1992 (1992-08-03) claims | 1-38 |
| Y | WO 2020/067161 A1 (ASAHI KASEI KABUSHIKI KAISHA) 02 April 2020 (2020-04-02) claims, paragraph [0027] | 1-38 |
| Y | WO 2014/175252 A1 (SEKISUI CHEMICAL CO., LTD.) 30 October 2014 (2014-10-30) claims, paragraphs [0023], [0024] | 1-38 |
| Y | WO 2015/012324 A1 (TOYOBO CO., LTD.) 29 January 2015 (2015-01-29) claims | 1-38 |
| P, X | JP 2021-036515 A (ASAHI KASEI KABUSHIKI KAISHA) 04 March 2021 (2021-03-04) claims, paragraphs [0027], [0028], examples | 1-38 |

Form PCT/ISA/210 (second sheet) (January 2015)

**INTERNATIONAL SEARCH REPORT**
**Information on patent family members**

International application No.
**PCT/JP2021/040166**

| Patent document cited in search report | Publication date (day/month/year) | Patent family member(s) | Publication date (day/month/year) |
|---|---|---|---|
| JP 2007-265666 A | 11 October 2007 | (Family: none) | |
| WO 2020/075866 A1 | 16 April 2020 | US 2020/0335755 A1<br>claims, examples<br>US 2021/0057701 A1<br>KR 10-2020-0062292 A<br>KR 10-2020-0060489 A | |
| JP 2020-031047 A | 27 February 2020 | US 2020/0067054 A1<br>claims<br>EP 3614460 A1<br>KR 10-1955911 B<br>CN 110857362 A | |
| JP 2001-176484 A | 29 June 2001 | (Family: none) | |
| JP 4-212264 A | 03 August 1992 | (Family: none) | |
| WO 2020/067161 A1 | 02 April 2020 | US 2021/0074983 A1<br>claims, paragraph [0059] | |
| WO 2014/175252 A1 | 30 October 2014 | US 2016/0079580 A1<br>claims, paragraphs [0034], [0035]<br>CN 104981506 A<br>KR 10-2016-0002678 A<br>TW 201500418 A | |
| WO 2015/012324 A1 | 29 January 2015 | KR 10-2016-0034302 A<br>claims<br>TW 201510034 A | |
| JP 2021-036515 A | 04 March 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008035674 A
- WO 2020075866 A
- WO 2020040389 A
- KR 1020200078407 A
- WO 2020067161 A
- WO 2014175252 A
- WO 2015012324 A
- JP 6012839 B
- JP 3529854 B
- JP 3529858 B


### Non-patent literature cited in the description


- Silicone Polymer Special Feature, Organic Silicon Chemistry. *Journal of The Society of Rubber SCIENCE AND TECHNOLOGY, JAPAN,* 1989, vol. 62 (12
- Volume Expansion during Lithiation of Amorphous Silicon Thin Film Electrodes Studied by In-Operando Neutron Reflectometry. *J. Phys. Chem.,* vol. C2014 (118), 9395-9399
- Near-Shore Aggregation Mechanism of Electrolyte Decomposition Products to Explain Solid Electrolyte Interphase Formation. *J. Electrochem. Soc.,* vol. C2015 (162), 2670-2678
- Coupled LiPF6 Decomposition and Carbonate Dehydrogenation Enhanced by Highly Covalent Metal Oxides in High-Energy Li-Ion Batteries. *J. Phys. Chem.,* vol. C2018 (122), 27368-27382
- **F. W. VAN. DE R. WEI.** *Macromol. Chem.,* 1980, vol. 181, 2541